(19)

Europäisches
Patentamt

European
Patent Office

Office européen
des brevets

(11) **EP 4 507 395 A1**

(12) **EUROPEAN PATENT APPLICATION**
published in accordance with Art. 153(4) EPC

(43) Date of publication:
**12.02.2025 Bulletin 2025/07**

(21) Application number: **23795009.2**

(22) Date of filing: **11.04.2023**

(51) International Patent Classification (IPC):
**H04W 52/02** *(2009.01)*

(52) Cooperative Patent Classification (CPC):
**H04W 52/02**

(86) International application number:
**PCT/CN2023/087495**

(87) International publication number:
**WO 2023/207576 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.04.2022 CN 202210467612
03.08.2022 CN 202210928227**

(71) Applicant: **Huawei Technologies Co., Ltd.
Shenzhen, Guangdong 518129 (CN)**

(72) Inventors:
• **LIU, Nannan
Shenzhen, Guangdong 518129 (CN)**
• **ZHANG, Yangyang
Shenzhen, Guangdong 518129 (CN)**
• **XIE, Xi
Shenzhen, Guangdong 518129 (CN)**
• **FENG, Shulan
Shenzhen, Guangdong 518129 (CN)**
• **CHANG, Junren
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **COMMUNICATION METHOD AND COMMUNICATION APPARATUS**

(57) A communication method and a communication apparatus are provided. In this method, a terminal device can use different information in different hyper system frames (for example, use first information in a first hyper system frame and use second information in a second hyper system frame) to determine start times of first timers. Therefore, the start times of the first timers may be different in the different hyper system frames. This helps improve flexibility of setting the start time of the first timer, to help avoid a problem that a service cycle does not match a DRX cycle because the start times of the first timers are fixed/the same in the different hyper system frames. This helps reduce power consumption of the terminal device, and/or reduce a delay in receiving data by the terminal device.

EP 4 507 395 A1

```
┌─────────────────────────────────────────────┐
│                                              │──── 201
│  A terminal device obtains first information │
│                                              │
└─────────────────────────────────────────────┘
                       │
                       ▼
┌─────────────────────────────────────────────┐
│  The terminal device determines, based on the│──── 202
│  first information, a start time of a first timer│
│        in a first hyper system frame         │
└─────────────────────────────────────────────┘
```

FIG. 2

**Description**

This application claims priority to Chinese Patent Application No. 202210467612.6, filed with the China National Intellectual Property Administration on April 29, 2022 and entitled "COMMUNICATION METHOD AND COMMUNICATION APPARATUS", and claims priority to Chinese Patent Application No. 202210928227.7, filed with the China National Intellectual Property Administration on August 3, 2022 and entitled "COMMUNICATION METHOD AND COMMUNICATION APPARATUS", which are incorporated herein by reference in their entireties.

**TECHNICAL FIELD**

Embodiments of this application relate to the communication field, and in particular, to a communication method and a communication apparatus.

**BACKGROUND**

In a wireless communication system, to ensure effective data transmission and reduce power consumption of a terminal device, a discontinuous reception (discontinuous reception, DRX) mechanism is used to control a behavior of monitoring a physical downlink control channel (physical downlink control channel, PDCCH) by the terminal device. When DRX is configured for the terminal device, the terminal device may enter a "sleep state" (that is, not monitor the PDCCH) at some moments/in some time periods. The terminal device does not need to continuously monitor the PDCCH, but wakes up from the sleep state when the terminal device needs to monitor the PDCCH. In this way, the terminal device can save power.

In a current communication system, a terminal device may transmit, by using the DRX mechanism, service data that needs to be cyclically transmitted. Alternatively, for cyclical, approximately cyclical, or regular service data transmission, the DRX mechanism may be used between the terminal device and a network device. During actual application, cycles of some services do not match a DRX cycle. This may increase power consumption of the terminal device, or may increase a delay in receiving data by the terminal device. Therefore, the current DRX mechanism needs to be further studied.

**SUMMARY**

This application provides a communication method and a communication apparatus, to flexibly set start positions of a DRX cycle in different hyper system frames, so that the DRX cycle can match a service cycle, to ensure that a terminal device can accurately receive service data.

According to a first aspect, this application provides a communication method. In this method, a terminal device obtains first information. The first information is different from second information. The first information is used to determine a start time of a first timer in a first hyper system frame. The second information is used to determine a start time of a first timer in a second hyper system frame. Then, the terminal device determines, based on the first information, the start time of the first timer in the first hyper system frame.

Because the terminal device can separately use different information (namely, the first information and the second information) in different hyper system frames to calculate start times of first timers in the different hyper system frames (that is, moments at which the terminal device enters a wake-up state in DRX cycles in the hyper system frames), values of the start times of the first timers may be different in the different hyper system frames. In other words, the start times of the first timers in the different hyper system frames may be different. This helps improve flexibility of setting the start time of the first timer. In addition, this helps avoid a problem that a data transmission cycle of service data does not match the DRX cycle because the DRX cycle is fixed, to help the terminal device improve accuracy of receiving the service data.

In a possible implementation, the first information and the second information are different values of a same parameter. For example, both the first information and the second information are values of a parameter A. A difference lies in that the value of the first information is a, and the value of the second information is b, where a is not equal to b. Optionally, both the first information and the second information may be parameters used to determine the start times of the first timers in a conventional technology, or both the first information and the second information may be parameters newly defined in this application.

In this implementation, because the first information and the second information are different values of the same parameter, the terminal device needs to only perform calculation by substituting the different values of the same parameter into a rule for determining the start time of the first timer, and does not need to add a complex algorithm. The solution is simple for implementation.

In a possible implementation, the first hyper system frame and the second hyper system frame may be two hyper system frames in a plurality of consecutive hyper system frames, and the plurality of connected hyper system frames include at least two hyper system frames. The first hyper system frame and the second hyper system frame satisfy the following conditions:

In a possible condition, the first hyper system frame is adjacent to the second hyper system frame. For example, the first hyper system frame is a previous hyper system frame, and the second hyper system frame is a next hyper system frame; or the second hyper system frame is a previous hyper system frame, and the first hyper system frame is a next hyper system frame.

In another possible condition, the first hyper system frame and the second hyper system frame are spaced by at least one hyper system frame. For example, the plurality of consecutive hyper system frames include at least three hyper system frames, the first hyper system frame is the 1st hyper system frame in the plurality of consecutive hyper system frames, the second hyper system frame is the 3rd hyper system frame in the plurality of consecutive hyper system frames, and the first hyper system frame and the second hyper system frame are spaced by one hyper system frame. For another example, the plurality of consecutive hyper system frames include at least fourth hyper system frames, the first hyper system frame is the 1st hyper system frame in the plurality of consecutive hyper system frames, the second hyper system frame is the 4th hyper system frame in the plurality of consecutive hyper system frames, and the first hyper system frame and the second hyper system frame are spaced by two hyper system frames.

Optionally, the plurality of consecutive hyper system frames may be one hyper system frame cycle, and the hyper system frame cycle includes at least two hyper system frames.

In a possible implementation, that a terminal device obtains first information includes: The terminal device determines the first information based on third information. The third information is determined by the terminal device based on an index of the first hyper system frame, or the third information is from a network device. Optionally, the third information is carried in DCI, a MAC CE, or RRC signaling.

In a possible example of this implementation, the terminal device determines the third information based on the index of the first hyper system frame. Then, the terminal device determines the first information based on the third information. In this example, the terminal device can determine the first information based on the index of the first hyper system frame without receiving information from the network device. This helps reduce signaling overheads between the terminal device and the network device.

In another possible example of this implementation, the terminal device receives the third information from the network device. Then, the terminal device determines the first information based on the third information. In this example, because the terminal device determines the first information based on the third information from the network device, the terminal device does not need to set complex calculation logic to determine the third information. This helps reduce complexity of the terminal device.

In a possible implementation, the third information is determined by the terminal device based on the index of the first hyper system frame and N, N is a quantity of hyper system frames included in the hyper system frame cycle, and N is an integer greater than 1.

It should be noted that the terminal device uses different information in each of the N hyper system frames to determine a start time of a first timer. It may also be understood that the parameter used by the terminal device to determine the start time of the first timer has N different values in a change cycle (for example, a hyper system frame cycle).

In a possible implementation, the third information $C_1$, the index $S_1$ of the first hyper system frame, and N satisfy the following condition: $C_1 = S_1 \bmod N$.

In this implementation, it is proposed that information (including the first information and the second information) used by the terminal device in different hyper system frames to determine start times of first timers is information having a cyclical change rule. Specifically, in two hyper system frames that are at an interval of N - 1 hyper system frames, the terminal device uses same information to determine start times of first timers. For example, if the terminal device uses information 1 in the 1st hyper system frame to determine a start time of the first timer in the 1st hyper system frame, the terminal device also uses the information 1 in an $(N + 1)$th hyper system frame to determine a start time of the first timer in the $(N + 1)$th hyper system frame. Therefore, the terminal device may determine, by using a modulo operation, information that corresponds to each hyper system frame and that is used to calculate a start time of the first timer.

In a possible implementation, the hyper system frame cycle satisfies the following condition: The hyper system frame cycle is equal to an integer multiple of a discontinuous reception DRX cycle corresponding to the first timer.

Because one hyper system frame cycle includes N hyper system frames, a condition satisfied by the hyper system frame cycle and the DRX cycle may be transformed into a condition satisfied by N, duration of the hyper system frame, and the DRX cycle. Specifically, the condition satisfied by N, the duration of the hyper system frame, and the DRX cycle is any one of the following conditions:

an accumulative sum of duration of N hyper system frames is equal to an integer multiple of the DRX cycle corresponding to the first timer;

N is obtained by dividing an integer multiple of the DRX cycle corresponding to the first timer by the duration of the hyper system frame; or

N is an integer quotient obtained by exactly dividing an integer multiple of the DRX cycle corresponding to the first timer by the duration of the hyper system frame.

Specifically, the network device determines N based on the condition satisfied by N, the duration of the hyper system frame, and the DRX cycle. Then, the network device determines, based on N, information that corresponds to different hyper system frames and that is used to determine start times of first timers.

In a possible implementation, the first information is a first offset, and duration indicated by the first offset is less than the DRX cycle $T_{DRX}$. $T_{DRX}$ is greater than 0. The first offset is a parameter newly defined in this application. The first information and the second information are different values of the first offset.

In an example of this implementation, the value of the first offset is a positive value or a negative value. When the value of the first offset is a positive value, the first offset is greater than 0 and less than $T_{DRX}$, indicating a rightward offset of one or more time-domain units. When the value of the first offset is a negative value, the first offset is greater than $-T_{DRX}$ and less than 0, indicating a leftward offset of one or more time-domain units. Optionally, the value of the first offset may alternatively be 0, indicating no offset. In this implementation, the value of the first offset may be a positive value, a negative value, or 0. When the terminal device calculates the start time of the first timer, the terminal device performs an addition operation on the first offset and another parameter, and determines, based on a positive or negative value of the first offset, whether the terminal device performs a leftward offset or a rightward offset based on the first offset.

In another example of this implementation, the first offset is a non-negative value. That is, the first offset is greater than or equal to 0 and less than $T_{DRX}$. In this implementation, because the value of the first offset is a non-negative value, the terminal device needs an indication from the network device to determine whether the terminal device performs an addition operation or a subtraction operation based on the first offset and another parameter, to determine whether the terminal device offsets leftwards or rightwards based on the first offset.

In a possible implementation, the first information is a value of an offset based on a first parameter. A process in which the terminal device determines, based on the first information, the start time of the first timer in the first hyper system frame specifically includes: The terminal device determines, based on the first information and the first parameter, the start time of the first timer in the first hyper system frame. The first parameter indicates a start position, in a unit of a subframe, of a DRX cycle configured by the network device. For example, the first parameter is drx-StartOffset.

Specifically, the terminal device adds, to the first parameter configured by the network device, a value indicated by the first information, to obtain a new value of the first parameter. Then, the terminal device substitutes the new value of the first parameter into a formula for calculating a frame number and a subframe number of the start time of the first timer, to obtain a frame number and a subframe number of the start time of the first timer in the first hyper system frame. Then, the terminal device determines the start time of the first timer based on the frame number and the subframe number of the start time of the first timer.

Because the first information and the second information are different values of the same parameter, the terminal device can calculate, based on different values of the first parameter, different start times of first timers in different hyper system frames. Therefore, this helps improve flexibility of the start time of the first timer of the terminal device, to help the terminal device adjust the DRX cycle to match the service cycle, so as to improve accuracy of receiving service data by the terminal device.

In a possible implementation, the first information is a value of an offset based on a first reference value. A process in which the terminal device determines, based on the first information, the start time of the first timer in the first hyper system frame specifically includes: The terminal device determines the first reference value based on a first parameter and a second parameter. Then, the terminal device determines, based on the first reference value and the first information, the start time of the first timer in the first hyper system frame. The first parameter indicates a start position, in a unit of a subframe, of a DRX cycle configured by the network device, and the second parameter indicates an offset, in a unit of a slot, that is used when the terminal device calculates the start time of the first timer. For example, the first parameter is drx-StartOffset, and the second parameter is drx-SlotOffset.

Optionally, that the terminal device determines, based on the first reference value and the first information, information related to the start time of the first timer in the first hyper system frame includes: starting the first timer after the first information starting from the first reference value.

In this implementation, the terminal device may calculate a reference value (namely, the first reference value) of the start time of the first timer based on the first parameter, the second parameter, and a formula in the conventional technology. Then, the terminal device offsets the first reference value based on the first information. Because the first information and the second information are different values of the same parameter, the start time of the first timer in the first hyper system frame that is obtained by the terminal device by offsetting the first reference value based on the first information is different from the start time of the first timer in the second hyper system frame that is obtained by the terminal device by offsetting the first parameter value based on the second information. Therefore, the terminal device can determine different start times of first timers in different hyper system frames. Therefore, this helps improve flexibility of the start time of the first timer of the terminal device, to help the terminal device adjust the DRX cycle to match the service cycle, so as to improve accuracy of receiving service data by the terminal device.

In a possible implementation, the first information is a value of an offset based on a second parameter. A process in which the terminal device determines, based on the first information, the start time of the first timer in the first hyper system frame specifically includes: The terminal device determines, based on the second parameter and the first information, the start time of the first timer in the first hyper system frame.

In this implementation, the terminal device determines a new value of the second parameter based on the first information and a value of the second parameter that is configured by the network device, and offsets the frame number and the subframe number of the start time of the first timer based on the new value of the second parameter. Because the first information and the second information are different values of the same parameter, the terminal device can calculate, based on different values of the second parameter, different start times of first timers in different hyper system frames. Therefore, this helps improve flexibility of the start time of the first timer of the terminal device, to help the terminal device adjust the DRX cycle to match the service cycle, so as to improve accuracy of receiving service data by the terminal device.

In a possible implementation, the first information is a first parameter. The first parameter indicates a start position, in a unit of a subframe, of a DRX cycle configured by the network device. For example, the first parameter is drx-StartOffset. The terminal device uses different values of the first parameter in different hyper system frames, so that start times of first timers in the different hyper system frames can be different.

In a possible implementation, the first information is a second parameter. The second parameter is an offset that is in one or more slots and that is used to calculate a start time of the first timer. For example, the first parameter is drx-StartOffset. The terminal device uses different values of the second parameter in different hyper system frames, so that start times of first timers in the different hyper system frames can be different.

In a possible implementation, the method further includes: The terminal device determines the index of the first hyper system frame based on one of the following:

The terminal device determines the index of the first hyper system frame based on the first indication information. Alternatively, the terminal device determines the index of the first hyper system frame based on the first indication information and first time information. The first indication information is from the network device. The first time information includes information about time in which the terminal device obtains a DRX configuration. The information about the time in which the terminal device obtains the DRX configuration may be a moment, or may be a period of time.

In a possible implementation, the method further includes: The terminal device receives first indication information from the network device. The first indication information is used to determine the index of the first hyper system frame.

Optionally, the first indication information is carried in the DRX configuration. In other words, when sending the DRX configuration to the terminal device, the network device further sends the first indication information. The first indication information indicates a position of a time-domain unit of the DRX configuration sent by the network device to the terminal device in a hyper system frame of the time-domain unit.

In this implementation, the network device can indicate, to the terminal device through the first indication information, the position of the time-domain unit of the DRX configuration sent by the network device in the hyper system frame of the time-domain unit. Therefore, this helps the terminal device align, based on the first indication information, a time-domain unit including a moment at which the network device sends the DRX configuration with a time-domain unit including a moment at which the terminal device obtains the DRX configuration, to ensure that the terminal device is synchronized with the network device in time domain, so as to improve accuracy of receiving service data by the terminal device.

In a possible implementation, the first indication information indicates that the network device sends the DRX configuration in a second half of a hyper system frame, or the first indication information indicates that the network device sends the DRX configuration in a first half of a hyper system frame.

Optionally, the first indication information is information about a reference frame. Optionally, a value of the first indication information is 512 or 0.

In a possible implementation, the first hyper system frame is a hyper system frame including a moment at which the terminal device obtains the DRX configuration.

In a possible implementation, that the terminal device determines the index of the first hyper system frame includes:

if the first indication information indicates that the network device sends the DRX configuration in a second half of a hyper system frame, and the moment at which the terminal device obtains the DRX configuration is in a first half of the first hyper system frame, the terminal device determines that the index of the first hyper system frame is L + 1; or the moment at which the terminal device obtains the DRX configuration is in a second half of the first hyper system frame, the terminal device determines that the index of the first hyper system frame is L; or if the first indication information indicates that the network device sends the DRX configuration in a first half of a hyper system frame, the terminal device determines that the index of the first hyper system frame is L, where L represents an index of a hyper system frame including a moment at which the network device sends the DRX configuration, and L is greater than or equal to 0.

In a possible implementation, the first timer is a discontinuous reception on-duration timer, for example, drx-onDurationTimer.

According to a second aspect, this application provides a communication method. A network device can determine first information, and can further send the first information to a terminal device. The first information is different from second information. The first information is used to determine a start time of a first timer in a first hyper system frame. The second information is used to determine a start time of a first timer in a second hyper system frame.

Optionally, the first timer is a discontinuous reception on-duration timer (drx-onDurationTimer).

In a possible implementation, the first information and the second information are different values of a same parameter.

In a possible implementation, the network device sends third information to the terminal device. The third information is used by the terminal device to determine the first information. Optionally, the third information is carried in DCI, a MAC CE, or RRC signaling.

In a possible implementation, the first information is a first offset, and duration indicated by the first offset is less than a DRX cycle.

In a possible implementation, the first information is a first parameter, and the first parameter is drx-StartOffset.

In a possible implementation, the first information is a second parameter, and the first parameter is drx-SlotOffset.

In a possible implementation, the network device sends first indication information to the terminal device. The first indication information is used to determine an index of the first hyper system frame.

In a possible implementation, the first indication information indicates that the network device sends a DRX configuration in a second half of a hyper system frame, or the first indication information indicates that the network device sends the DRX configuration in a first half of a hyper system frame.

Optionally, the first indication information is information about a reference frame. Optionally, a value of the first indication information is 512 or 0.

In a possible implementation, the first hyper system frame is a hyper system frame including a moment at which the terminal device obtains the DRX configuration.

It should be noted that specific implementations and beneficial effects of this aspect are similar to a part of the implementations of the first aspect. For details, refer to the specific implementations and beneficial effects of the first aspect. Details are not described herein again.

According to a third aspect, this application provides a communication method. In this method, a terminal device obtains fourth information. The fourth information includes information about a start time of an $M^{th}$ first timer, and M is an integer greater than or equal to 0. Then, the terminal device determines information about a start time of a $P^{th}$ first timer based on the fourth information. P is an integer greater than 0, and P is greater than M.

Optionally, the first timer is a discontinuous reception on-duration timer (drx-onDurationTimer).

In a possible implementation, the information about the start time of the $M^{th}$ first timer includes information about the following time-domain units: a frame and a subframe; a frame, a subframe, and a slot; or a frame, a subframe, a slot, and a symbol.

In a possible implementation, the information about the start time of the $P^{th}$ first timer includes information about the following time-domain units: a frame and a subframe; a frame, a subframe, and a slot; or a frame, a subframe, a slot, and a symbol.

In a possible implementation, that the terminal device determines information about a start time of a $P^{th}$ first timer based on the fourth information includes: The terminal device determines the information about the start time of the $P^{th}$ first timer based on the fourth information and a first cycle. The first cycle is equal to an accumulative sum of N DRX cycles. N is equal to P - M. Optionally, when M is equal to 0, N is equal to P.

In a possible implementation, the terminal device determines the start time of the $P^{th}$ first timer based on the following condition:

A remainder obtained by dividing a sum of a first quantity and the accumulative sum of the (P - M) DRX cycles by a second quantity is equal to a third quantity.

The first quantity is a quantity of time-domain units between a start position of a hyper system frame in which the $M^{th}$ first timer is located and the start time of the $M^{th}$ first timer. The second quantity is a quantity of time-domain units included in one hyper system frame. The third quantity is a quantity of time-domain units between a start position of a hyper system frame in which the $P^{th}$ first timer is located and the start time of the $P^{th}$ first timer.

In a possible implementation, that the terminal device determines the start time of the $P^{th}$ first timer includes: The terminal device determines a first quantity and a second quantity based on the fourth information. Then, the terminal device determines that a remainder obtained by dividing a sum of the first quantity and the accumulative sum of the (P - M) DRX cycles by the second quantity is a third quantity. Then, the terminal device determines information related to the start time of the first timer in a $P^{th}$ DRX cycle based on the third quantity.

In a possible implementation, when the fourth information includes a frame number $SFN_{start\ time}$ of a frame including a start time-domain unit and a subframe number $Q_{start\ time}$ of the start time-domain unit, that the terminal device determines information about a start time of a $P^{th}$ first timer based on the fourth information satisfies the following formula 3.1:

$$[(SFN \times 10) + Q] = [(SFN_{start\ time} \times 10 + Q_{start\ time}) + N \times T_{DRX}]\ mod\ (D \times 10)\ (formula$$

3.1),

where SFN is a frame number of the start time of the $P^{th}$ first timer; Q is a subframe number of the start time of the $P^{th}$ first timer; $SFN_{start\ time}$ is a frame number of the start time of the $M^{th}$ first timer; $Q_{start\ time}$ is a subframe number of the start time of the $M^{th}$ first timer; $N \times T_{DRX}$ is the first cycle, where a unit of the first cycle is a subframe; $T_{DRX}$ indicates duration of one DRX cycle, where optionally, the DRX cycle is a long DRX cycle (drx-LongCycle); and D is a quantity of frames included in one hyper system frame, where for example, D=1024, indicating that the hyper system frame includes 1024 frames.

In a possible implementation, when the fourth information includes a frame number $SFN_{start\ time}$ of a frame including a start time-domain unit, a subframe number $Q_{start\ time}$ of a subframe including the start time-domain unit, and a slot number $G_{start\ time}$ of the time-domain unit, that the terminal device determines information about a start time of a $P^{th}$ first timer based on the fourth information satisfies the following formula 3.2:

$$[((SFN \times 10) + Q) \times N_{slot}^{subframe,\mu} + G] = [((SFN_{start\ time} \times 10 + Q_{start\ time}) \times N_{slot}^{subframe,\mu} +$$

$$G_{start\ time}) + N \times T_{DRX} \times N_{slot}^{subframe,\mu}]\ mod\ (D \times 10 \times N_{slot}^{subframe,\mu})\ (formula\ 3.2),$$

where SFN is a frame number of the start time of the $P^{th}$ first timer; Q is a subframe number of the start time of the $P^{th}$ first timer; G is an index of a slot corresponding to the start time of the $P^{th}$ first timer in a subframe; $SFN_{start\ time}$ is a frame number of the start time of the $M^{th}$ first timer; $Q_{start\ time}$ is a subframe number of the start time of the $M^{th}$ first timer; $G_{start\ time}$ is an index of a slot corresponding to the start time of the $M^{th}$ first timer in a subframe; $N_{slot}^{subframe,\mu}$ is a quantity of slots included in one subframe; $N \times T_{DRX}$ is the first cycle, where a unit of the first cycle is a subframe; $T_{DRX}$ indicates duration of one DRX cycle, where optionally, the DRX cycle is a long DRX cycle (drx-LongCycle); and D is a quantity of frames included in one hyper system frame, where for example, D=1024, indicating that the hyper system frame includes 1024 frames.

In another possible implementation, when the fourth information includes a frame number $SFN_{start\ time}$ of a frame including a start time-domain unit and a slot number $A_{start\ time}$ of the time-domain unit, that the terminal device determines information about a start time of a $P^{th}$ first timer based on the fourth information satisfies the following formula 3.3:

$$[(SFN \times N_{slot}^{frame,\mu}) + A] = [(SFN_{start\ time} \times N_{slot}^{frame,\mu} + A_{start\ time}) + N \times T_{DRX} \times N_{slot}^{frame,\mu}$$

$$/10]\ mod\ (D \times N_{slot}^{frame,\mu})\ (formula\ 3.3),$$

where SFN is a frame number of the start time of the $P^{th}$ first timer; Q is a subframe number of the start time of the $P^{th}$ first timer; A is an index of a slot corresponding to the start time of the $P^{th}$ first timer in a system frame; $SFN_{start\ time}$ is a frame number of the start time of the $M^{th}$ first timer; $Q_{start\ time}$ is a subframe number of the start time of the $M^{th}$ first timer; $A_{start\ time}$ is an index of a slot corresponding to the start time of the $M^{th}$ first timer in a system frame; $N_{slot}^{subframe,\mu}$ is a quantity of slots included in one subframe; $N \times T_{DRX}$ is the first cycle, where a unit of the first cycle is a subframe; $T_{DRX}$ indicates duration of one DRX cycle, where optionally, the DRX cycle is a long DRX cycle (drx-LongCycle); and D is a quantity of frames included in one hyper system frame, where for example, D=1024, indicating that the hyper system frame includes 1024 frames.

In a possible implementation, when the fourth information includes a frame number $SFN_{start\ time}$ of a frame including a start time-domain unit, a subframe number $Q_{start\ time}$ of a subframe including the start time-domain unit, a slot number $G_{start\ time}$ of a slot including the time-domain unit, and a symbol number (or a symbol index) $B_{start\ time}$ of the time-domain unit, that the terminal device determines information about a start time of a $P^{th}$ first timer based on the fourth information satisfies the following formula 3.4:

$$[(((SFN \times 10) + Q) \times N_{slot}^{subframe,\mu} + G) \times H + B] = [((SFN_{\text{start time}} \times 10 + Q_{\text{start time}}) \times$$

$$N_{slot}^{subframe,\mu} + G_{\text{start time}}) \times H + B_{\text{start time}} + N \times T_{DRX} \times N_{slot}^{subframe,\mu} \times H] \bmod (D \times 10 \times N_{slot}^{subframe,\mu} \times$$

$$H) \text{ (formula 3.4)},$$

where SFN is a frame number of the start time of the $P^{th}$ first timer; Q is a subframe number of the start time of the $P^{th}$ first timer; G is an index of a slot corresponding to the start time of the $P^{th}$ first timer in a subframe; B is a symbol number of the start time of the $P^{th}$ first timer; $SFN_{\text{start time}}$ is a frame number of the start time of the $M^{th}$ first timer; $Q_{\text{start time}}$ is a subframe number of the start time of the $M^{th}$ first timer; $G_{\text{start time}}$ is an index of a slot corresponding to the start time of the $M^{th}$ first timer in a subframe; $B_{\text{start time}}$ is a symbol number of the start time of the $M^{th}$ first timer; $N_{slot}^{subframe,\mu}$ is a quantity of slots included in one subframe; $N_{slot}^{frame,\mu}$ is a quantity of slots included in one frame; $N \times T_{DRX}$ is the first cycle, where a unit of the first cycle is a subframe; $T_{DRX}$ indicates duration of one DRX cycle, where optionally, the DRX cycle is a long DRX cycle (drx-LongCycle); D is a quantity of frames included in one hyper system frame, where for example, D=1024, indicating that the hyper system frame includes 1024 frames; and H is a quantity of symbols included in one slot, where for example, H=14, indicating that one slot includes 14 symbols, or for example, H=12, indicating that one slot includes 12 symbols.

In a possible implementation, when the fourth information includes a frame number $SFN_{\text{start time}}$ of a frame including a start time-domain unit, a slot number $A_{\text{start time}}$ of the time-domain unit, and a symbol number (or a symbol index) $B_{\text{start time}}$ of the time-domain unit, that the terminal device determines information about a start time of a $P^{th}$ first timer based on the fourth information satisfies the following formula 3.5:

$$[((SFN \times N_{slot}^{frame,\mu}) + A) \times H + B] = [((SFN_{\text{start time}} \times N_{slot}^{frame,\mu} + A_{\text{start time}}) \times H + B_{\text{start}}$$

$$_{\text{time}}) + N \times T_{DRX} \times N_{slot}^{frame,\mu} \times H/10] \bmod (D \times N_{slot}^{frame,\mu} \times H) \text{ (formula 3.5)}$$

where SFN is a frame number of the start time of the $P^{th}$ first timer; Q is a subframe number of the start time of the $P^{th}$ first timer; A is an index of a slot corresponding to the start time of the $P^{th}$ first timer in a system frame; B is a symbol number of the start time of the $P^{th}$ first timer; $SFN_{\text{start time}}$ is a frame number of the start time of the $M^{th}$ first timer; $Q_{\text{start time}}$ is a subframe number of the start time of the $M^{th}$ first timer; $A_{\text{start time}}$ is an index of a slot corresponding to the start time of the $M^{th}$ first timer in a system frame; $B_{\text{start time}}$ is a symbol number of the start time of the $M^{th}$ first timer; $N_{slot}^{subframe,\mu}$ is a quantity of slots included in one subframe; $N_{slot}^{frame,\mu}$ is a quantity of slots included in one frame; $N \times T_{DRX}$ is the first cycle, where a unit of the first cycle is a subframe; $T_{DRX}$ indicates duration of one DRX cycle, where optionally, the DRX cycle is a long DRX cycle (drx-LongCycle); D is a quantity of frames included in one hyper system frame, where for example, D=1024, indicating that the hyper system frame includes 1024 frames; and H is a quantity of symbols included in one slot, where for example, H=14, indicating that one slot includes 14 symbols, or for example, H=12, indicating that one slot includes 12 symbols.

In a possible implementation, when the fourth information includes $SFN_{\text{start time}}$ and $Q_{\text{start time}}$, the terminal device determines the information about the start time of the $P^{th}$ first timer by using the following formula 3.6:

$$[(SFN \times 10) + Q] = F\{[(SFN_{\text{start time}} \times 10 + Q_{\text{start time}}) + N \times T_{DRX}] \bmod (1024 \times 10)\}$$

$$\text{(formula 3.6)}.$$

In another possible implementation, when the fourth information includes $SFN_{\text{start time}}$, $Q_{\text{start time}}$, and $G_{\text{start time}}$, the terminal device determines the information about the start time of the $P^{th}$ first timer by using the following formula 3.7:

$$[((SFN \times 10) + Q) \times N_{slot}^{subframe,\mu} + G] = F\{[((SFN_{\text{start time}} \times 10 + Q_{\text{start time}}) \times N_{slot}^{subframe,\mu}$$

$$+ G_{\text{start time}}) + N \times T_{DRX} \times N_{slot}^{subframe,\mu}] \bmod (1024 \times 10 \times N_{slot}^{subframe,\mu})\} \text{ (formula 3.7)}.$$

In another possible implementation, when the fourth information includes $SFN_{start\ time}$ and $A_{start\ time}$, the terminal device determines the information about the start time of the $P^{th}$ first timer by using the following formula 3.8:

$$[(SFN \times N_{slot}^{frame,\mu}) + A] = F\{[(SFN_{start\ time} \times N_{slot}^{frame,\mu} + A_{start\ time}) + N \times T_{DRX} \times N_{slot}^{frame,\mu}$$
$$/10]\ mod\ (1024 \times N_{slot}^{frame,\mu})\}\ (formula\ 3.8).$$

In another possible implementation, when the fourth information includes $SFN_{start\ time}$, $Q_{start\ time}$, $G_{start\ time}$, and $B_{start\ time}$, the terminal device determines the information about the start time of the $P^{th}$ first timer by using the following formula 3.9:

$$[(((SFN \times 10) + Q) \times N_{slot}^{subframe,\mu} + G) \times H + B] = F\{[(((SFN_{start\ time} \times 10 + Q_{start\ time}) \times$$
$$N_{slot}^{subframe,\mu} + G_{start\ time}) \times H + B_{start\ time} + N \times T_{DRX} \times N_{slot}^{subframe,\mu} \times H]\ mod\ (1024 \times 10 \times N_{slot}^{subframe,\mu}$$
$$\times H)\}\ (formula\ 3.9).$$

In another possible implementation, when the fourth information includes $SFN_{start\ time}$, $A_{start\ time}$, and $B_{start\ time}$, the terminal device determines the information about the start time of the $P^{th}$ first timer by using the following formula 3.10:

$$[((SFN \times N_{slot}^{frame,\mu}) + A) \times H + B] = F\{[(((SFN_{start\ time} \times N_{slot}^{frame,\mu} + A_{start\ time}) \times H + B_{start}$$
$$_{time}) + N \times T_{DRX} \times N_{slot}^{frame,\mu} \times H/10]\ mod\ (1024 \times N_{slot}^{frame,\mu} \times H)\}\ (formula\ 3.10).$$

In another possible implementation, when the fourth information includes $SFN_{start\ time}$ and $Q_{start\ time}$, the terminal device determines the information about the start time of the $P^{th}$ first timer by using the following formula 3.11:

$$[(SFN \times 10) + Q] = F\{[(SFN_{start\ time} \times 10 + Q_{start\ time}) + N \times T_{DRX}]\}\ mod\ (1024 \times 10)$$
$$(formula\ 3.11).$$

In another possible implementation, when the fourth information includes $SFN_{start\ time}$, $Q_{start\ time}$, and $G_{start\ time}$, the terminal device determines the information about the start time of the $P^{th}$ first timer by using the following formula 3.12:

$$[((SFN \times 10) + Q) \times N_{slot}^{subframe,\mu} + G] = F\{[((SFN_{start\ time} \times 10 + Q_{start\ time}) \times N_{slot}^{subframe,\mu}$$
$$+ G_{start\ time}) + N \times T_{DRX} \times N_{slot}^{subframe,\mu}]\}\ mod\ (1024 \times 10 \times N_{slot}^{subframe,\mu})\ (formula\ 3.12).$$

In another possible implementation, when the fourth information includes $SFN_{start\ time}$ and $A_{start\ time}$, the terminal device determines the information about the start time of the $P^{th}$ first timer by using the following formula 3.13:

$$[(SFN \times N_{slot}^{frame,\mu}) + A] = F\{[(SFN_{start\ time} \times N_{slot}^{frame,\mu} + A_{start\ time}) + N \times T_{DRX} \times N_{slot}^{frame,\mu}$$
$$/10]\}\ mod\ (1024 \times N_{slot}^{frame,\mu})\ (formula\ 3.13).$$

In another possible implementation, when the fourth information includes $SFN_{start\ time}$, $Q_{start\ time}$, $G_{start\ time}$, and $B_{start\ time}$, the terminal device determines the information about the start time of the $P^{th}$ first timer by using the following formula 3.14:

$$[(((SFN \times 10) + Q) \times N_{slot}^{subframe,\mu} + G) \times H + B] = F\{[((SFN_{\text{start time}} \times 10 + Q_{\text{start time}}) \times$$

$$N_{slot}^{subframe,\mu} + G_{\text{start time}}) \times H + B_{\text{start time}} + N \times T_{DRX} \times N_{slot}^{subframe,\mu} \times H]\} \bmod (1024 \times 10 \times N_{slot}^{subframe,\mu}$$

$$\times H) \text{ (formula 3.14)}.$$

In another possible implementation, when the fourth information includes $SFN_{\text{start time}}$, $A_{\text{start time}}$, and $B_{\text{start time}}$, the terminal device determines the information about the start time of the $P^{\text{th}}$ first timer by using the following formula 3.15:

$$[((SFN \times N_{slot}^{frame,\mu}) + A) \times H + B] = F\{[((SFN_{\text{start time}} \times N_{slot}^{frame,\mu} + A_{\text{start time}}) \times H + B_{\text{start}}$$

$$_{\text{time}}) + N \times T_{DRX} \times N_{slot}^{frame,\mu} \times H/10]\} \bmod (1024 \times N_{slot}^{frame,\mu} \times H) \text{ (formula 3.15)}.$$

In the formula 3.6, formula 3.7, formula 3.8, formula 3.9, formula 3.10, formula 3.11, formula 3.12, formula 3.13, formula 3.14, and formula 3.15, F{} may represent a rounding operation. For example, F{} may be a rounding down operation, for example, a floor() function; may be a rounding up operation, for example, a ceil() function; or may be a rounding off operation, for example, a round() function. For meanings of other parameters, refer to the related descriptions corresponding to the formula 3.1, formula 3.2, formula 3.3, formula 3.4, and formula 3.5. Details are not described herein again.

In another possible implementation, when the fourth information includes $SFN_{\text{start time}}$, $Q_{\text{start time}}$, and $R_{\text{start time}}$, the terminal device determines the information about the start time of the $P^{\text{th}}$ first timer by using the following formula 3.16:

$$[(SFN \times 10) + Q + R] = [(SFN_{\text{start time}} \times 10 + Q_{\text{start time}} + R_{\text{start time}}) + N \times T_{DRX}] \bmod (1024 \times 10) \quad \text{(formula 3.16)}.$$

In another possible implementation, when the fourth information includes $SFN_{\text{start time}}$, $Q_{\text{start time}}$, $G_{\text{start time}}$, and $R_{\text{start time}}$, the terminal device determines the information about the start time of the $P^{\text{th}}$ first timer by using the following formula 3.17:

$$[((SFN \times 10) + Q) \times N_{slot}^{subframe,\mu} + G + R] = [((SFN_{\text{start time}} \times 10 + Q_{\text{start time}}) \times N_{slot}^{subframe,\mu}$$

$$+ G_{\text{start time}}) + R_{\text{start time}} + N \times T_{DRX} \times N_{slot}^{subframe,\mu}] \bmod (1024 \times 10 \times N_{slot}^{subframe,\mu}) \text{ (formula 3.17)}.$$

In another possible implementation, when the fourth information includes $SFN_{\text{start time}}$, $A_{\text{start time}}$, and $R_{\text{start time}}$, the terminal device determines the information about the start time of the $P^{\text{th}}$ first timer by using the following formula 3.18:

$$[(SFN \times N_{slot}^{frame,\mu}) + A + R] = [(SFN_{\text{start time}} \times N_{slot}^{frame,\mu} + A_{\text{start time}}) + R_{\text{start time}} + N \times T_{DRX}$$

$$\times N_{slot}^{frame,\mu}/10] \bmod (1024 \times N_{slot}^{frame,\mu}) \text{ (formula 3.18)}.$$

In another possible implementation, when the fourth information includes $SFN_{\text{start time}}$, $Q_{\text{start time}}$, $G_{\text{start time}}$, $B_{\text{start time}}$, and $R_{\text{start time}}$, the terminal device determines the information about the start time of the $P^{\text{th}}$ first timer by using the following formula 3.19:

$$[(((SFN \times 10) + Q) \times N_{slot}^{subframe,\mu} + G) \times H + B + R] = [((SFN_{\text{start time}} \times 10 + Q_{\text{start time}}) \times$$

$$N_{slot}^{subframe,\mu} + G_{\text{start time}}) \times H + B_{\text{start time}} + R_{\text{start time}} + N \times T_{DRX} \times N_{slot}^{subframe,\mu} \times H] \bmod (1024 \times 10 \times$$

$$N_{slot}^{subframe,\mu} \times H) \text{ (formula 3.19)}.$$

In another possible implementation, when the fourth information includes $SFN_{\text{start time}}$, $A_{\text{start time}}$, $B_{\text{start time}}$, and

$R_{\text{start time}}$, the terminal device determines the information about the start time of the $P^{th}$ first timer by using the following formula 3.20:

$$[((SFN \times N_{slot}^{frame,\mu}) + A) \times H + B + R] = [((SFN_{\text{start time}} \times N_{slot}^{frame,\mu} + A_{\text{start time}}) \times H +$$

$$B_{\text{start time}}) + R_{\text{start time}} + N \times T_{DRX} \times N_{slot}^{frame,\mu} \times H/10] \bmod (1024 \times N_{slot}^{frame,\mu} \times H) \text{ (formula 3.20)}.$$

For meanings of parameters in the formula 3.16, formula 3.17, formula 3.18, formula 3.19, and formula 3.20, refer to the related descriptions corresponding to the formula 3.1, formula 3.2, formula 3.3, formula 3.4, and formula 3.5. Details are not described herein again.

In a possible implementation, the method further includes: The terminal device receives second indication information from the network device. The second indication information indicates information about a reference frame, and the information about the reference frame is used to determine the information about the start time of the first timer. Optionally, the information about the reference frame includes a frame number of the reference frame. Optionally, the frame number of the reference frame is 512 or 0.

In a possible implementation, that the terminal device determines information related to a start time of a $P^{th}$ first timer based on the fourth information includes: The terminal device determines the information about the start time of the $P^{th}$ first timer based on the fourth information, the information about the reference frame, and a first cycle. The first cycle is equal to an accumulative sum of N DRX cycles.

In a possible implementation, the terminal device determines the start time of the $P^{th}$ first timer based on the following condition:

A remainder obtained by dividing a sum of the accumulative sum of the (P - M) DRX cycles, a fourth quantity, and a first quantity by a second quantity is equal to a third quantity.

The first quantity is a quantity of time-domain units between a start position of a hyper system frame in which the $M^{th}$ first timer is located and the start time of the $M^{th}$ first timer. The second quantity is a quantity of time-domain units included in one hyper system frame. The third quantity is a quantity of time-domain units between a start position of a hyper system frame in which the $P^{th}$ first timer is located and the start time of the $P^{th}$ first timer. The fourth quantity is a quantity of time-domain units between a start position of a hyper system frame including a frame indicated by third indication information and the frame indicated by the third indication information.

In a possible implementation, a process in which the terminal device determines the information related to the start time of the $P^{th}$ first timer based on the fourth information, the information about the reference frame, and the accumulative sum of the (P - M) DRX cycles may specifically include: The terminal device determines the fourth quantity based on the information about the reference frame. Then, the terminal device determines the first quantity and the second quantity based on the fourth information. Then, the terminal device determines that the remainder obtained by dividing the sum of the first quantity, the fourth quantity, and the accumulative sum of the (P - M) DRX cycles by the second quantity is the third quantity. Then, the terminal device determines, based on the third quantity, information related to a start time of a first timer in a $P^{th}$ DRX cycle.

In a possible implementation, when the fourth information includes a frame number $SFN_{\text{start time}}$ of a frame including a start time-domain unit and a subframe number $Q_{\text{start time}}$ of the start time-domain unit, that the terminal device determines the information about the start time of the $P^{th}$ first timer based on the fourth information and the information about the reference frame satisfies the following formula 4.1:

$$[(SFN \times 10) + Q] = [(SFN_{\text{reference}} \times 10) + (SFN_{\text{start time}} \times 10 + Q_{\text{start time}}) + N \times T_{DRX}] \bmod (D \times 10) \quad \text{(formula 4.1)},$$

where $SFN_{\text{reference}}$ is a frame number of the reference frame indicated by the second indication information; SFN is a frame number of the start time of the $P^{th}$ first timer; Q is a subframe number of the start time of the $P^{th}$ first timer; $SFN_{\text{start time}}$ is a frame number of the start time of the $M^{th}$ first timer; $Q_{\text{start time}}$ is a subframe number of the start time of the $M^{th}$ first timer; $N \times T_{DRX}$ is the first cycle, where a unit of the first cycle is a subframe; $T_{DRX}$ indicates duration of one DRX cycle, where optionally, the DRX cycle is a long DRX cycle (drx-LongCycle); D is a quantity of frames included in one hyper system frame, where for example, D=1024, indicating that the hyper system frame includes 1024 frames.

In a possible implementation, when the fourth information includes a frame number $SFN_{\text{start time}}$ of a frame including a start time-domain unit, a subframe number $Q_{\text{start time}}$ of a subframe including the start time-domain unit, and a slot number $G_{\text{start time}}$ of a time-domain unit, that the terminal device determines the information about the start time of the $P^{th}$ first timer based on the fourth information and the information about the reference frame satisfies the following formula 4.2:

$$[((SFN \times 10) + Q) \times N_{slot}^{subframe,\mu} + G] = [((SFN_{reference} \times 10) + (SFN_{start\ time} \times 10 + Q_{start\ time}))$$

$$time)) \times N_{slot}^{subframe,\mu} + G_{start\ time} + N \times T_{DRX} \times N_{slot}^{subframe,\mu}] \bmod (D \times 10 \times N_{slot}^{subframe,\mu}) \text{ (formula 4.2)},$$

where $SFN_{reference}$ is a frame number of the reference frame indicated by the second indication information; SFN is a frame number of the start time of the $P^{th}$ first timer; Q is a subframe number of the start time of the $P^{th}$ first timer; G is an index of a slot corresponding to the start time of the $P^{th}$ first timer in a subframe; $SFN_{start\ time}$ is a frame number of the start time of the $M^{th}$ first timer; $Q_{start\ time}$ is a subframe number of the start time of the $M^{th}$ first timer; $G_{start\ time}$ is an index of a slot corresponding to the start time of the $M^{th}$ first timer in a subframe; $N_{slot}^{subframe,\mu}$ is a quantity of slots included in one subframe; $N \times T_{DRX}$ is the first cycle, where a unit of the first cycle is a subframe; $T_{DRX}$ indicates duration of one DRX cycle, where optionally, the DRX cycle is a long DRX cycle (drx-LongCycle); D is a quantity of frames included in one hyper system frame, where for example, D=1024, indicating that the hyper system frame includes 1024 frames.

In another possible implementation, when the fourth information includes a frame number $SFN_{start\ time}$ of a frame including a start time-domain unit and a slot number $A_{start\ time}$ of the time-domain unit, that the terminal device determines information about a start time of a $P^{th}$ first timer based on the fourth information and the information about the reference frame satisfies the following formula 4.3:

$$[(SFN \times N_{slot}^{frame,\mu}) + A] = [(SFN_{reference} \times N_{slot}^{frame,\mu}) + (SFN_{start\ time} \times N_{slot}^{frame,\mu} + A_{start\ time})$$

$$+ N \times T_{DRX} \times N_{slot}^{frame,\mu}/10] \bmod (D \times N_{slot}^{frame,\mu}) \text{ (formula 4.3)},$$

where $SFN_{reference}$ is a frame number of the reference frame indicated by the second indication information; SFN is a frame number of the start time of the $P^{th}$ first timer; Q is a subframe number of the start time of the $P^{th}$ first timer; A is an index of a slot corresponding to the start time of the $P^{th}$ first timer in a system frame; $SFN_{start\ time}$ is a frame number of the start time of the $M^{th}$ first timer; $Q_{start\ time}$ is a subframe number of the start time of the $M^{th}$ first timer; $A_{start\ time}$ is an index of a slot corresponding to the start time of the $M^{th}$ first timer in a system frame; $N_{slot}^{subframe,\mu}$ is a quantity of slots included in one subframe; $N \times T_{DRX}$ is the first cycle, where a unit of the first cycle is a subframe; $T_{DRX}$ indicates duration of one DRX cycle, where optionally, the DRX cycle is a long DRX cycle (drx-LongCycle); D is a quantity of frames included in one hyper system frame, where for example, D=1024, indicating that the hyper system frame includes 1024 frames.

In another possible implementation, when the fourth information includes a frame number $SFN_{start\ time}$ of a frame including a start time-domain unit, a subframe number $Q_{start\ time}$ of a subframe including the start time-domain unit, a slot number $G_{start\ time}$ of a slot including a time-domain unit, and a symbol number (or a symbol index) $B_{start\ time}$ of the time-domain unit, that the terminal device determines information about the start time of the $P^{th}$ first timer based on the fourth information and the information about the reference frame satisfies the following formula 4.4:

$$[(((SFN \times 10) + Q) \times N_{slot}^{subframe,\mu} + G) \times H + B] = [((SFN_{reference} \times 10 + SFN_{start\ time} \times 10$$

$$+ Q_{start\ time}) \times N_{slot}^{subframe,\mu} + G_{start\ time}) \times H + B_{start\ time} + N \times T_{DRX} \times N_{slot}^{subframe,\mu} \times H] \bmod (D \times 10 \times$$

$$N_{slot}^{subframe,\mu} \times H) \text{ (formula 4.4)},$$

where $SFN_{reference}$ is a frame number of the reference frame indicated by the second indication information; SFN is a frame number of the start time of the $P^{th}$ first timer; Q is a subframe number of the start time of the $P^{th}$ first timer; G is an index of a slot corresponding to the start time of the $P^{th}$ first timer in a subframe; B is a symbol number of the start time of the $P^{th}$ first timer; $SFN_{start\ time}$ is a frame number of the start time of the $M^{th}$ first timer; $Q_{start\ time}$ is a subframe number of the start time of the $M^{th}$ first timer; $G_{start\ time}$ is an index of a slot corresponding to the start time of the $M^{th}$ first timer in a subframe; $B_{start\ time}$ is a symbol number of the start time of the $M^{th}$ first timer; $N_{slot}^{subframe,\mu}$ is a quantity of slots included in one subframe; $N_{slot}^{frame,\mu}$ is a quantity of slots included in one frame; $N \times T_{DRX}$ is the first cycle, where a unit of the first cycle is a subframe; $T_{DRX}$ indicates duration of one DRX cycle, where optionally, the DRX cycle is a long DRX cycle (drx-LongCycle); D is a quantity of frames included in one hyper system frame, where for example, D=1024, indicating that the hyper system frame includes 1024 frames; and H is a quantity of symbols included in one slot, where for example, H=14, indicating that one slot includes 14 symbols, or for example, H=12, indicating that one slot includes 12 symbols.

In another possible implementation, when the fourth information includes a frame number $SFN_{start\ time}$ of a frame including a start time-domain unit, a slot number $A_{start\ time}$ of a slot including the time-domain unit, and a symbol number (or a symbol index) $B_{start\ time}$ of the time-domain unit, that the terminal device determines the information about the start time of the $P^{th}$ first timer based on the fourth information and the information about the reference frame satisfies the following formula 4.5:

$$[((SFN \times N_{slot}^{frame,\mu}) + A) \times H + B] = [((SFN_{reference} \times N_{slot}^{frame,\mu} + SFN_{start\ time} \times N_{slot}^{frame,\mu}$$

$$+ A_{start\ time}) \times H + B_{start\ time}) + N \times T_{DRX} \times N_{slot}^{frame,\mu} \times H/10] \bmod (D \times N_{slot}^{frame,\mu} \times H) \text{ (formula 4.5)},$$

where $SFN_{reference}$ is a frame number of the reference frame indicated by the second indication information; SFN is a frame number of the start time of the $P^{th}$ first timer; Q is a subframe number of the start time of the $P^{th}$ first timer; A is an index of a slot corresponding to the start time of the $P^{th}$ first timer in a system frame; B is a symbol number of the start time of the $P^{th}$ first timer; $SFN_{start\ time}$ is a frame number of the start time of the $M^{th}$ first timer; $Q_{start\ time}$ is a subframe number of the start time of the $M^{th}$ first timer; $A_{start\ time}$ is an index of a slot corresponding to the start time of the $M^{th}$ first timer in a system frame; $B_{start\ time}$ is a symbol number of the start time of the $M^{th}$ first timer; $N_{slot}^{subframe,\mu}$ is a quantity of slots included in one subframe; $N_{slot}^{frame,\mu}$ is a quantity of slots included in one frame; $N \times T_{DRX}$ is the first cycle, where a unit of the first cycle is a subframe; $T_{DRX}$ indicates duration of one DRX cycle, where optionally, the DRX cycle is a long DRX cycle (drx-LongCycle); D is a quantity of frames included in one hyper system frame, where for example, D=1024, indicating that the hyper system frame includes 1024 frames; and H is a quantity of symbols included in one slot, where for example, H=14, indicating that one slot includes 14 symbols, or for example, H=12, indicating that one slot includes 12 symbols.

In a possible implementation, when the fourth information includes $SFN_{start\ time}$ and $Q_{start\ time}$, the terminal device determines the information about the start time of the $P^{th}$ first timer by using the following formula 4.6:

$[(SFN \times 10) + Q] = F\{[(SFN_{reference} \times 10) + (SFN_{start\ time} \times 10 + Q_{start\ time}) + N \times T_{DRX}] \bmod (1024 \times 10)$

In another possible implementation, when the fourth information includes $SFN_{start\ time}$, $Q_{start\ time}$, and $G_{start\ time}$, the terminal device determines the information about the start time of the $P^{th}$ first timer by using the following formula 4.7:

$$[((SFN \times 10) + Q) \times N_{slot}^{subframe,\mu} + G] = F\{[((SFN_{reference} \times 10) + (SFN_{start\ time} \times 10 +$$

$$Q_{start\ time})) \times N_{slot}^{subframe,\mu} + G_{start\ time} + N \times T_{DRX} \times N_{slot}^{subframe,\mu}] \bmod (1024 \times 10 \times N_{slot}^{subframe,\mu})\} \text{ (formula}$$

$4.7)$.

In another possible implementation, when the fourth information includes $SFN_{start\ time}$ and $A_{start\ time}$, the terminal device determines the information about the start time of the $P^{th}$ first timer by using the following formula 4.8:

$$[(SFN \times N_{slot}^{frame,\mu}) + A] = F\{[(SFN_{reference} \times N_{slot}^{frame,\mu}) + (SFN_{start\ time} \times N_{slot}^{frame,\mu} + A_{start}$$

$$_{time}) + N \times T_{DRX} \times N_{slot}^{frame,\mu}/10] \bmod (1024 \times N_{slot}^{frame,\mu})\} \text{ (formula 4.8)}.$$

In another possible implementation, when the fourth information includes $SFN_{start\ time}$, $Q_{start\ time}$, $G_{start\ time}$, and $B_{start\ time}$, the terminal device determines the information about the start time of the $P^{th}$ first timer by using the following formula 4.9:

$$[(((SFN \times 10) + Q) \times N_{slot}^{subframe,\mu} + G) \times H + B] = F\{[((SFN_{reference} \times 10 + SFN_{start\ time} \times 10 + Q_{start\ time}) \times N_{slot}^{subframe,\mu} + G_{start\ time}) \times H + B_{start\ time} + N \times T_{DRX} \times N_{slot}^{subframe,\mu} \times H] \bmod (1024 \times 10 \times N_{slot}^{subframe,\mu} \times H)\} \text{ (formula 4.9)}.$$

In another possible implementation, when the fourth information includes $SFN_{start\ time}$, $A_{start\ time}$, and $B_{start\ time}$, the terminal device determines the information about the start time of the $P^{th}$ first timer by using the following formula 4.10:

$$[((SFN \times N_{slot}^{frame,\mu}) + A) \times H + B] = F\{[((SFN_{reference} \times N_{slot}^{frame,\mu} + SFN_{start\ time} \times N_{slot}^{frame,\mu} + A_{start\ time}) \times H + B_{start\ time}) + N \times T_{DRX} \times N_{slot}^{frame,\mu} \times H/10] \bmod (1024 \times N_{slot}^{frame,\mu} \times H)\} \text{ (formula 4.10)}.$$

In another possible implementation, when the fourth information includes $SFN_{start\ time}$ and $Q_{start\ time}$, the terminal device determines the information about the start time of the $P^{th}$ first timer by using the following formula 4.11:

$$[(SFN \times 10) + Q] = F\{[(SFN_{reference} \times 10) + (SFN_{start\ time} \times 10 + Q_{start\ time}) + N \times T_{DRX}]\} \text{-->} \bmod (1024 \times 10) \quad \text{(formula 4.11)}.$$

In another possible implementation, when the fourth information includes $SFN_{start\ time}$, $Q_{start\ time}$, and $G_{start\ time}$, the terminal device determines the information about the start time of the $P^{th}$ first timer by using the following formula 4.12:

$$[((SFN \times 10) + Q) \times N_{slot}^{subframe,\mu} + G] = F\{[((SFN_{reference} \times 10) + (SFN_{start\ time} \times 10 + Q_{start\ time})) \times N_{slot}^{subframe,\mu} + G_{start\ time} + N \times T_{DRX} \times N_{slot}^{subframe,\mu}]\} \bmod (1024 \times 10 \times N_{slot}^{subframe,\mu}) \text{ (formula 4.12)}.$$

In another possible implementation, when the fourth information includes $SFN_{start\ time}$ and $A_{start\ time}$, the terminal device determines the information about the start time of the $P^{th}$ first timer by using the following formula 4.13:

$$[(SFN \times N_{slot}^{frame,\mu}) + A] = F\{[(SFN_{reference} \times N_{slot}^{frame,\mu}) + (SFN_{start\ time} \times N_{slot}^{frame,\mu} + A_{start\ time}) + N \times T_{DRX} \times N_{slot}^{frame,\mu}/10]\} \bmod (1024 \times N_{slot}^{frame,\mu}) \text{ (formula 4.13)}.$$

In another possible implementation, when the fourth information includes $SFN_{start\ time}$, $Q_{start\ time}$, $G_{start\ time}$, and $B_{start\ time}$, the terminal device determines the information about the start time of the $P^{th}$ first timer by using the following formula 4.14:

$$[(((SFN \times 10) + Q) \times N_{slot}^{subframe,\mu} + G) \times H + B] = F\{[((SFN_{reference} \times 10 + SFN_{start\ time} \times 10 + Q_{start\ time}) \times N_{slot}^{subframe,\mu} + G_{start\ time}) \times H + B_{start\ time} + N \times T_{DRX} \times N_{slot}^{subframe,\mu} \times H]\} \bmod (1024 \times 10 \times N_{slot}^{subframe,\mu} \times H) \text{ (formula 4.14)}.$$

In another possible implementation, when the fourth information includes $SFN_{start\ time}$, $A_{start\ time}$, and $B_{start\ time}$, the terminal device determines the information about the start time of the $P^{th}$ first timer by using the following formula 4.15:

$$[((SFN \times N_{slot}^{frame,\mu}) + A) \times H + B] = F\{[((SFN_{reference} \times N_{slot}^{frame,\mu} + SFN_{start\ time} \times N_{slot}^{frame,\mu}$$

$$+ A_{start\ time}) \times H + B_{start\ time}) + N \times T_{DRX} \times N_{slot}^{frame,\mu} \times H/10]\} \bmod (1024 \times N_{slot}^{frame,\mu} \times H)\ (\text{formula}$$

$$4.15).$$

In the formula 4.6, formula 4.7, formula 4.8, formula 4.9, formula 4.10, formula 4.11, formula 4.12, formula 4.14, formula 4.14, and formula 4.15, F{} may represent a rounding operation. For example, F{} may be a rounding down operation, for example, a floor() function; may be a rounding up operation, for example, a ceil() function; or may be a rounding off operation, for example, a round() function. For meanings of other parameters, refer to the related descriptions corresponding to the formula 4.1, formula 4.2, formula 4.4, formula 4.4, and formula 4.5. Details are not described herein again.

In another possible implementation, when the fourth information includes $SFN_{start\ time}$, $Q_{start\ time}$, and $R_{start\ time}$, the terminal device determines the information about the start time of the $P^{th}$ first timer by using the following formula 4.16:

$$[(SFN \times 10) + Q + R] = [(SFNreference \times 10) + (SFN_{start\ time} \times 10 + Q_{start\ time}) + R_{start\ time} + N \times T_{DRX}] \bmod (1024 \times 10)\qquad (\text{formula}\ 4.16).$$

In another possible implementation, when the fourth information includes $SFN_{start\ time}$, $Q_{start\ time}$, $G_{start\ time}$, and $R_{start\ time}$, the terminal device determines the information about the start time of the $P^{th}$ first timer by using the following formula 4.17:

$$[((SFN \times 10) + Q) \times N_{slot}^{subframe,\mu} + G + R] = [((SFN_{reference} \times 10) + (SFN_{start\ time} \times 10 +$$

$$Q_{start\ time})) \times N_{slot}^{subframe,\mu} + G_{start\ time} + R_{start\ time} + N \times T_{DRX} \times N_{slot}^{subframe,\mu}] \bmod (1024 \times 10 \times N_{slot}^{subframe,\mu})$$

$$(\text{formula}\ 4.17).$$

In another possible implementation, when the fourth information includes $SFN_{start\ time}$, $A_{start\ time}$, and $R_{start\ time}$, the terminal device determines the information about the start time of the $P^{th}$ first timer by using the following formula 4.18:

$$[(SFN \times N_{slot}^{frame,\mu}) + A + R] = [(SFN_{reference} \times N_{slot}^{frame,\mu}) + (SFN_{start\ time} \times N_{slot}^{frame,\mu} + A_{start}$$

$$_{time}) + R_{start\ time} + N \times T_{DRX} \times N_{slot}^{frame,\mu}/10] \bmod (1024 \times N_{slot}^{frame,\mu})\ (\text{formula}\ 4.18).$$

In another possible implementation, when the fourth information includes $SFN_{start\ time}$, $Q_{start\ time}$, $G_{start\ time}$, $B_{start\ time}$, and $R_{start\ time}$, the terminal device determines the information about the start time of the $P^{th}$ first timer by using the following formula 4.19:

$$[(((SFN \times 10) + Q) \times N_{slot}^{subframe,\mu} + G) \times H + B + R] = [((SFN_{reference} \times 10 + SFN_{start\ time}$$

$$\times 10 + Q_{start\ time}) \times N_{slot}^{subframe,\mu} + G_{start\ time}) \times H + B_{start\ time} + R_{start\ time} + N \times T_{DRX} \times N_{slot}^{subframe,\mu} \times H]$$

$$\bmod (1024 \times 10 \times N_{slot}^{subframe,\mu} \times H)\ (\text{formula}\ 4.19).$$

In another possible implementation, when the fourth information includes $SFN_{start\ time}$, $A_{start\ time}$, $B_{start\ time}$, and $R_{start\ time}$, the terminal device determines the information about the start time of the $P^{th}$ first timer by using the following formula 4.20:

$$[((SFN \times N_{slot}^{frame,\mu}) + A) \times H + B + R] = [((SFN_{reference} \times N_{slot}^{frame,\mu} + SFN_{start\ time} \times$$

$$N_{slot}^{frame,\mu} + A_{start\ time}) \times H + B_{start\ time}) + R_{start\ time} + N \times T_{DRX} \times N_{slot}^{frame,\mu} \times H/10] \bmod (1024 \times N_{slot}^{frame,\mu}$$

$$\times H) \ (formula\ 4.20).$$

For meanings of parameters in the formula 4.16, formula 4.17, formula 4.18, formula 4.19, and formula 4.20, refer to the related descriptions corresponding to the formula 4.1, formula 4.2, formula 4.4, formula 4.4, and formula 4.5. Details are not described herein again.

According to a fourth aspect, this application provides a communication method. In this method, a network device obtains fourth information. The fourth information includes information about a start time of an $M^{th}$ first timer, and M is an integer greater than or equal to 0. Then, the network device sends the fourth information to a terminal device. The fourth information is used by the terminal device to determine information about a start time of a $P^{th}$ first timer based on the fourth information. P is an integer greater than 0, and P is greater than M.

Optionally, the first timer is a discontinuous reception on-duration timer (drx-onDurationTimer).

In a possible implementation, the information about the start time of the $M^{th}$ first timer includes information about the following time-domain units: a frame and a subframe; a frame, a subframe, and a slot; or a frame, a subframe, a slot, and a symbol.

In a possible implementation, the information about the start time of the $P^{th}$ first timer includes information about the following time-domain units: a frame and a subframe; a frame, a subframe, and a slot; or a frame, a subframe, a slot, and a symbol.

In a possible implementation, the method further includes: The network device sends second indication information to the terminal device. The second indication information indicates information about a reference frame, and the information about the reference frame is used to determine information about a start time of a first timer.

Optionally, the information about the reference frame includes a frame number of the reference frame. Optionally, the frame number of the reference frame is 512 or 0.

It should be noted that specific implementations and beneficial effects of this aspect are similar to a part of the implementations of the third aspect. For details, refer to the specific implementations and beneficial effects of the third aspect. Details are not described herein again.

According to a fifth aspect, this application provides a communication apparatus. The communication apparatus is a terminal device. The communication apparatus includes a processing module. The processing module is configured to determine, based on first information, a start time of a first timer in a first hyper system frame. The first information is different from second information. The first information is used to determine the start time of the first timer in the first hyper system frame. The second information is used to determine a start time of a first timer in a second hyper system frame.

It should be noted that specific implementations and beneficial effects of this aspect are similar to a part of the implementations of the first aspect. For details, refer to the specific implementations and beneficial effects of the first aspect. Details are not described herein again.

According to a sixth aspect, this application provides a communication apparatus. The communication apparatus is a network device. The network device includes a processing module and a transceiver module. The processing module is configured to determine first information. The first information is different from second information. The first information is used to determine a start time of a first timer in a first hyper system frame. The second information is used to determine a start time of a first timer in a second hyper system frame. The transceiver module is configured to send the first information to a terminal device.

It should be noted that specific implementations and beneficial effects of this aspect are similar to a part of the implementations of the first aspect. For details, refer to the specific implementations and beneficial effects of the first aspect. Details are not described herein again.

According to a seventh aspect, this application provides a communication apparatus. The communication apparatus is a terminal device. The communication apparatus includes a processing module. The processing module is configured to: obtain fourth information, and determine information about a start time of a $P^{th}$ first timer based on the fourth information. The fourth information includes information about a start time of an $M^{th}$ first timer, M is an integer greater than or equal to 0, P is an integer greater than 0, and P is greater than M.

It should be noted that specific implementations and beneficial effects of this aspect are similar to a part of the implementations of the third aspect. For details, refer to the specific implementations and beneficial effects of the third aspect. Details are not described herein again.

According to an eighth aspect, this application provides a communication apparatus. The communication apparatus is a network device. The communication apparatus includes a processing module and a transceiver module. The processing module is configured to obtain fourth information. The fourth information includes information about a start time of an M$^{th}$ first timer, and M is an integer greater than or equal to 0. The transceiver module is configured to send the fourth information to a terminal device. The fourth information is used by the terminal device to determine information about a start time of a P$^{th}$ first timer based on the fourth information, P is an integer greater than 0, and P is greater than M.

It should be noted that specific implementations and beneficial effects of this aspect are similar to a part of the implementations of the third aspect. For details, refer to the specific implementations and beneficial effects of the third aspect. Details are not described herein again.

According to a ninth aspect, an embodiment of this application provides a communication apparatus. The communication apparatus may be the terminal device in the foregoing implementations, or may be a chip in the terminal device. The communication apparatus may include a processing module and a transceiver module. When the communication apparatus is the terminal device, the processing module may be a processor, and the transceiver module may be a transceiver. The terminal device may further include a storage module. The storage module may be a memory. The storage module is configured to store instructions. The processing module executes the instructions stored in the storage module, so that the terminal device performs the method according to any one of the first aspect or the implementations of the first aspect, or performs the method according to any one of the third aspect or the implementations of the third aspect. When the communication apparatus is the chip in the terminal device, the processing module may be a processor, and the transceiver module may be an input/output interface, a pin, a circuit, or the like. The processing module executes instructions stored in a storage module, so that the terminal device performs the method according to any one of the first aspect or the implementations of the first aspect, or performs the method according to any one of the third aspect or the implementations of the third aspect. The storage module may be a storage module (for example, a register or a cache) in the chip, or may be a storage module (for example, a read-only memory or a random access memory) that is in the terminal device and that is located outside the chip.

According to a tenth aspect, an embodiment of this application provides a communication apparatus. The communication apparatus may be the network device in the foregoing implementations, or may be a chip in the network device. The communication apparatus may include a processing module and a transceiver module. When the communication apparatus is the network device, the processing module may be a processor, and the transceiver module may be a transceiver. The network device may further include a storage module. The storage module may be a memory. The storage module is configured to store instructions. The processing module executes the instructions stored in the storage module, so that the network device performs the method according to any one of the second aspect or the implementations of the second aspect, or performs the method according to any one of the fourth aspect or the implementations of the fourth aspect. When the communication apparatus is the chip in the network device, the processing module may be a processor, and the transceiver module may be an input/output interface, a pin, a circuit, or the like. The processing module executes instructions stored in a storage module, so that the network device performs the method according to any one of the second aspect or the implementations of the second aspect, or performs the method according to any one of the fourth aspect or the implementations of the fourth aspect. The storage module may be a storage module (for example, a register or a cache) in the chip, or may be a storage module (for example, a read-only memory or a random access memory) that is in the network device and that is located outside the chip.

According to an eleventh aspect, this application provides a communication apparatus. The apparatus may be an integrated circuit chip. The integrated circuit chip includes a processor. The processor is coupled to a memory. The memory is configured to store a program or instructions. When the program or the instructions are executed by the processor, the communication apparatus is enabled to perform the method according to any one of the implementations of the foregoing aspects.

According to a twelfth aspect, an embodiment of this application provides a computer program product including instructions. When the computer program product runs on a computer, the computer is enabled to perform the method according to any one of the implementations of the foregoing aspects.

According to a thirteenth aspect, an embodiment of this application provides a computer-readable storage medium, including instructions. When the instructions are run on a computer, the computer is enabled to perform the method according to any one of the implementations of the foregoing aspects.

According to a fourteenth aspect, an embodiment of this application provides a communication system. The communication system includes the terminal device performing the first aspect and any implementation of the first aspect, and the network device performing the second aspect and any implementation of the second aspect. Alternatively, the communication system includes the terminal device performing the third aspect and any implementation of the third aspect, and the network device performing the fourth aspect and any implementation of the fourth aspect.

## BRIEF DESCRIPTION OF DRAWINGS

To describe technical solutions in embodiments of this application more clearly, the following briefly describes accompanying drawings for describing embodiments. It is clear that the accompanying drawings in the following descriptions show merely some embodiments of this application.

FIG. 1A is an example diagram of a DRX cycle;

FIG. 1B is another example diagram of a DRX cycle;

FIG. 1C is an example diagram of distribution rules of an XR cycle and a DRX cycle;

FIG. 2 is a flowchart of a communication method according to this application;

FIG. 3 is a diagram of another embodiment of a communication method according to this application;

FIG. 4 is an example diagram of distribution rules of an XR cycle and a DRX cycle according to this application;

FIG. 5 is a diagram of another embodiment of a communication method according to this application;

FIG. 6 is a diagram of another embodiment of a communication method according to this application;

FIG. 7 is a principle diagram of a formula for calculating a start time of a first timer according to this application;

FIG. 8 is an example diagram of a transmission delay between a network device and a terminal device;

FIG. 9 is a diagram of another embodiment of a communication method according to this application;

FIG. 10 is a diagram of another embodiment of a communication method according to this application;

FIG. 11A is another principle diagram of a formula for calculating a start time of a first timer according to this application;

FIG. 11B is another principle diagram of a formula for calculating a start time of a first timer according to this application;

FIG. 12 is a diagram of an embodiment of a communication apparatus according to this application; and

FIG. 13 is a diagram of another embodiment of a communication apparatus according to this application.

## DESCRIPTION OF EMBODIMENTS

In the specification, claims, and accompanying drawings of this application, the terms "first", "second", "third", "fourth", and the like (if existent) are intended to distinguish between similar objects but do not necessarily indicate a specific order or sequence. It should be understood that the terms used in such a way are interchangeable in proper circumstances, so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification usually represents an "or" relationship between the associated objects.

For ease of understanding, the following first describes a system architecture and an application scenario of a communication method provided in this application.

The communication method provided in this application may be applied to a 5th generation mobile network (5th generation mobile network, 5G) new radio (new radio, NR) system, a 6th generation mobile information technology (6th generation mobile communication technology, 6G) system, and a subsequently evolved standard. This is not limited in this application. A communication system includes at least a terminal device and/or a network device. The network device may include an access network device or a core network device.

The terminal device includes a device that provides voice and/or data connectivity for a user. For example, the terminal device may include a handheld device having a wireless connection function or another processing device connected to a wireless modem. The terminal device may communicate with a core network (for example, a 5G core network (5th generation core, 5GC)) via a radio access network (radio access network, RAN), and may exchange voice and/or data with the RAN. The terminal device may also be referred to as a terminal (Terminal), user equipment (user equipment, UE), a wireless terminal device, a mobile terminal (mobile terminal, MT) device, a subscriber unit (subscriber unit), a subscriber station (subscriber station), a mobile station (mobile station, MS), a mobile console (mobile), a remote station (remote station), an access point (access point, AP), a remote terminal device (remote terminal), an access terminal device (access terminal), a user terminal device (user terminal), a user agent (user agent), a user device (user device), or the like. In addition, the terminal device may be a mobile phone (mobile phone), a tablet computer (Pad), a computer having a wireless transceiver function, a virtual reality (virtual reality, VR) device, an augmented reality (augmented reality, AR) device, an extended reality (extended reality, XR) service terminal, a cloud gaming (cloud gaming, CG) service terminal, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. It should be understood that a specific technology and a specific device form used by the terminal device are not limited in embodiments of this application. The terminal device in this application may be any one of the foregoing devices or chips. This is not specifically limited herein. Regardless of serving as a device or a chip, the terminal device may be manufactured, sold, or used as an independent product. In this embodiment and subsequent embodiments, the terminal device is used as an example for description.

The access network device may be any device having a wireless transceiver function, and may be configured to be responsible for a function related to an air interface, for example, a radio link maintenance function, a radio resource management function, or a part of a mobility management function. In addition, the access network device may be further configured with a baseband unit (baseband unit, BBU), to have a baseband signal processing function. For example, the access network device may be an access network device (radio access network, RAN) that currently provides a service for the terminal device. Currently, some common examples of the access network device are: a NodeB (NodeB, NB), an evolved NodeB (evolved NodeB, eNB), a next-generation NodeB (next generation NodeB, gNB) in a 5G new radio (new radio, NR) system, a node (for example, an xNodeB) in a 6G system, a transmission reception point (transmission reception point, TRP), a radio network controller (radio network controller, RNC), a base station controller (base station controller, BSC), a base transceiver station (base transceiver station, BTS), a home NodeB (for example, a home evolved NodeB (home evolved NodeB) or a home node (home NodeB, HNB)), and the like. In addition, in a network structure such as a cloud access network (cloud radio access network, CloudRAN) or an open access network (open radio access network, ORAN), the access network device may be a device including a central unit (central unit, CU) (also referred to as a control unit) and/or a distributed unit (distributed unit, DU). A RAN device including a CU and a DU splits protocol layers of a gNB in an NR system, functions of a part of the protocol layer are centrally controlled by the CU, and functions of a part or all of the protocol layers are distributed in the DU. The CU centrally controls the DU. It should be understood that the access network device in embodiments of this application may be any one of the foregoing devices or a chip in the foregoing devices. This is not specifically limited herein. Regardless of serving as a device or a chip, the access network device may be manufactured, sold, or used as an independent product. In this embodiment and subsequent embodiments, the access network device is used as an example for description.

The core network device is a device in a core network (core network, CN) that provides service support for the terminal device. Currently, some common examples of the core network device are: an access and mobility management function (access and mobility management function, AMF) entity, a session management function (session management function, SMF) entity, a user plane function (user plane function, UPF) entity, and the like. Examples are not listed one by one herein. The AMF entity may be responsible for access management and mobility management of the terminal device. The SMF entity may be responsible for session management, for example, session establishment of a user. The UPF entity may be a functional entity on a user plane, and is mainly responsible for a connection to an external network. It should be noted that the entity in this application may also be referred to as a network element or a functional entity. For example, the AMF entity may also be referred to as an AMF network element or an AMF functional entity. For another example, the SMF entity may also be referred to as an SMF network element, an SMF functional entity, or the like.

Specifically, the communication method provided in this application may be applied to a scenario in which a terminal device configured with a DRX mechanism monitors a PDCCH.

For ease of understanding, the following first briefly describes various time-domain resources in this application, and describes a DRX mechanism in a conventional technology.

In a communication system, time-domain resources include a radio frame (radio frame) (also referred to as a system frame, frame (frame) for short), a subframe (subframe), a slot (slot), and a symbol (symbol) (for example, an orthogonal frequency division multiplexing (orthogonal frequency division multiplexing, OFDM) symbol).

Duration of one frame is 10 ms, and each frame may have one system frame number (system frame number, SFN) (which may also be referred to as an index of the frame). For example, the SFN ranges from 0 to 1023. Therefore, a frame cycle is $1024 \times 10$ ms = 10240 ms. In a 5G NR system, a group of frames whose SFNs are from 0 to 1023 are referred to as a hyper system frame (hyper system frame). In other words, one hyper system frame is equal to 1024 frames: equal to 10240 ms. For example, each hyper system frame may have one hyper system frame number (hyper system frame number, H-SFN).

In addition, one frame includes 10 subframes, and duration of each subframe is 1 ms. One subframe may include one or more slots. It should be noted that when subcarrier spacings (subcarrier spacings, SCSs) are different, a quantity of slots included in each frame is different, a quantity of slots included in each subframe is also different, and duration of each slot is also different. For details, refer to Table 1-1. $N_{symb}^{slot}$ is a quantity of symbols included in one slot, $N_{slot}^{frame,\mu}$ is a quantity of slots included in one frame, $N_{slot}^{subframe,\mu}$ is a quantity of slots included in one subframe, and $\Delta f = 2^{\mu} \cdot 15$ represents a subcarrier spacing in a unit of kHz. Optionally, $\mu$ represents an index corresponding to a subcarrier spacing, and indicates the subcarrier spacing.

**Table 1-1**

| $\mu$ | $\Delta f = 2^{\mu} \cdot 15$ | $N_{symb}^{slot}$ | $N_{slot}^{frame,\mu}$ | Duration of each slot | $N_{slot}^{subframe,\mu}$ |
|---|---|---|---|---|---|
| 0 | 15 | 14 | 10 | 1 ms | 1 |

(continued)

| $\mu$ | $\Delta f = 2^{\mu} \cdot 15$ | $N_{symb}^{slot}$ | $N_{slot}^{frame,\mu}$ | Duration of each slot | $N_{slot}^{subframe,\mu}$ |
|---|---|---|---|---|---|
| 1 | 30 | 14 | 20 | 0.5 ms | 2 |
| 2 | 60 | 14 or 12 | 40 | 0.25 ms | 4 |
| 3 | 120 | 14 | 80 | 0.125 ms | 8 |
| 4 | 240 | 14 | 160 | 0.0625 ms | 16 |
| 5 | 480 | 14 | 320 | 0.03125 ms | 32 |
| 6 | 960 | 14 | 640 | 0.015625 ms | 64 |

Optionally, each subframe may have one subframe number, and the subframe number (which may also be referred to as an index of the subframe) ranges from 0 to 9.

Optionally, each slot may have one slot number. For example, the slot number may be an index (or a number) of a slot in a system frame. For example, when the subcarrier spacing is 30 kHz, one system frame includes 20 slots, and a slot number ranges from 0 to 19. Optionally, a slot in one subframe is 0, or ranges from 0 to 1, from 0 to 3, from 0 to 7, from 0 to 15, from 0 to 31, or from 0 to 63. For example, when the subcarrier spacing is 30 kHz, one system frame includes 10 subframes, and each subframe includes two slots. In this example, in any one of the foregoing 10 subframes, a slot number ranges from 0 to 1. For example, when the subcarrier spacing is 60 kHz, one system frame includes 10 subframes, and each subframe includes four slots. In this example, in any one of the foregoing 10 subframes, a slot number ranges from 0 to 3.

In addition, one slot includes 14 or 12 symbols. Duration of each symbol is related to duration of a slot corresponding to the symbol. To be specific, the duration of each symbol is equal to the duration of the slot including the symbol divided by 14 or 12. Optionally, a symbol in one slot ranges from 0 to 13 or from 0 to 11.

It should be understood that a quantity of time-domain resources may be used to measure duration, and one time-domain resource may be referred to as a time-domain unit. For example, a time-domain unit may be a frame, a subframe, a slot, or a symbol. Duration may be represented by one or more time-domain units. It should be noted that duration-related information such as a cycle, a timer, and an offset in this application may be measured by using a quantity of time-domain units, or may be measured by using a millisecond (ms), a submillisecond (submillisecond), or the like.

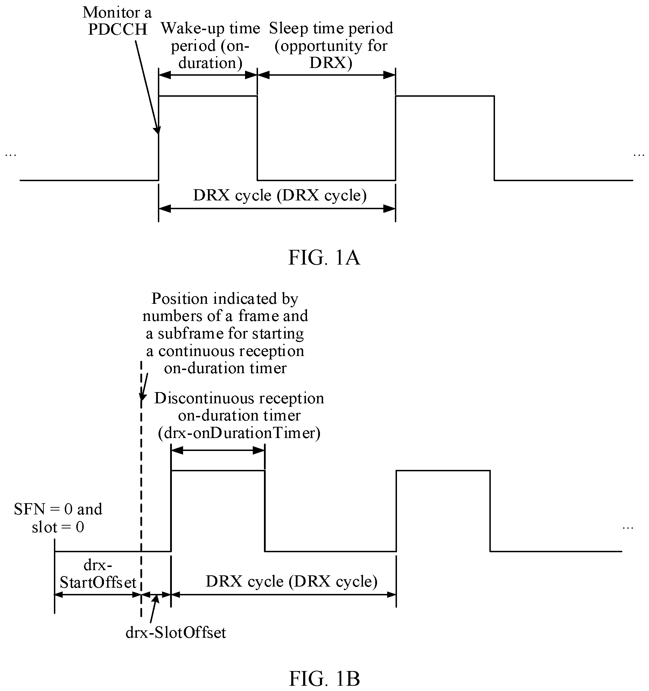

The following describes the DRX mechanism in the conventional technology. FIG. 1A is a diagram of a typical DRX cycle (DRX cycle). Usually, the DRX cycle mainly includes a wake-up time period (namely, On-duration) and a sleep time period (namely, Opportunity for DRX). The wake-up time period is located before the sleep time period. To be specific, the wake-up time period is located in a first time period of the DRX cycle, and the sleep time period is located in a second time period of the DRX cycle. The wake-up time period is a continuous time period in which the terminal device is in an awake state and can monitor a PDCCH, and the sleep time period is a time period in which the terminal device does not monitor the PDCCH to save power. The terminal device usually maintains a discontinuous reception on-duration timer (namely, drx-onDurationTimer) to control a moment (that is, a start moment of On-duration) at which terminal device enters the wake-up time period. When the terminal device starts drx-onDurationTimer, it indicates that the terminal device starts a DRX cycle. Specifically, the terminal device may calculate a start time of drx-onDurationTimer. The start time is a time-domain unit including a moment at which drx-onDurationTimer is started. Then, the terminal device starts drx-onDurationTimer on the start time of drx-onDurationTimer. During running of drx-onDurationTimer, the terminal device is in the wake-up time period.

Specifically, as shown in FIG. 1B, a terminal device in the conventional technology calculates a start time of drx-onDurationTimer by performing the following step (1) and step (2).

(1) The terminal device determines, based on the following formula 1 or formula 2, a frame number (SFN) and a subframe number (subframe number) for starting drx-onDurationTimer.

When the terminal device uses a long DRX cycle (drx-LongCycle), the terminal device calculates, based on the formula 1, the frame number and the subframe number for starting drx-onDurationTimer:

$$[(\text{SFN} \times 10) + \text{subframe number}] \text{ modulo } (\text{drx-LongCycle}) = \text{drx-StartOffset (formula 1)}.$$

When the terminal device uses a short DRX cycle (drx-ShortCycle), the terminal device calculates, based on the formula 2, the frame number and the subframe number for starting drx-onDurationTimer:

$$[(SFN \times 10) + \text{subframe number}] \text{ modulo (drx-ShortCycle)} = \text{(drx-StartOffset) modulo (drx-ShortCycle)} \quad \text{(formula 2).}$$

(2) After the terminal device obtains, based on the formula 1 or formula 2, the SFN and the subframe number for starting drx-onDurationTimer, the terminal device starts drx-onDurationTimer after duration indicated by drx-SlotOffset starting from a subframe determined based on the formula 1 or formula 2.

Meanings of parameters in the foregoing step (1) and step (2) are as follows:

drx-LongCycle indicates duration of the long DRX cycle, a unit is ms, and a value ranges from 10 ms to 10240 ms. Optionally, with development of communication technologies, a value range of drx-LongCycle may be extended to 1 ms, 0.1 ms, 0.01 ms, or the like.
drx-ShortCycle (optional) indicates duration of the short DRX cycle, a unit is ms, and a value ranges from 2 ms to 640 ms.

It should be understood that a network device may configure both the long DRX cycle and the short DRX cycle. However, at a same moment, the terminal device uses only one of the cycles (the long DRX cycle or the short DRX cycle) as a DRX cycle, that is, a DRX cycle corresponding to drx-onDurationTimer.

drx-StartOffset indicates a subframe at which the DRX cycle (the long DRX cycle or the short DRX cycle) starts, and is used when a frame number and a subframe number of a start time of drx-onDurationTimer are calculated. It may be understood that drx-StartOffset is used to determine a specific subframe that is in a specific frame and in which drx-onDurationTimer is started. A unit of drx-StartOffset is ms, and a value ranges from 0 ms to drx-LongCycle-1 ms. drx-SlotOffset indicates a delay before drx-onDurationTimer is started, and is an offset that is in a subframe and that is used when the start time of drx-onDurationTimer is calculated. A value of drx-SlotOffset ranges from 0 ms to 31/32 ms, and precision is 1/32 ms. It may be understood that after the terminal device determines, based on drx-StartOffset, the specific subframe that is in the specific frame and in which drx-onDurationTimer is started, the terminal device determines, based on drx-SlotOffset, an $n^{\text{th}}$ 1/32 ms that is in the subframe (namely, the subframe determined based on drx-StartOffset) and at which drx-onDurationTimer is started.

Because values of parameters such as drx-LongCycle, drx-ShortCycle, drx-StartOffset, and drx-SlotOffset are the same in different hyper system frames, start times of drx-onDurationTimer that are calculated by the terminal device based on the foregoing steps in the different hyper system frames are the same. To be specific, frame numbers and subframe numbers of moments at which the terminal device starts drx-onDurationTimer in the different hyper system frames are the same. It can be learned that distribution rules of DRX cycles in the different hyper system frames are the same.

However, during an actual application, a service that needs to be cyclically transmitted is irrelevant to a hyper system frame. For example, if a hyper system frame cannot exactly divide a cycle of the foregoing service, when the cycle of the service runs across hyper system frames, the cycle of the service is not affected by the hyper system frames. In addition, when the DRX cycle crosses the hyper system frames, a start time for starting drx-onDurationTimer needs to be recalculated. As a result, the cycle of the foregoing service may not match the DRX cycle in a subsequent hyper system frame. Consequently, power consumption of the terminal device increases, or a delay in receiving data by the terminal device may increase.

For ease of understanding, an XR service is used as an example, and a cycle of the XR service (XR cycle for short below) may be a non-integer cycle. The XR cycle is calculated based on a frame generation rate (also referred to as a frame rate (frame rate)) X (where a unit is frame per second (frame per second, fps)). Specifically, the XR cycle is a reciprocal of the frame generation rate X. Typical values of the frame generation rate X are 30 fps, 60 fps, 90 fps, and 120 fps. XR cycles calculated based on the foregoing frame generation rates are respectively:

$$30 \text{ fps: } (1/30 \text{ fps)s} = (1/30 \text{ fps}) \times 1000 \text{ ms} = 1000/30 \text{ ms} \approx 33.3333 \text{ ms;}$$

$$60 \text{ fps: } (1/60 \text{ fps)s} = (1/60 \text{ fps}) \times 1000 \text{ ms} = 1000/60 \text{ ms} \approx 16.6667 \text{ ms;}$$

$$90 \text{ fps: } (1/90 \text{ fps})s = (1/90 \text{ fps}) \times 1000 \text{ ms} = 1000/90 \text{ ms} \approx 11.1111 \text{ ms};$$

and

$$120 \text{ fps: } (1/120 \text{ fps})s = (1/120 \text{ fps}) \times 1000 \text{ ms} = 1000/120 \text{ ms} \approx 8.3333 \text{ ms}.$$

It can be learned that all the XR cycles shown in the foregoing examples are non-integer cycles. If the terminal device receives data of the XR service by using the DRX mechanism, the XR cycle may be used as the DRX cycle of the terminal device. However, one hyper system frame cannot exactly divide the XR cycle.

For ease of understanding, frame generation rate X = 60 fps and hyper system frame $T_{H-SFN}$ = 10240 ms (where that is, the hyper system frame includes 10240 subframes) are used as an example below for description.

$$T_{DRX} = T_{XR-60} = (1 \div 60 \text{ fps}) \times 1000 \text{ ms} = 1000 \div 60 \text{ ms} \approx 16.6667 \text{ ms},$$

where $T_{DRX}$ represents the DRX cycle, and $T_{XR-60}$ represents an XR cycle when the frame generation rate is 60 fps.

A quantity of DRX cycles (or XR cycles) included in one hyper system frame is:

$$T_{H-SFN} \div T_{XR-60} = 10240 \times 60 \div 1000 = 614.4.$$

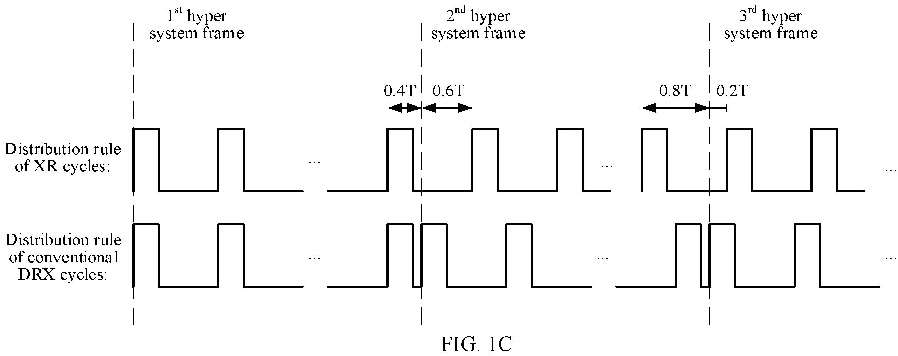

As shown in FIG. 1C, both a DRX cycle and an XR cycle are T. In a first hyper system frame, the XR cycle may match the DRX cycle. However, after the hyper system frame is crossed, in a second hyper system frame, the cycle of the XR service does not match the DRX cycle. Specifically, for the XR cycle being T, a part of one XR cycle (for example, 0.4 XR cycle) is located at an end of the first hyper system frame, and the other part of the XR cycle (for example, 0.6 XR cycle) is located at a front end of the second hyper system frame. For the DRX cycle, a 0.4 DRX cycle is located at the end of the first hyper system frame. However, based on the existing DRX mechanism, the terminal device restarts a DRX cycle starting from the second hyper system frame.

Similarly, a quantity of DRX cycles (or XR cycles) included in two hyper system frames is:

$$2 \times T_{H-SFN} \div T_{XR-60} = 10240 \times 2 \times 60 \div 1000 = 1228.8.$$

As shown in FIG. 1C, specifically, for the XR cycle being T, a part of one XR cycle (for example, 0.8 XR cycle) is located at an end of the second hyper system frame, and the other part of the XR cycle (for example, 0.2 XR cycle) is located at a front end of a third hyper system frame. For the DRX cycle, a 0.4 DRX cycle is located at the end of the second hyper system frame. However, based on the existing DRX mechanism, the terminal device restarts a DRX cycle starting from the third hyper system frame.

By analogy, a distribution rule of XR cycles/XR services and a distribution rule of DRX cycles/DRX in each subsequent hyper system frame may be obtained. It is clear that the current DRX mechanism may cause a problem that the DRX cycle/DRX does not match the cycle of the service/XR service in the case of cross-hyper system frame. Therefore, the current DRX mechanism needs to be improved.

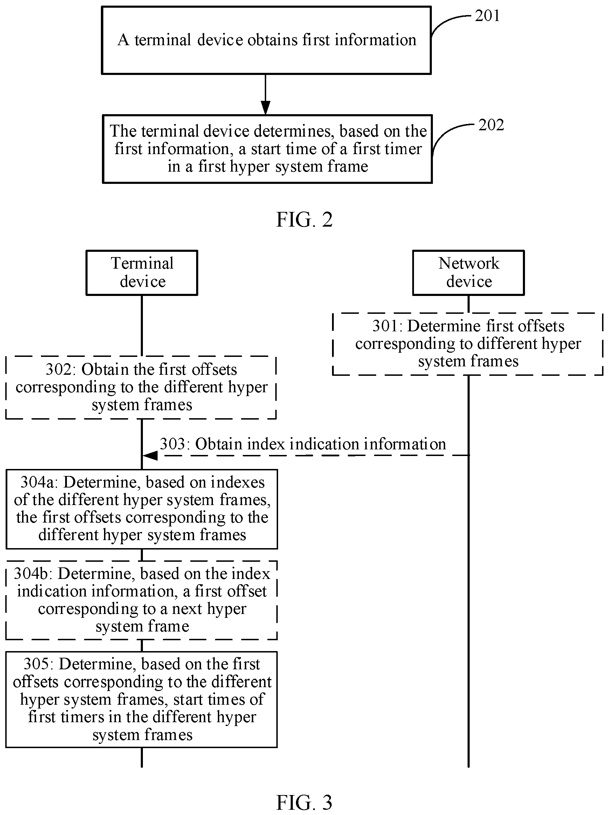

Therefore, this application proposes a communication method, to improve the current DRX mechanism, so that start positions of a DRX cycle or start times of first timers can be flexibly set in different hyper system frames. In this case, the DRX cycle/DRX can match a service cycle, to reduce power consumption of the terminal device, and/or reduce a delay in receiving data by the terminal device. Specifically, refer to an embodiment corresponding to FIG. 2.

For example, in addition to the XR service, the communication method provided in this application is also applicable to another service having a cycle that cannot be exactly divided by a hyper system frame. For example, the communication method provided in this application is not only applicable to a case in which the DRX cycle is the cycle of the XR service, but also applicable to a case in which the DRX cycle is another cycle that cannot be exactly divided by a hyper system frame. A usage scenario of the communication method is not limited in this application. For example, the DRX cycle is 50 ms, and the DRX cycle includes three start times of drx-onDurationTimer. For example, the DRX cycle is 50 ms, the DRX cycle includes three small DRX cycles, and the three small DRX cycles may be 16 ms, 17 ms, and 17 ms respectively.

It should be noted that the "frame" in the frame generation rate or frame rate is not the same concept as the "frame" in the radio frame or frame number, and there is no relationship between the two frames. For example, the "frame" in the radio frame or the frame number is a time-domain resource or a time domain concept. For example, the frame generation rate or the frame rate refers to a quantity of freeze frames that can be displayed by the device per second. For example, the "frame" in the frame generation rate or the frame rate represents each picture in a video or animation.

In this application, start may be understood as/replaced with start or restart. In this application, moment may be understood as/replaced with moment or time. In this application, leftward offset may be understood as/replaced with backward offset. Rightward offset may be understood as/replaced with forward offset. In this application, calculate may be understood as/replaced with determine.

In this application, frame number and subframe number of a start time of a first timer may be understood as/replaced with frame number and subframe number related to the start time of the first timer. It should be noted that a frame number and a subframe number in the frame number and the subframe number of the start time of the first timer are not necessarily a frame number and a subframe number of a frame and a subframe in which the start time of the first timer is located.

In this application, obtain may be understood as/replaced with determine, receive, decode, or parse out.

In this application, in order may be understood as/replaced with in sequence.

The following describes a main procedure of an embodiment of the communication method provided in this application with reference to FIG. 2. In this method, a terminal device performs the following steps.

Step 201: The terminal device obtains first information.

The first information is used to determine a start time of a first timer in a first hyper system frame. For example, the first information is information used in a process of determining the start time of the first timer in the first hyper system frame.

It should be noted that the first information may be an existing parameter in a conventional technology, or may be a parameter newly defined in this application. This is not limited in this application. Details are described below in detail.

For example, the first timer/duration of the first timer is a period of time at a beginning of a DRX cycle.

For example, the first timer is a discontinuous reception on-duration timer (drx-onDurationTimer).

For example, the start time of the first timer is a time-domain unit corresponding to a moment at which the terminal device starts the first timer, or the moment at which the terminal device starts the first timer.

For example, because the first timer is usually located in a first half of a DRX cycle, that the first timer is started may also be understood as that the terminal device enters the DRX cycle. It should be understood that the DRX cycle is a DRX cycle corresponding to the first timer, that is, a DRX cycle in which the first timer is located. For example, duration of the DRX cycle may be determined based on a parameter drx-LongCycle indicating a long DRX cycle, may be determined based on a parameter drx-ShortCycle indicating a short DRX cycle, or may be determined based on another parameter. This is not specifically limited herein.

In addition, a hyper system frame may be understood as a cycle of a frame (also referred to as a radio frame or a system frame). For example, if a system frame number SFN ranges from 0 to n, n + 1 frames whose SFNs are 0 to n may form a hyper system frame, where n is an integer greater than 0. The first hyper system frame includes the n + 1 frames. For example, the first hyper system frame is equal to $((n + 1) \times 10)$ ms. For example, in a 5G NR system, 1024 frames whose SFNs are 0 to 1023 are considered as one hyper system frame. In other words, one hyper system frame is equal to 1024 frames: equal to 10240 ms.

It should be noted that, with development of a communication system, the range of the SFN may be increased or decreased. That is, the range of the SFN may not be from 0 to 1023, and duration of a hyper system frame may not be equal to 10240 ms. In this application, an example in which the hyper system frame includes 1024 frames whose SFNs are 0 to 1023 is used for description. For example, the first hyper system frame and the second hyper system frame described below each include 1024 frames whose SFNs are 0 to 1023.

For example, in addition to the first information, the terminal device can sense second information different from the first information, or the terminal device can sense that the first information is different from the second information.

The second information is used to determine a start time of a first timer in another hyper system frame (referred to as a second hyper system frame below) other than the first hyper system frame.

It should be noted that sense does not mean obtain. For example, sense may be understood as know. For example, the terminal device knows, according to a stipulation in a protocol, the second information different from the first information, or the terminal device can sense that the first information is different from the second information.

Optionally, the first information and the second information are different values of a same parameter.

For example, both the first information and the second information are values of a parameter A. A difference lies in that the first information is a, and the second information is b, where a is not equal to b. Optionally, the first information and the second information may be parameters used to determine the start times of the first timers in the conventional technology, or the first information and the second information may be parameters newly defined in this application. This is not limited in this application. Details are described below.

Optionally, the first hyper system frame and the second hyper system frame may be two hyper system frames or any two hyper system frames in a plurality of consecutive hyper system frames.

The plurality of consecutive hyper system frames include at least two hyper system frames. The first hyper system frame and the second hyper system frame satisfy Condition 1 or Condition 2.

For example, the plurality of consecutive hyper system frames may include N consecutive hyper system frames.

Condition 1: The first hyper system frame is adjacent to the second hyper system frame. For example, the first hyper system frame is a previous hyper system frame, and the second hyper system frame is a next hyper system frame; or the second hyper system frame is a previous hyper system frame, and the first hyper system frame is a next hyper system frame.

Condition 2: The first hyper system frame and the second hyper system frame are spaced by at least one hyper system frame. For example, the plurality of consecutive hyper system frames include at least three hyper system frames, the first hyper system frame is the 1st hyper system frame in the plurality of consecutive hyper system frames, the second hyper system frame is the 3rd hyper system frame in the plurality of consecutive hyper system frames, and the first hyper system frame and the second hyper system frame are spaced by one hyper system frame. For another example, the plurality of consecutive hyper system frames include at least four hyper system frames, the first hyper system frame is the 1st hyper system frame in the plurality of consecutive hyper system frames, the second hyper system frame is the 4th hyper system frame in the plurality of consecutive hyper system frames, and the first hyper system frame and the second hyper system frame are spaced by two hyper system frames.

Optionally, Condition 2 may include/be replaced with: An interval between the first hyper system frame and the second hyper system frame is greater than or equal to one hyper system frame, and/or the interval between the first hyper system frame and the second hyper system frame is less than or equal to N - 2 hyper system frames.

Optionally, the first hyper system frame is a hyper system frame including a moment at which the terminal device obtains a DRX configuration/the first information.

It should be understood that, because the first information and the second information are different information, the first hyper system frame and the second hyper system frame are different hyper system frames. Therefore, the start time of the first timer in the first hyper system frame that is determined by the terminal device based on the first information may be different from the start time of the first timer in the second hyper system frame that is determined based on the second information.

In this embodiment, the terminal device can sense that the first information is used in the first hyper system frame to determine the start time of the first timer, and the second information is used in the second hyper system frame to determine the start time of the first timer. In other words, the terminal device can sense that different information is used in different hyper system frames (for example, the first hyper system frame and the second hyper system frame) to determine start times of first timers. Compared with a conventional technology in which a terminal device uses same information to determine start times of first timers in different hyper system frames (for example, the first hyper system frame and the second hyper system frame), this helps determine different start times of first timers in different hyper system frames, and helps improve flexibility of determining the start time of the first timer by the terminal device.

It should be noted that, in this application, whether the terminal device obtains the second information is not limited, and whether the terminal device determines, based on the second information, the start time of the first timer in the second hyper system frame is not limited either.

Optionally, that the terminal device obtains first information includes: The terminal device determines the first information based on third information.

Optionally, there is a correspondence between the third information and the first information. For example, the terminal device determines the third information, and the terminal device can further determine, based on the correspondence, the first information used by the terminal device in the first hyper system frame.

The third information may be determined by the terminal device based on an index of the first hyper system frame, or the third information is obtained by the terminal device. For example, the third information is from a network device.

Optionally, that the third information may be determined by the terminal device based on an index of the first hyper system frame may include: The third information is determined by the terminal device based on the index of the first hyper system frame and N.

N is a quantity of hyper system frames included in a hyper system frame cycle, and N is an integer greater than 1. For example, the terminal device determines the third information based on the index of the first hyper system frame and N. For descriptions of N and the hyper system frame cycle, refer to the following embodiment corresponding to FIG. 3. Details are not described herein.

For example, the terminal device performs a modulo operation based on the index of the first hyper system frame and N, to determine the third information.

For example, a remainder obtained by dividing the index of the first hyper system frame by N is the third information.

For example, the third information $C_1$, the index $S_1$ of the first hyper system frame, and N satisfy the following condition: $C_1 = S_1$ mod N.

For example, the third information may be carried in an information element or signaling such as downlink control information (downlink control information, DCI), a media access control information element (media access control control element, MAC Control Element, MAC CE), or radio resource control (radio resource control, RRC) signaling. This is not limited in this application.

Optionally, the first information and the second information may have different implementations.

In a possible implementation (implementation A), the first information and the second information are different values of a parameter newly defined in this application. In this application, the newly defined parameter is referred to as a first offset. In other words, the first information and the second information are different values of the first offset. It should be noted that, in this application, an example in which the foregoing newly defined parameter is referred to as the first offset is used for description, and the parameter may have another name. This is not limited in this application, and a name of the parameter does not limit a function of the parameter.

Optionally, duration indicated by the first offset is less than or equal to one DRX cycle $T_{DRX}$, or an absolute value of the first offset is less than or equal to the DRX cycle $T_{DRX}$. $T_{DRX}$ is greater than 0.

In an example of the implementation A, the value of the first offset may be a positive value, a negative value, or 0. For example, if the value of the first offset is a positive value, and the first offset is greater than 0 and less than $T_{DRX}$, it indicates a rightward offset of one or more time-domain units. For example, if the value of the first offset is a negative value, and the first offset is greater than -$T_{DRX}$ and less than 0, it indicates a leftward offset of one or more time-domain units. For example, if the value of the first offset is 0, it indicates no offset.

For example, the value of the first offset may be a positive value, a negative value, or 0. When the terminal device determines the start time of the first timer, the terminal device may perform an addition operation on the first offset and another parameter, and determines, based on the positive or negative value of the first offset, whether the start time of the first timer is offset leftwards or offset rightwards.

In another example of the implementation A, the first offset is a non-negative value. That is, the first offset is greater than or equal to 0 and less than $T_{DRX}$.

For example, if the value of the first offset is a non-negative value, the terminal device needs an indication from the network device to determine whether the terminal device performs an addition operation or a subtraction operation based on the first offset and another parameter, to determine whether the start time of the first timer is offset leftwards or offset rightwards.

For example, the value of the first offset is a non-negative value. When the terminal device determines the start time of the first timer, the terminal device may perform the addition operation on the first offset and the another parameter, to determine whether the start time of the first timer is offset leftwards or offset rightwards.

It should be noted that, if the value of the first offset is $T_{DRX}$ or -$T_{DRX}$, it indicates a leftward offset of one DRX cycle, a rightward offset of one DRX cycle, or no offset.

During actual application, the first offset may be any one of the foregoing implementations. In this embodiment and subsequent embodiments, only an example in which the first offset may be a positive value, a negative value, or 0 and the addition operation is performed on the first offset and the another parameter is used for description.

In another possible implementation (implementation B), the first information and the second information are existing parameters used to calculate start times of first timers in the conventional technology. The existing parameters used to calculate the start times of the first timers in the conventional technology include a first parameter and a second parameter. For example, the first parameter indicates a start subframe of the DRX cycle. For example, the first parameter is drx-StartOffset. For example, the second parameter indicates a delay before drx-onDurationTimer/the first timer is started. For example, the second parameter is drx-SlotOffset.

In a possible implementation, the first information and the second information belong to the first parameter. For example, the first information is a value of the first parameter, and the second information is another value of the first parameter.

In another possible implementation, the first information and the second information belong to the second parameter. For example, the first information is a value of the second parameter, and the second information is another value of the second parameter.

Optionally, duration indicated by the first information/second information/first parameter/second parameter is less than or equal to one DRX cycle $T_{DRX}$, or an absolute value of the first information/second information/first parameter/second parameter is less than or equal to the DRX cycle $T_{DRX}$.

Step 202: The terminal device determines, based on the first information, the start time of the first timer in the first hyper system frame.

Optionally, the start time of the first timer may be represented by using one or more time-domain units in a frame, a subframe, a slot, a symbol, or the like. For example, information about the start time of the first timer includes information about one or more of a frame (for example, a frame number), a subframe number (for example, a subframe index), a slot (for example, a slot number), a symbol (for example, a symbol number), or the like.

Specifically, when implementations of the first information are different, manners in which the terminal device determines, based on the first information, the start time of the first timer in the first hyper system frame are also different. That the first information is an existing parameter in the conventional technology or that the first information is a parameter newly defined in this application is used below for description.

In a type of implementation (implementation B), the first information is an existing parameter in the conventional technology.

In a possible implementation (implementation B.1), the first information is the first parameter, and the first information and the second information are different values of the first parameter. The terminal device uses different values of the first parameter in different hyper system frames, so that start times of first timers in the different hyper system frames can be different.

For example, the terminal device substitutes the first information into a formula (for example, the formula 1 or the formula 2 described above), in the conventional technology, that includes the first parameter and that is used to calculate the frame number and the subframe number of the start time of the first timer, to perform calculation. Specifically, the terminal device uses the first information as the value of the first parameter in the foregoing formula to calculate the frame number and the subframe number that are related to the start time of the first timer. Then, the terminal device obtains the start time of the first timer by offsetting the frame number and the subframe number of the start time of the first timer by duration indicated by drx-SlotOffset.

In another possible implementation (implementation B.2), the first information is the second parameter, and the first information and the second information are different values of the second parameter. The terminal device uses different values of the second parameter in different hyper system frames, so that start times of first timers in the different hyper system frames can be different.

For example, the terminal device determines, based on a formula (for example, the formula 1 or the formula 2 described above) for calculating the frame number and the subframe number that are related to the start time of the first timer in the conventional technology, the frame number and the subframe number that are related to the start time of the first timer. Then, the terminal device obtains the start time of the first timer by offsetting the frame number and the subframe number that are related to the start time of the first timer by the duration indicated by the first information.

In another type of implementation (implementation A), the first information is a parameter newly defined in this application.

For example, the first information is the first offset. The terminal device uses different values of the first offset in different hyper system frames, so that start times of first timers in the different hyper system frames can be different. For example, the terminal device may determine the start time of the first timer in the first hyper system frame in any one of the following implementations.

In an implementation A.1, the terminal device determines, based on the first parameter and the first information, the start time of the first timer in the first hyper system frame.

For example, the first offset is an offset based on the first parameter. For example, the first information is a value of the offset based on the first parameter.

For example, the terminal device determines, based on the first parameter and the first information, the start time of the first timer in the first hyper system frame.

Optionally, the first parameter may be configured by the network device for the terminal device.

For example, the terminal device adds, based on the first parameter, a value indicated by the first information, to obtain a new value of the first parameter. Then, the terminal device substitutes the new value of the first parameter into the formula (for example, the formula 1 or the formula 2 described above) for calculating the frame number and the subframe number of the start time of the first timer, to obtain a frame number and a subframe number of the start time of the first timer in the first hyper system frame. Then, the terminal device determines the start time of the first timer based on the frame number and the subframe number of the start time of the first timer.

For example, when the terminal device uses the long DRX cycle (drx-LongCycle), a process in which the terminal device calculates, based on the first offset, the frame number and the subframe number for starting drx-onDurationTimer may be represented as the formula 1.1:

$$[(SFN \times 10) + \text{subframe number}] \text{ modulo (drx-LongCycle)} = (\text{drx-StartOffset} + \text{first offset}) \qquad \text{(formula 1.1)}.$$

For example, when the terminal device uses the short DRX cycle (drx-ShortCycle), a process in which the terminal device calculates, based on the first offset, the frame number and the subframe number for starting drx-onDurationTimer may be represented as the formula 2.1:

$$[(SFN \times 10) + \text{subframe number}] \text{ modulo (drx-ShortCycle)} = (\text{drx-StartOffset} + \text{first offset}) \text{ modulo (drx-ShortCycle)} \qquad \text{(formula 2.)}.$$

For meanings of parameters in the formula 1.1 and the formula 2.1, refer to the foregoing descriptions corresponding to FIG. 1B. Details are not described herein again.

In this implementation, the terminal device determines the new value of the first parameter based on the value of the first parameter and the first information, and calculates the start time of the first timer based on the new value of the first parameter and the formula 1 (or the formula 2) in the conventional technology. Alternatively, the terminal device calculates the start time of the first timer based on the first information and the formula 1.1 (or the formula 2.1). Because the first information and the second information are different values of the same parameter, the terminal device can determine, based on different values of the first parameter, different start times of first timers in different hyper system frames. Therefore, this helps improve flexibility of the start time of the first timer of the terminal device, to help the terminal device adjust the DRX cycle to match a service cycle or help DRX match a service, so as to help reduce power consumption of the terminal device, and/or reduce a delay in receiving data by the terminal device.

In an implementation A.2, the terminal device determines a first reference value based on the second parameter, and the terminal device determines, based on the first reference value and the first information, the start time of the first timer in the first hyper system frame.

For example, the first offset is an offset based on the first reference value. For example, the first information is a value of the offset based on the first reference value.

Optionally, the first parameter and/or the second parameter may be configured by the network device for the terminal device.

For example, the terminal device substitutes the first parameter into the formula (for example, the formula 1 or the formula 2 described above) for calculating the frame number and the subframe number of the start time of the first timer, to obtain a frame number and a subframe number that are related to the start time of the first timer in the first hyper system frame. Then, the terminal device determines the first reference value based on the frame number, the subframe number, and the second parameter. For example, the terminal device offsets the first reference value based on a value indicated by the first information, to obtain the start time of the first timer. It may also be understood that the terminal device starts the first timer after the first information starting from the first reference value.

In this implementation, the terminal device may calculate a reference value (namely, the first reference value) of the start time of the first timer based on the first parameter, the second parameter, and the formula 1 (or the formula 2) in the conventional technology. Then, the terminal device offsets the first reference value based on the first information. Because the first information and the second information are different values of the same parameter, the start time of the first timer in the first hyper system frame that is obtained by the terminal device by offsetting the first reference value based on the first information is different from the start time of the first timer in the second hyper system frame that is obtained by the terminal device by offsetting the first parameter value based on the second information. Therefore, the terminal device can determine different start times of first timers in different hyper system frames. Therefore, this helps improve flexibility of the start time of the first timer of the terminal device, to help the terminal device adjust the DRX cycle to match a service cycle or help DRX match a service, so as to help reduce power consumption of the terminal device, and/or reduce a delay in receiving data by the terminal device.

In an implementation A.3, the terminal device determines, based on the second parameter and the first information, the start time of the first timer in the first hyper system frame.

For example, the terminal device first calculates the frame number and the hyper system frame number of the start time of the first timer based on the conventional technology. Then, the terminal device determines the start time of the first timer based on the frame number, the hyper system frame number, the second parameter, and the first information.

Optionally, the first parameter and/or the second parameter may be configured by the network device for the terminal device.

For example, the terminal device substitutes the first parameter into the formula (for example, the formula 1 or the formula 2 described above) for calculating the frame number and the subframe number of the start time of the first timer, to obtain a frame number and a subframe number that are related to the start time of the first timer. Then, the terminal device offsets the calculated frame number and subframe number by a sum of the second parameter and the first information, to obtain the start time of the first timer in the first hyper system frame.

For example, the terminal device substitutes the first parameter configured by the network device into the formula (for example, the formula 1 or the formula 2 described above) for calculating the frame number and the subframe number of the start time of the first timer, to obtain the frame number and the subframe number of the start time of the first timer. Then, the terminal device calculates the sum of a value of the second parameter and the first information, and uses the sum of the value of the second parameter and the first information as a new value of the second parameter. Then, the terminal device offsets the calculated frame number and subframe number by the new value of the second parameter, to obtain the start time of the first timer in the first hyper system frame.

In this implementation, the terminal device determines the new value of the second parameter based on the first information and the value of the second parameter, and offsets the frame number and the subframe number of the start time of the first timer based on the new value of the second parameter. Alternatively, the terminal device offsets the frame number and the subframe number of the start time of the first timer based on the sum of the second parameter and the first information. Because the first information and the second information are different values of the same parameter, the terminal device can calculate, based on different values of the second parameter, different start times of first timers in different hyper system frames. Therefore, this helps improve flexibility of the start time of the first timer of the terminal device, to help the terminal device adjust the DRX cycle to match a service cycle or help DRX match a service, so as to help reduce power consumption of the terminal device, and/or reduce a delay in receiving data by the terminal device.

EP 4 507 395 A1

It should be noted that how the terminal device determines, based on the first information, the start time of the first timer in the first hyper system frame is not limited in this application. The method provided in this application is merely a possible method, and there may be another method. How the terminal device determines, based on the second information, the start time of the first timer in the second hyper system frame is not limited either in this application.

In this embodiment, the terminal device can separately use different information (for example, the first information and the second information) in different hyper system frames to calculate start times of first timers in the different hyper system frames. Therefore, the start times of the first timers may be different in the different hyper system frames. This helps improve flexibility of setting a start time of the first timer. In addition, this helps the DRX cycle match the service cycle or helps the DRX match the service, to help reduce power consumption of the terminal device, and/or reduce a delay in receiving data by the terminal device.

Optionally, the first information may be obtained by the terminal device from the network device, may be specified in a protocol, may be stored by the terminal device itself, or may be obtained by using another method. This is not limited in this application. The first information may be carried in an information element or signaling such as DCI, a MAC CE, or RRC signaling. This is not limited in this application. The DRX configuration includes the first information and/or the third information.

Optionally, step 201 in this embodiment may be replaced with that the terminal device receives the first information from the network device. Correspondingly, the network device sends the first information to the terminal device. Optionally, the first information may be determined by the network device. For example, the network device can determine that the terminal device uses the first information in the first hyper system frame to determine the start time of the first timer. For another example, the network device can determine that the terminal device uses the second information in the second hyper system frame to determine the start time of the first timer.

Optionally, this embodiment may further include: The terminal device obtains the second information.

Optionally, this embodiment may further include: That the terminal device obtains the second information includes: The terminal device determines the second information based on sixth information.

Optionally, this embodiment may further include: The terminal device determines, based on the second information, the start time of the first timer in the second hyper system frame.

It should be noted that, for descriptions related to the second information, the sixth information, and the start time of the first timer in the second hyper system frame, refer to content related to the first information, the third information, and the start time of the first timer in the first hyper system frame. Details are not described herein again. It should be noted that the first information and the second information may be included in a same message, or may be included in different messages. This is not limited in this application. It should be noted that the third information and the sixth information may be included in a same message, or may be included in different messages. This is not limited in this application.

It should be noted that this application is described by using an example in which information (for example, the first information or the second information) used in a hyper system frame (for example, the first hyper system frame or the second hyper system frame) includes one value. The information (for example, the first information or the second information) used in a hyper system frame (for example, the first hyper system frame or the second hyper system frame) may alternatively include a group of values or K values (where for example, K is an integer greater than 1, for example, K is equal to 3 or 9). For example, if frame generation rate $X = 60$ fps, the service cycle is 16.6667... ms, and the DRX cycle is equal to three times the service cycle, that is, the DRX cycle is equal to 50 ms. The DRX cycle is 50 ms, and one DRX cycle includes three small DRX cycles (where for example, the three small DRX cycles may be 16 ms, 17 ms, and 17 ms respectively, and a sequence is not limited) or the DRX cycle includes three first timers (where for example, intervals between start times of the three first timers are respectively 16 ms and 17 ms, and a sequence is not limited). In the first hyper system frame, the terminal device determines the start time of the first timer based on three values included in the first information. The three values included in the first information are different from three values included in the second information. Optionally, in the second hyper system frame, the terminal device determines the start time of the first timer based on the three values included in the second information. Correspondingly, any one or more of the first parameter, the second parameter, and the first offset used in a hyper system frame (for example, the first hyper system frame or the second hyper system frame) may include one value, or may include a group of values or K values.

Optionally, information (for example, the first information and/or the second information) used by the terminal device in different hyper system frames to determine start times of first timers may be information having a cyclical change rule.

In a possible implementation, in two hyper system frames that are at an interval of N - 1 hyper system frames, the terminal device may use same information to determine start times of first timers. It may also be understood that, in N consecutive hyper system frames, different information may be used in different hyper system frames to determine start times of first timers.

For example, if the terminal device uses information 1 in the 1st hyper system frame to determine a start time of the first timer in the 1st hyper system frame, in an (N + 1)th hyper system frame, the terminal device also uses the information 1 to determine a start time of the first timer in the (N + 1)th hyper system frame; if the terminal device uses information 2 in the

28

$2^{nd}$ hyper system frame to determine a start time of the first timer in the $2^{nd}$ hyper system frame, in an $(N + 2)^{th}$ hyper system frame, the terminal device also uses the information 2 to determine a start time of the first timer in the $(N + 2)^{th}$ hyper system frame. By analogy, if the terminal device uses information i in an $i^{th}$ hyper system frame to determine a start time of the first timer in the $i^{th}$ hyper system frame, the terminal device also uses the information i in an $(N + i)^{th}$ hyper system frame to determine a start time of the first timer in the $(N + i)^{th}$ hyper system frame. Optionally, i is an integer greater than 0 and less than or equal to N. For example, from an $(X + 1)^{th}$ hyper system frame to an $(X + i)^{th}$ hyper system frame, different information is used in different hyper system frames to determine start times of first timers, where X is an integer.

For ease of description, in this application, the foregoing N consecutive hyper system frames are referred to as one hyper system frame cycle. In other words, the hyper system frame cycle includes the N hyper system frames. The terminal device uses different information in different hyper system frames in the foregoing N hyper system frames to determine start times of first timers. It may also be understood that the parameter used by the terminal device to determine the start time of the first timer has N different values in a change cycle (for example, a hyper system frame cycle).

Optionally, any one or more of the hyper system frame cycle, N, and information corresponding to each hyper system frame/different hyper system frames (for example, any one or more of a first parameter corresponding to each hyper system frame/first parameters corresponding to the different hyper system frames, a second parameter corresponding to each hyper system frame/second parameters corresponding to the different hyper system frames, and a first offset corresponding to each hyper system frame/first offsets corresponding to the different hyper system frames) may be configured by the network device for the terminal device, may be predefined in a protocol, or may be obtained in another manner. This is not limited in this application.

It should be noted that, in this application, a formula for determining the frame number and the subframe number of the start time of the first timer may be the formula 1 or the formula 2 described above, or may be another formula. This is not limited in this application.

With reference to FIG. 3, the following uses an example in which different hyper system frames correspond to different first offsets for description.

Step 301: A network device determines the first offsets corresponding to the different hyper system frames.

Step 301 is an optional step.

Optionally, the different hyper system frames may include each hyper system frame or at least one hyper system frame in a hyper system frame cycle, or may include at least one hyper system frame.

In this embodiment, the different hyper system frames may be replaced with one or more hyper system frames. It may be understood that two hyper system frames in the different hyper system frames may correspond to a same first offset, or may correspond to different first offsets.

The hyper system frame cycle may be determined based on a DRX cycle.

Optionally, the DRX cycle may be determined based on a service cycle.

For example, the DRX cycle is equal to or approximately equal to the service cycle. For example, the DRX cycle is any one of 1000/30 ms, 1000/60 ms, 1000/90 ms, 1000/120 ms, 33.3333 ms, 16.6667 ms, 11.1111 ms, or 8.3333 ms. For example, duration of the DRX cycle is equal to or approximately equal to duration of the service cycle.

For example, the DRX cycle is equal to K times the service cycle, where K is an integer greater than 1. For example, K is equal to 3 or 9. For example, if frame generation rate X = 30 fps, the service cycle is 1000/30 ms, and the DRX cycle is equal to three times the service cycle. In other words, the DRX cycle is equal to 100 ms. For example, if frame generation rate X = 60 fps, the service cycle is 1000/60 ms, and the DRX cycle is equal to three times the service cycle. In other words, the DRX cycle is equal to 50 ms. For example, if frame generation rate X = 90 fps, the service cycle is 1000/90 ms, and the DRX cycle is equal to nine times the service cycle. In other words, the DRX cycle is equal to 100 ms. For example, if frame generation rate X = 120 fps, the service cycle is 1000/120 ms, and the DRX cycle is equal to three times the service cycle. In other words, the DRX cycle is equal to 25 ms.

In a possible implementation, the hyper system frame cycle and the DRX cycle satisfy the following condition: The hyper system frame cycle is equal to an integer multiple of the DRX cycle.

Because one hyper system frame cycle includes N hyper system frames, a condition satisfied by the hyper system frame cycle and the DRX cycle may be transformed into a condition satisfied by N, duration of the hyper system frame, and the DRX cycle. Specifically, N, the duration of the hyper system frame, and the DRX cycle satisfy any one of the following conditions:

duration of the N hyper system frames is equal to an integer multiple of the DRX cycle;
N is obtained by dividing an integer multiple of the DRX cycle by the duration of the hyper system frame; or
N is an integer quotient obtained by exactly dividing an integer multiple of the DRX cycle by the duration of the hyper system frame.

Optionally, the network device determines N based on the condition satisfied by N, the duration of the hyper system frame, and the DRX cycle. Optionally, the network device determines, based on N and/or the DRX cycle, the first offsets corresponding to the different hyper system frames.

For ease of understanding, the following uses XR services with various frame generation rates as examples to describe the condition satisfied by N, the duration of the hyper system frame, and the DRX cycle.

For example, if frame generation rate X = 30 fps, and hyper system frame $T_{H-SFN}$ = 10240 ms, $T_{DRX}$ is equal to $T_{XR-30}$ = (1 ÷ 30 fps) × 1000 ms = 1000/30 ms. A quantity of DRX cycles (or XR cycles) included in the hyper system frame is $T_{H-SFN}$ ÷ $T_{XR-30}$ = $T_{H-SFN}$ ÷ $T_{DRX}$ = 10240 × 30 ÷ 1000 = 307.2. Because five times 0.2 is an integer, five hyper system frames can exactly divide the DRX cycle, and N is equal to 5.

For example, if frame generation rate X = 60 fps, and hyper system frame $T_{H-SFN}$ = 10240 ms, $T_{DRX}$ is equal to $T_{XR-60}$ = (1 ÷ 60 fps) × 1000 ms = 1000/60 ms. A quantity of DRX cycles (or XR cycles) included in the hyper system frame is $T_{H-SFN}$ ÷ $T_{XR-60}$ = $T_{H-SFN}$ ÷ $T_{DRX}$ = 10240 × 60 ÷ 1000 = 614.4. Because five times 0.4 is an integer, five hyper system frames can exactly divide the DRX cycle, and N is equal to 5.

For example, if frame generation rate X = 90 fps, and hyper system frame $T_{H-SFN}$ = 10240 ms, $T_{DRX}$ is equal to $T_{XR-90}$ = (1/90 fps) × 1000 ms = 1000/90 ms. A quantity of DRX cycles (or XR cycles) included in the hyper system frame is $T_{H-SFN}$ ÷ $T_{XR-90}$ = $T_{H-SFN}$ ÷ $T_{DRX}$ = 10240 × 90 ÷ 1000 = 921.6. Because five times 0.6 is an integer, five hyper system frames can exactly divide the DRX cycle, and N is equal to 5.

For example, if frame generation rate X = 120 fps, and hyper system frame $T_{H-SFN}$ = 10240 ms, $T_{DRX}$ is equal to $T_{XR-120}$ = (1 ÷ 120 fps) × 1000 ms = 1000/120 ms. A quantity of DRX cycles (or XR cycles) included in the hyper system frame is $T_{H-SFN}$ ÷ $T_{XR-120}$ = $T_{H-SFN}$ ÷ $T_{DRX}$ = 10240 × 120 ÷ 1000 = 1228.8. Because five times 0.8 is an integer, five hyper system frames can exactly divide the DRX cycle, and N is equal to 5.

It should be understood that, during actual application, if a service of the terminal device uses another frame generation rate, a quantity of hyper system frames included in the hyper system frame cycle, namely, N, may be determined based on the another frame generation rate and according to the foregoing steps. Details are not listed one by one herein.

For example, after the network device determines N, the network device may determine, based on N, the first offsets corresponding to the different hyper system frames.

The following uses the XR services with various frame generation rates as examples to describe the first offsets corresponding to the different hyper system frames.

For example, if frame generation rate X = 60 fps, it can be learned from the foregoing that:

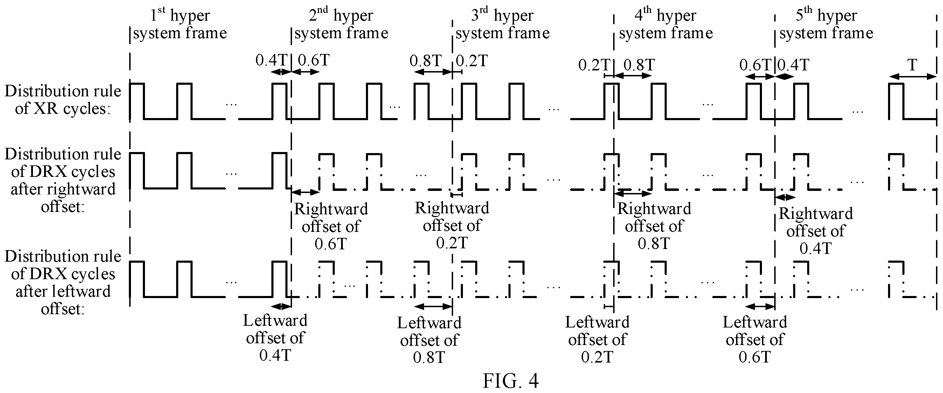

The quantity of DRX cycles (or XR cycles) included in the hyper system frame is $T_{H-SFN}$ ÷ $T_{XR-60}$ = $T_{H-SFN}$ ÷ $T_{DRX}$ = 10240 × 60 ÷ 1000 = 614.4. As shown in FIG. 4, for an XR cycle, 0.4 XR cycle is located at an end of the 1st hyper system frame, and 0.6 XR cycle is located at a front end of the 2nd hyper system frame. Therefore, in the second hyper system frame, the start time of the first timer may be offset rightwards by 0.6 DRX cycle, or the start time of the first timer may be offset leftwards by 0.4 DRX cycle.

Similarly, a quantity of DRX cycles (or XR cycles) included in two hyper system frames is 2 × $T_{H-SFN}$ ÷ $T_{XR-60}$ = 2 × $T_{H-SFN}$ ÷ $T_{DRX}$ = 2 × 10240 × 60 ÷ 1000 = 1228.8. As shown in FIG. 4, for an XR cycle, 0.8 XR cycle is located at an end of the 2nd hyper system frame, and 0.2 XR cycle is located at a front end of the 3rd hyper system frame. Therefore, in a third hyper system frame, the start time of the first timer may be offset rightwards by 0.2 DRX cycle, or the start time of the first timer may be offset leftwards by 0.8 DRX cycle.

Similarly, a quantity of DRX cycles (or XR cycles) included in three hyper system frames is 3 × $T_{H-SFN}$ ÷ $T_{XR-60}$ = 3 × $T_{H-SFN}$ ÷ $T_{DRX}$ = 3 × 10240 × 60 ÷ 1000 = 1843.2. As shown in FIG. 4, for an XR cycle, 0.2 XR cycle is located at an end of the 3rd hyper system frame, and 0.8 XR cycle is located at a front end of the 4th hyper system frame. Therefore, in a fourth hyper system frame, the start time of the first timer may be offset rightwards by 0.8 DRX cycle, or the start time of the first timer may be offset leftwards by 0.2 DRX cycle.

Similarly, a quantity of DRX cycles (or XR cycles) included in four hyper system frames is 4 × $T_{H-SFN}$ ÷ $T_{XR-60}$ = 4 × $T_{H-SFN}$ ÷ $T_{DRX}$ = 4 × 10240 × 60 ÷ 1000 = 2457.6. As shown in FIG. 4, for an XR cycle, 0.6 XR cycle is located at an end of the 4th hyper system frame, and 0.4 XR cycle is located at a front end of the 5th hyper system frame. Therefore, in a fifth hyper system frame, the start time of the first timer may be offset rightwards by 0.4 DRX cycle, or the start time of the first timer may be offset leftwards by 0.6 DRX cycle.

In conclusion, if frame generation rate X = 60 fps, content indicated by a first offset corresponding to an $i^{th}$ hyper system frame in the N hyper system frames is shown in Table 2-1, where i = 1, 2, 3, 4, or 5.

**Table 2-1**

| ith hyper system frame in the N hyper system frames | Quantity of DRX cycles (or XR cycles) included in first i hyper system frames | Content indicated by the first offset corresponding to the ith hyper system frame in the N hyper system frames |
|---|---|---|
| 1 | 614.4 | No offset |
| 2 | 1228.8 | Rightward offset of $0.6T_{XR-60}$ or leftward offset of $0.4T_{XR-60}$ |

(continued)

| ith hyper system frame in the N hyper system frames | Quantity of DRX cycles (or XR cycles) included in first i hyper system frames | Content indicated by the first offset corresponding to the ith hyper system frame in the N hyper system frames |
|---|---|---|
| 3 | 1843.2 | Rightward offset of $0.2T_{XR-60}$ or leftward offset of $0.8T_{XR-60}$ |
| 4 | 2457.6 | Rightward offset of $0.8T_{XR-60}$ or leftward offset of $0.2T_{XR-60}$ |
| 5 | 3072 | Rightward offset of $0.4T_{XR-60}$ or leftward offset of $0.6T_{XR-60}$ |

In the example shown in Table 2-1, a value of the first offset may be a positive value, a negative value, or 0. In the $1^{st}$ hyper system frame, the value of the first offset is 0 (indicating no offset). In the $2^{nd}$ hyper system frame, the value of the first offset is $+0.6T_{XR-60}$ (indicating a rightward offset of $0.6T_{XR-60}$) or $-0.4T_{XR-60}$ (representing a leftward offset of $0.4T_{XR-60}$). In the 3rd hyper system frame, the value of the first offset is $+0.2T_{XR-60}$ (indicating a rightward offset of $0.2T_{XR-60}$) or $-0.8T_{XR-60}$ (indicating a leftward offset of $0.8T_{XR-60}$). In the $4^{th}$ hyper system frame, the value of the first offset is $+0.8T_{XR-60}$ (indicating a rightward offset of $0.8T_{XR-60}$) or $-0.2T_{XR-60}$ (indicating a leftward offset of $0.2T_{XR-60}$). In the $5^{th}$ hyper system frame, the value of the first offset is $+0.4T_{XR-60}$ (indicating a rightward offset of $0.4T_{XR-60}$) or $-0.6T_{XR-60}$ (indicating a leftward offset of $0.6T_{XR-60}$).

Similarly, if frame generation rate X = 30 fps, content indicated by a first offset corresponding to an $i^{th}$ hyper system frame in the N hyper system frames is shown in Table 2-2, where i = 1, 2, 3, 4, or 5.

**Table 2-2**

| $i^{th}$ hyper system frame in the N hyper system frames | Quantity of DRX cycles (or XR cycles) included in first i hyper system frames | Content indicated by the first offset corresponding to the $i^{th}$ hyper system frame in the N hyper system frames |
|---|---|---|
| 1 | 307.2 | No offset |
| 2 | 614.4 | Rightward offset of $0.2T_{XR-30}$ or leftward offset of $0.8T_{XR-30}$ |
| 3 | 921.6 | Rightward offset of $0.4T_{XR-30}$ or leftward offset of $0.6T_{XR-30}$ |
| 4 | 1228.8 | Rightward offset of $0.6T_{XR-30}$ or leftward offset of $0.4T_{XR-30}$ |
| 5 | 1536 | Rightward offset of $0.8T_{XR-30}$ or leftward offset of $0.2T_{XR-30}$ |

Similarly, if frame generation rate X = 90 fps, content indicated by a first offset corresponding to an $i^{th}$ hyper system frame in the N hyper system frames is shown in Table 2-3, where i = 1, 2, 3, 4, or 5.

**Table 2-3**

| $i^{th}$ hyper system frame in the N hyper system frames | Quantity of DRX cycles (or XR cycles) included in first i hyper system frames | Content indicated by the first offset corresponding to the $i^{th}$ hyper system frame in the N hyper system frames |
|---|---|---|
| 1 | 921.6 | No offset |
| 2 | 1843.2 | Rightward offset of $0.6T_{XR-90}$ or leftward offset of $0.4T_{XR-90}$ |
| 3 | 2764.8 | Rightward offset of $0.2T_{XR-90}$ or leftward offset of $0.8T_{XR-90}$ |
| 4 | 3686.4 | Rightward offset of $0.8T_{XR-90}$ or leftward offset of $0.2T_{XR-90}$ |
| 5 | 4608 | Rightward offset of $0.4T_{XR-90}$ or leftward offset of $0.6T_{XR-90}$ |

Similarly, if the frame generation rate X = 120 fps, content indicated by a first offset corresponding to an $i^{th}$ hyper system frame in the N hyper system frames is shown in Table 2-4, where i = 1, 2, 3, 4, or 5.

**Table 2-4**

| i<sup>th</sup> hyper system frame in the N hyper system frames | Quantity of DRX cycles (or XR cycles) included in first i hyper system frames | Content indicated by the first offset corresponding to the i<sup>th</sup> hyper system frame in the N hyper system frames |
|---|---|---|
| 1 | 1228.8 | No offset |
| 2 | 2457.6 | Rightward offset of $0.8T_{XR-120}$ or leftward offset of $0.2T_{XR-120}$ |
| 3 | 3686.4 | Rightward offset of $0.6T_{XR-120}$ or leftward offset of $0.4T_{XR-120}$ |
| 4 | 4915.2 | Rightward offset of $0.4T_{XR-120}$ or leftward offset of $0.6T_{XR-120}$ |
| 5 | 6144 | Rightward offset of $0.2T_{XR-120}$ or leftward offset of $0.8T_{XR-120}$ |

It should be understood that, during actual application, if the service of the terminal device uses another frame generation rate, the network device may determine, based on the another frame generation rate and according to the foregoing content, a first offset corresponding to each of the N hyper system frames. Details are not listed one by one herein.

Step 302: The terminal device obtains the first offsets corresponding to the different hyper system frames.

For example, the first offsets corresponding to the different hyper system frames may be configured by the network device for the terminal device, may be predefined in a protocol, or may be determined in another manner (for example, determined by the terminal device based on the foregoing method). This is not limited in this application.

For example, the network device sends, to the terminal device, the first offsets corresponding to the different hyper system frames. Correspondingly, the terminal device receives, from the network device, the first offsets corresponding to the different hyper system frames.

Optionally, this application further includes: The terminal device obtains an index that is of a first offset and that corresponds to the first offset.

For example, the index of the first offset may be configured by the network device for the terminal device, may be predefined in a protocol, or may be determined in another manner. This is not limited in this application.

Optionally, there is a correspondence between the first offset and the index of the first offset.

Optionally, the network device sends the correspondence between the first offset and the index of the first offset to the terminal device.

In a possible example of this implementation, because a hyper system frame cycle includes N hyper system frames, and the N hyper system frames are in one-to-one correspondence with N first offsets, there may be N indexes of the first offsets. For example, the network device may set N values as the indexes of the N first offsets. For example, the indexes of the first offsets may be 0, 1, ..., and N - 1 or 1, ..., N - 1, and N. For example, N is equal to 5. The index of the first offset includes five values in total: 0, 1, 2, 3, and 4.

For example, if frame generation rate X = 60 fps, the correspondence between the first offset and the index of the first offset may be shown in Table 3-1.

**Table 3-1**

| Index of the first offset | First offset |
|---|---|
| 0 | 0 |
| 1 | $+0.6T_{XR-60}$ or $-0.4T_{XR-60}$ |
| 2 | $+0.2T_{XR-60}$ or $-0.8T_{XR-60}$ |
| 3 | $+0.8T_{XR-60}$ or $-0.2T_{XR-60}$ |
| 4 | $+0.4T_{XR-60}$ or $-0.6_{TR-60}$ |

In the example shown in Table 3-1, if the index of the first offset is 0, the first offset is 0; or if the index of the first offset is 1, the first offset is $+0.6T_{XR-60}$ or $-0.4T_{XR-60}$. By analogy, details are not described herein.

In another possible instance of this implementation, because a hyper system frame cycle includes N hyper system frames, and N - 1 hyper system frames are in one-to-one correspondence with N - 1 first offsets, there may be N - 1 indexes of the first offsets. For example, a value of a first offset of a part of hyper system frames (for example, the first hyper system frame) in the hyper system frame cycle may be 0, and the terminal device does not need to perform an offset operation based on the first offset. The network device may not send the first offset whose value is 0 to the terminal device.

For example, a hyper system frame cycle includes N hyper system frames, the N hyper system frames are in one-to-one correspondence with N first offsets, and a value of one first offset in the N offsets is 0. Therefore, the network device may set N - 1 values as indexes of N - 1 first offsets whose values are non-zero. For example, the indexes of the first offsets may be 0, 1, ..., and N - 2 or 1, ..., and N - 1. For example, N is equal to 5. The index of the first offset includes four values in total: 1, 2, 3, and 4 or 0, 1, 2, and 3. Each value represents a non-zero first offset.

For example, if frame generation rate X = 60 fps, the correspondence between the first offset and the index of the first offset may be shown in Table 3-2.

**Table 3-2**

| Index of the first offset | First offset |
|---|---|
| 0 | $+0.6T_{XR-60}$ or $-0.4T_{XR-60}$ |
| 1 | $+0.2T_{XR-60}$ or $-0.8T_{XR-60}$ |
| 2 | $+0.8T_{XR-60}$ or $-0.2T_{XR-60}$ |
| 3 | $+0.4T_{XR-60}$ or $-0.6T_{XR-60}$ |

In the example shown in Table 3-2, if the index of the first offset is 1, the first offset is $+0.6T_{XR-60}$ or $-0.4T_{XR-60}$; or if the index of the first offset is 2, the first offset is $+0.2T_{XR-60}$ or $-0.8T_{XR-60}$. By analogy, details are not described herein.

It should be understood that, during actual application, the terminal device may alternatively determine, in another manner, an index of a first offset corresponding to each hyper system frame in a hyper system frame cycle. Details are not listed one by one herein.

Optionally, the terminal device may receive the correspondence between the first offset and the index of the first offset from the network device. Then, the terminal device stores the correspondence including the first offset in the terminal device, so that the terminal device can determine, before entering a hyper system frame, a value of a first offset used in the hyper system frame.

For example, if the correspondence is the example shown in Table 3-1, the terminal device stores the correspondence shown in Table 3-1.

When the terminal device determines a start time of the first timer in a hyper system frame, the terminal device may directly perform step 304a; or the terminal device may perform step 304b after obtaining index indication information in step 303.

Step 303: The network device sends the index indication information to the terminal device. Correspondingly, the terminal device receives the index indication information from the network device.

Step 303 is an optional step.

The index indication information indicates an index of a first offset used in a hyper system frame. Optionally, the index indication information indicates an index of a first offset used by the terminal device in a next hyper system frame. The next hyper system frame is a next hyper system frame of a hyper system frame including a moment at which the terminal device obtains the index indication information.

Optionally, the index indication information may be carried in downlink control information DCI, may be carried in a media access control control element MAC CE, may be carried in a radio resource control RRC message, or may be carried in another message or information element. This is not limited herein.

For example, if the index indication information is implemented by using the index of the first offset shown in Table 3-2, the index indication information may be carried in 2 bits in the DCI.

Optionally, the index indication information may be the index of the first offset, or the index indication information is associated with the index of the first offset.

For example, there is a correspondence between the index indication information and the index of the first offset.

For example, third information may be a value of the index of the first offset.

After the terminal device performs step 303, the terminal device performs step 304b.

Step 304a: The terminal device determines, based on indexes of different hyper system frames, first offsets corresponding to the different hyper system frames.

For example, the terminal device determines an index of a first offset based on an index of a hyper system frame and N. For example, the terminal device determines, based on the index of the first offset and the correspondence, the first offset corresponding to the index of the first offset.

In a possible implementation, the index C of the first offset, the index $S_{H-SFN}$ of the hyper system frame, and N satisfy the following condition: $C = S_{H-SFN} \bmod N$. The terminal device may calculate a remainder by dividing the index of the hyper system frame by N, where the remainder is the index of the first offset corresponding to the hyper system frame.

For example, the correspondence is Table 3-1. If C=0, the terminal device determines, based on the correspondence, that the value of the first offset is 0. If C=1, the terminal device determines, based on the correspondence, that the value of the first offset is +0.6$T_{XR-60}$ or -0.4$T_{XR-60}$. If C=2, the terminal device determines, based on the correspondence, that the value of the first offset is +0.2$T_{XR-60}$ or -0.8$T_{XR-60}$. If C=3, the terminal device determines, based on the correspondence, that the value of the first offset is +0.8$T_{XR-60}$ or -0.2$T_{XR-60}$. If C=4, the terminal device determines, based on the correspondence, that the value of the first offset is +0.4$T_{XR-60}$ or -0.6$T_{XR-60}$.

Step 304b: The terminal device determines, based on the index indication information, a first offset corresponding to a next hyper system frame.

Step 304b is an optional step.

For example, after the terminal device obtains the index indication information, the terminal device determines the first offset corresponding to the index of the first offset that is indicated by the index indication information, and determines that the first offset is an offset used to determine a start time of the first timer in the next hyper system frame.

For example, the correspondence is Table 3-1. If the index indication information is 0, the terminal device determines, based on the correspondence, that a value of the first offset corresponding to the next hyper system frame is 0. If the index indication information is 1, the terminal device determines, based on the correspondence, that a value of the first offset corresponding to the next hyper system frame is +0.6$T_{XR-60}$ or -0.4$T_{XR-60}$. If the index indication information is 2, the terminal device determines, based on the correspondence, that a value of the first offset corresponding to the next hyper system frame is +0.2$T_{XR-60}$ or -0.8$T_{XR-60}$. If the index indication information is 3, the terminal device determines, based on the correspondence, that a value of the first offset corresponding to the next hyper system frame is +0.8$T_{XR-60}$ or -0.2$T_{XR-60}$. If the index indication information is 4, the terminal device determines, based on the correspondence, that a value of the first offset corresponding to the next hyper system frame is +0.4$T_{XR-60}$ or -0.6$T_{XR-60}$. Optionally, when the index indication information is 0, the network device may alternatively not send the index indication to the terminal device, to reduce signaling overheads.

Step 305: The terminal device determines, based on the first offsets corresponding to the different hyper system frames, start times of first timers in the different hyper system frames.

For example, the terminal device determines, based on a first parameter and the first offsets used in the different hyper system frames, the start times of the first timers in the different hyper system frames. For example, an initial value of the first parameter is drx-StartOffset0.

For example, the terminal device determines, based on a second parameter and the first offsets used in the different hyper system frames, the start times of the first timers in the different hyper system frames. For example, an initial value of the second parameter is drx-SlotOffset0.

For example, the terminal device determines, based on a first parameter, a second parameter, and the first offsets used in the different hyper system frames, the start times of the first timers in the different hyper system frames.

In this embodiment, when the first offset acts on different parameters, processes in which the terminal device determines the start time of the first timer are different. The following separately provides descriptions with reference to implementations 1 to 3.

In an implementation 1, the first offset is an offset based on the first parameter. In other words, the first offset is an offset acting on the first parameter. For example, the terminal device updates the initial value of the first parameter by using the first offset, to obtain an updated value of the first parameter. Then, the terminal device determines the start time of the first timer by using the updated value of the first parameter and a formula (for example, the formula 1 or the formula 2 described above), in a conventional technology, for calculating the start time of the first timer.

For example, the DRX cycle is equal to $T_{XR-60}$, the initial value of the first parameter is drx-StartOffset0, and the value of the first offset is +0.6$T_{XR-60}$. The updated value of the first parameter that is obtained by the terminal device based on the initial value of the first offset and the value of the first offset is drx-StartOffset0 + 0.6$_{TXR-60}$. Then, the terminal device substitutes the updated value of the first parameter (namely, drx-StartOffset0 + 0.6$T_{XR-60}$) into the formula 1: [(SFN$_1$ × 10) + subframe number$_1$] modulo ($T_{XR-60}$) = drx-StartOffset0 + 0.6$_{TXR-60}$. Through calculation, it may be obtained that a frame number of the start time of the first timer is SFN$_1$, and a subframe number is subframe number$_1$. Then, the terminal device determines to start the first timer after the second parameter starting from a subframe whose frame number is SFN$_1$ and whose subframe number is subframe number$_1$.

In an implementation 2, the first offset is an offset based on a first reference value. In other words, the first offset is an offset acting on the first reference value. For example, the first reference value is determined by the terminal device based on the first parameter and the second parameter. For example, the terminal device first determines an initial value of the start time of the first timer based on the first parameter, the second parameter, and a formula (for example, the formula 1 or the formula 2 described above), in a conventional technology, for calculating the start time of the first timer. Then, the terminal device determines, based on the initial value of the start time of the first timer and the first offset, the start time of the first timer in the hyper system frame.

For example, the DRX cycle is equal to $T_{XR-60}$, the first parameter is drx-StartOffset, the second parameter is drx-SlotOffset, and the value of the first offset is +0.6$T_{XR-60}$. The terminal device substitutes the first parameter (namely, drx-StartOffset) into the formula 1: [(SFN$_2$ × 10) + subframe number$_2$] modulo ($T_{XR-60}$) = drx-StartOffset. Through calculation, it may be obtained that a frame number of the start time of the first timer is $SFN_2$, and a subframe number is subframe number$_2$. Then, the terminal device determines to delay a subframe whose frame number is $SFN_2$ and whose subframe number is subframe number$_2$ by the second parameter, to obtain that the initial value of the start time of the first timer is drx-onDurationTimer0. Then, the terminal device obtains, based on the initial value of the start time of the first timer and the first offset, that the start time of the first timer in the hyper system frame is drx-onDurationTimer0 + $0.6_{TXR-60}$.

In an implementation 3, the first offset is an offset based on the second parameter. In other words, the first offset is an offset acting on the second parameter. It may also be understood that the terminal device updates the initial value of the second parameter by using the first offset, to obtain an updated value of the second parameter. Then, the terminal device offsets a frame number and a subframe number by the update value of the second parameter, where the frame number and the subframe number are calculated according to a formula (for example, the formula 1 or the formula 2 described above) in the conventional technology, to obtain the start time of the first timer in the hyper system frame.

For example, the DRX cycle is equal to $T_{XR-60}$, the first parameter is drx-StartOffset, and the value of the first offset is +$0.6T_{XR-60}$. The updated value of the second parameter that is obtained by the terminal device based on the initial value of the second parameter and the value of the first offset is drx-StartOffset0 + $0.6_{TXR-60}$. Then, the terminal device substitutes the first parameter into the formula 1: $[(SFN_3 \times 10) +$ subframe number$_3]$ modulo $(T_{XR-60})$ = drx-StartOffset. Through calculation, it may be obtained that a frame number of the start time of the first timer is $SFN_3$, and a subframe number is subframe numbers. Then, the terminal device determines to delay (drx-SlotOffset0 + $0.6T_{XR-60}$) slots to start the first timer at a subframe whose frame number is $SFN_3$ and whose subframe number is subframe numbers.

In this embodiment, because the first offset is determined based on the DRX cycle, and the DRX cycle is determined based on the service cycle, the first offset is based on the service cycle. Therefore, the start time of the first timer that is calculated by using the first offset can enable the DRX cycle to match the service cycle or help DRX match a service, to help reduce power consumption of the terminal device, and/or reduce a delay in receiving data by the terminal device.

It should be understood that the first offsets corresponding to the different hyper system frames in this embodiment may alternatively be manually configured for the network device, predefined in a protocol, or stored in the terminal device. This is not limited in this application. Step 301, step 302, step 303, and step 304b are optional steps. It should be noted that step 303 and step 304b may be used as an independent embodiment. It should be noted that step 302 and step 304a may be used as an independent embodiment.

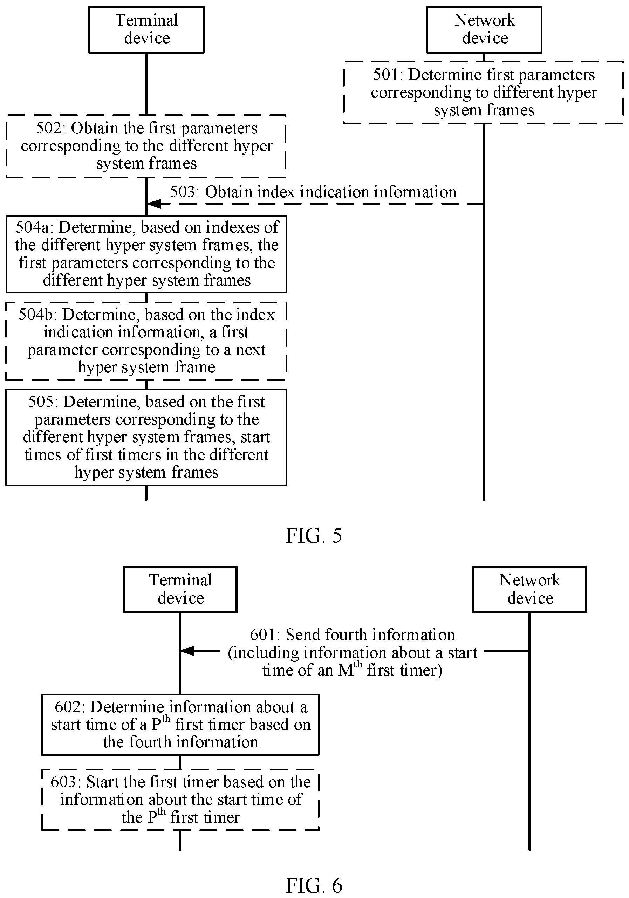

With reference to FIG. 5, the following uses an example in which different hyper system frames correspond to different first parameters for description.

Step 501: A network device determines the first parameters corresponding to the different hyper system frames.

Step 501 is an optional step.

For explanations of a hyper system frame cycle, a DRX cycle, and N, refer to the related descriptions in step 301. Details are not described herein again.

In a conventional technology, values of the first parameter used in all hyper system frames are the same. For example, in this embodiment, the network device may configure N first parameters for N hyper system frames in the hyper system frame cycle, and the N hyper system frames are in one-to-one correspondence with the N first parameters.

Optionally, the network device determines N based on a condition satisfied by N, duration of the hyper system frame, and the DRX cycle. Optionally, the network device determines, based on N, the first parameters corresponding to the different hyper system frames.

A process in which the network device determines N based on the condition satisfied by N, the duration of the hyper system frame, and the DRX cycle has been described in detail in step 301 above. Details are not described herein again.

For example, after the network device determines N, the network device may determine, based on N, the first parameters corresponding to the different hyper system frames.

In a possible implementation, the network device determines, based on N, first offsets corresponding to the different hyper system frames, and determines, based on a first offset corresponding to each hyper system frame, a first parameter corresponding to the hyper system frame. For a process of calculating the first offset, refer to the foregoing step 301. Details are not described herein again.

For example, the network device may determine the first parameter of each hyper system frame based on the first parameter of the 1st hyper system frame in the N hyper system frames and the first offsets of the different hyper system frames in the N hyper system frames. For example, the first parameter of the 2nd hyper system frame is a sum of the first parameter of the 1st hyper system frame and the first offset of the 2nd hyper system frame. For another example, the first parameter of the 3rd hyper system frame is a sum of the first parameter of the 1st hyper system frame and the first offset of the 3rd hyper system frame. By analogy, the network device may determine the first parameters corresponding to the different hyper system frames in the N hyper system frames.

For example, drx-StartOffset0 is the first parameter of the 1st hyper system frame in the N hyper system frames.

For ease of understanding, frame generation rate X = 60 fps and N = 5 are used as an example for description. A first parameter corresponding to an $i^{th}$ hyper system frame in the N hyper system frames is shown in Table 4-1, where i=1, 2, 3, 4, or 5.

Table 4-1

| $i^{th}$ hyper system frame in the N hyper system frames | First offset corresponding to the $i^{th}$ hyper system frame in the N hyper system frames | First parameter corresponding to the $i^{th}$ hyper system frame in the N hyper system frames |
|---|---|---|
| 1 | 0 | drx-StartOffset0 |
| 2 | $+0.6T_{XR-60}$ or $-0.4T_{XR-60}$ | drx-StartOffset0 + $0.6T_{XR-60}$ or drx-StartOffset0 - $0.4T_{XR-60}$ |
| 3 | $+0.2T_{XR-60}$ or $-0.8T_{XR-60}$ | drx-StartOffset0 + $0.2T_{XR-60}$ or drx-StartOffset0 - $0.8T_{XR-60}$ |
| 4 | $+0.8T_{XR-60}$ or $-0.2T_{XR-60}$ | drx-StartOffset0 + $0.8T_{XR-60}$ or drx-StartOffset0 - $0.2T_{XR-60}$ |
| 5 | $+0.4T_{XR-60}$ or $-0.6T_{XR-60}$ | drx-StartOffset0 + $0.4T_{XR-60}$ or drx-StartOffset0 - $0.6T_{XR-60}$ |

Similarly, if frame generation rate X = 30 fps and N = 5, a first parameter corresponding to an $i^{th}$ hyper system frame in the N hyper system frames is shown in Table 4-2, where i = 1, 2, 3, 4, or 5.

Table 4-2

| $i^{th}$ hyper system frame in the N hyper system frames | First offset corresponding to the $i^{th}$ hyper system frame in the N hyper system frames | First parameter corresponding to the $i^{th}$ hyper system frame in the N hyper system frames |
|---|---|---|
| 1 | 0 | drx-StartOffset0 |
| 2 | $+0.2T_{XR-30}$ or $-0.8T_{XR-30}$ | drx-StartOffset0 + $0.2T_{XR-30}$ or drx-StartOffset0 - $0.8T_{XR-30}$ |
| 3 | $+0.4T_{XR-30}$ or $-0.6T_{XR-30}$ | drx-StartOffset0 + $0.4T_{XR-30}$ or drx-StartOffset0 - $0.6T_{XR-30}$ |
| 4 | $+0.6T_{XR-30}$ or $-0.4T_{XR-30}$ | drx-StartOffset0 + $0.6T_{XR-30}$ or drx-StartOffset0 - $0.4T_{XR-30}$ |
| 5 | $+0.8T_{XR-30}$ or $-0.2T_{XR-30}$ | drx-StartOffset0 + $0.8T_{XR-30}$ or drx-StartOffset0 - $0.2T_{XR-30}$ |

Similarly, if frame generation rate X = 90 fps and N = 5, a first parameter corresponding to an $i^{th}$ hyper system frame in the N hyper system frames is shown in Table 4-3, where i = 1, 2, 3, 4, or 5.

Table 4-3

| $i^{th}$ hyper system frame in the N hyper system frames | First offset corresponding to the $i^{th}$ hyper system frame in the N hyper system frames | First parameter corresponding to the $i^{th}$ hyper system frame in the N hyper system frames |
|---|---|---|
| 1 | 0 | drx-StartOffset0 |
| 2 | $+0.6T_{XR-90}$ or $-0.4T_{XR-90}$ | drx-StartOffset0 + $0.6T_{XR-90}$ or drx-StartOffset0 - $0.4T_{XR-90}$ |
| 3 | $+0.2T_{XR-90}$ or $-0.8T_{XR-90}$ | drx-StartOffset0 + $0.2T_{XR-90}$ or drx-StartOffset0 - $0.8T_{XR-90}$ |
| 4 | $+0.8T_{XR-90}$ or $-0.2T_{XR-90}$ | drx-StartOffset0 + $0.8T_{XR-90}$ or drx-StartOffset0 - $0.2T_{XR-90}$ |
| 5 | $+0.4T_{XR-90}$ or $-0.6T_{XR-90}$ | drx-StartOffset0 + $0.4T_{XR-90}$ or drx-StartOffset0 - $0.6T_{XR-90}$ |

Similarly, if frame generation rate X = 120 fps and N = 5, a first parameter corresponding to an $i^{th}$ hyper system frame in the N hyper system frames is shown in Table 4-4, where i = 1, 2, 3, 4, or 5.

**Table 4-4**

| $i^{th}$ hyper system frame in the N hyper system frames | First offset corresponding to the $i^{th}$ hyper system frame in the N hyper system frames | First parameter corresponding to the $i^{th}$ hyper system frame in the N hyper system frames |
|---|---|---|
| 1 | 0 | drx-StartOffset0 |
| 2 | $+0.8T_{XR-120}$ or $-0.2T_{XR-120}$ | drx-StartOffset0 + $0.8T_{XR-120}$ or drx-StartOffset0 - $0.2T_{XR-120}$ |
| 3 | $+0.6T_{XR-120}$ or $-0.4T_{XR-120}$ | drx-StartOffset0 + $0.6T_{XR-120}$ or drx-StartOffset0 - $0.4T_{XR-120}$ |
| 4 | $+0.4T_{XR-120}$ or $-0.6T_{XR-120}$ | drx-StartOffset0 + $0.4T_{XR-120}$ or drx-StartOffset0 - $0.6T_{XR-120}$ |
| 5 | $+0.2T_{XR-120}$ or $-0.8T_{XR-120}$ | drx-StartOffset0 + $0.2T_{XR-120}$ or drx-StartOffset0 - $0.8T_{XR-120}$ |

It should be understood that, during actual application, if a service of a terminal device uses another frame generation rate, the network device may determine, based on the another frame generation rate and according to the foregoing steps, a first parameter corresponding to each of the N hyper system frames. Details are not listed one by one herein.

Step 502: The terminal device obtains the first parameters corresponding to the different hyper system frames.

For example, the first parameters corresponding to the different hyper system frames may be configured by the network device for the terminal device, may be predefined in a protocol, or may be determined in another manner. This is not limited in this application.

For example, the network device sends, to the terminal device, the first parameters corresponding to the different hyper system frames. Correspondingly, the terminal device receives, from the network device, the first parameters corresponding to the different hyper system frames.

Optionally, this application further includes: The terminal device obtains an index that is of a first parameter and that corresponds to the first parameter.

For example, the index of the first parameter may be configured by the network device for the terminal device, may be predefined in a protocol, or may be determined in another manner. This is not limited in this application.

Optionally, there is a correspondence between the first parameter and the index of the first parameter.

Optionally, the network device sends the correspondence between the first parameter and the index of the first parameter to the terminal device.

Optionally, because a hyper system frame cycle includes N hyper system frames, the N hyper system frames are in one-to-one correspondence with N first parameters. For example, the network device may set N values as the indexes of the N first parameters. For example, the indexes of the first parameters may be 0, 1, ..., and N - 1 or 1, ..., N - 1, and N. For example, N is equal to 5. The index of the first parameter includes five values in total: 0, 1, 2, 3, and 4.

For example, if frame generation rate X = 60 fps, the correspondence between the first parameter and the index of the first parameter may be shown in Table 5-1.

**Table 5-1**

| Index of the first parameter | First parameter |
|---|---|
| 0 | drx-StartOffset0 |
| 1 | drx-StartOffset0 + $0.6T_{XR-60}$ or drx-StartOffset0 - $0.4T_{XR-60}$ |
| 2 | drx-StartOffset0 + $0.2T_{XR-60}$ or drx-StartOffset0 - $0.8T_{XR-60}$ |
| 3 | drx-StartOffset0 + $0.8T_{XR-60}$ or drx-StartOffset0 - $0.2T_{XR-60}$ |
| 4 | drx-StartOffset0 + $0.4T_{XR-60}$ or drx-StartOffset0 - $0.6T_{XR-60}$ |

In the example shown in Table 5-1, if the index of the first parameter is 0, the first parameter is drx-StartOffset0. If the index of the first parameter is 1, the first parameter is drx-StartOffset0 + $0.6T_{XR-60}$ or drx-StartOffset0 - $0.4T_{XR-60}$. By analogy, details are not described herein.

Optionally, the terminal device may receive the correspondence between the first parameter and the index of the first parameter from the network device. Then, the terminal device stores the correspondence including the first parameter in the terminal device, so that the terminal device can determine, before entering a hyper system frame, a first parameter used in the hyper system frame.

For example, if the correspondence is the example shown in Table 5-1, the terminal device stores the correspondence shown in Table 5-1.

When the terminal device needs to determine a start time of the first timer in a hyper system frame, the terminal device may directly perform step 504a; or the terminal device may perform step 504b after obtaining index indication information in step 503.

Step 503: The network device sends the index indication information to the terminal device. Correspondingly, the terminal device receives the index indication information from the network device.

Step 503 is an optional step.

The index indication information indicates an index of a first parameter used in a hyper system frame. Optionally, the index indication information indicates an index of a first parameter used by the terminal device in a next hyper system frame. The next hyper system frame is a next hyper system frame of a hyper system frame including a moment at which the terminal device obtains the index indication information.

Optionally, the index indication information may be carried in downlink control information DCI, may be carried in a media access control control element MAC CE, may be carried in a radio resource control RRC message, or may be carried in another message or information element. This is not limited herein.

For example, if the index indication information is implemented by using the index of the first parameter shown in Table 5-1, the index indication information may be carried in 3 bits in the DCI.

Optionally, the index indication information may be the index of the first parameter, or the index indication information is associated with the index of the first parameter.

For example, there is a correspondence between the index indication information and the index of the first parameter.

For example, third information may be a value of the index of the first parameter.

After the terminal device performs step 503, the terminal device performs step 504b.

Step 504a: The terminal device determines, based on indexes of different hyper system frames, first parameters corresponding to the different hyper system frames.

For example, the terminal device determines an index of a first parameter based on an index of a hyper system frame and N. For example, the terminal device determines, based on the index of the first parameter and the correspondence, the first parameter corresponding to the index of the first parameter.

In a possible implementation, the index C of the first parameter, the index $S_{H\text{-SFN}}$ of the hyper system frame, and N satisfy the following condition: $C = S_{H\text{-SFN}} \bmod N$. The terminal device may calculate a remainder by dividing the index of the hyper system frame by N, where the remainder is the index of the first parameter corresponding to the hyper system frame.

For example, the correspondence is Table 5-1. If C=0, the terminal device determines, based on the correspondence, that the value of the first parameter is drx-StartOffset0. If C=1, the terminal device determines, based on the correspondence, that the value of the first parameter is drx-StartOffset0 + $0.6T_{XR\text{-}60}$ or drx-StartOffset0 - $0.4T_{XR\text{-}60}$. If C=2, the terminal device determines, based on the correspondence, that the value of the first parameter is drx-StartOffset0 + $0.2T_{XR\text{-}60}$ or drx-StartOffset0 - $0.8T_{XR\text{-}60}$. If C=3, the terminal device determines, based on the correspondence, that the value of the first parameter is drx-StartOffset0 + $0.8T_{XR\text{-}60}$ or drx-StartOffset0 - $0.2T_{XR\text{-}60}$. If C=4, the terminal device determines, based on the correspondence, that the value of the first parameter is drx-StartOffset0 + $0.4T_{XR\text{-}60}$ or drx-StartOffset0 - $0.6T_{XR\text{-}60}$.

Step 504b: The terminal device determines, based on the index indication information, a first parameter corresponding to a next hyper system frame.

Step 504b is an optional step. To be specific, the terminal device performs step 504b only after the network device performs step 503.

For example, after the terminal device obtains the index indication information, the terminal device determines the first parameter corresponding to the index of the first parameter that is indicated by the index indication information, and determines that the first parameter is an offset used to determine a start time of the first timer in the next hyper system frame.

For example, the correspondence is Table 5-1. If the index indication information is 0, the terminal device determines, based on the correspondence, that a value of the first parameter corresponding to the next hyper system frame is drx-StartOffset0. If the index indication information is 1, the terminal device determines, based on the correspondence, that a value of the first parameter corresponding to the next hyper system frame is drx-StartOffset0 + $0.6T_{XR\text{-}60}$ or drx-StartOffset0 - $0.4T_{XR\text{-}60}$. If the index indication information is 2, the terminal device determines, based on the correspondence, that a value of the first parameter corresponding to the next hyper system frame is drx-StartOffset0 + $0.2T_{XR\text{-}60}$ or drx-StartOffset0 - $0.8T_{XR\text{-}60}$. If the index indication information is 3, the terminal device determines, based on the correspondence, that a value of the first parameter corresponding to the next hyper system frame is drx-StartOffset0 + $0.8T_{XR\text{-}60}$ or drx-StartOffset0 - $0.2T_{XR\text{-}60}$. If the index indication information is 4, the terminal device determines, based on the correspondence, that a value of the first parameter corresponding to the next hyper system frame is drx-StartOffset0 + $0.4T_{XR\text{-}60}$ or drx-StartOffset0 - $0.6T_{XR\text{-}60}$.

Step 505: The terminal device determines, based on the first parameters corresponding to the different hyper system frames, start times of first timers in the different hyper system frames.

In a possible implementation, the terminal device determines, based on a second parameter and the first parameters used in the different hyper system frames, the start times of the first timers in the different hyper system frames.

For example, the terminal device substitutes a first parameter of a hyper system frame into a formula (for example, the formula 1 or the formula 2 described above), in the conventional technology, for calculating a start time of a first timer, to obtain a frame number and a subframe number of the start time of the first timer. Then, the terminal device determines, based on the frame number and the subframe number of the start time of the first timer and the second parameter, the start time of the first timer in the hyper system frame.

For example, the DRX cycle is equal to $T_{XR-60}$, N = 5, and the first parameter corresponding to each hyper system frame is shown in Table 4-1. For example, the value of the first parameter is drx-StartOffset0 + $0.6T_{XR-60}$, and the second parameter configured by the network device is drx-SlotOffset0. The terminal device can determine that the first parameter corresponding to the hyper system frame is drx-StartOffset0 + $0.6T_{XR-60}$. Then, the terminal device substitutes the value of the first parameter (namely, drx-StartOffset0 + $0.6T_{XR-60}$) into the formula 1: [(SFN$_1$ × 10) + subframe number$_1$] modulo ($T_{XR-60}$) = drx-StartOffset0 + $0.6T_{XR-60}$. Through calculation, it may be obtained that a frame number of the start time of the first timer is SFN$_1$, and a subframe number is subframe number$_1$. Then, the terminal device determines to start the first timer after the second parameter starting from a subframe whose frame number is SFN$_1$ and whose subframe number is subframe number$_1$.

In this embodiment, because the first parameter is determined based on the DRX cycle, and the DRX cycle is determined based on a service cycle, the first parameter is based on the service cycle. Therefore, the start time of the first timer that is calculated by using the first parameter can enable the DRX cycle to match the service cycle or help DRX match a service, to help reduce power consumption of the terminal device, and/or reduce a delay in receiving data by the terminal device.

It should be understood that the first parameters corresponding to the different hyper system frames in this embodiment may alternatively be manually configured for the network device, predefined in a protocol, or stored in the terminal device. This is not limited in this application. Step 501, step 502, step 505, and step 504b are optional steps. It should be noted that step 505 and step 504b may be used as an independent embodiment. It should be noted that step 502 and step 504a may be used as an independent embodiment.

It should be noted that content related to different second parameters corresponding to different hyper system frames is similar to content related to different first parameters corresponding to the different hyper system frames in the embodiment in FIG. 5. The second parameter in the embodiment in FIG. 5 may be replaced with the first parameter for understanding. Details are not described herein again.

In this application, in addition to calculating start times of first timers by using different parameters in different hyper system frames, the terminal device may further determine a start time of the first timer by using a newly defined formula. The following provides detailed descriptions with reference to FIG. 6.

Step 601: A terminal device receives fourth information from a network device. Correspondingly, the network device sends the fourth information to the terminal device.

For example, the fourth information indicates a time-domain position of a start time-domain unit. The start time-domain unit is a time-domain unit used to calculate a start time of a first timer. It may be understood that the start time-domain unit is a reference for calculating the start time of the first timer.

Optionally, the start time-domain unit may be any one of a subframe, a slot, and a symbol.

Optionally, the fourth information includes information about a frame number and information about at least one of a subframe number, a slot number, and a symbol number. The symbol number may also be referred to as a symbol index.

In a possible implementation, if the start time-domain unit indicated by the fourth information is a subframe, the fourth information includes a frame number $SFN_{start\ time}$ of a frame including the start time-domain unit and a subframe number $Q_{start\ time}$ of the start time-domain unit. For example, a subframe whose subframe number is $Q_{start\ time}$ in a frame whose frame number is $SFN_{start\ time}$ may be the start time of the first timer. For example, the fourth information is represented as {$SFN_{start\ time}$, $Q_{start\ time}$}, and the network device or the terminal device calculates the start time of the first timer based on $SFN_{start}$ time and $Q_{start}$ time. Optionally, the fourth information further includes $R_{start\ time}$. For example, the fourth information is represented as {$SFN_{start\ time}$; $Q_{start\ time}$; $R_{start\ time}$}, and the network device or the terminal device calculates the start time of the first **timer based on** $SFN_{start\ time}$, Qstart time, **and** $R_{start\ time}$.

In another possible implementation, if the start time-domain unit indicated by the fourth information is a slot, the fourth information includes a frame number $SFN_{start}$ time of a frame including the start time-domain unit, a subframe number $Q_{start\ time}$ of a subframe including the start time-domain unit, and a slot number $G_{start\ time}$ of the start time-domain unit. The slot number $G_{start\ time}$ indicates an index of a slot in the subframe. For example, a slot whose frame number is $SFN_{start\ time}$, subframe number is $Q_{start\ time}$, and slot number is $G_{start\ time}$ may be the start time of the first timer. For example, the fourth information is represented as {$SFN_{start\ time}$; $Q_{start\ time}$; $G_{start\ time}$}, and the network device or the terminal device calculates the start time of the first timer based on $SFN_{start\ time}$, Qstart time, and $G_{start\ time}$. Optionally, the fourth information further includes Rstart time. For example, the fourth information is represented as { $SFN_{start}$ time; $Q_{start}$ time; $G_{start}$ time; $R_{start\ time}$}, and the network device or the terminal device calculates the start time of the first timer based on $SFN_{start\ time}$, $Q_{start\ time}$, $G_{start}$ time, and $R_{start\ time}$.

In another possible implementation, if the start time-domain unit indicated by the fourth information is a slot, the fourth information includes a frame number $SFN_{start}$ time of a frame including the start time-domain unit and a slot number $A_{start\ time}$ of the start time-domain unit. The slot number $A_{start\ time}$ indicates an index of a slot in a system frame. For example, a slot whose frame number is $SFN_{start\ time}$ and slot number is $A_{start\ time}$ may be the start time of the first timer. For example, the fourth information is represented as { $SFN_{start\ time}$; $A_{start\ time}$}, and the network device or the terminal device calculates the start time of the first timer based on $SFN_{start\ time}$ and $A_{start\ time}$. Optionally, the fourth information further includes $R_{start\ time}$. For example, the fourth information is represented as { $SFN_{start\ time}$; $A_{start\ time}$; $R_{start}\ t_{ime}$}, and the network device or the terminal device calculates the start time of the first timer based on $SFN_{start\ time}$, $A_{start\ time}$, and $R_{start\ time}$.

In another possible implementation, if the start time-domain unit indicated by the fourth information is a symbol, the fourth information includes a frame number $SFN_{start}$ time of a frame including the start time-domain unit, a subframe number $Q_{start\ time}$ of a subframe including the start time-domain unit, a slot number $G_{start\ time}$ of a slot including the start time-domain unit, and a symbol number $B_{start\ time}$ of the start time-domain unit. The slot number $G_{start\ time}$ indicates an index of a slot in the subframe. For example, a symbol whose frame number is $SFN_{start}$ time, subframe number is $Q_{start\ time}$, slot number is $G_{start\ time}$, and symbol number is $B_{start\ time}$ may be the start time of the first timer. For example, the fourth information is represented as { $SFN_{start\ time}$; $Q_{start\ time}$; $G_{start\ time}$; $B_{start\ time}$}, and the network device or the terminal device calculates the start time of the first timer based on $SFN_{start}$ time, $Q_{start}$ time, $G_{start}$ time, and $B_{start\ time}$. Optionally, the fourth information further includes $R_{start\ time}$. For example, the fourth information is represented as { $SFN_{start\ time}$; $Q_{start\ time}$; $G_{start\ time}$; $B_{start\ time}$; $R_{start\ time}$}, and the network device or the terminal device calculates the start time of the first timer based on $SFN_{start\ time}$, $Q_{start\ time}$, $G_{start\ time}$, $B_{start\ time}$, and $R_{start\ time}$.

In another possible implementation, if the start time-domain unit indicated by the fourth information is a symbol, the fourth information includes a frame number $SFN_{start}$ time of a frame including the start time-domain unit, a slot number $A_{start\ time}$ of a slot including the time-domain unit, and a symbol number $B_{start\ time}$ of the start time-domain unit. The slot number $A_{start}$ time indicates an index of a slot in a system frame. For example, a symbol whose frame number is $SFN_{start\ time}$, slot number is $A_{start\ time}$, and symbol number is $B_{start\ time}$ may be the start time of the first timer. For example, the fourth information is represented as { $SFN_{start\ time}$; $A_{start\ time}$; $B_{start\ time}$}, and the network device or the terminal device calculates the start time of the first timer based on $SFN_{start\ time}$, $A_{start\ time}$, and $B_{start\ time}$. Optionally, the fourth information further includes $R_{start\ time}$. For example, the fourth information is represented as { $SFN_{start}$ time; $A_{start}$ time; $B_{start}$ time; $R_{start\ time}$}, and the network device or the terminal device calculates the start time of the first timer based on $SFN_{start}$ time, $A_{start\ time}$, $B_{start\ time}$, and $R_{start\ time}$.

In another possible implementation, if the start time-domain unit indicated by the fourth information is a subframe, the fourth information includes $W_{start}$ time. For example, the fourth information indicates a start subframe of a DRX cycle. For example, the fourth information or $W_{start\ time}$ is drx-StartOffset. Optionally, $W_{start\ time}$ may be greater than or equal to the DRX cycle, or may be less than the DRX cycle. This is not limited. For example, the fourth information indicates a quantity of subframes between a start position of a hyper system frame in which an $M^{th}$ first timer is located and a start time of the $M^{th}$ first timer. For example, the fourth information is represented as {$W_{start\ time}$}, and the network device or the terminal device calculates a start time of a first timer based on $W_{start\ time}$.

In another possible implementation, if the start time-domain unit indicated by the fourth information is a slot, the fourth information includes $U_{start\ time}$. For example, the fourth information indicates a start slot of a DRX cycle. For example, the fourth information or $U_{start}$ time is drx-StartOffset. Optionally, $U_{start\ time}$ may be greater than or equal to the DRX cycle, or may be less than the DRX cycle. This is not limited. For example, the fourth information indicates a quantity of slots between a start position of a hyper system frame in which an $M^{th}$ first timer is located and a start time of the $M^{th}$ first timer. For example, the fourth information is represented as {$U_{start\ time}$}, and the network device or the terminal device calculates a start time of a first timer based on $U_{start}$ time.

In another possible implementation, if the start time-domain unit indicated by the fourth information is a symbol, the fourth information includes $V_{start}$ time. For example, the fourth information indicates a start slot of a DRX cycle. For example, the fourth information or $V_{start\ time}$ is drx-StartOffset. Optionally, $V_{start\ time}$ may be greater than or equal to the DRX cycle, or may be less than the DRX cycle. This is not limited. For example, the fourth information indicates a quantity of symbols between a start position of a hyper system frame in which an $M^{th}$ first timer is located and a start time of the $M^{th}$ first timer. For example, the fourth information is represented as {$V_{sart\ time}$}, and the network device or the terminal device calculates a start time of a first timer based on $V_{start\ time}$.

It should be understood that, during actual application, the fourth information may use any one of the foregoing implementations. This is not specifically limited herein.

For example, the fourth information includes information about the start time of the $M^{th}$ first timer. M is an integer greater than or equal to 0. For example, M is 1. It may also be understood that the time-domain position indicated by the start time-domain unit is the start time of the $M^{th}$ first timer.

It should be noted that the information about the start time of the $M^{th}$ first timer may include information about the start time of the first timer, which may be the information about the start time of the $M^{th}$ first timer or may not be the information about the start time of the $M^{th}$ first timer. This is not limited in this application.

For example, if the fourth information includes the frame number $SFN_{start}$ time of the frame including the start time-domain unit and the subframe number $Q_{start}$ time of the start time-domain unit, the information about the start time of the $M^{th}$ first timer includes $SFN_{start}$ time and $Q_{start time}$. $SFN_{start time}$ is a frame number of the start time of the $M^{th}$ first timer, and $Q_{start time}$ is a subframe number of the start time of the $M^{th}$ first timer.

For example, if the fourth information includes the frame number $SFN_{start}$ time of the frame including the start time-domain unit, the subframe number $Q_{start}$ time of the subframe including the start time-domain unit, and the slot number $G_{start time}$ of the start time-domain unit, the information about the start time of the $M^{th}$ first timer includes $SFN_{start time}$, $Q_{start time}$, and $G_{start time}$. $SFN_{start time}$ is a frame number of the start time of the $M^{th}$ first timer, $Q_{start time}$ is a subframe number of the start time of the $M^{th}$ first timer, and $G_{start time}$ is an index of a slot corresponding to the start time of the $M^{th}$ first timer in a subframe.

For example, if the fourth information includes the frame number $SFN_{start}$ time of the frame including the start time-domain unit and the slot number $A_{start time}$ of the start time-domain unit, the information about the start time of the $M^{th}$ first timer includes $SFN_{start}$ time and $A_{start time}$. $SFN_{start time}$ is a frame number of the start time of the $M^{th}$ first timer, and $A_{start time}$ is an index of a slot corresponding to the start time of the $M^{th}$ first timer in a system frame.

For example, if the fourth information includes the frame number $SFN_{start time}$ of the frame including the start time-domain unit, the subframe number $Q_{start}$ time of the subframe including the start time-domain unit, the slot number $G_{start time}$ of the slot including the start time-domain unit, and the symbol number $B_{start time}$ of the start time-domain unit, the information about the start time of the $M^{th}$ first timer includes $SFN_{start time}$, $Q_{start time}$, $G_{start time}$, and $B_{start}$ time. $SFN_{start time}$ is a frame number of the start time of the $M^{th}$ first timer, $Q_{start time}$ is a subframe number of the start time of the $M^{th}$ first timer, $G_{start time}$ is an index of a slot corresponding to the start time of the $M^{th}$ first timer in a subframe, and $B_{start time}$ is a symbol number of the start time of the $M^{th}$ first timer.

For example, if the fourth information includes the frame number $SFN_{start}$ time of the frame including the start time-domain unit, the slot number $A_{start time}$ of the slot including the start time-domain unit, and the symbol number $B_{start time}$ of the start time-domain unit, the information about the start time of the $M^{th}$ first timer includes $SFN_{start time}$, $A_{start time}$, and $B_{start time}$. $SFN_{start time}$ is a frame number of the start time of the $M^{th}$ first timer, $A_{start time}$ is an index of a slot corresponding to the start time of the $M^{th}$ first timer in a system frame, and $B_{start time}$ is a symbol number of the start time of the $M^{th}$ first timer.

Optionally, the network device may send the fourth information to the terminal device through a DRX configuration. Correspondingly, the terminal device may receive the DRX configuration from the network device, where the DRX configuration includes the fourth information. For example, the DRX configuration may include the DRX cycle.

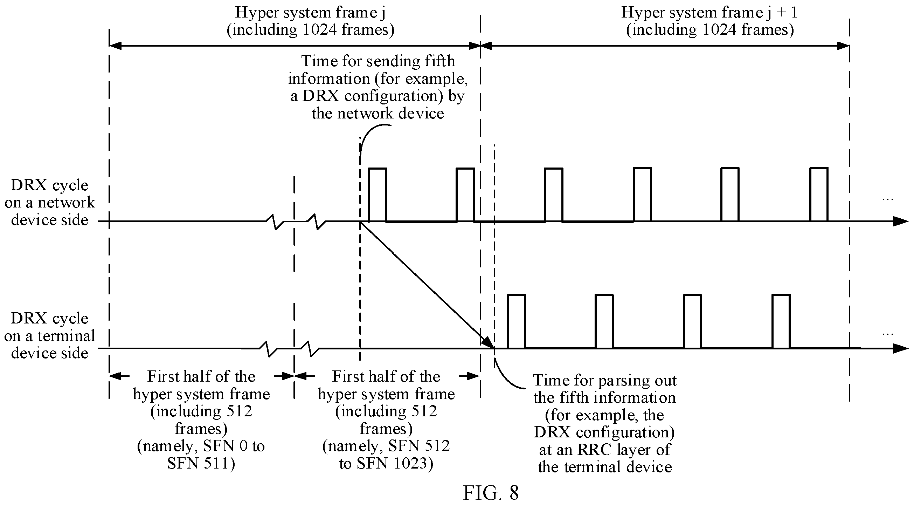

Optionally, the fourth information may not be included in the DRX configuration. For example, the fourth information is carried in DCI or a MAC CE. For example, the terminal device determines the fourth information based on a time in which the DCI is received. For example, after receiving the DRX configuration, the terminal device activates DRX by receiving the DCI. It should be noted that if the terminal device determines the fourth information based on the time in which the DCI is received, or if the terminal device activates the DRX by receiving the DCI after receiving the DRX configuration, a problem that the DRX of the terminal device is not aligned with that of the network device (the problem described in FIG. 8) can be avoided.

Optionally, the fourth information may be obtained by the terminal device from the network device, may be specified in a protocol, may be stored by the terminal device itself, or may be obtained by using another method. This is not limited in this application.

Optionally, step 601 in this embodiment may be replaced with that the terminal device obtains the fourth information. For example, the terminal device uses information related to a previously determined start time of the first timer as the fourth information. For example, if the information related to the start time that is of the first timer and that is previously determined by the terminal device includes $SFN_1$ and $Q_1$, the terminal device uses $SFN_1$ as the frame number $SFN_{start time}$ of the frame including the start time-domain unit, and uses $Q_1$ as the subframe number $Q_{start time}$ of the start time-domain unit, to obtain the fourth information. For example, if the information related to the start time that is of the first timer and that is previously determined by the terminal device includes $SFN_1$, $Q_1$, and $G_1$, the terminal device uses $SFN_1$ as the frame number $SFN_{start time}$ of the frame including the start time-domain unit, uses $Q_1$ as the subframe number $Q_{start time}$ of the start time-domain unit, and uses $G_1$ as the slot number $G_{start time}$ of the start time-domain unit, to obtain the fourth information. Details are not listed one by one herein.

For example, the fourth information is specified in a protocol, and the terminal device obtains the fourth information based on the protocol.

For example, the fourth information has been stored in a storage medium. The terminal device may read the fourth information from the storage medium.

Optionally, step 601 in this embodiment may include: The terminal device obtains a plurality of pieces of fourth information.

For example, if the terminal device obtains the plurality of pieces of fourth information, the terminal device performs step 602 for each piece of fourth information.

For example, the terminal device obtains a plurality of DRX configurations, and each DRX configuration includes or corresponds to one piece of fourth information. Optionally, DRX cycles included in or corresponding to the plurality of DRX configurations are the same. For another example, the terminal device obtains one DRX configuration, and the DRX configuration includes or corresponds to the plurality of pieces of fourth information.

For example, if the DRX cycle is an integer (for example, 25 ms, 50 ms, or 100 ms), the terminal device obtains the plurality of pieces of fourth information. For example, if the DRX cycle is an integer multiple of an XR service cycle, the terminal device obtains the plurality of pieces of fourth information. For example, if the DRX cycle is Y times a service cycle, and Y is an integer greater than 1, the terminal device obtains Y pieces of fourth information. For example, the DRX cycle is 50 ms, the service cycle is 50/3 ms, the DRX cycle is three times the service cycle, and the terminal device obtains three pieces of fourth information. For example, the 1st piece of fourth information includes $SFN_{start\ time} = 0$ and $Q_{start\ time} = 0$, the 2nd piece of fourth information includes $SFN_{start\ time} = 1$ and $Q_{start\ time} = 6$, and the 3rd piece of fourth information includes $SFN_{start\ time} = 3$ and $Q_{start\ time} = 3$. For example, the 1st piece of fourth information includes $W_{start\ time} = 0$, the 2nd piece of fourth information includes $W_{start\ time} = 16$, and the 3rd piece of fourth information includes $W_{start\ time} = 33$.

Optionally, step 601 in this embodiment may include: The terminal device determines a plurality of pieces of fourth information based on seventh information.

Optionally, before step 601, the method may further include: The terminal device obtains the seventh information.

For example, that the terminal device determines a plurality of pieces of fourth information based on seventh information may include: The terminal device determines the plurality of pieces of fourth information based on the seventh information and the DRX cycle/service cycle.

It should be noted that an explanation related to the seventh information is similar to that of the fourth information, and the fourth information may be replaced with the seventh information for understanding. Details are not described herein.

For example, if the DRX cycle is an integer multiple of an XR service cycle, the terminal device determines the plurality of pieces of fourth information. For example, if the DRX cycle is Y times the service cycle, and Y is an integer greater than 1, the terminal device determines Y pieces of fourth information. For example, the DRX cycle is 50 ms, the service cycle is 50/3 ms, the DRX cycle is three times the service cycle, and the terminal device determines three pieces of fourth information.

That the terminal device determines a plurality of pieces of fourth information based on seventh information may include any one or more of the following implementations:

In a possible implementation A1, the fourth information and the seventh information satisfy the following relationship:

First quantity corresponding to the fourth information = First quantity corresponding to the seventh information + F $[(T_{DRX}/Y) \times C]$.

Optionally, if a value of the service cycle is a first fraction, Y is a denominator of the first fraction. For example, the value of the service cycle is Z/Y ms, where Z and Y have only a common divisor 1, Z is not equal to 0, and Y is not equal to 0. Z/Y is the first fraction, and Y is the denominator of the first fraction.

Optionally, $Y = T_{DRX}$/service cycle. Optionally, $T_{DRX}/Y$ may be replaced with the service cycle.

Optionally, Y is configured by the network device for the terminal device. Alternatively, optionally, the service cycle is configured by the network device for the terminal device.

C = 0, 1, 2, ..., Y - 2, and Y - 1. It may be understood that a plurality of values of C correspond to a plurality of pieces of fourth information. For example, the DRX cycle is 50 ms, the service cycle is 50/3 ms, Y is equal to 3, and C = {0, 1/3, 2/3}. For example, the DRX cycle is 100 ms, the service cycle is 100/9 ms, Y is equal to 9, and C = {0, 1/9, 2/9, 3/9, 4/9, 5/9, 6/9, 7/9, 8/9}.

F[] may represent a rounding operation. For example, F[] may be a rounding down **operation,** for example, a floor() function; may be a rounding up operation, for example, a ceil() function; or may be a rounding off operation, for example, a round() function.

For example, the DRX cycle is 50 ms, the service cycle is 50/3 ms, Y is equal to 3, and the seventh information includes $SFN_{start\ time} = 0$ and $Q_{start\ time} = 0$. If the rounding down operation is used, $SFN_{start\ time}$ corresponding to the fourth information $\times$ 10 + $Q_{start\ time}$ corresponding to the fourth information = $SFN_{start\ time}$ corresponding to the seventh information $\times$ 10 + $Q_{start\ time}$ corresponding to the seventh information + F[(50/3) $\times$ C]. One piece of fourth information includes $SFN_{start\ time} = 0$ and $Q_{start\ time} = 0$, one piece of fourth information includes $SFN_{start\ time} = 1$ and $Q_{start\ time} = 6$, and one piece of fourth information includes $SFN_{start\ time} = 3$ and $Q_{start\ time} = 3$. For example, the DRX cycle is 50 ms, the service cycle is 50/3 ms, Y is equal to 3, and the seventh information includes $W_{start\ time} = 0$. If the rounding down operation is used, one piece of fourth information includes $W_{start\ time} = 0$, one piece of fourth information includes $W_{start\ time} = 16$, and one piece of fourth information includes $W_{start\ time} = 33$.

Optionally, the implementation A1 may be applied to a case in which the DRX cycle is an integer multiple of the service cycle. For example, the DRX cycle is 50 ms, and the service cycle is 50/3 m; or the DRX cycle is 100 ms, and the service cycle is 100/9 ms.

Optionally, the implementation A1 may be applied to a case in which the DRX cycle is an integer, for example, 25 ms, 50 ms, or 100 ms.

Optionally, in the implementation A1, when the DRX cycle is an integer multiple of the service cycle, or when the DRX cycle is an integer, a plurality of pieces of fourth information may be obtained. With reference to the implementation in the implementation 1# in step 602, this helps the DRX cycle match the service cycle or helps the DRX with a service, to help reduce power consumption of the terminal device, and/or reduce a delay in receiving data by the terminal device.

In another possible implementation A2, the fourth information and the seventh information satisfy the following relationship:

$$\text{First quantity corresponding to the fourth information = First quantity corresponding to the seventh information} + F[(T_{DRX}) \times C].$$

For related explanations, refer to the explanations in the implementation A1.

If a value of the service cycle is a first fraction, Y is a denominator of the first fraction. For example, the value of the service cycle is Z/Y ms, where Z and Y have only a common divisor 1, Z is not equal to 0, and Y is not equal to 0. Z/Y is the first fraction, and Y is the denominator of the first fraction.

C = 0, 1, 2, ..., Y - 2, and Y - 1. It may be understood that a plurality of values of C correspond to a plurality of pieces of fourth information. Optionally, if the DRX cycle is equal to the service cycle, the implementation A2 may be used.

Optionally, the implementation A2 may be applied to a case in which the DRX is a non-integer, for example, 25/3 ms, 50/3 ms, 100/3 ms, or 100/9 ms.

Optionally, in the implementation A2, when the DRX cycle is a non-integer, a plurality of pieces of fourth information may be obtained. With reference to the implementation in the implementation 1# in step 602, this helps the DRX cycle match the service cycle or helps the DRX with a service, to help reduce power consumption of the terminal device, and/or reduce a delay in receiving data by the terminal device.

It should be noted that, in the foregoing implementation A1 and implementation A2, for different fourth information, the terminal device may maintain different DRX, or the terminal device may maintain a same set of DRX. This is not limited in this application.

It should be noted that the start time-domain unit indicated by the fourth information may also be understood as a time-domain unit indicating a time-domain position in which the $M^{th}$ first timer is located or that is related to the $M^{th}$ first timer. For example, if the time-domain unit indicated by the fourth information is a subframe, it indicates that the time-domain position in which the $M^{th}$ first timer is located or that is related to the $M^{th}$ first timer is measured by using the subframe as a granularity. For another example, if the time-domain unit indicated by the fourth information is a slot, it indicates that the time-domain position in which the $M^{th}$ first timer is located or that is related to the $M^{th}$ first timer is measured by using the slot as a granularity. It should be noted that the fourth information may indicate a start position of the start time-domain unit, or may indicate a position in the start time-domain unit. This is not limited in this application.

Step 602: The terminal device determines information about a start time of a $P^{th}$ first timer based on the fourth information.

Optionally, a possible implementation in which the terminal device determines the information about the start time of the $P^{th}$ first timer based on the fourth information is as follows: The terminal device determines, in order, the information about the start time of the $P^{th}$ first timer based on the fourth information.

For example, in order may be understood as an ascending order of P, or in order may be understood as an ascending order of J.

It should be noted that the information about the start time of the $P^{th}$ first timer may include information about a start time of a first timer related to P, which may be the information about the start time of the $P^{th}$ first timer or may not be the information about the start time of the $P^{th}$ first timer. This is not limited in this application.

P is an integer greater than or equal to 0. Optionally, P is greater than or equal to M. For example, the $P^{th}$ first timer may be understood as a first timer after the $M^{th}$ first timer. Optionally, an interval between the start time of the $P^{th}$ first timer and the start time of the $M^{th}$ first timer may be at least one DRX cycle. Optionally, when the interval is one DRX cycle, the start time of the $M^{th}$ first timer is a start time of a nearest first timer after the start time of the $P^{th}$ first timer.

It should be noted that a value range of P may not be consecutive integers. For example, P may be 0, 3, 6, 9, or the like, but not 1, 2, 4, 5, 7, 8, or the like. Alternatively, a value range of P may be consecutive integers, for example, 0, 1, 2, 3, 4, and 5. This is not limited in this application.

In a possible implementation, P = P or J. J includes an integer greater than or equal to 0.

For example, when the DRX cycle is an integer multiple (for example, Y times) of the service cycle, or when the DRX cycle is an integer, the terminal device determines Y pieces of fourth information. For the Y pieces of fourth information, the terminal device may maintain Y sets of DRX. For example, the DRX cycle is 50 ms, the service cycle is 50/3 ms, Y is equal to 3, C = 0, 1, and 2, and the seventh information includes $SFN_{start\ time}$ = 0 and $Q_{start\ time}$ = 0. If the rounding down operation is used, $SFN_{start\ time}$ corresponding to the fourth information $\times$ 10 + $Q_{start\ time}$ corresponding to the fourth information = $SFN_{start\ time}$ corresponding to the seventh information $\times$ 10 + $Q_{start\ time}$ corresponding to the seventh information + F[(50/3) $\times$ C]. When C=0, one piece of fourth information includes $SFN_{start\ time}$ = 0 and $Q_{start\ time}$ = 0; when C=1, one piece of fourth information includes $SFN_{start\ time}$ = 1 and $Q_{start\ time}$ = 6; and when C=2, one piece of fourth information includes $SFN_{start\ time}$ = 3 and $Q_{start\ time}$ = 3. The terminal device determines, based on the fourth information with C = 0, the information about the start time of the (P = J)$^{th}$ (for example, 0, 1, 2, 3, 4, or 5) first timer. The terminal device determines, based on the fourth information with C = 1, the information about the start time of the (P = J)$^{th}$ (for example, 0, 1, 2, 3, 4, or 5) first timer. The terminal device determines, based on the fourth information with C = 2, the information about the start time of the (P = J)$^{th}$ (for example, 0, 1, 2, 3, 4, or 5) first timer.

In another possible implementation, P = C + Y $\times$ J.

For example, when the DRX cycle is an integer multiple (for example, Y times) of the service cycle, or when the DRX cycle is an integer, the terminal device determines Y pieces of fourth information. For the Y pieces of fourth information, the terminal device may maintain a same set of DRX. For example, the DRX cycle is 50 ms, the service cycle is 50/3 ms, Y is equal to 3, C = 0, 1, and 2, and the seventh information includes $SFN_{start\ time}$ = 0 and $Q_{start\ time}$ = 0. If the rounding down operation is used, $SFN_{start\ time}$ corresponding to the fourth information $\times$ 10 + $Q_{start\ time}$ corresponding to the fourth information = $SFN_{start\ time}$ corresponding to the seventh information $\times$ 10 + $Q_{start\ time}$ corresponding to the seventh information + F[(50/3) $\times$ C]. When C=0, one piece of fourth information includes $SFN_{start\ time}$ = 0 and $Q_{start\ time}$ = 0; when C=1, one piece of fourth information includes $SFN_{start\ time}$ = 1 and $Q_{start\ time}$ = 6; and when C=2, one piece of fourth information includes $SFN_{start\ time}$ = 3 and $Q_{start\ time}$ = 3. The terminal device determines, based on the fourth information with C = 0, the information about the start time of the (P = 0 + 3 $\times$ J)$^{th}$ (for example, 0, 3, 6, or 9) first timer. The terminal device determines, based on the fourth information with C = 1, the information about the start time of the (P = 1 + 3 $\times$ J)$^{th}$ (for example, 1, 4, 7, or 10) first timer. The terminal device determines, based on the fourth information with C = 2, the information about the start time of the (P = 2 + 3 $\times$ J)$^{th}$ (for example, 2, 5, 8, or 11) first timer. It may be understood that information that is about start times of a plurality of first timers and that is determined based on the plurality of pieces of fourth information is combined, for example, P=0, 1, 2, 3, 4, 5, and the like.

In another possible implementation, P = Y $\times$ J.

For example, when the DRX cycle is an integer multiple (for example, Y times) of the service cycle, the DRX cycle is equal to the service cycle, or the DRX cycle is an integer, or when the DRX cycle is an integer, the terminal device determines one piece of fourth information. For the piece of fourth information, the terminal device may maintain one set of DRX. For example, the DRX cycle is 50 ms, the service cycle is 50/3 ms, Y is equal to 3, and the fourth information includes $SFN_{start\ time}$ = 0 and $Q_{start\ time}$ = 0. The terminal device determines the information about the start time of the (P = 3 $\times$ J)$^{th}$ (for example, 0, 3, 6, and 9) first timer based on the fourth information.

For example, a granularity of a time-domain unit corresponding to the start time of the P$^{th}$ first timer is the same as a granularity of a time-domain unit corresponding to the start time of the M$^{th}$ first timer.

For example, if the start time of the M$^{th}$ first timer is a subframe, the start time of the P$^{th}$ first timer is also a subframe. It may also be understood that, if the information about the start time of the M$^{th}$ first timer includes a frame number and a subframe number, the information about the start time of the P$^{th}$ first timer also includes a frame number and a subframe number.

For example, if the start time of the M$^{th}$ first timer is a subframe, the start time of the P$^{th}$ first timer may also be a start position of a subframe or may be a time-domain position in the subframe. For example, if the information about the start time of the M$^{th}$ first timer includes a frame number, a subframe number, and $R_{start\ time}$, the information about the start time of the P$^{th}$ first timer also includes a frame number, a subframe number, and R.

For example, if the start time of the M$^{th}$ first timer is a slot, the start time of the P$^{th}$ first timer is also a slot. It may also be understood that, if the information about the start time of the M$^{th}$ first timer includes a frame number, a subframe number, and a slot number, the information about the start time of the P$^{th}$ first timer also includes a frame number, a subframe number, and a slot number.

For example, if the start time of the M$^{th}$ first timer is a slot, the start time of the P$^{th}$ first timer may also be a start position of a slot or may be a time-domain position in the slot. For example, if the information about the start time of the M$^{th}$ first timer includes a frame number, a slot number, and $R_{start\ time}$, the information about the start time of the P$^{th}$ first timer also includes a frame number, a slot number, and R. For another example, if the information about the start time of the M$^{th}$ first timer includes a frame number, a subframe number, a slot number, and $R_{start\ time}$, the information about the start time of the $P^{th}$ first timer also includes a frame number, a subframe number, a slot number, and R.

For example, if the start time of the $M^{th}$ first timer is a symbol, the start time of the $P^{th}$ first timer is also a symbol. It may also be understood that, if the information about the start time of the $M^{th}$ first timer includes a frame number, a subframe number, a slot number, and a symbol number, the information about the start time of the $P^{th}$ first timer also includes a frame number, a subframe number, a slot number, and a symbol number.

For example, if the start time of the $M^{th}$ first timer is a symbol, the start time of the $P^{th}$ first timer may also be a start position of a symbol or may be a time-domain position in the symbol. For example, if the information about the start time of the $M^{th}$ first timer includes a frame number, a slot number, a symbol number, and $R_{start\ time}$, the information about the start time of the $P^{th}$ first timer also includes a frame number, a slot number, a symbol number, and R. For another example, if the information about the start time of the $M^{th}$ first timer includes a frame number, a subframe number, a slot number, a symbol number, and $R_{start\ time}$, the information about the start time of the $P^{th}$ first timer also includes a frame number, a subframe number, a slot number, a symbol number, and R.

Optionally, the terminal device determines the information about the start time of the $P^{th}$ first timer based on the fourth information and the DRX cycle. Optionally, the terminal device determines the information about the start time of the $P^{th}$ first timer based on the fourth information and a first cycle. The first cycle is equal to an accumulative sum of N DRX cycles. In a possible implementation, N is equal to P - M or P. In another possible implementation, N is equal to P/Y - M or P/Y. In another possible implementation, N is equal to [(P - C)/Y] - M or (P - C)/Y.

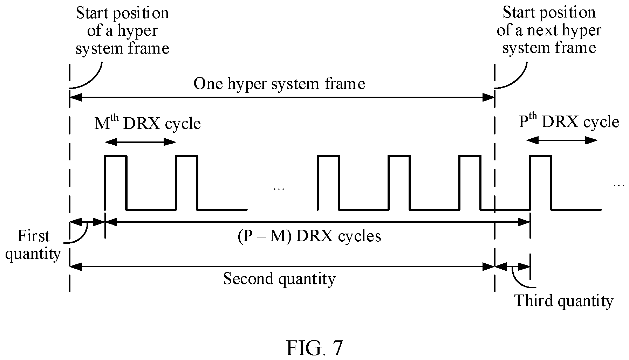

In a possible implementation, as shown in FIG. 7, the terminal device determines the start time of the $P^{th}$ first timer based on the following condition:

a remainder obtained by dividing a sum of a first quantity and an accumulative sum of (P - M) DRX cycles by a second quantity is equal to a third quantity; or third quantity = (first quantity + (accumulative sum of (P - M) DRX cycles)) mod second quantity.

Optionally, the first quantity is a quantity of time-domain units between the start position of the hyper system frame in which the $M^{th}$ first timer is located and the start time of the $M^{th}$ first timer.

For example, if the fourth information includes $SFN_{start\ time}$ and $Q_{start\ time}$, the first quantity may be $SFN_{start\ time} \times 10 + Q_{start\ time}$, indicating a quantity of subframes between the start position of the hyper system frame including in which the $M^{th}$ first timer is located and the start time of the $M^{th}$ first timer.

For example, if the fourth information includes $SFN_{start\ time}$, $Q_{start\ time}$, and $G_{start\ time}$, the first quantity may be

$$\left(SFN_{start\ time} \times 10 + Q_{start\ time}\right) \times N_{slot}^{subframe,\mu} + G_{start\ time}$$, indicating a quantity of slots between the start position of the hyper system frame in which the $M^{th}$ first timer is located and the start time of the $M^{th}$ first timer.

For example, if the fourth information includes $SFN_{start\ time}$, $Q_{start\ time}$, $G_{start\ time}$, and $B_{start\ time}$, the first quantity may be $$\left(\left(SFN_{start\ time} \times 10 + Q_{start\ time}\right) \times N_{slot}^{subframe,\mu} + G_{start\ time}\right) \times H + B_{start\ time}$$, indicating a quantity of symbols between the start position of the hyper system frame in which the $M^{th}$ first timer is located and the start time of the $M^{th}$ first timer.

For example, if the fourth information includes $SFN_{start\ time}$ and $A_{start\ time}$, the first quantity may be

$$SFN_{start\ time} \times N_{slot}^{frame,\mu} + A_{start\ time}$$, indicating a quantity of slots between the start position of the hyper system frame in which the $M^{th}$ first timer is located and the start time of the $M^{th}$ first timer.

For example, if the fourth information includes $SFN_{start\ time}$, $A_{start\ time}$, and $B_{start\ time}$, the first quantity may be

$$\left(SFN_{start\ time} \times N_{slot}^{frame,\mu} + A_{start\ time}\right) \times H + B_{start\ time}$$, indicating a quantity of symbols between the start position of the hyper system frame in which the $M^{th}$ first timer is located and the start time of the $M^{th}$ first timer.

10 indicates a quantity of subframes included in one system frame. $N_{slot}^{subframe,\mu}$ is a quantity of slots included in one subframe; $N_{slot}^{frame,\mu}$ is a quantity of slots included in one system frame; H is a quantity of symbols included in one slot, where for example, H is equal to 12 or 14.

Optionally, the accumulative sum of the (P - M) DRX cycles may be represented as $N \times T_{DRX}$, where N = P - M. Optionally, when M = 0, N = P. $T_{DRX}$ indicates duration of one DRX cycle. Optionally, the DRX cycle is a long DRX cycle (drx-LongCycle).

Optionally, the second quantity is a quantity of time-domain units included in one hyper system frame.

For example, if the fourth information includes $SFN_{start\ time}$ and $Q_{start\ time}$, the second quantity is represented by using a quantity of subframes. For example, the second quantity may be $D \times 10$. In other words, one hyper system frame includes D × 10 subframes.

For example, if the fourth information includes $SFN_{start\ time}$, $Q_{start\ time}$, and $G_{start\ time}$, the second quantity is represented by using a quantity of slots. For example, the second quantity may be $D \times 10 \times N_{slot}^{subframe,\mu}$. In other words, one hyper system frame includes $D \times 10 \times N_{slot}^{subframe,\mu}$ slots.

For example, if the fourth information includes $SFN_{start\ time}$ and $A_{start\ time}$, the second quantity is represented by using a quantity of slots. For example, the second quantity may be $D \times N_{slot}^{frame,\mu}$. In other words, one hyper system frame includes $D \times N_{slot}^{frame,\mu}$ slots.

For example, if the fourth information includes $SFN_{start\ time}$, $Q_{start\ time}$, $G_{start\ time}$, and $B_{start\ time}$, the second quantity is represented by using a quantity of symbols. For example, the second quantity may be $D \times 10 \times N_{slot}^{subframe,\mu} \times H$. In other words, one hyper system frame includes $D \times 10 \times N_{slot}^{subframe,\mu} \times H$ symbols.

For example, if the fourth information includes $SFN_{start\ time}$, $A_{start\ time}$, and $B_{start\ time}$, the second quantity is represented by using a quantity of symbols. For example, the second quantity may be $D \times N_{slot}^{frame,\mu} \times H$. In other words, one hyper system frame includes $D \times N_{slot}^{frame,\mu} \times H$ symbols.

D is a quantity of frames included in one hyper system frame; 10 indicates a quantity of subframes included in one system frame; $N_{slot}^{subframe,\mu}$ is a quantity of slots included in one subframe; $N_{slot}^{frame,\mu}$ is a quantity of slots included in one system frame; and H is a quantity of symbols included in one slot, where for example, H = 14 or H = 12.

Optionally, the third quantity is a quantity of time-domain units between the start position of the hyper system frame in which the $P^{th}$ first timer is located and the start time of the $P^{th}$ first timer.

For example, if the fourth information includes $SFN_{start\ time}$ and $Q_{start\ time}$, the third quantity is represented by using a quantity of subframes. For example, the third quantity may be [(SFN × 10) + Q].

For example, if the fourth information includes $SFN_{start\ time}$, $Q_{start\ time}$, and $G_{start\ time}$, the third quantity is represented by using a quantity of slots. For example, the third quantity may be $[((SFN \times 10) + Q) \times N_{slot}^{subframe,\mu} + G]$.

For example, if the fourth information includes $SFN_{start\ time}$, $Q_{start\ time}$, and $A_{start\ time}$, the third quantity is represented by using a quantity of slots. For example, the third quantity may be $[(SFN \times N_{slot}^{frame,\mu}) + A]$.

For example, if the fourth information includes $SFN_{start\ time}$, $Q_{start\ time}$, $G_{start\ time}$, and $B_{start\ time}$, the third quantity is represented by using a quantity of symbols. For example, the third quantity may be $(((SFN \times 10 + Q) \times N_{slot}^{subframe,\mu} + G) \times H + B)$.

For example, if the fourth information includes $SFN_{start\ time}$, $A_{start\ time}$, and $B_{start\ time}$, the third quantity is represented by using a quantity of symbols. For example, the third quantity may be $(((SFN \times N_{slot}^{frame,\mu}) + A) \times H + B)$.

SFN is a frame number of the start time of the $P^{th}$ first timer; Q is a subframe number of the start time of the $P^{th}$ first timer; 10 indicates a quantity of subframes included in one system frame; $N_{slot}^{subframe,\mu}$ is a quantity of slots included in one subframe; $N_{slot}^{frame,\mu}$ is a quantity of slots included in one system frame; and H is a quantity of symbols included in one slot, where for example, H is equal to 12 or 14.

For example, a process in which the terminal device determines the information related to the start time of the $P^{th}$ first timer based on the fourth information and the accumulative sum of the (P - M) DRX cycles may specifically include: (1) determining the first quantity based on the fourth information; (2) determining that the remainder obtained by dividing the sum of the first quantity and the accumulative sum of the (P - M) DRX cycles by the second quantity is the third quantity; and (3) determining, based on the third quantity, the information related to the start time of the first timer in a $P^{th}$ DRX cycle.

It should be understood that when the fourth information indicates time-domain units at different granularities, the terminal device uses different formulas to calculate the start time of the first timer. Details are separately described below.

In a type of implementation 1#, the following implementations are included.

In a possible implementation, when the fourth information includes the frame number $SFN_{start\ time}$ of the frame including the start time-domain unit and the subframe number $Q_{start\ time}$ of the start time-domain unit, that the terminal device determines information about a start time of a $P^{th}$ first timer based on the fourth information satisfies the following formula 3.1:

$$[(SFN \times 10) + Q] = [(SFN_{start\ time} \times 10 + Q_{start\ time}) + N \times T_{DRX}]\ mod\ (D \times 10)\ (formula\ 3.1),$$

where SFN is the frame number of the start time of the $P^{th}$ first timer; Q is the subframe number of the start time of the $P^{th}$ first timer; $SFN_{start\ time}$ is the frame number of the start time of the $M^{th}$ first timer; $Q_{start\ time}$ is the subframe number of the start time of the $M^{th}$ first timer; $N \times T_{DRX}$ is the first cycle, where a unit of the first cycle is a subframe; $T_{DRX}$ indicates duration of one DRX cycle, where optionally, the DRX cycle is a long DRX cycle (drx-LongCycle); and D is a quantity of frames included in one hyper system frame, where for example, D=1024, indicating that the hyper system frame includes 1024 frames.

In another possible implementation, when the fourth information includes the frame number $SFN_{start\ time}$ of the frame including the start time-domain unit, the subframe number $Q_{start\ time}$ of the subframe including the start time-domain unit, and the slot number $G_{start\ time}$ of the start time-domain unit, that the terminal device determines information about a start time of a $P^{th}$ first timer based on the fourth information satisfies the following formula 3.2:

$$[((SFN \times 10) + Q) \times N_{slot}^{subframe,\mu} + G] = [((SFN_{start\ time} \times 10 + Q_{start\ time}) \times N_{slot}^{subframe,\mu} + G_{start\ time}) + N \times T_{DRX} \times N_{slot}^{subframe,\mu}]\ mod\ (D \times 10 \times N_{slot}^{subframe,\mu})\ (formula\ 3.2),$$

where SFN is the frame number of the start time of the $P^{th}$ first timer; Q is the subframe number of the start time of the $P^{th}$ first timer; G is an index of a slot corresponding to the start time of the $P^{th}$ first timer in a subframe; $SFN_{start\ time}$ is the frame number of the start time of the $M^{th}$ first timer; $Q_{start\ time}$ is the subframe number of the start time of the $M^{th}$ first timer; $G_{start\ time}$ is an index of a slot corresponding to the start time of the $M^{th}$ first timer in a subframe; $N_{slot}^{subframe,\mu}$ is a quantity of slots included in one subframe; $N \times T_{DRX}$ is the first cycle, where a unit of the first cycle is a subframe; $T_{DRX}$ indicates duration of one DRX cycle, where optionally, the DRX cycle is a long DRX cycle (drx-LongCycle); and D is a quantity of frames included in one hyper system frame, where for example, D=1024, indicating that the hyper system frame includes 1024 frames.

In another possible implementation, when the fourth information includes the frame number $SFN_{start\ time}$ of the frame including the start time-domain unit and the slot number $A_{start\ time}$ of the start time-domain unit, that the terminal device determines information about a start time of a $P^{th}$ first timer based on the fourth information satisfies the following formula 3.3:

$$[(SFN \times N_{slot}^{frame,\mu}) + A] = [(SFN_{start\ time} \times N_{slot}^{frame,\mu} + A_{start\ time}) + N \times T_{DRX} \times N_{slot}^{frame,\mu}/10]\ mod\ (D \times N_{slot}^{frame,\mu})\ (formula\ 3.3),$$

where SFN is the frame number of the start time of the $P^{th}$ first timer; A is an index of a slot corresponding to the start time of the $P^{th}$ first timer in a system frame; $SFN_{start}$ time is the frame number of the start time of the $M^{th}$ first timer; $A_{start\ time}$ is an index of a slot corresponding to the start time of the $M^{th}$ first timer in a system frame; $N_{slot}^{frame,\mu}$ is a quantity of slots included in one frame; $N \times T_{DRX}$ is the first cycle, where a unit of the first cycle is a subframe; $T_{DRX}$ indicates duration of one DRX cycle, where optionally, the DRX cycle is a long DRX cycle (drx-LongCycle); and D is a quantity of frames included in one hyper system frame, where for example, D=1024, indicating that the hyper system frame includes 1024 frames.

In another possible implementation, when the fourth information includes the frame number $SFN_{start\ time}$ of the frame including the start time-domain unit, the subframe number $Q_{start\ time}$ of the subframe including the start time-domain unit, the slot number $G_{start\ time}$ of the slot including the start time-domain unit, and the symbol number $B_{start\ time}$ of the start time-domain unit, that the terminal device determines information about a start time of a $P^{th}$ first timer based on the fourth information satisfies the following formula 3.4:

$$[(((SFN \times 10) + Q) \times N_{slot}^{subframe,\mu} + G) \times H + B] = [((SFN_{start\ time} \times 10 + Q_{start\ time}) \times$$

$$N_{slot}^{subframe,\mu} + G_{start\ time}) \times H + B_{start\ time} + N \times T_{DRX} \times N_{slot}^{subframe,\mu} \times H] \bmod (D \times 10 \times N_{slot}^{subframe,\mu}$$

$$\times H) \text{ (formula 3.4),}$$

where SFN is the frame number of the start time of the $P^{th}$ first timer; Q is the subframe number of the start time of the $P^{th}$ first timer; G is an index of a slot corresponding to the start time of the $P^{th}$ first timer in a subframe; B is a symbol number of the start time of the $P^{th}$ first timer; $SFN_{start\ time}$ is the frame number of the start time of the $M^{th}$ first timer; $Q_{start\ time}$ is the subframe number of the start time of the $M^{th}$ first timer; $G_{start\ time}$ is an index of a slot corresponding to the start time of the $M^{th}$ first timer in a subframe; $B_{start\ time}$ is a symbol number of the start time of the $M^{th}$ first timer; $N_{slot}^{subframe,\mu}$ is a quantity of slots included in one subframe; $N \times T_{DRX}$ is the first cycle, where a unit of the first cycle is a subframe; $T_{DRX}$ indicates duration of one DRX cycle, where optionally, the DRX cycle is a long DRX cycle (drx-LongCycle); D is a quantity of frames included in one hyper system frame, where for example, D=1024, indicating that the hyper system frame includes 1024 frames; and H is a quantity of symbols included in one slot, where for example, H=14, indicating that one slot includes 14 symbols, and for example, H=12, indicating that one slot includes 12 symbols.

In another possible implementation, when the fourth information includes the frame number $SFN_{start\ time}$ of the frame including the start time-domain unit, the slot number $A_{start\ time}$ of the slot including the start time-domain unit, and the symbol number (or the symbol index) $B_{start\ time}$ of the start time-domain unit, that the terminal device determines information about a start time of a $P^{th}$ first timer based on the fourth information satisfies the following formula 3.5:

$$[((SFN \times N_{slot}^{frame,\mu}) + A) \times H + B] = [((SFN_{start\ time} \times N_{slot}^{frame,\mu} + A_{start\ time}) \times H + B_{start}$$

$$_{time}) + N \times T_{DRX} \times N_{slot}^{frame,\mu} \times H/10] \bmod (D \times N_{slot}^{frame,\mu} \times H) \text{ (formula 3.5)}$$

where SFN is the frame number of the start time of the $P^{th}$ first timer; Q is the subframe number of the start time of the $P^{th}$ first timer; A is an index of a slot corresponding to the start time of the $P^{th}$ first timer in a system frame; B is a symbol number of the start time of the $P^{th}$ first timer; $SFN_{start\ time}$ is the frame number of the start time of the $M^{th}$ first timer; $Q_{start\ time}$ is the subframe number of the start time of the $M^{th}$ first timer; $A_{start\ time}$ is an index of a slot corresponding to the start time of the $M^{th}$ first timer in a system frame; $B_{start\ time}$ is a symbol number of the start time of the $M^{th}$ first timer; $N_{slot}^{frame,\mu}$ is a quantity of slots included in one frame; $N \times T_{DRX}$ is the first cycle, where a unit of the first cycle is a subframe; $T_{DRX}$ indicates duration of a DRX cycle; D is a quantity of frames included in one hyper system frame, where for example, D=1024, indicating that the hyper system frame includes 1024 frames; and H is a quantity of symbols included in one slot, where for example, H=14, indicating that one slot includes 14 symbols, and for example, H=12, indicating that one slot includes 12 symbols.

Optionally, when a value of the DRX cycle is an integer, the terminal device may determine, based on the fourth information and by using any one of the foregoing formula 3.1, formula 3.2, formula 3.3, formula 3.4, and formula 3.5, the information about the start time of the $P^{th}$ first timer.

It should be noted that, if the value of the DRX cycle is a non-integer (for example, 25/3 ms, 50/3 ms, 100/3 ms, or 100/9 ms), when N is equal to some values (for example, 1, 2, 4, and 5), a value on a right side of an equals sign is a non-integer. However, the value on the right side of the equals sign can be only an integer. Therefore, the information about the start time of the $P^{th}$ first timer cannot be determined. This may be resolved by using the following implementations.

In another type of implementation 2#, the following implementations are included.

In a possible implementation, when the fourth information includes $SFN_{start\ time}$ and $Q_{start\ time}$, the terminal device uses the following formula 3.6:

$$[(SFN \times 10) + Q] = F\{[(SFN_{start\ time} \times 10 + Q_{start\ time}) + N \times T_{DRX}] \bmod (1024 \times 10)\}$$

$$\text{(formula 3.6).}$$

In another possible implementation, when the fourth information includes $SFN_{start\ time}$, $Q_{start\ time}$, and $G_{start\ time}$, the terminal device uses the following formula 3.7:

$$[((\text{SFN} \times 10) + Q) \times N_{slot}^{subframe,\mu} + G] = F\{[((\text{SFN}_{\text{start time}} \times 10 + Q_{\text{start time}}) \times N_{slot}^{subframe,\mu}$$

$$+ G_{\text{start time}}) + N \times T_{\text{DRX}} \times N_{slot}^{subframe,\mu}] \bmod (1024 \times 10 \times N_{slot}^{subframe,\mu})\} \text{ (formula 3.7)}.$$

In another possible implementation, when the fourth information includes $\text{SFN}_{\text{start time}}$ and $A_{\text{start time}}$, the terminal device uses the following formula 3.8:

$$[(\text{SFN} \times N_{slot}^{frame,\mu}) + A] = F\{[(\text{SFN}_{\text{start time}} \times N_{slot}^{frame,\mu} + A_{\text{start time}}) + N \times T_{\text{DRX}} \times N_{slot}^{frame,\mu}$$

$$/10] \bmod (1024 \times N_{slot}^{frame,\mu})\} \text{ (formula 3.8)}.$$

In another possible implementation, when the fourth information includes $\text{SFN}_{\text{start time}}$, $Q_{\text{start time}}$, $G_{\text{start time}}$, and $B_{\text{start time}}$, the terminal device uses the following formula 3.9:

$$[(((\text{SFN} \times 10) + Q) \times N_{slot}^{subframe,\mu} + G) \times H + B] = F\{[((\text{SFN}_{\text{start time}} \times 10 + Q_{\text{start time}}) \times$$

$$N_{slot}^{subframe,\mu} + G_{\text{start time}}) \times H + B_{\text{start time}} + N \times T_{\text{DRX}} \times N_{slot}^{subframe,\mu} \times H] \bmod (1024 \times 10 \times$$

$$N_{slot}^{subframe,\mu} \times H)\} \text{ (formula 3.9)}.$$

In another possible implementation, when the fourth information includes $\text{SFN}_{\text{start time}}$, $A_{\text{start time}}$, and $B_{\text{start time}}$, the terminal device uses the following formula 3.10:

$$[((\text{SFN} \times N_{slot}^{frame,\mu}) + A) \times H + B] = F\{[((\text{SFN}_{\text{start time}} \times N_{slot}^{frame,\mu} + A_{\text{start time}}) \times H + B_{\text{start}}$$

$$_{\text{time}}) + N \times T_{\text{DRX}} \times N_{slot}^{frame,\mu} \times H/10] \bmod (1024 \times N_{slot}^{frame,\mu} \times H)\} \text{ (formula 3.10)}.$$

In another type of implementation 3#, the following implementations are included.

In a possible implementation, when the fourth information includes $\text{SFN}_{\text{start time}}$ and $Q_{\text{start time}}$, the terminal device uses the following formula 3.11:

$$[(\text{SFN} \times 10) + Q] = F\{[(\text{SFN}_{\text{start time}} \times 10 + Q_{\text{start time}}) + N \times T_{\text{DRX}}]\} \bmod (1024 \times 10) \text{ or } [(\text{SFN} \times 10) + Q] = [(\text{SFN}_{\text{start time}} \times 10 + Q_{\text{start time}}) + F(N \times T_{\text{DRX}})] \bmod (1024 \times 10) \quad \text{(formula 3.11)}.$$

In another possible implementation, when the fourth information includes $\text{SFN}_{\text{start time}}$, $Q_{\text{start time}}$, and $G_{\text{start time}}$, the terminal device uses the following formula 3.12:

$$[((\text{SFN} \times 10) + Q) \times N_{slot}^{subframe,\mu} + G] = F\{[((\text{SFN}_{\text{start time}} \times 10 + Q_{\text{start time}}) \times N_{slot}^{subframe,\mu}$$

$$+ G_{\text{start time}}) + N \times T_{\text{DRX}} \times N_{slot}^{subframe,\mu}]\} \bmod (1024 \times 10 \times N_{slot}^{subframe,\mu}) \text{ or } [((\text{SFN} \times 10) + Q) \times$$

$$N_{slot}^{subframe,\mu} + G] = [((\text{SFN}_{\text{start time}} \times 10 + Q_{\text{start time}}) \times N_{slot}^{subframe,\mu} + G_{\text{start time}}) + F(N \times T_{\text{DRX}} \times$$

$$N_{slot}^{subframe,\mu})] \bmod (1024 \times 10 \times N_{slot}^{subframe,\mu}) \text{ (formula 3.12)}.$$

In another possible implementation, when the fourth information includes $\text{SFN}_{\text{start time}}$ and $A_{\text{start time}}$, the terminal device uses the following formula 3.13:

$$[(\text{SFN} \times N_{slot}^{frame,\mu}) + A] = F\{[(\text{SFN}_{\text{start time}} \times N_{slot}^{frame,\mu} + A_{\text{start time}}) + N \times T_{\text{DRX}} \times N_{slot}^{frame,\mu}$$

$$/10]\} \bmod (1024 \times N_{slot}^{frame,\mu}) \text{ or } [(\text{SFN} \times N_{slot}^{frame,\mu}) + A] = [(\text{SFN}_{\text{start time}} \times N_{slot}^{frame,\mu} + A_{\text{start time}}) +$$

$$F(N \times T_{\text{DRX}} \times N_{slot}^{frame,\mu}/10)] \bmod (1024 \times N_{slot}^{frame,\mu}) \text{ (formula 3.13).}$$

In another possible implementation, when the fourth information includes $\text{SFN}_{\text{start time}}$, $Q_{\text{start time}}$, $G_{\text{start time}}$, and $B_{\text{start time}}$, the terminal device uses the following formula 3.14:

$$[(((\text{SFN} \times 10) + Q) \times N_{slot}^{subframe,\mu} + G) \times H + B] = F\{[((\text{SFN}_{\text{start time}} \times 10 + Q_{\text{start time}}) \times$$

$$N_{slot}^{subframe,\mu} + G_{\text{start time}}) \times H + B_{\text{start time}} + N \times T_{\text{DRX}} \times N_{slot}^{subframe,\mu} \times H]\} \bmod (1024 \times 10 \times$$

$$N_{slot}^{subframe,\mu} \times H) \text{ or } [(((\text{SFN} \times 10) + Q) \times N_{slot}^{subframe,\mu} + G) \times H + B] = [((\text{SFN}_{\text{start time}} \times 10 + Q_{\text{start}}$$

$$_{\text{time}}) \times N_{slot}^{subframe,\mu} + G_{\text{start time}}) \times H + B_{\text{start time}} + F(N \times T_{\text{DRX}} \times N_{slot}^{subframe,\mu} \times H)] \bmod (1024 \times 10$$

$$\times N_{slot}^{subframe,\mu} \times H) \text{ (formula 3.14).}$$

In another possible implementation, when the fourth information includes $\text{SFN}_{\text{start time}}$, $A_{\text{start time}}$, and $B_{\text{start time}}$, the terminal device uses the following formula 3.15:

$$[((\text{SFN} \times N_{slot}^{frame,\mu}) + A) \times H + B] = F\{[((\text{SFN}_{\text{start time}} \times N_{slot}^{frame,\mu} + A_{\text{start time}}) \times H + B_{\text{start}}$$

$$_{\text{time}}) + N \times T_{\text{DRX}} \times N_{slot}^{frame,\mu} \times H/10]\} \bmod (1024 \times N_{slot}^{frame,\mu} \times H) \text{ or } [((\text{SFN} \times N_{slot}^{frame,\mu}) + A) \times H +$$

$$B] = [((\text{SFN}_{\text{start time}} \times N_{slot}^{frame,\mu} + A_{\text{start time}}) \times H + B_{\text{start time}}) + F(N \times T_{\text{DRX}} \times N_{slot}^{frame,\mu} \times H/10)] \bmod$$

$$(1024 \times N_{slot}^{frame,\mu} \times H) \text{ (formula 3.15).}$$

Optionally, when the value of the DRX cycle is a non-integer, the terminal device may determine, based on the fourth information and by using any one of the foregoing formula 3.6, formula 3.7, formula 3.8, formula 3.9, formula 3.10, formula 3.11, formula 3.12, formula 3.13, formula 3.14, and formula 3.15, the information about the start time of the $P^{th}$ first timer.

In the formula 3.6 to the formula 3.15, F{} may represent a rounding operation. For example, F{} may be a rounding down operation, for example, a floor() function; may be a rounding up operation, for example, a ceil() function; or may be a rounding off operation, for example, a round() function. For meanings of other parameters, refer to the related descriptions corresponding to the formula 3.1 to the formula 3.5. Details are not described herein again.

In the formula 3.6 to the formula 3.10, when the value of $T_{\text{DRX}}$ is a non-integer, $N \times T_{\text{DRX}}$ may be a non-integer. Due to a modulo operation, a value on a right side of an equation is to be an integer, so that the value on the right side of the equation is an integer, and the terminal device can calculate the information about the start time of the $P^{th}$ first timer.

For example, in the formula 3.6, values on two sides of the equals sign indicate a quantity of subframes. A value of $[(\text{SFN} \times 10) + Q]$ indicates the quantity of subframes between the start position of the hyper system frame in which the $P^{th}$ first timer is located and the start time of the $P^{th}$ first timer; a value of $(\text{SFN}_{\text{start time}} \times 10 + Q_{\text{start time}})$ indicates the quantity of subframes between the start position of the hyper system frame in which the $M^{th}$ first timer is located and the start time of the $M^{th}$ first timer; and $N \times T_{\text{DRX}}$ indicates a quantity of subframes included in the N DRX cycles between the start time of the $M^{th}$ first timer and the start time of the $P^{th}$ first timer. A unit of $T_{\text{DRX}}$ is millisecond (ms). Because duration of one subframe is 1 ms, $T_{\text{DRX}}$ may also be understood as a quantity of subframes included in one DRX cycle. For example, the DRX cycle is 25/3 ms: $T_{\text{DRX}} = 25/3$ ms, indicating that one DRX cycle includes 25/3 subframes, and indicating that duration of one DRX cycle is equal to a sum of duration corresponding to eight subframes and 1/3 of duration of one subframe, namely, 8.3333 ms. A calculation result obtained by performing the rounding operation on the expression $\{[(\text{SFN}_{\text{start time}} \times 10 + Q_{\text{start time}}) + N \times T_{\text{DRX}}] \bmod (1024 \times 10)\}$ indicates a quantity of subframes. For example, $\text{SFN}_{\text{start time}} = 0$, $Q_{\text{start time}} =$

1, N = 1, and $T_{DRX}$ = 25/3 subframes. In this case, $[(SFN_{start\ time} \times 10 + Q_{start\ time}) + N \times T_{DRX}]$ mod $(1024 \times 10)$ = $[1 + 1 \times (25/3)]$ mod $(1024 \times 10)$ = $(28/3)$ subframes. If F is a floor() function, $F\{[(SFN_{start\ time} \times 10 + Q_{start\ time}) + N \times T_{DRX}]$ mod $(1024 \times 10)\}$ = floor$\{[1 + 1 \times (25/3)]$ mod $(1024 \times 10)\}$ = floor$(28/3)$ = 9 subframes. This may be substituted into the formula 3.6 to obtain: $[(SFN \times 10) + Q]$ = 9 subframes. Then, SFN = 0 and Q = 9 may be obtained. If F is a ceil() function, F $\{[(SFN_{start\ time} \times 10 + Q_{start\ time}) + N \times T_{DRX}]$ mod $(1024 \times 10)\}$ = ceil$\{[1 + 1 \times (25/3)]$ mod $(1024 \times 10)\}$ = ceil$(28/3)$ =10 subframes. This may be substituted into the formula 3.6 to obtain: $[(SFN \times 10) + Q]$ = 10 subframes. Then, SFN = 1 and Q = 0 may be obtained.

It should be noted that descriptions related to a unit of ms or milliseconds may also be understood as follows: The unit is a subframe.

For example, in the formula 3.7, values on two sides of the equals sign indicate a quantity of slots. A value of $[((SFN \times 10) + Q) \times N_{slot}^{subframe,\mu} + G]$ indicates the quantity of slots between the start position of the hyper system frame in which the $P^{th}$ first timer is located and the start time of the $P^{th}$ first timer; a value of $((SFN_{start\ time} \times 10 + Q_{start\ time}) \times N_{slot}^{subframe,\mu} + G_{start\ time})$ indicates the quantity of slots between the start position of the hyper system frame in which the $M^{th}$ first timer is located and the start time of the $M^{th}$ first timer; and $N \times T_{DRX} \times N_{slot}^{subframe,\mu}$ indicates a quantity of slots included in the N DRX cycles between the start time of the $M^{th}$ first timer and the start time of the $P^{th}$ first timer. For example, the DRX cycle is 25/3 ms. If a subcarrier spacing is 30 kHz, one subframe includes two slots, and duration of one slot is 0.5 ms, $T_{DRX}$ = 25/3 ms = $(50/3) \times 0.5$ ms, and $T_{DRX} \times N_{slot}^{subframe,\mu}$ indicates that one DRX cycle includes 50/3 slots, and indicates that duration of the DRX cycle is equal to a sum of duration corresponding to 16 slots and 2/3 of duration of one slot. A calculation result obtained by performing the rounding operation on the expression

$$\{[((SFN_{start\ time} \times 10 + Q_{start\ time}) \times N_{slot}^{subframe,\mu} + G_{start\ time}) + N \times T_{DRX}$$

$$\times N_{slot}^{subframe,\mu}]\ mod\ (1024 \times 10 \times N_{slot}^{subframe,\mu})\}$$

indicates a quantity of slots. For example, $SFN_{start\ time}$ = 0, $Q_{start\ time}$ = 1, $G_{start\ time}$ = 1, N = 1, $N_{slot}^{subframe,\mu} = 2$, and $T_{DRX}$ = 25/3 ms. In this case,

$$[((SFN_{start\ time} \times 10 + Q_{start\ time}) \times N_{slot}^{subframe,\mu} + G_{start\ time}) + N \times T_{DRX} \times N_{slot}^{subframe,\mu}]\ mod\ (1024 \times$$

$$10 \times N_{slot}^{subframe,\mu}) = [1 \times 2 + 1 + 1 \times (25/3) \times 2]\ mod\ (1024 \times 10 \times 2) = 59/3$$ slots. If F is a floor() function,

$$F\{[((SFN_{start\ time} \times 10 + Q_{start\ time}) \times N_{slot}^{subframe,\mu} + G_{start\ time}) + N \times T_{DRX} \times N_{slot}^{subframe,\mu}]$$

$$mod\ (1024 \times 10 \times N_{slot}^{subframe,\mu})\} = floor(59/3) = 19$$ slots. This may be substituted into the formula 3.7 to obtain $[((SFN \times 10) + Q) \times N_{slot}^{subframe,\mu} + G] = [((SFN \times 10) + Q) \times 2 + G] = 19$ slots. Then, SFN = 0, Q = 9, and G = 1 may be obtained. If F is a ceil() function, $F\{[((SFN_{start\ time} \times 10 + Q_{start\ time}) \times N_{slot}^{subframe,\mu} + G_{start\ time}) + N \times T_{DRX} \times N_{slot}^{subframe,\mu}]\ mod\ (1024 \times 10 \times N_{slot}^{subframe,\mu})\} =$ ceil$(59/3)$ = 20 slots. This may be substituted into the formula 3.7 to obtain $[((SFN \times 10) + Q) \times N_{slot}^{subframe,\mu} + G] = [((SFN \times 10) + Q) \times 2 + G] = 20$ slots. Then, SFN = 1, Q = 0, and G = 0 may be obtained.

For example, in the formula 3.9, values on two sides of the equals sign indicate a quantity of symbols. A value of $[(((SFN \times 10) + Q) \times N_{slot}^{subframe,\mu} + G) \times H + B]$ indicates the quantity of symbols between the start position of the hyper system frame in which the $P^{th}$ first timer is located and the start time of the $P^{th}$ first timer; a value of $((SFN_{start\ time} \times 10 + Q_{start\ time}) \times N_{slot}^{subframe,\mu} + G_{start\ time}) \times H + B_{start\ time}$ indicates the quantity of symbols between the start position of the hyper system frame in which the $M^{th}$ first timer is located and the start time of the $M^{th}$ first timer; and $N \times T_{DRX} \times N_{slot}^{subframe,\mu} \times H$ indicates a quantity of symbols included in the N DRX cycles between the start time of the $M^{th}$ first timer and the start time of the $P^{th}$ first timer. For example, the DRX cycle is 25/3 ms. If the subcarrier spacing is 30 kHz, one subframe includes two slots, duration of one slot is 0.5 ms, and one slot includes 14 symbols (namely, H=14), $T_{DRX} = 25/3$ ms = $(50/3) \times 0.5$ ms = $(700/3) \times 0.5 \times (1/14)$ ms, indicating that duration of one DRX cycle is equal to a sum of duration corresponding to 233 symbols and 1/3 of duration of one symbol. A calculation result obtained by performing the rounding operation on the expression $\{[((SFN_{start}$

$_{time} \times 10 + Q_{start\ time}) \times N_{slot}^{subframe,\mu} + G_{start\ time}) \times H + B_{start\ time} + N \times T_{DRX} \times N_{slot}^{subframe,\mu} \times H]\ mod$

$(1024 \times 10 \times N_{slot}^{subframe,\mu} \times H)\}$ indicates a quantity of symbols. For example, $SFN_{start}$ time = 0,

$Q_{start\ time} = 1, G_{start\ time} = 1, B_{start\ time} = 1, H = 14, N = 1, N_{slot}^{subframe,\mu} = 2$, and $T_{DRX}$ = 25/3 ms. In this case,

$$[((SFN_{start\ time} \times 10 + Q_{start\ time}) \times N_{slot}^{subframe,\mu} + G_{start\ time}) \times H + B_{start\ time} + N \times T_{DRX} \times$$

$N_{slot}^{subframe,\mu} \times H]\ mod\ (1024 \times 10 \times N_{slot}^{subframe,\mu} \times H) = [(1 \times 2 + 1) \times 14 + 1 + 1 \times (25/3) \times 2 \times$

14] mod $(1024 \times 10 \times 2 \times 14)$ = 829/3 symbols. If F is a floor() function, $F\{[((SFN_{start\ time} \times 10 +$

$Q_{start\ time}) \times N_{slot}^{subframe,\mu} + G_{start\ time}) + N \times T_{DRX} \times N_{slot}^{subframe,\mu}]\ mod\ (1024 \times 10 \times N_{slot}^{subframe,\mu} \times$

H)} = floor(829/3) = 276 symbols. This may be substituted into the formula 3.9 to obtain $[(((SFN$

$\times 10) + Q) \times N_{slot}^{subframe,\mu} + G) \times H + B] = [(((SFN \times 10) + Q) \times 2 + G) \times 14 + B] = 276$ symbols. Then, SFN = 0, Q = 9, G = 1, and B = 10 may be obtained. If F is a ceil() function, $F\{[((SFN_{start}$

$_{time} \times 10 + Q_{start\ time}) \times N_{slot}^{subframe,\mu} + G_{start\ time}) + N \times T_{DRX} \times N_{slot}^{subframe,\mu}]\ mod\ (1024 \times 10 \times$

$N_{slot}^{subframe,\mu} \times H)\} = ceil(829/3) = 277$ symbols. This may be substituted into the formula 3.9 to obtain

$[(((SFN \times 10) + Q) \times N_{slot}^{subframe,\mu} + G) \times H + B] = [(((SFN \times 10) + Q) \times 2 + G) \times 14 + B] = 277$ symbols. Then, SFN = 0, Q = 9, G = 1, and B = 11 may be obtained.

In the formula 3.11 to the formula 3.15, when the value of $T_{DRX}$ is a non-integer, $N \times T_{DRX}$ may be a non-integer. Due to a modulo operation, a value on a right side of an equation is to be an integer, so that the value on the right side of the equation is an integer, and the terminal device can calculate the information about the start time of the $P^{th}$ first timer.

For example, in the formula 3.11, values on two sides of the equals sign indicate a quantity of subframes. Meanings of [(SFN × 10) + Q], $(SFN_{start\ time} \times 10 + Q_{start\ time})$, $T_{DRX}$, and $N \times T_{DRX}$ are the same as meanings of the related expressions in the formula 3.6. For example, the DRX cycle is 25/3 ms: $T_{DRX}$ = 25/3 ms. A calculation result obtained by performing the rounding operation on the expression $\{[(SFN_{start\ time} \times 10 + Q_{start\ time}) + N \times T_{DRX}]\}$ indicates a quantity of subframes. For example, $SFN_{start\ time}$ = 0, $Q_{start\ time}$ = 1, N = 1, and $T_{DRX}$ = 25/3 subframes. In this case, $[(SFN_{start\ time} \times 10 + Q_{start\ time}) + N \times T_{DRX}] = [1 + 1 \times (25/3)] = (28/3)$ subframes. If F is a floor() function, $F\{[(SFN_{start\ time} \times 10 + Q_{start\ time}) + N \times T_{DRX}]\}$ mod $(1024 \times 10)$ = floor$[1 + 1 \times (25/3)]$ mod $(1024 \times 10)$ = floor(28/3) mod $(1024 \times 10)$ = 9 mod $(1024 \times 10)$ = 9 subframes. This may be substituted into the formula 3.11 to obtain: [(SFN × 10) + Q] = 9 subframes. Then, SFN = 0 and Q = 9 may be obtained. If F is a ceil() function, $F[(SFN_{start\ time} \times 10 + Q_{start\ time}) + N \times T_{DRX}]$ mod $(1024 \times 10)$ = ceil$[1 + 1 \times (25/3)]$ mod $(1024 \times 10)$ = ceil(28/3) mod $(1024 \times 10)$ = 10 mod $(1024 \times 10)$ = 10 subframes. This may be substituted into the formula 3.11 to obtain: [(SFN × 10) + Q] = 10 subframes. Then, SFN = 1 and Q = 0 may be obtained.

For example, in the formula 3.12, values on two sides of the equals sign indicate a quantity of slots. Meanings of

$[((SFN \times 10) + Q) \times N_{slot}^{subframe,\mu} + G]$, $((SFN_{start\ time} \times 10 + Q_{start\ time}) \times N_{slot}^{subframe,\mu} + G_{start\ time})$,

$T_{DRX}$, and $T_{DRX} (N \times T_{DRX} \times N_{slot}^{subframe,\mu}$) are the same as meanings of the related expressions in the formula 3.7. For example, the DRX cycle is 25/3 ms. If the subcarrier spacing is 30 kHz, one subframe includes two slots, and duration of one slot is 0.5 ms, $T_{DRX}$ = 25/3 ms = $(50/3) \times 0.5$ ms, and $T_{DRX} \times N_{slot}^{subframe,\mu}$ indicates that one DRX cycle includes 50/3 slots, and indicates that duration of the DRX cycle is equal to a sum of duration corresponding to 16 slots and 2/3 of duration of one slot. A calculation result obtained by performing the rounding operation on the expression

$$[((SFN_{start\ time} \times 10 + Q_{start\ time}) \times N_{slot}^{subframe,\mu} + G_{start\ time}) + N \times T_{DRX} \times N_{slot}^{subframe,\mu}]$$ indicates a

quantity of slots. For example, $SFN_{start\ time} = 0$, $Q_{start\ time} = 1$, $G_{start\ time} = 1$, $N = 1$, $N_{slot}^{subframe,\mu} = 2$, and $T_{DRX} = 25/3$ ms. In this case, $[((SFN_{start\ time} \times 10 + Q_{start\ time}) \times$

$N_{slot}^{subframe,\mu} + G_{start\ time}) + N \times T_{DRX} \times N_{slot}^{subframe,\mu}] = [1 \times 2 + 1 + 1 \times (25/3) \times 2] = 59/3$ slots. If F is a floor() function,

$$F[((SFN_{start\ time} \times 10 + Q_{start\ time}) \times N_{slot}^{subframe,\mu} + G_{start\ time}) + N \times T_{DRX} \times$$

$N_{slot}^{subframe,\mu}]\ mod\ (1024 \times 10 \times N_{slot}^{subframe,\mu}) = floor(59/3)\ mod\ (1024 \times 10 \times 2) = 19\ mod\ (1024 \times$

$10 \times 2) = 19$ slots. This may be substituted into the formula 3.12 to obtain $[((SFN \times 10) + Q) \times$

$N_{slot}^{subframe,\mu} + G] = [((SFN \times 10) + Q) \times 2 + G] = 19$ slots. Then, SFN = 0, Q = 9, and G = 1 may be obtained.

If F is a ceil() function, $F\{[((SFN_{start\ time} \times 10 + Q_{start\ time}) \times N_{slot}^{subframe,\mu} + G_{start\ time}) +$

$N \times T_{DRX} \times N_{slot}^{subframe,\mu}]\} \ mod\ (1024 \times 10 \times N_{slot}^{subframe,\mu}) = ceil(59/3)\ mod\ (1024 \times 10 \times 2) = 20$

mod $(1024 \times 10 \times 2) = 20$ slots. This may be substituted into the formula 3.12 to obtain $[((SFN \times$

$10) + Q) \times N_{slot}^{subframe,\mu} + G] = [((SFN \times 10) + Q) \times 2 + G] = 20$ slots. Then, SFN = 1, Q = 0, and G = 0 may be obtained.

For example, in the formula 3.14, values on two sides of the equals sign indicate a quantity of symbols. Meanings

of $[(((SFN \times 10) + Q) \times N_{slot}^{subframe,\mu} + G) \times H + B]$ , $((SFN_{start\ time} \quad Q_{start\ time})$

$\times 10 + Q_{start\ time}) \times N_{slot}^{subframe,\mu} + G_{start\ time}) \times H + B_{start\ time}$ , $T_{DRX}$, and

$(N \times T_{DRX} \times N_{slot}^{subframe,\mu} \times H)$ are the same as meanings of the related expressions in the formula 3.9. For example, the DRX cycle is 25/3 ms. If the subcarrier spacing is 30 kHz, one subframe includes two slots, and one slot includes 14 symbols (namely, H=14), $T_{DRX} = 25/3$ ms, indicating that duration of the DRX cycle is equal to a sum of duration corresponding to 233 symbols and 1/3 of duration of one symbol. A calculation result obtained by performing the rounding operation on the expression $\{[((SFN_{start} \qquad time$

$\times 10 + Q_{start\ time}) \times N_{slot}^{subframe,\mu} + G_{start\ time}) \times H + B_{start\ time} + N \times T_{DRX} \times N_{slot}^{subframe,\mu} \times H]\}$ indicates

a quantity of symbols. For example, $SFN_{start\ time} = 0$, $Q_{start\ time} = 1$, $G_{start\ time} = 1$, $B_{start\ time} = 1$, $H = 14$, $N = 1$,

$N_{slot}^{subframe,\mu} = 2$ , and $T_{DRX} = 25/3$ ms. In this case, $[((SFN_{start\ time} \times 10 + Q_{start\ time}) \times$

$N_{slot}^{subframe,\mu} + G_{start\ time}) \times H + B_{start\ time} + N \times T_{DRX} \times N_{slot}^{subframe,\mu} \times H] = [(1 \times 2 + 1) \times 14 + 1 + 1$

$\times (25/3) \times 2 \times 14] = 829/3$ symbols. If F is a floor() function, $F\{[((SFN_{start\ time} \times 10 + Q_{start\ time}) \times$

$N_{slot}^{subframe,\mu} + G_{start\ time}) + N \times T_{DRX} \times N_{slot}^{subframe,\mu}]\ mod\ (1024 \times 10 \times N_{slot}^{subframe,\mu} \times H)\} =$

floor(829/3) mod $(1024 \times 10 \times 2 \times 14) = 276$ symbols. This may be substituted into the formula 3.14 to obtain

$[(((SFN \times 10) + Q) \times N_{slot}^{subframe,\mu} + G) \times H + B] = [(((SFN \times 10) + Q) \times 2 + G) \times 14 + B] = 276$

symbols. Then, SFN = 0, Q = 9, G = 1, and B = 10 may be obtained. If F is a ceil() function,

$$F\{[((SFN_{start\ time} \times 10 + Q_{start\ time}) \times N_{slot}^{subframe,\mu} + G_{start\ time}) + N \times T_{DRX} \times N_{slot}^{subframe,\mu}]$$

$mod\ (1024 \times 10 \times N_{slot}^{subframe,\mu} \times H)\} = ceil\ (829/3)\ mod\ (1024 \times 10 \times 2 \times 14) = 277$ symbols. This

may be substituted into the formula 3.14 to obtain $[(((SFN \times 10) + Q) \times N_{slot}^{subframe,\mu} + G) \times H + B] =$

$[(((SFN \times 10) + Q) \times 2 + G) \times 14 + B] = 277$ symbols. Then, SFN = 0, Q = 9, G = 1, and B = 11 may be obtained.

By analogy, the terminal device can calculate, based on the fourth information and based on any one of the formula 3.6 to formula 3.15, the information related to the start time of the first timer. Examples are not given one by one in this application.

It should be understood that when the value of the DRX cycle is an integer, the terminal device may also determine the information about the start time of the $P^{th}$ first timer by using the formulas 3.6 to 3.15. In this case, values before and after rounding operation processing are both integers, and do not affect a value in a formula.

In addition, when the value of the DRX cycle is a non-integer, the terminal device may also determine, based on the fourth information and by using any one of the following formula 3.16, formula 3.17, formula 3.18, formula 3.19, and formula 3.20, the information about the start time of the $P^{th}$ first timer.

In another type of implementation 4#, the following implementations are included.

In a possible implementation, when the fourth information includes $SFN_{start\ time}$, $Q_{start\ time}$, and $R_{start\ time}$, the terminal device uses the following formula 3.16:

$$[(SFN \times 10) + Q + R] = [(SFNstart\ time \times 10 + Q_{start\ time} + R_{start\ time}) + N \times T_{DRX}] \bmod (1024 \times 10) \qquad \text{(formula 3.16)}.$$

For example, $R_{start\ time}$ is greater than or equal to 0 and less than 1. For example, R is greater than or equal to 0 and less than 1. For example, a unit of $R_{start\ time}$ is ms, a subframe, or a quantity of subframes, or $R_{start\ time}$ has no unit. For example, a unit of R is ms, a subframe, or a quantity of subframes, or R has no unit. Optionally, R corresponds to the start time of the $P^{th}$ first timer and is less than duration corresponding to one subframe. Optionally, $R_{start\ time}$ corresponds to the start time of the $M^{th}$ first timer and is less than the duration corresponding to the subframe. For example, R indicates an offset of the start time of the $P^{th}$ first timer or of the information about the start time of the $P^{th}$ first timer in a subframe. For example, $R_{start\ time}$ indicates an offset of the start time of the $M^{th}$ first timer or of the information about the start time of the $M^{th}$ first timer in a subframe.

In another possible implementation, when the fourth information includes $SFN_{start\ time}$, $Q_{start\ time}$, $G_{start\ time}$, and $R_{start\ time}$, the terminal device uses the following formula 3.17:

$$[((SFN \times 10) + Q) \times N_{slot}^{subframe,\mu} + G + R] = [((SFN_{start\ time} \times 10 + Q_{start\ time}) \times$$

$$N_{slot}^{subframe,\mu} + G_{start\ time}) + R_{start\ time} + N \times T_{DRX} \times N_{slot}^{subframe,\mu}] \bmod (1024 \times 10 \times N_{slot}^{subframe,\mu})$$

$$\text{(formula 3.17)}.$$

For example, $R_{start\ time}$ is greater than or equal to 0 and less than 1. For example, R is greater than or equal to 0 and less than 1. For example, a unit of $R_{start\ time}$ is a slot or a quantity of slots, or $R_{start\ time}$ has no unit. For example, a unit of R is a slot or a quantity of slots, or R has no unit. Optionally, $R \times T_{slot}$ is related to the start time of the $P^{th}$ first timer and less than duration corresponding to one slot. Optionally, $R_{start\ time} \times T_{slot}$ is related to the start time of the $M^{th}$ first timer and less than the duration corresponding to the slot. For example, R indicates a ratio of an offset of the start time of the $P^{th}$ first timer or of the information about the start time of the $P^{th}$ first timer in a slot to the slot. For example, $R_{start\ time}$ indicates a ratio of an offset of the start time of the $M^{th}$ first timer or of the information about the start time of the $M^{th}$ first timer in a subframe to a slot. $T_{slot}$ is duration corresponding to one slot.

In another possible implementation, when the fourth information includes $SFN_{start\ time}$, $A_{start\ time}$, and $R_{start\ time}$, the terminal device uses the following formula 3.18:

$$[(SFN \times N_{slot}^{frame,\mu}) + A + R] = [(SFN_{start\ time} \times N_{slot}^{frame,\mu} + A_{start\ time}) + R_{start\ time} + N \times T_{DRX}$$

$$\times N_{slot}^{frame,\mu}/10] \bmod (1024 \times N_{slot}^{frame,\mu}) \text{ (formula 3.18)}.$$

For content related to $R_{start\ time}$ and R, refer to content in the formula 3.17. Details are not described herein again.

In another possible implementation, when the fourth information includes $SFN_{start\ time}$, $Q_{start\ time}$, $G_{start\ time}$, $B_{start\ time}$, and $R_{start\ time}$, the terminal device uses the following formula 3.19:

$$[(((SFN \times 10) + Q) \times N_{slot}^{subframe,\mu} + G) \times H + B + R] = [((SFN_{start\ time} \times 10 + Q_{start\ time})$$

$$\times N_{slot}^{subframe,\mu} + G_{start\ time}) \times H + B_{start\ time} + R_{start\ time} + N \times T_{DRX} \times N_{slot}^{subframe,\mu} \times H] \bmod (1024 \times$$

$$10 \times N_{slot}^{subframe,\mu} \times H) \text{ (formula 3.19)}.$$

For example, $R_{start\ time}$ is greater than or equal to 1 and less than 1. For example, R is greater than or equal to 1 and less than 1. For example, a unit of $R_{start\ time}$ is a symbol or a quantity of symbols, or $R_{start\ time}$ has no unit. For example, a unit of R is a symbol or a quantity of symbols, or R has no unit. Optionally, $R \times T_{symbol}$ is related to the start time of the $P^{th}$ first timer and less than duration corresponding to one slot. Optionally, $R_{start\ time} \times T_{symbol}$ is related to the start time of the $M^{th}$ first timer and less than the duration corresponding to the symbol. For example, R indicates a ratio of an offset of the start time of the $P^{th}$ first timer or of the information about the start time of the $P^{th}$ first timer in a symbol to the symbol. For example, $R_{start\ time}$ indicates a ratio of an offset of the start time of the $M^{th}$ first timer or of the information about the start time of the $M^{th}$ first timer in a symbol to the symbol.

In another possible implementation, when the fourth information includes $SFN_{start\ time}$, $A_{start\ time}$, $B_{start\ time}$, and $R_{start\ time}$, the terminal device uses the following formula 3.20:

$$[((SFN \times N_{slot}^{frame,\mu}) + A) \times H + B + R] = [((SFN_{start\ time} \times N_{slot}^{frame,\mu} + A_{start\ time}) \times H +$$

$$B_{start\ time}) + R_{start\ time} + N \times T_{DRX} \times N_{slot}^{frame,\mu} \times H/10] \bmod (1024 \times N_{slot}^{frame,\mu} \times H) \text{ (formula 3.20)}.$$

For content related to $R_{start\ time}$ and R, refer to content in the formula 3.19. Details are not described herein again.

In the formula 3.16 to the formula 3.20, a value of R is greater than or equal to 0 and less than 1, and a value of $R_{start\ time}$ is greater than or equal to 0 and less than 1. For meanings of other parameters, refer to the related descriptions corresponding to the formula 3.1 to the formula 3.5. Details are not described herein again.

Optionally, when the start time of the $M^{th}$ first timer is located at a start position of a time-domain unit, the value of $R_{start\ time}$ may be 0. For example, in the formula 3.16, $R_{start\ time} = 0$ indicates that the start time of the $M^{th}$ first timer is located at a start position of a subframe indicated by $Q_{start\ time}$. For another example, in the formula 3.17, $R_{start\ time} = 0$ indicates that the start time of the $M^{th}$ first timer is located at a start position of a slot indicated by $G_{start\ time}$. For another example, in the formula 3.19, $R_{start\ time} = 0$ indicates that the start time of the $M^{th}$ first timer is located at a start position of a symbol indicated by $B_{start\ time}$.

For example, in the formula 3.16, values on two sides of the equals sign indicate a quantity of subframes. A value of $[(SFN \times 10) + Q + R]$ indicates a quantity of subframes between the start position of the hyper system frame in which the $P^{th}$ first timer is located and the start time of the $P^{th}$ first timer, where $((SFN \times 10) + Q)$ indicates an integral part of the quantity of subframes, and R indicates a fractional part of the quantity of subframes or is understood as duration less than one subframe. A value of $(SFN_{start\ time} \times 10 + Q_{start\ time} + R_{start\ time})$ indicates a quantity of subframes between the start position of the hyper system frame in which the $M^{th}$ first timer is located and the start time of the $M^{th}$ first timer, where $((SFN_{start\ time} \times 10) + Q_{start\ time})$ indicates an integral part of the quantity of subframes, and $R_{start\ time}$ indicates a fractional part of the quantity of subframes or is understood as duration less than one subframe. $N \times T_{DRX}$ indicates a quantity of subframes included in the N DRX cycles between the start time of the $M^{th}$ first timer and the start time of the $P^{th}$ first timer. A unit of $T_{DRX}$ is millisecond (ms). Because duration of one subframe is 1 ms, $T_{DRX}$ may also be understood as a quantity of subframes included in one DRX cycle. For example, the DRX cycle is 25/3 ms: $T_{DRX} = 25/3$ ms, indicating that one DRX cycle includes 25/3 subframes, and indicating that duration of the DRX cycle is equal to a sum of duration corresponding to eight subframes and 1/3 of duration of one subframe, namely, 8.3333 ms. For example, $SFN_{start\ time} = 0$, $Q_{start\ time} = 1$, $R_{start\ time} = 0$, N = 1, and TDRX = 25/3 ms. In this case, $[(SFN_{start\ time} \times 10 + Q_{start\ time} + R_{start\ time}) + N \times T_{DRX}] \bmod (1024 \times 10) = [1 + 1 \times (25/3)] \bmod (1024 \times 10) = 28/3$ subframes. This is substituted into the formula 3.16 to obtain: $[(SFN \times 10) + Q + R] = 28/3$ subframes. Then, SFN = 0, Q = 9, and R = 1/3 may be obtained.

For example, in the formula 3.17, values on two sides of the equals sign indicate a quantity of slots. A value of

$$[((SFN \times 10) + Q) \times N_{slot}^{subframe,\mu} + G + R]$$ indicates a quantity of slots between the start position of the hyper system frame in which the $P^{th}$ first timer is located and the start time of the $P^{th}$ first timer, where

$$[((SFN \times 10) + Q) \times N_{slot}^{subframe,\mu} + G + R]$$ represents an integral part of the quantity of slots, and R represents a fractional part of the quantity of slots. A value of (

$(SFN_{\text{start time}} \times 10 + Q_{\text{start time}}) \times N_{slot}^{subframe,\mu} + G_{\text{start time}} + R_{\text{start time}})$ indicates a quantity of slots between the start position of the hyper system frame in which the $M^{th}$ first timer is located and the start time of the $M^{th}$ first timer, where ( $(SFN_{\text{start time}} \times 10 + Q_{\text{start time}}) \times N_{slot}^{subframe,\mu} + G_{\text{start time}}$) represents an integral part of the quantity of slots, and $R_{\text{start time}}$ represents a fractional part of the quantity of slots. $N \times T_{DRX} \times N_{slot}^{subframe,\mu}$ indicates a quantity of slots included in the N DRX cycles between the start time of the $M^{th}$ first timer and the start time of the $P^{th}$ first timer. For example, the DRX cycle is 25/3 ms. If the subcarrier spacing is 30 kHz, and one subframe includes two slots, $T_{DRX} = 25/3$ ms = (50/3) × 0.5 ms, and $T_{DRX} \times N_{slot}^{subframe,\mu}$ indicates that one DRX cycle includes 50/3 slots, and indicates that duration of the DRX cycle is equal to a sum of duration corresponding to 16 slots and 2/3 of duration of one slot. For example, $SFN_{\text{start time}} = 0$, $Q_{\text{start time}} = 1$, $G_{\text{start time}} = 1$, $R_{\text{start time}} = 0$, $N = 1$, $N_{slot}^{subframe,\mu} = 2$, and $T_{DRX} = 25/3$ ms. In this case, $[((SFN_{\text{start time}} \times 10 + Q_{\text{start time}}) \times N_{slot}^{subframe,\mu} + G_{\text{start time}} + R_{\text{start time}}) + N \times T_{DRX} \times N_{slot}^{subframe,\mu}] \mod (1024 \times 10 \times N_{slot}^{subframe,\mu}) = [1 \times 2 + 1 + 1 \times (25/3) \times 2] \mod (1024 \times 10 \times 2) = 59/3$ slots. This may be substituted into the formula 3.17 to obtain: $[((SFN \times 10) + Q) \times N_{slot}^{subframe,\mu} + G + R] = [((SFN \times 10) + Q) \times 2 + G + R] = 59/3$ slots. Then, SFN=0, Q=9, G=1, and R=1/3 may be obtained.

By analogy, the terminal device can calculate, based on the fourth information and based on any one of the formula 3.16 to formula 3.20, the information related to the start time of the first timer. Examples are not given one by one in this application.

In another implementation 5#, the fourth information received by the terminal device may alternatively not include $R_{\text{start time}}$. Specifically, the following implementations are included.

In a possible implementation, when the fourth information includes $SFN_{\text{start time}}$ and $Q_{\text{start time}}$, the terminal device uses the following formula 3.21:

$$[(SFN \times 10) + Q + R] = [(SFN_{\text{start time}} \times 10 + Q_{\text{start time}}) + N \times T_{DRX}] \mod (1024 \times 10)$$

(formula 3.21).

For content related to $R_{\text{start time}}$ and R, refer to content in the formula 3.16. Details are not described herein again.

In another possible implementation, when the fourth information includes $SFN_{\text{start time}}$, $Q_{\text{start time}}$, and $G_{\text{start time}}$, the terminal device uses the following formula 3.22:

$$[((SFN \times 10) + Q) \times N_{slot}^{subframe,\mu} + G + R] = [((SFN_{\text{start time}} \times 10 + Q_{\text{start time}}) \times N_{slot}^{subframe,\mu} + G_{\text{start time}}) + N \times T_{DRX} \times N_{slot}^{subframe,\mu}] \mod (1024 \times 10 \times N_{slot}^{subframe,\mu})$$ (formula 3.22).

For content related to $R_{\text{start time}}$ and R, refer to content in the formula 3.17. Details are not described herein again.

In another possible implementation, when the fourth information includes $SFN_{\text{start time}}$ and $A_{\text{start time}}$, the terminal device uses the following formula 3.23:

$$[(SFN \times N_{slot}^{frame,\mu}) + A + R] = [(SFN_{\text{start time}} \times N_{slot}^{frame,\mu} + A_{\text{start time}}) + N \times T_{DRX} \times N_{slot}^{frame,\mu} / 10] \mod (1024 \times N_{slot}^{frame,\mu})$$ (formula 3.23).

For content related to $R_{\text{start time}}$ and R, refer to content in the formula 3.17. Details are not described herein again.

In another possible implementation, when the fourth information includes $SFN_{\text{start time}}$, $Q_{\text{start time}}$, $G_{\text{start time}}$, and $B_{\text{start time}}$, the terminal device uses the following formula 3.24:

$$[(((SFN \times 10) + Q) \times N_{slot}^{subframe,\mu} + G) \times H + B + R] = [((SFN_{start\ time} \times 10 + Q_{start\ time})$$

$$\times N_{slot}^{subframe,\mu} + G_{start\ time}) \times H + B_{start\ time} + N \times T_{DRX} \times N_{slot}^{subframe,\mu} \times H]\ mod\ (1024 \times 10 \times$$

$$N_{slot}^{subframe,\mu} \times H)\ (formula\ 3.24).$$

For content related to $R_{start\ time}$ and R, refer to content in the formula 3.19. Details are not described herein again.

In another possible implementation, when the fourth information includes $SFN_{start\ time}$, $A_{start\ time}$, $B_{start\ time}$, and $R_{start\ time}$, the terminal device uses the following formula 3.25:

$$[((SFN \times N_{slot}^{frame,\mu}) + A) \times H + B + R] = [((SFN_{start\ time} \times N_{slot}^{frame,\mu} + A_{start\ time}) \times H +$$

$$B_{start\ time}) + N \times T_{DRX} \times N_{slot}^{frame,\mu} \times H/10]\ mod\ (1024 \times N_{slot}^{frame,\mu} \times H)\ (formula\ 3.25).$$

For content related to $R_{start\ time}$ and R, refer to content in the formula 3.19. Details are not described herein again.

It should be noted that, in the formula 3.1 to the formula 3.25, an expression indicating a quantity of time-domain units between the start position of the hyper system frame in which the $M^{th}$ first timer is located and the start time of the $M^{th}$ first timer may be represented by using one parameter.

For example, $W_{start\ time}$ may indicate the quantity of subframes between the start position of the hyper system frame in which the $M^{th}$ first timer is located and the start time of the $M^{th}$ first timer.

For example, $(SFN_{start\ time} \times 10 + Q_{start\ time})$ in the formula 3.1, formula 3.6, formula 3.11, and formula 3.21 may be replaced with $W_{start\ time}$. Optionally, a value of $W_{start\ time}$ is an integer. For example, $[(SFN \times 10) + Q] = [W_{start\ time} + N \times T_{DRX}]\ mod\ (1024 \times 10)$ (formula 3.1.1). For example, $[(SFN \times 10) + Q] = F\{[W_{start\ time} + N \times T_{DRX}]\ mod\ (1024 \times 10)\}$ (formula 3.6.1). For example, $[(SFN \times 10) + Q] = F\{[W_{start\ time} + N \times T_{DRX}]\}\ mod\ (1024 \times 10)$ or $[(SFN \times 10) + Q] = [W_{start\ time} + F(N \times T_{DRX})]\ mod\ (1024 \times 10)$ (formula 3.11.1). For example, $[(SFN \times 10) + Q + R] = [W_{start\ time} + N \times T_{DRX}]\ mod\ (1024 \times 10)$ (formula 3.21.1). For example, when indicating the start time of the $M^{th}$ first timer for the terminal device through configuration, the network device configures only one parameter $W_{start\ time}$, instead of configuring two parameters $SFN_{start\ time}$ and $Q_{start\ time}$.

For another example, $(SFN_{start\ time} \times 10 + Q_{start\ time} + R_{start\ time})$ in the formula 3.16 may be replaced with $W_{start\ time}$. Optionally, a value of $W_{start\ time}$ is a non-integer or an integer. For example, $[(SFN \times 10) + Q + R] = [W_{start\ time} + N \times T_{DRX}]\ mod\ (1024 \times 10)$ (formula 3.16.1). For example, when indicating the start time of the $M^{th}$ first timer for the terminal device through configuration, the network device configures only one parameter $W_{start\ time}$, instead of configuring three parameters $SFN_{start\ time}$, $Q_{start\ time}$, and $R_{start\ time}$.

For example, $U_{start\ time}$ may indicate the quantity of slots between the start position of the hyper system frame in which the $M^{th}$ first timer is located and the start time of the $M^{th}$ first timer.

For example, $((SFN_{start\ time} \times 10 + Q_{start\ time}) \times N_{slot}^{subframe,\mu} + G_{start\ time})$ in the formula 3.2, formula 3.7, formula 3.12, and formula 3.22 may be replaced with $U_{start\ time}$. Optionally, a value of $U_{start\ time}$ is an integer. For example,

$$[((SFN \times 10) + Q) \times N_{slot}^{subframe,\mu} + G] = [U_{start\ time} + N \times$$

$$T_{DRX} \times N_{slot}^{subframe,\mu}]\ mod\ (1024 \times 10 \times N_{slot}^{subframe,\mu})$$ (formula 3.2.1). For example, $[((SFN \times 10) +$

$$Q) \times N_{slot}^{subframe,\mu} + G] = F\{[U_{start\ time} + N \times T_{DRX} \times N_{slot}^{subframe,\mu}]\ mod\ (1024 \times 10 \times N_{slot}^{subframe,\mu})\}$$

(formula 3.7.1). For example,

$$[((SFN \times 10) + Q) \times N_{slot}^{subframe,\mu} + G] = F\{[U_{start\ time} + N \times T_{DRX} \times$$

$$N_{slot}^{subframe,\mu}]\}\ mod\ (1024 \times 10 \times N_{slot}^{subframe,\mu})$$ or

$$[((SFN \times 10) + Q) \times N_{slot}^{subframe,\mu} + G] = [U_{start\ time}$$

$$+ F(N \times T_{DRX} \times N_{slot}^{subframe,\mu})]\ mod\ (1024 \times 10 \times N_{slot}^{subframe,\mu})$$ (formula 3.12.1). For example,

$$[((\text{SFN} \times 10) + \text{Q}) \times N_{slot}^{subframe,\mu} + \text{G} + \text{R}] = [\text{U}_{\text{start time}} + \text{N} \times \text{T}_{\text{DRX}} \times N_{slot}^{subframe,\mu}] \bmod (1024 \times 10 \times N_{slot}^{subframe,\mu})$$

(formula 3.22.1). For example, when indicating the start time of the $\text{M}^{\text{th}}$ first timer for the terminal device through configuration, the network device configures only one parameter $\text{U}_{\text{start time}}$, instead of configuring three parameters $\text{SFN}_{\text{start time}}$, $\text{Q}_{\text{start time}}$, and $\text{G}_{\text{start time}}$.

For another example, $((\text{SFN}_{\text{start time}} \times 10 + \text{Q}_{\text{start time}}) \times N_{slot}^{subframe,\mu} + \text{G}_{\text{start time}}) + \text{R}_{\text{start time}}$ in the formula 3.17 may be replaced with $\text{U}_{\text{start time}}$. Optionally, a value of $\text{U}_{\text{start time}}$ is a non-integer or an integer. For example,

$$[((\text{SFN} \times 10) + \text{Q}) \times N_{slot}^{subframe,\mu} + \text{G} + \text{R}] = [\text{U}_{\text{start time}} + \text{N} \times \text{T}_{\text{DRX}} \times N_{slot}^{subframe,\mu}] \bmod (1024 \times 10 \times N_{slot}^{subframe,\mu})$$

(formula 3.17.1). For example, when indicating the start time of the $\text{M}^{\text{th}}$ first timer for the terminal device through configuration, the network device configures only one parameter $\text{U}_{\text{start time}}$, instead of configuring four parameters $\text{SFN}_{\text{start time}}$, $\text{Q}_{\text{start time}}$, $\text{G}_{\text{start time}}$, and $\text{R}_{\text{start time}}$.

For another example, ($\text{SFN}_{\text{start time}} \times N_{slot}^{frame,\mu} + \text{A}_{\text{start time}}$) in the formula 3.3, formula 3.8, formula 3.13, and formula 3.23 may be replaced with $\text{U}_{\text{start time}}$. Optionally, a value of $\text{U}_{\text{start time}}$ is an integer. For example,

$$[(\text{SFN} \times N_{slot}^{frame,\mu}) + \text{A}] = [\text{U}_{\text{start time}} + \text{N} \times \text{T}_{\text{DRX}} \times N_{slot}^{frame,\mu} /10] \bmod (\text{D} \times N_{slot}^{frame,\mu})$$

(formula 3.3.1). For example,

$$[(\text{SFN} \times N_{slot}^{frame,\mu}) + \text{A}] = \text{F}\{[\text{U}_{\text{start time}} + \text{N} \times \text{T}_{\text{DRX}} \times N_{slot}^{frame,\mu} /10] \bmod (1024 \times N_{slot}^{frame,\mu})\}$$

(formula 3.8.1). For example,

$$[(\text{SFN} \times N_{slot}^{frame,\mu}) + \text{A}] = \text{F}\{[\text{U}_{\text{start time}} + \text{N} \times \text{T}_{\text{DRX}} \times N_{slot}^{frame,\mu} /10]\} \bmod (1024 \times N_{slot}^{frame,\mu})$$

(formula 3.13.1). For example,

$$[(\text{SFN} \times N_{slot}^{frame,\mu}) + \text{A} + \text{R}] = [\text{U}_{\text{start time}} + \text{N} \times \text{T}_{\text{DRX}} \times N_{slot}^{frame,\mu} /10] \bmod (1024 \times N_{slot}^{frame,\mu})$$

(formula 3.23.1). For example, when indicating the start time of the $\text{M}^{\text{th}}$ first timer for the terminal device through configuration, the network device configures only one parameter $\text{U}_{\text{start}}$ time, instead of configuring two parameters $\text{SFN}_{\text{start time}}$ and $\text{A}_{\text{start time}}$.

For another example, $(\text{SFN}_{\text{start time}} \times N_{slot}^{frame,\mu} + \text{A}_{\text{start time}}) + \text{R}_{\text{start time}}$ in the formula 3.18 may be replaced with $\text{U}_{\text{start time}}$. Optionally, a value of $\text{U}_{\text{start time}}$ is a non-integer or an integer. For example,

$$[(\text{SFN} \times N_{slot}^{frame,\mu}) + \text{A} + \text{R}] = [\text{U}_{\text{start time}} + \text{N} \times \text{T}_{\text{DRX}} \times N_{slot}^{frame,\mu} /10] \bmod (1024 \times N_{slot}^{frame,\mu})$$

(formula 3.18.1). For example, when indicating the start time of the $\text{M}^{\text{th}}$ first timer for the terminal device through configuration, the network device configures only one parameter $\text{U}_{\text{start time}}$, instead of configuring three parameters $\text{SFN}_{\text{start time}}$, $\text{A}_{\text{start time}}$, and $\text{R}_{\text{start time}}$.

For example, $\text{V}_{\text{start time}}$ may indicate the quantity of symbols between the start position of the hyper system frame in which the $\text{M}^{\text{th}}$ first timer is located and the start time of the $\text{M}^{\text{th}}$ first timer.

For example, $((\text{SFN}_{\text{start time}} \times 10 + \text{Q}_{\text{start time}}) \times N_{slot}^{subframe,\mu} + \text{G}_{\text{start time}}) \times \text{H} + \text{B}_{\text{start time}}$ in the formula 3.4, formula 3.9, formula 3.14, and formula 3.24 may be replaced with $\text{V}_{\text{start time}}$. Optionally, a value of $\text{V}_{\text{start time}}$ is an integer. For example,

$$[(((\text{SFN} \times 10) + \text{Q}) \times N_{slot}^{subframe,\mu} + \text{G}) \times \text{H} + \text{B}] = [\text{V}_{\text{start time}} + \text{N} \times \text{T}_{\text{DRX}} \times N_{slot}^{subframe,\mu} \times \text{H}] \bmod (1024 \times 10 \times N_{slot}^{subframe,\mu} \times \text{H})$$

(formula 3.4.1). For example,

$$[(((\text{SFN} \times 10) + \text{Q}) \times N_{slot}^{subframe,\mu} + \text{G}) \times \text{H} + \text{B}] = \text{F}\{(\text{V}_{\text{start time}} + \text{N} \times \text{T}_{\text{DRX}} \times N_{slot}^{subframe,\mu} \times \text{H}) \bmod (1024 \times 10 \times N_{slot}^{subframe,\mu} \times \text{H})\}$$

(formula 3.7.1). For example, [(((SFN ×

$$10) + Q) \times N_{slot}^{subframe,\mu} + G) \times H + B] = F(V_{\text{start time}} + N \times T_{\text{DRX}} \times N_{slot}^{subframe,\mu} \times H) \bmod (1024 \times$$

$$10 \times N_{slot}^{subframe,\mu} \times H)$$

or

$$[(((SFN \times 10) + Q) \times N_{slot}^{subframe,\mu} + G) \times H + B] = [V_{\text{start time}} + F(N \times$$

$$T_{\text{DRX}} \times N_{slot}^{subframe,\mu} \times H)] \bmod (1024 \times 10 \times N_{slot}^{subframe,\mu} \times H)$$

(formula 3.14.1). For example,

$$[((((SFN \times 10) + Q) \times N_{slot}^{subframe,\mu} + G) \times H + B + R] = [V_{\text{start time}} + N \times T_{\text{DRX}} \times N_{slot}^{subframe,\mu} \times H]$$

$$\bmod (1024 \times 10 \times N_{slot}^{subframe,\mu} \times H)$$ (formula 3.24.1). For example, when indicating the start time of the $M^{\text{th}}$ first timer for the terminal device through configuration, the network device configures only one parameter $V_{\text{start time}}$, instead of configuring four parameters $SFN_{\text{start time}}$, $Q_{\text{start time}}$, $G_{\text{start time}}$, and $B_{\text{start time}}$.

For another example, $((SFN_{\text{start time}} \times 10 + Q_{\text{start time}}) \times N_{slot}^{subframe,\mu} + G_{\text{start time}}) \times H +$ $B_{\text{start time}} + R_{\text{start time}}$ in the formula 3.19 may be replaced with $V_{\text{start time}}$. Optionally, a value of $V_{\text{start time}}$ is a non-integer or an integer. For example,

$$[((((SFN \times 10) + Q) \times N_{slot}^{subframe,\mu} + G) \times H + B +$$

$$R] = [V_{\text{start time}} + N \times T_{\text{DRX}} \times N_{slot}^{subframe,\mu} \times H] \bmod (1024 \times 10 \times N_{slot}^{subframe,\mu} \times H)$$ (formula 3.19.1). For example, when indicating the start time of the $M^{\text{th}}$ first timer for the terminal device through configuration, the network device configures only one parameter $V_{\text{start time}}$, instead of configuring five parameters $SFN_{\text{start time}}$, $Q_{\text{start time}}$, $G_{\text{start time}}$, $B_{\text{start time}}$, and $R_{\text{start time}}$.

For another example, $((SFN_{\text{start time}} \times N_{slot}^{frame,\mu} + A_{\text{start time}}) \times H + B_{\text{start time}})$ in the formula 3.5, formula 3.10, formula 3.15, and formula 3.25 may be replaced with $V_{\text{start time}}$. Optionally, a value of $V_{\text{start time}}$ is an integer. For example,

$$[((SFN \times N_{slot}^{frame,\mu}) + A) \times H + B] = [V_{\text{start time}} + N \times$$

$$T_{\text{DRX}} \times N_{slot}^{frame,\mu} \times H/10] \bmod (D \times N_{slot}^{frame,\mu} \times H)$$ (formula 3.5.1). For example, $[((SFN \times N_{slot}^{frame,\mu})$

$$+ A) \times H + B] = F\{[V_{\text{start time}} + N \times T_{\text{DRX}} \times N_{slot}^{frame,\mu} \times H/10] \bmod (1024 \times N_{slot}^{frame,\mu} \times H)\}$$ (formula 3.10.1). For example,

$$[((SFN \times N_{slot}^{frame,\mu}) + A) \times H + B] = F\{[V_{\text{start time}} + N \times T_{\text{DRX}} \times N_{slot}^{frame,\mu} \times$$

$$H/10]\} \bmod (1024 \times N_{slot}^{frame,\mu} \times H)$$ or

$$[((SFN \times N_{slot}^{frame,\mu}) + A) \times H + B] = [V_{\text{start time}} + F(N \times T_{\text{DRX}}$$

$$\times N_{slot}^{frame,\mu} \times H/10)] \bmod (1024 \times N_{slot}^{frame,\mu} \times H)$$ (formula 3.15.1). For example, $[((SFN \times N_{slot}^{frame,\mu})$

$$+ A) \times H + B + R] = [V_{\text{start time}} + N \times T_{\text{DRX}} \times N_{slot}^{frame,\mu} \times H/10] \bmod (1024 \times N_{slot}^{frame,\mu} \times H)$$ (formula 3.25.1). For example, when indicating the start time of the $M^{\text{th}}$ first timer for the terminal device through configuration, the network device configures only one parameter $V_{\text{start time}}$, instead of configuring three parameters $SFN_{\text{start time}}$, $A_{\text{start time}}$, and $B_{\text{start time}}$.

For another example, $((\text{SFN}_{\text{start time}} \times N_{slot}^{frame,\mu} + A_{\text{start time}}) \times H + B_{\text{start time}}) + R_{\text{start time}}$ in the formula 3.20 may be replaced with $V_{\text{start time}}$. Optionally, a value of $V_{\text{start time}}$ is a non-integer or an integer. For example,

$$[((\text{SFN} \times N_{slot}^{frame,\mu}) + A) \times H + B + R] = [V_{\text{start time}} + N \times T_{\text{DRX}} \times N_{slot}^{frame,\mu} \times H/10] \bmod (1024 \times N_{slot}^{frame,\mu} \times H)$$

(formula 3.20.1). For example, when indicating the start time of the $M^{th}$ first timer for the terminal device through configuration, the network device configures only one parameter $V_{\text{start time}}$, instead of configuring four parameters $\text{SFN}_{\text{start time}}$, $A_{\text{start time}}$, $B_{\text{start time}}$, and $R_{\text{start time}}$.

It should be noted that a quantity of slots included in one frame is not necessarily limited to 10, or may be another value, provided that 10 is replaced with K.

It should be noted that P - M may also be replaced with P. For example, regardless of a value of M, N is equal to P.

Step 603: The terminal device starts the first timer based on the information about the start time of the $P^{th}$ first timer.

Step 603 is an optional step.

Specifically, the terminal device may start the first timer based on the information about the start time of the $P^{th}$ first timer in any one of the following implementations.

In a possible implementation 1, the terminal device determines the start time of the first timer based on the information about the start time of the $P^{th}$ first timer and a third parameter.

For example, the third parameter indicates a delay before the first timer is started. For example, duration indicated by the third parameter is less than duration corresponding to one frame, less than duration corresponding to one subframe, less than duration corresponding to one slot, or less than duration corresponding to one symbol. This is not limited. For example, the third parameter is an offset that is within a length of one frame, one subframe, one slot, or one symbol and that is used to determine a start time of the first timer. For example, the third parameter is drx-SlotOffset.

For example, the terminal device starts the first timer after a time-domain position corresponding to the information about the start time of the $P^{th}$ first timer is offset rightwards by the third parameter.

For example, the terminal device starts the first timer after the duration indicated by the third parameter starting from the time-domain position corresponding to the information about the start time of the $P^{th}$ first timer.

It should be noted that, because a value of R is a non-integer, the start time of the first timer may fall in a middle of a time-domain unit. In this case, it is difficult to control a timer or a clock of the terminal device. In addition, the network device may not start scheduling in the middle of the time-domain unit. Consequently, the terminal device may not receive data, signaling, or DCI after starting the first timer in the middle of the time-domain unit. As a result, power consumption of the terminal device is increased. In this case, the rounding operation is proposed in an implementation 2 and an implementation 3, so that the terminal device starts the first timer at a start position of a time-domain unit, to reduce complexity of the terminal device and reduce power consumption of the terminal device. Details are separately described below.

In another possible implementation 2, the terminal device starts the first timer based on the SFN, Q, a fourth parameter, and a third parameter. Alternatively, the terminal device starts the first timer based on the SFN, Q, G, a fourth parameter, and a third parameter. Alternatively, the terminal device starts the first timer based on the SFN, A, a fourth parameter, and a third parameter. Alternatively, the terminal device starts the first timer based on the SFN, Q, G, H, B, a fourth parameter, and a third parameter. Alternatively, the terminal device starts the first timer based on the SFN, A, H, B, a fourth parameter, and a third parameter. For explanations of the third parameter, refer to the foregoing descriptions of the third parameter in the implementation 1. Details are not described herein again.

The fourth parameter is determined based on R. Optionally, a time-domain position corresponding to the fourth parameter is a start position of a time-domain unit that is adjacent to or includes a first time-domain position. The first time-domain position is a time-domain position determined based on the SFN, Q, and R; the first time-domain position is a time-domain position determined based on the SFN, Q, G, and R; the first time-domain position is a time-domain position determined based on the SFN, A, and R; the first time-domain position is a time-domain position determined based on the SFN, Q, G, H, B, and R; or the first time-domain position is a time-domain position determined based on the SFN, A, H, B, and R. Optionally, the time-domain unit may be preset duration, may be a subframe, may be a slot, may be a symbol, may be a mini-slot (mini-slot), or may be a sub-slot (sub-slot). This is not specifically limited herein. For example, the preset duration may be precision (for example, 1/32 ms) of the third parameter, or may be another value (for example, 1/64 ms).

For example, the time-domain unit is a slot, and the subcarrier spacing is 30 kHz. If an SFN indicated by the information about the start time of the $P^{th}$ first timer is 0, Q is 1, and the value of R is 2/3 ms, the first time-domain position is between a start position of a slot 1 in a subframe 1 of a frame 0 and a start position of a slot 0 in a subframe 2 of the frame 0. In this example, a start position of a time-domain unit adjacent to the first time-domain position may be the start position of the slot 1 in the subframe 1, or may be the start position of the slot 0 in the subframe 2.

Optionally, the time-domain position corresponding to the fourth parameter is a time-domain position obtained by performing the rounding operation the first time-domain position. The terminal device may perform a rounding operation based on the first time-domain position to obtain the time-domain position corresponding to the fourth parameter. Alternatively, the terminal device may perform the rounding operation based on R to obtain the fourth parameter. The rounding operation includes a rounding down operation, a rounding up operation, a rounding off operation, or the like.

For example, the fourth parameter and R satisfy any one of the following formulas, and the terminal device may determine the fourth parameter based on the following formulas:

$$E = floor[M1 \div S] \times S \text{ (formula 5.1)};$$

$$E = ceil[M1 \div S] \times S \text{ (formula 5.2)};$$

and

$$E = round[M1 \div S] \times S \text{ (formula 5.3)},$$

where

E is the fourth parameter, M1 is R or an absolute value of R, S is duration of one time-domain unit, floor[] represents the rounding down operation, ceil[] represents the rounding up operation, and round[] represents the rounding off operation.

For example, if the terminal device performs the rounding down operation based on R and at a granularity of a slot, M1 = 2/3 ms and A = 0.5 ms may be substituted into the formula 5.1 to obtain E = 0.5 ms (that is, duration corresponding to one slot). To be specific, the time-domain position corresponding to the fourth parameter is a time-domain position obtained by offsetting the start position of the slot 0 in the subframe 1 of the frame 0 rightwards by one slot, namely, the start position of the slot 1 in the subframe 1 of the frame 0. If the terminal device performs the rounding up operation based on R and at a granularity of a slot, M1 = 2/3 ms and A = 0.5 ms may be substituted into the formula 5.2 to obtain E = 1 ms (that is, duration corresponding to two slots). To be specific, the time-domain position corresponding to the fourth parameter is a time-domain position obtained by offsetting the start position of the slot 0 in the subframe 1 of the frame 0 rightwards by two slots, namely, the start position of the slot 0 in the subframe 2 of the frame 0. If the terminal device performs the rounding off operation based on R and at a granularity of a slot, M1 = 2/3 ms and A = 0.5 ms may be substituted into the formula 5.3 to obtain E = 0.5 ms (that is, duration corresponding to one slot). To be specific, the time-domain position corresponding to the fourth parameter is a time-domain position obtained by offsetting the start position of the slot 0 in the subframe 1 of the frame 0 rightwards by one slot, namely, the start position of the slot 1 in the subframe 1 of the frame 0.

For example, after determining the fourth parameter based on R, the terminal device starts the first timer after the time-domain position corresponding to the SFN, Q, and the fourth parameter, the time-domain position corresponding to the SFN, Q, G, and the fourth parameter, the time-domain position corresponding to the SFN, A, and the fourth parameter, the time-domain position corresponding to the SFN, Q, G, H, B, and the fourth parameter, or the time-domain position corresponding to the SFN, A, H, B, and the fourth parameter is offset rightwards by the duration indicated by the third parameter.

For example, the terminal device starts the first timer after the time-domain position corresponding to the SFN and Q, the time-domain position corresponding to the SFN, Q, and G, the time-domain position corresponding to the SFN and A, the time-domain position corresponding to the SFN, Q, G, H, and B, or the time-domain position corresponding to the SFN, A, H, and B is offset rightwards by a sum of duration indicated by the fourth parameter and the duration indicated by the third parameter.

For example, the terminal device starts the first timer after the duration that is indicated by the third parameter and that starts from the time-domain position corresponding to the SFN, Q, and the fourth parameter, the time-domain position corresponding to the SFN, Q, G, and the fourth parameter, the time-domain position corresponding to the SFN, A, and the fourth parameter, the time-domain position corresponding to the SFN, Q, G, H, B, and the fourth parameter, or the time-domain position corresponding to the SFN, A, H, B, and the fourth parameter.

In this implementation, because the time-domain position corresponding to the fourth parameter is located at a start position of a time-domain unit, this helps a moment at which the terminal device starts the first timer be located at the start position of the time-domain unit, to prevent the moment at which the terminal device starts the first timer from falling in a middle of the time-domain unit, to reduce complexity of the terminal device, and also improve energy saving of the terminal device.

In another possible implementation 3, the terminal device starts the first timer based on the SFN, Q, and a fifth parameter. Alternatively, the terminal device starts the first timer based on the SFN, Q, G, and a fifth parameter. Alternatively, the terminal device starts the first timer based on the SFN, A, and a fifth parameter. Alternatively, the terminal device starts the first timer based on the SFN, Q, G, H, B, and a fifth parameter. Alternatively, the terminal device starts the first timer based on the SFN, A, H, B, and a fifth parameter. The fifth parameter is determined based on R and a third parameter. For explanations of R and the third parameter, refer to the foregoing descriptions. Details are not described herein again.

Optionally, a time-domain position corresponding to the fifth parameter is a start position of a time-domain unit that is adjacent to or includes a second time-domain position. The second time-domain position is a time-domain position determined based on the SFN, Q, R, and the third parameter; the second time-domain position is a time-domain position determined based on the SFN, Q, G, R, and the third parameter; the second time-domain position is a time-domain position determined based on the SFN, A, R, and the third parameter; the second time-domain position is a time-domain position determined based on the SFN, Q, G, H, B, R, and the third parameter; or the second time-domain position is a time-domain position determined based on the SFN, A, H, B, R, and the third parameter.

For example, the time-domain unit is a slot, and the subcarrier spacing is 30 kHz. If an SFN indicated by the information about the start time of the $P^{th}$ first timer is 0, Q is 1, the value of R is 2/3 ms, and a value of the third parameter is 16/32 ms = 0.5 ms, the second time-domain position is between a start position of a slot 0 in a subframe 2 of a frame 0 and a start position of a slot 1 in the subframe 2 of the frame 0. In this example, a start position of a time-domain unit that is adjacent to or includes the second time-domain position is the start position of the slot 0 in the subframe 2, or may be the start position of the slot 1 in the subframe 2.

Optionally, the time-domain position corresponding to the fifth parameter is a time-domain position obtained by performing a rounding operation the second time-domain position. The terminal device may perform the rounding operation based on the second time-domain position to obtain the time-domain position corresponding to the fifth parameter. Alternatively, the terminal device may perform the rounding operation based on a sum of R and the third parameter to obtain the fifth parameter. The rounding operation includes a rounding down operation, a rounding up operation, a rounding off operation, or the like.

For example, the fifth parameter, R, and the third parameter satisfy any one of the following formulas, and the terminal device may determine the fifth parameter based on the following formulas:

$$F = \text{floor}[(M1 + \text{drx-SlotOffset}) \div S] \times S \text{ (formula 6.1);}$$

$$F = \text{ceil}[(M1 + \text{drx-SlotOffset}) \div S] \times S \text{ (formula 6.2);}$$

and

$$F = \text{round}[(M1 + \text{drx-SlotOffset}) \div S] \times S \text{ (formula 6.3),}$$

where
F is the fifth parameter, M1 is R or an absolute value of R, A is duration of one time-domain unit, floor[] represents the rounding down operation, ceil[] represents the rounding up operation, round[] represents the rounding off operation, and drx-SlotOffset is the third parameter.

For example, the terminal device starts the first timer at the time-domain position corresponding to the SFN, Q, and the fifth parameter, the time-domain position corresponding to the SFN, Q, G, and the fifth parameter, the time-domain position corresponding to the SFN, A, and the fifth parameter, the time-domain position corresponding to the SFN, Q, G, H, B, and the fifth parameter, or the time-domain position corresponding to the SFN, A, H, B, and the fifth parameter.

For example, the terminal device starts the first timer after the time-domain position corresponding to the SFN and Q, the time-domain position corresponding to the SFN, Q, and G, the time-domain position corresponding to the SFN and A, the time-domain position corresponding to the SFN, Q, G, H, and B, or the time-domain position corresponding to the SFN, A, H, and B is offset rightwards by the fifth parameter.

For example, the terminal device starts the first timer after duration that is indicated by the fifth parameter and that starts from the time-domain position corresponding to the SFN and Q the time-domain position corresponding to the SFN, Q, and G, the time-domain position corresponding to the SFN and A, the time-domain position corresponding to the SFN, Q, G, H, and B, or the time-domain position corresponding to the SFN, A, H, and B.

In this implementation, because the time-domain position corresponding to the fifth parameter is located at a start position of a time-domain unit, this helps a moment at which the terminal device starts the first timer be located at the start position of the time-domain unit, to prevent the moment at which the terminal device starts the first timer from falling in a middle of the time-domain unit, to reduce complexity of the terminal device, and also improve energy saving of the terminal device.

In another possible implementation 4, the terminal device starts the first timer based on the SFN, Q, and a third parameter. Alternatively, the terminal device starts the first timer based on the SFN, Q, G, and a third parameter.

Alternatively, the terminal device starts the first timer based on the SFN, A, and a third parameter. Alternatively, the terminal device starts the first timer based on the SFN, Q, G, H, B, and a third parameter. Alternatively, the terminal device starts the first timer based on the SFN, A, H, B, and a third parameter.

For example, the terminal device starts the first timer after the time-domain position corresponding to the SFN and Q, the time-domain position corresponding to the SFN, Q, and G, the time-domain position corresponding to the SFN and A, the time-domain position corresponding to the SFN, Q, G, H, and B, or the time-domain position corresponding to the SFN, A, H, and B is offset rightwards by the third parameter.

For example, the terminal device starts the first timer at the time-domain position corresponding to the SFN, Q, and the third parameter, the time-domain position corresponding to the SFN, Q, G, and the third parameter, the time-domain position corresponding to the SFN, A, and the third parameter, the time-domain position corresponding to the SFN, Q, G, H, B, and the third parameter, or the time-domain position corresponding to the SFN, A, H, B, and the third parameter.

For example, the terminal device starts the first timer after duration that is indicated by the third parameter and that starts from the time-domain position corresponding to the SFN and Q, the time-domain position corresponding to the SFN, Q, and G, the time-domain position corresponding to the SFN and A, the time-domain position corresponding to the SFN, Q, G, H, and B, or the time-domain position corresponding to the SFN, A, H, and B.

In another possible implementation 5, the terminal device starts the first timer based on a first SFN, first Q, and a third parameter. Alternatively, the terminal device starts the first timer based on a first SFN, first Q, first G, and a third parameter. Alternatively, the terminal device starts the first timer based on a first SFN, first A, and a third parameter. Alternatively, the terminal device starts the first timer based on a first SFN, first Q, first G, first H, first B, and a third parameter. Alternatively, the terminal device starts the first timer based on a first SFN, first A, first H, first B, and a third parameter.

For example, the first SFN, first Q, the SFN, Q, and R satisfy any one of the following formulas, and the terminal device may determine the first SFN and first Q based on the following formulas:

$$\text{First SFN} \times 10 + \text{first Q} = \text{SFN} \times 10 + Q + \text{floor}(R) \text{ (formula 7.1)};$$

$$\text{First SFN} \times 10 + \text{first Q} = \text{SFN} \times 10 + Q + \text{ceil}(R) \text{ (formula 7.2.)};$$

and

$$\text{First SFN} \times 10 + \text{first Q} = \text{SFN} \times 10 + Q + \text{round}(R) \text{ (formula 7.3)}.$$

It should be noted that the formula 7.1, the formula 7.2, and the formula 7.3 may further have one or more variations, for example:

$$\text{First SFN} \times 10 + \text{first Q} = \text{floor}(\text{SFN} \times 10 + Q + R) \text{ (formula 7.1.1)};$$

$$\text{First SFN} \times 10 + \text{first Q} = \text{ceil}(\text{SFN} \times 10 + Q + R) \text{ (formula 7.2.1)};$$

$$\text{First SFN} \times 10 + \text{first Q} = \text{round}(\text{SFN} \times 10 + Q + R) \text{ (formula 7.3.1)};$$

$$\text{First SFN} \times 10 + \text{first Q} = \text{SFN} \times 10 + \text{floor}(Q + R) \text{ (formula 7.1.2)};$$

$$\text{First SFN} \times 10 + \text{first Q} = \text{SFN} \times 10 + \text{ceil}(Q + R) \text{ (formula 7.2.2)};$$

and

$$\text{First SFN} \times 10 + \text{first Q} = \text{SFN} \times 10 + \text{round}(Q + M) \text{ (formula 7.3.2)}.$$

For example, the first SFN, first Q, first G, the SFN, Q, G, and R satisfy any one of the following formulas, and the terminal device may determine the first SFN and first Q based on the following formulas:

$$(\text{First SFN} \times 10 + \text{first Q}) \times N_{slot}^{subframe,\mu} + \text{first G} = ((\text{SFN} \times 10) + \text{Q}) \times N_{slot}^{subframe,\mu} + \text{G} + \text{floor(R)} \quad (\text{formula 8.1});$$

$$(\text{First SFN} \times 10 + \text{first Q}) \times N_{slot}^{subframe,\mu} + \text{first G} = ((\text{SFN} \times 10) + \text{Q}) \times N_{slot}^{subframe,\mu} + \text{G} + \text{ceil (R)} \quad (\text{formula 8.2});$$

and

$$(\text{First SFN} \times 10 + \text{First Q}) \times N_{slot}^{subframe,\mu} + \text{first G} = ((\text{SFN} \times 10) + \text{Q}) \times N_{slot}^{subframe,\mu} + \text{G} + \text{round (R)} \quad (\text{formula 8.3}).$$

For example, the first SFN, first A, the SFN, A, and R satisfy any one of the following formulas, and the terminal device may determine the first SFN and first Q based on the following formulas:

$$(\text{First SFN} \times N_{slot}^{frame,\mu}) + \text{first A} = (\text{SFN} \times N_{slot}^{frame,\mu}) + \text{A} + \text{floor(R)} \quad (\text{formula 9.1});$$

$$(\text{First SFN} \times N_{slot}^{frame,\mu}) + \text{first A} = (\text{SFN} \times N_{slot}^{frame,\mu}) + \text{A} + \text{ceil (R)} \quad (\text{formula 9.2});$$

and

$$(\text{First SFN} \times N_{slot}^{frame,\mu}) + \text{first A} = (\text{SFN} \times N_{slot}^{frame,\mu}) + \text{A} + \text{round (R)} \quad (\text{formula 9.3}).$$

For example, the first SFN, first Q, first G, first H, first B, the SFN, Q, G, H, B, and R satisfy any one of the following formulas, and the terminal device may determine the first SFN and first Q based on the following formulas:

$$(((\text{First SFN} \times 10) + \text{first Q}) \times N_{slot}^{subframe,\mu} + \text{first G}) \times \text{first H} + \text{first B} = (((\text{SFN} \times 10) + \text{Q}) \times N_{slot}^{subframe,\mu} + \text{G}) \times \text{H} + \text{B} + \text{floor(R)} \quad (\text{formula 10.1});$$

$$(((\text{First SFN} \times 10) + \text{first Q}) \times N_{slot}^{subframe,\mu} + \text{first G}) \times \text{first H} + \text{first B} = (((\text{SFN} \times 10) + \text{Q}) \times N_{slot}^{subframe,\mu} + \text{G}) \times \text{H} + \text{B} + \text{ceil (R)} \quad (\text{formula 10.2});$$

and

$$(((\text{First SFN} \times 10) + \text{first Q}) \times N_{slot}^{subframe,\mu} + \text{first G}) \times \text{first H} + \text{first B} = (((\text{SFN} \times 10) + \text{Q}) \times N_{slot}^{subframe,\mu} + \text{G}) \times \text{H} + \text{B} + \text{round (R)} \quad (\text{formula 10.3}).$$

For example, the first SFN, first A, first H, first B, the SFN, A, H, B, and R satisfy any one of the following formulas, and the terminal device may determine the first SFN and first Q based on the following formulas:

$$((\text{First SFN} \times N_{slot}^{frame,\mu}) + \text{first A}) \times \text{first H} + \text{first B} = ((\text{SFN} \times N_{slot}^{frame,\mu}) + A) \times H + B$$
$$+ \text{floor(R) (formula 11.1)};$$

$$((\text{First SFN} \times N_{slot}^{frame,\mu}) + \text{first A}) \times \text{first H} + \text{first B} = ((\text{SFN} \times N_{slot}^{frame,\mu}) + A) \times H + B$$
$$+ \text{ceil (R) (formula 11.2)};$$

and

$$((\text{First SFN} \times N_{slot}^{frame,\mu}) + \text{first A}) \times \text{first H} + \text{first B} = ((\text{SFN} \times N_{slot}^{frame,\mu}) + A) \times H + B$$
$$+ \text{round (R) (formula 11.3)}.$$

For example, the terminal device starts the first timer after the time-domain position corresponding to the first SFN and first Q, the time-domain position corresponding to the first SFN, first Q, and first G, the time-domain position corresponding to the first SFN and first A, the time-domain position corresponding to the first SFN, first Q, first G, first H, and first B, or the time-domain position corresponding to the first SFN, first A, first H, and first B is offset rightwards by the third parameter.

For example, the terminal device starts the first timer at the time-domain position corresponding to the first SFN, first Q, and the third parameter, the time-domain position corresponding to the first SFN, first Q, first G, and the third parameter, the time-domain position corresponding to the first SFN, first A, and the third parameter, the time-domain position corresponding to the first SFN, first Q, first G, first H, first B, and the third parameter, or the time-domain position corresponding to the first SFN, first A, first H, first B, and the third parameter.

In another possible implementation 6, the terminal device determines the start time of the first timer based on the information about the start time of the P$^{th}$ first timer.

For example, the terminal device starts the first timer at a time-domain position corresponding to the information about the start time of the P$^{th}$ first timer.

In another possible implementation 7, the terminal device starts the first timer based on the SFN, Q, and a fourth parameter. Alternatively, the terminal device starts the first timer based on the SFN, Q, G, and a fourth parameter. Alternatively, the terminal device starts the first timer based on the SFN, A, and a fourth parameter. Alternatively, the terminal device starts the first timer based on the SFN, Q, G, H, B, and a fourth parameter. Alternatively, the terminal device starts the first timer based on the SFN, A, H, B, and a fourth parameter.

For example, after determining the fourth parameter based on R, the terminal device starts the first timer at the time-domain position corresponding to the SFN, Q, and the fourth parameter, the time-domain position corresponding to the SFN, Q, G, and the fourth parameter, the time-domain position corresponding to the SFN, A, and the fourth parameter, the time-domain position corresponding to the SFN, Q, G, H, B, and the fourth parameter, or the time-domain position corresponding to the SFN, A, H, B, and the fourth parameter.

For example, the terminal device starts the first timer after the time-domain position corresponding to the SFN and Q, the time-domain position corresponding to the SFN, Q, and G, the time-domain position corresponding to the SFN and A, the time-domain position corresponding to the SFN, Q, G, H, and B, or the time-domain position corresponding to the SFN, A, H, and B is offset rightwards by duration indicated by the fourth parameter.

For example, the terminal device starts the first timer after duration that is indicated by the fourth parameter and that starts from the time-domain position corresponding to the SFN and Q, the time-domain position corresponding to the SFN, Q, and G, the time-domain position corresponding to the SFN and A, the time-domain position corresponding to the SFN, Q, G, H, and B, or the time-domain position corresponding to the SFN, A, H, and B.

In another possible implementation 8, the terminal device starts the first timer based on the SFN and Q. Alternatively, the terminal device starts the first timer based on the SFN, Q, and G. Alternatively, the terminal device starts the first timer based on the SFN and A. Alternatively, the terminal device starts the first timer based on the SFN, Q, G, H, and B. Alternatively, the terminal device starts the first timer based on the SFN, A, H, and B.

For example, the terminal device starts the first timer at the time-domain position corresponding to the SFN and Q, the time-domain position corresponding to the SFN, Q, and G, the time-domain position corresponding to the SFN and A, the time-domain position corresponding to the SFN, Q, G, H, and B, or the time-domain position corresponding to the SFN, A, H, and B.

In another possible implementation 9, the terminal device starts the first timer based on a first SFN and first Q.

Alternatively, the terminal device starts the first timer based on a first SFN, first Q, and first G. Alternatively, the terminal device starts the first timer based on a first SFN, and first A. Alternatively, the terminal device starts the first timer based on a first SFN, first Q, first G, first H, and first B. Alternatively, the terminal device starts the first timer based on a first SFN, first A, first H, and first B.

For example, the terminal device starts the first timer at the time-domain position corresponding to the first SFN and first Q, the time-domain position corresponding to the first SFN, first Q, and first G, the time-domain position corresponding to the first SFN and first A, the time-domain position corresponding to the first SFN, first Q, first G, first H, and first B, or the time-domain position corresponding to the first SFN, first A, first H, and first B.

It should be noted that, for any one of the foregoing implementations 4, 5, 8, and 9, the start time of the first timer is irrelevant to R. Therefore, the information that is about the start time of the $P^{th}$ first timer and that is related to the start time of the first timer includes the SFN and Q, or the SFN, Q, and G, or the SFN and A, or the SFN, Q, G, H, and B, or the SFN, A, H, and B, and may not include R. This is not limited in this application.

In this embodiment, the terminal device can calculate the information about the start time of the $P^{th}$ first timer that matches the service, so that the service cycle whose value is a non-integer can be applicable to the DRX mechanism, and the DRX matches the service, to reduce power consumption of the terminal device, improve transmission reliability or reduce a transmission delay, and improve communication quality and efficiency.

Optionally, this application may further include: The terminal device determines information about a start time of a $(P + 1)^{th}$ first timer based on the information about the start time of the $P^{th}$ first timer.

Optionally, when the DRX cycle is an integer multiple (for example, Y times) of the service cycle, or when the DRX cycle is an integer, the terminal device determines the information about the start time of the $(P + 1)^{th}$ first timer based on the information about the start time of the $P^{th}$ first timer.

Optionally, when the DRX cycle is equal to the service cycle, or when the DRX cycle is a non-integer, the terminal device determines the information about the start time of the $(P + 1)^{th}$ first timer based on the information about the start time of the $P^{th}$ first timer.

Optionally, that the terminal device determines information about a start time of a $(P + 1)^{th}$ first timer based on the information about the start time of the $P^{th}$ first timer may include: The terminal device determines information about a start time of a $(P + \alpha)^{th}$ first timer based on the information about the start time of the $P^{th}$ first timer.

For example, $\alpha$ is an integer greater than or equal to 1. For example, $\alpha$ has Y - 1 values. For example, $\alpha$ is 1, 2, ..., Y - 2, Y - 1. For example, the DRX cycle is 50 ms, the service cycle is 50/3 ms, Y is equal to 3, $\alpha$ has two values, and $\alpha = \{1, 2\}$. For example, the DRX cycle is 100 ms, the service cycle is 100/9 ms, Y is equal to 9, $\alpha$ has eight values, and $\alpha = \{1, 2, 3, 4, 5, 6, 7, 8\}$.

It should be noted that content related to the information about the start time of the $(P + \alpha)^{th}$ first timer is similar to content related to the information about the start time of the $P^{th}$ first timer, and the information about the start time of the $P^{th}$ first timer may be replaced with the information about the start time of the $(P + \alpha)^{th}$ first timer for understanding. Details are not described herein again.

In a possible implementation B1, the information about the start time of the $P^{th}$ first timer and the information about the start time of the $(P + \alpha)^{th}$ first timer satisfy the following relationship:

Third quantity corresponding to the information about the start time of the $(P + \alpha)^{th}$ first timer = Third quantity corresponding to the information about the start time of the $P^{th}$ first timer + $F[(T_{DRX}/Y) \times \alpha]$.

For example, the DRX cycle is 50 ms, the service cycle is 50/3 ms, Y is equal to 3, C=0, 1, and 2, and the information about the start time of the $P^{th}$ first timer includes SFN = 0 and Q = 0. If the round downing operation is used, SFN corresponding to the information about the start time of the $(P + \alpha)^{th}$ first timer $\times$ 10 + Q corresponding to the information about the start time of the $(P + \alpha)^{th}$ first timer = SFN corresponding to the information about the start time of the $P^{th}$ first timer $\times$ 10 + Q corresponding to the information about the start time of the $P^{th}$ first timer + $F[(50/3) \times \alpha]$. When $\alpha=1$, the information about the start time of the $(P + 1)^{th}$ first timer includes SFN = 1 and Q = 6; and when $\alpha=2$, the information about the start time of the $(P + 2)^{th}$ first timer includes SFN = 3 and Q = 3.

Optionally, the implementation B1 may be applied to a case in which the DRX cycle is an integer multiple of the service cycle. For example, the DRX cycle is 50 ms, and the service cycle is 50/3 m; or the DRX cycle is 100 ms, and the service cycle is 100/9 ms.

In another possible implementation B2, the fourth information and the seventh information satisfy the following relationship:

Third quantity corresponding to the information about the start time of the $(P + \alpha)^{th}$ first timer = Third quantity corresponding to the information about the start time of the $P^{th}$ first timer + $F[(T_{DRX}) \times \alpha]$.

Optionally, the implementation A2 may be applied to a case in which the DRX is a non-integer, for example, 25/3 ms, 50/3 ms, 100/3 ms, or 100/9 ms.

In this embodiment, the terminal device can determine, based on the fourth information configured by the network device and at least one DRX cycle, a start time of a first timer that is at least one DRX cycle later than the start time-domain unit. Because the start time of the first timer that is determined by the terminal device is also cyclical in a cross-hyper system frame case, DRX of the network device is aligned with that of the terminal device. Alternatively, this helps the DRX cycle match the service cycle or helps the DRX match the service, to reduce power consumption of the terminal device, and/or reduce a delay in receiving data by the terminal device. It should be noted that, for signaling or a message received by the terminal device from the network device, it takes a period of time from receiving the signaling or the message at a physical layer of the terminal device to successfully parsing the signaling or the message at an upper layer (for example, an RRC layer) of the terminal device. Therefore, there may be a delay between a moment at which the network device sends the signaling or information and a moment at which the upper layer of the terminal device parses out the signaling or information. For example, a moment at which the network device sends the fifth information may be inconsistent with a moment at which the upper layer of the terminal device parses out the fifth information. The fifth information may be the DRX configuration in the embodiment corresponding to any one or more of FIG. 2, FIG. 3, FIG. 5, or FIG. 6, may be the first information or the second information in the embodiment corresponding to FIG. 2, may be the first offset in the embodiment corresponding to FIG. 3, may be the first parameter in the embodiment corresponding to FIG. 5, or may be the fourth information in the embodiment corresponding to FIG. 6.

FIG. 8 is used as an example. For example, the fifth information is carried in an RRC message, the network device sends the fifth information at an end of a previous hyper system frame (for example, a hyper system frame j, where j is greater than or equal to 0), but an upper layer of the terminal device parses out the fifth information only when a next hyper system frame arrives. Consequently, positions that are of a start time of a first timer and that are determined by the network device and the terminal device are different.

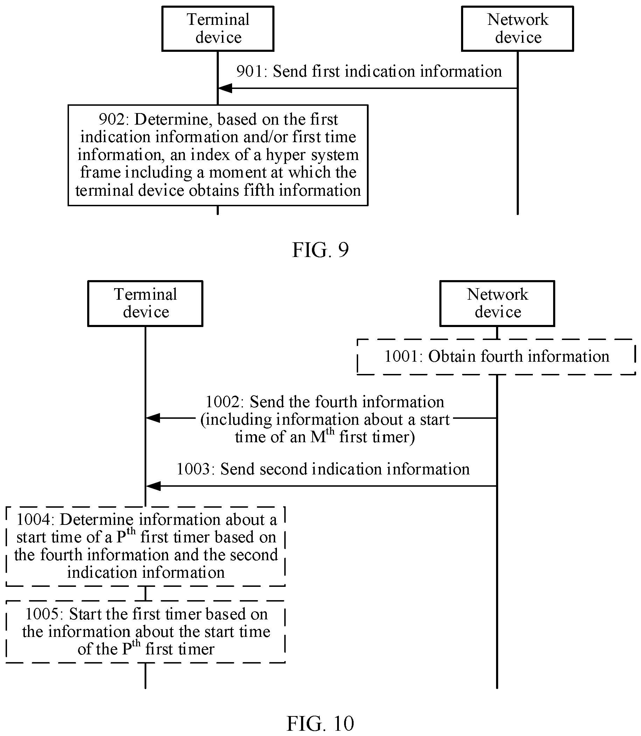

Therefore, this application further provides a communication method shown in FIG. 9, to resolve the foregoing problem. It should be understood that the embodiment corresponding to FIG. 9 may be combined with any one of the foregoing embodiments in FIG. 2, FIG. 3, FIG. 5, and FIG. 6. In the embodiment corresponding to FIG. 9, a terminal device and a network device separately perform the following steps.

Step 901: The network device sends first indication information to the terminal device. Correspondingly, the terminal device receives the first indication information from the network device.

Optionally, the first indication information is carried in a DRX configuration, or the first indication information is carried in RRC signaling.

Optionally, the first indication information indicates a position, in a hyper system frame, of a moment at which the network device sends fifth information.

Optionally, the first indication information indicates whether the network device sends the fifth information in a second half of a hyper system frame.

For example, the fifth information may be the DRX configuration in the embodiment corresponding to any one or more of FIG. 2, FIG. 3, FIG. 5, or FIG. 6, may be the first information or the second information in the embodiment corresponding to FIG. 2, may be the first offset in the embodiment corresponding to FIG. 3, may be the first parameter in the embodiment corresponding to FIG. 5, or may be the fourth information in the embodiment corresponding to FIG. 6.

In a possible implementation, the first indication information indicates, by using two different values, whether the network device sends the fifth information in the second half of the hyper system frame.

For example, one of the values indicates that the network device sends the fifth information in the second half of the hyper system frame, and the other value indicates that the network device sends the fifth information in a first half of a hyper system frame.

For example, a value of the first indication information may be 0 or 1. When the value of the first indication information is 1, it indicates that a time-domain unit used by the network device to send the fifth information is located in a second half of a hyper system frame including the time-domain unit; or when the value of the first indication information is 0, it indicates that the time-domain unit used by the network device to send the fifth information is located in a first half of a hyper system frame including the time-domain unit. For another example, a value of the first indication information may be 0 or 512. When the value of the first indication information is 512, it indicates that a time-domain unit used by the network device to send the fifth information is located in a second half of a hyper system frame including the time-domain unit; or when the value of the first indication information is 0, it indicates that the time-domain unit used by the network device to send the fifth information is located in a first half of a hyper system frame including the time-domain unit. It should be understood that, during actual application, other two values may also be set to indicate whether the network device sends the fifth information in the second half of the hyper system frame.

In another possible implementation, whether the first indication information exists is used to indicate whether the network device sends the fifth information in the second half of the hyper system frame.

For example, if the network device sends the first indication information to the terminal device, it indicates that the network device sends the fifth information in the second half of the hyper system frame; or if the network device does not send the first indication information to the terminal device, it indicates that the network device sends the fifth information in a first half of a hyper system frame, and vice versa. Details are not described herein.

Optionally, step 901 may be replaced with: The network device sends, to the terminal device, indication information indicating whether the first indication information exists. Correspondingly, the terminal device receives, from the network device, the indication information indicating whether the first indication information exists.

It should be understood that, during actual application, any one of the foregoing implementations may be used to implement the foregoing first indication information.

Optionally, the first indication information is used to determine an index of a hyper system frame including a moment at which the terminal device obtains the fifth information. For example, the terminal device may determine, based on the first indication information, whether the hyper system frame including the moment at which the terminal device obtains the fifth information and the hyper system frame including the moment at which the network device sends the fifth information are a same hyper system frame.

For example, the moment at which the terminal device obtains the fifth information may be understood as a moment at which the terminal device decodes or parses out the fifth information.

For example, the moment at which the terminal device obtains the fifth information may be a moment at which the fifth information is parsed out at an RRC layer of the terminal device, for example, a moment at which the DRX configuration is parsed out at the RRC layer of the terminal device.

Optionally, the first indication information may further include an index of the hyper system frame including the moment at which the network device sends the fifth information. In the following, L represents the index of the hyper system frame including the moment at which the network device sends the fifth information, where L is greater than or equal to 0. It should be understood that when the index of the hyper system frame including the moment at which the network device sends the fifth information is a value predefined in a protocol (where for example, the index is 0), the first indication information sent by the network device to the terminal device may not carry L.

For example, L may be an integer. For example, L is 1 or 0.

Step 902: The terminal device determines, based on the first indication information and/or first time information, an index of the hyper system frame including the moment at which the terminal device obtains the fifth information.

For example, the moment at which the terminal device obtains the fifth information may be a first hyper system frame.

In a possible implementation, the terminal device determines, based on the first indication information and the first time information, the index of the hyper system frame including the moment at which the terminal device obtains the fifth information.

The first time information includes information about time in which the terminal device obtains the fifth information. It should be understood that the information about the time in which the terminal device obtains the fifth information may be a moment, or may be a period of time. For example, the first time information is a moment or a time period in which the terminal device obtains the DRX configuration. For example, the first time information is a moment or a time period in which the DRX configuration is parsed out at the RRC layer of the terminal device.

For example, if the first indication information indicates that the network device sends the fifth information in the second half of the hyper system frame, and the moment at which the terminal device obtains the fifth information is in the first half of the hyper system frame including the moment at which the terminal device obtains the fifth information, the terminal device determines that the index of the hyper system frame including the moment at which the terminal device obtains the fifth information is L + 1.

In another possible implementation, the terminal device determines, based on the first time information, the index of the hyper system frame including the moment at which the terminal device obtains the fifth information.

For example, if the moment at which the terminal device obtains the fifth information is in the second half of the hyper system frame including the moment at which the terminal device obtains the fifth information, the terminal device determines that the index of the hyper system frame including the moment at which the terminal device obtains the fifth information is L.

In another possible implementation, the terminal device determines, based on the first indication information, the index of the hyper system frame including the moment at which the terminal device obtains the fifth information.

For example, if the first indication information indicates that the network device sends the fifth information in the first half of the hyper system frame, the terminal device determines that the index of the hyper system frame including the moment at which the terminal device obtains the fifth information is L.

In this embodiment, the terminal device can determine, based on the first indication information and/or the first time information, whether the hyper system frame including the moment at which the network device sends the fifth information and the hyper system frame including the moment at which the terminal device obtains the fifth information are the same hyper system frame. This helps align the hyper system frame including the moment at which the network device sends the fifth information with the hyper system frame including the moment at which the terminal device obtains the fifth information, to help ensure that the fifth information matches a corresponding hyper system frame, helps align DRX of the UE with that of the base station, so as to help reduce power consumption of the terminal device, and/or reduce a delay in receiving data by the terminal device.

It should be understood that when the embodiment corresponding to FIG. 9 is combined with the embodiment corresponding to FIG. 2, for example, the first hyper system frame is the hyper system frame including the moment at which the terminal device obtains the DRX configuration. That the terminal device determines, based on the first indication information and/or first time information, an index of the hyper system frame including the moment at which the terminal device obtains the fifth information may be understood as that the terminal device determines the index of the first hyper system frame based on the first indication information and/or the first time information.

For example, if the first indication information indicates that the network device sends the DRX configuration in the second half of the hyper system frame, and the moment at which the terminal device obtains the DRX configuration is in the first half of the first hyper system frame, the terminal device determines that the index of the first hyper system frame is L + 1.

For example, if the moment at which the terminal device obtains the DRX configuration is in the second half of the first hyper system frame, the terminal device determines that the index of the first hyper system frame is L.

For example, if the first indication information indicates that the network device sends the DRX configuration in the first half of the hyper system frame, the terminal device determines that the index of the first hyper system frame is L.

It should be understood that when the embodiment corresponding to FIG. 9 is combined with the embodiment corresponding to FIG. 6, the first indication information may include or be replaced with the second indication information. For example, when calculating a start time of a first timer, the terminal device may further refer to the second indication information. The following provides detailed descriptions with reference to FIG. 10.

Step 1001: A network device obtains fourth information.

Step 1001 is an optional step. For example, the fourth information may be specified in a protocol, may be stored by a terminal device itself, or may be obtained by using another method. This is not limited in this application.

Specifically, for explanations of the fourth information, a start time-domain unit, and a start time of an $M^{th}$ first timer, refer to the related descriptions in step 601. Details are not described herein again.

Step 1002: The network device sends the fourth information to the terminal device. Correspondingly, the terminal device receives the fourth information from the network device.

Optionally, the network device may send the fourth information to the terminal device through a DRX configuration. Correspondingly, the terminal device may receive the DRX configuration from the network device, where the DRX configuration includes the fourth information.

For descriptions related to step 1002, refer to the descriptions related to step 601. Details are not described herein again. For descriptions related to the fourth information, refer to the descriptions in the embodiment in FIG. 6. Details are not described herein again.

Step 1003: The network device sends second indication information to the terminal device. Correspondingly, the terminal device receives the second indication information from the network device.

It should be noted that step 1003 or step 1004 may be used as an independent embodiment. Step 1003 and step 1004 may also be used as an independent embodiment.

For example, the second indication information indicates information about a reference frame. The information about the reference frame is used to determine information about a start time of a first timer. It may be understood that the information about the reference frame is information used in a process of calculating the start time of the first timer.

Optionally, the information about the reference frame includes a frame number of the reference frame. For example, the frame number of the reference frame includes 512 and/or 0. For example, if a moment at which the network device sends the DRX configuration is located before the SFN 0 and an SFN 511, the frame number of the reference frame that is indicated by the second indication information is 0; or if a moment at which the network device sends the DRX configuration is located before the SFN 512 and an SFN 1023, the frame number of the reference frame that is indicated by the second indication information is 512.

For example, the second indication information indicates information about a quantity of frames.

Optionally, the information about the reference frame includes a frame number of the reference frame. For example, the frame number of the reference frame includes 512 and 0. For example, if a moment at which the network device sends the DRX configuration is located before the SFN 0 and the SFN 512, the frame number of the reference frame that is indicated by the second indication information is 0; or if a moment at which the network device sends the DRX configuration is located before the SFN 512 and the SFN 0, the frame number of the reference frame that is indicated by the second indication information is 512.

Optionally, the information about the quantity of frame includes the quantity of frames. For example, the quantity of frames includes 512 and 0. For example, if a moment at which the network device sends the DRX configuration is located before an SFN 0 and an SFN 511, the quantity of frames that is indicated by the second indication information is 0; or if a moment at which the network device sends the DRX configuration is located before an SFN 512 and an SFN 1023, the quantity of frames that is indicated by the second indication information is 512.

Optionally, the network device may include the second indication information and fourth information in a same message or signaling. For example, the network device may send the second indication information and the fourth information to the terminal device through the DRX configuration. The terminal device may receive the DRX configuration from the network device. The DRX configuration includes the fourth information and the second indication information.

Step 1004: The terminal device determines information about a start time of a $P^{th}$ first timer based on the fourth information and the second indication information.

Step 1004 is an optional step.

P is an integer greater than or equal to 0, and P is greater than or equal to M. For example, the $P^{th}$ first timer may be understood as a first timer after the $M^{th}$ first timer. Optionally, an interval between the start time of the $P^{th}$ first timer and the start time of the $M^{th}$ first timer is at least one DRX cycle. For example, a granularity of a time-domain unit corresponding to the start time of the $P^{th}$ first timer is the same as a granularity of a time-domain unit corresponding to the start time of the $M^{th}$ first timer. Specifically, the start time of the $P^{th}$ first timer is described in detail in the foregoing step 603. For details, refer to the foregoing step 603.

Optionally, the terminal device determines the information about the start time of the $P^{th}$ first timer based on the fourth information, the information about the reference frame, and the DRX cycle. Optionally, the terminal device determines the information about the start time of the $P^{th}$ first timer based on the fourth information, the information about the reference frame, and a first cycle. The first cycle is equal to an accumulative sum of N DRX cycles. In a possible implementation, N is equal to P - M or P. In another possible implementation, N is equal to P/Y - M or P/Y. In another possible implementation, N is equal to (P - C)/Y - M or (P - C)/Y.

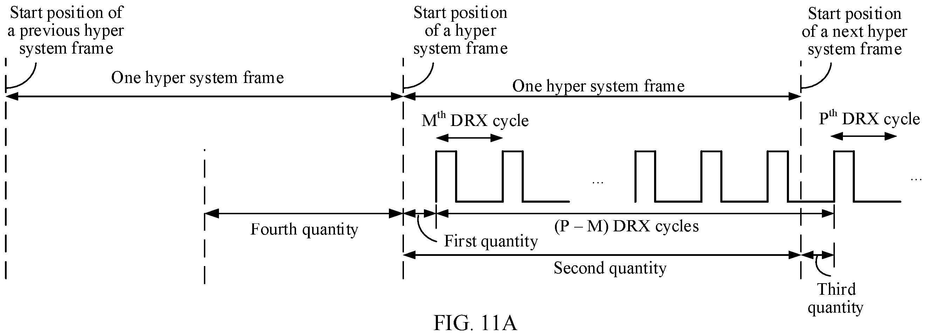

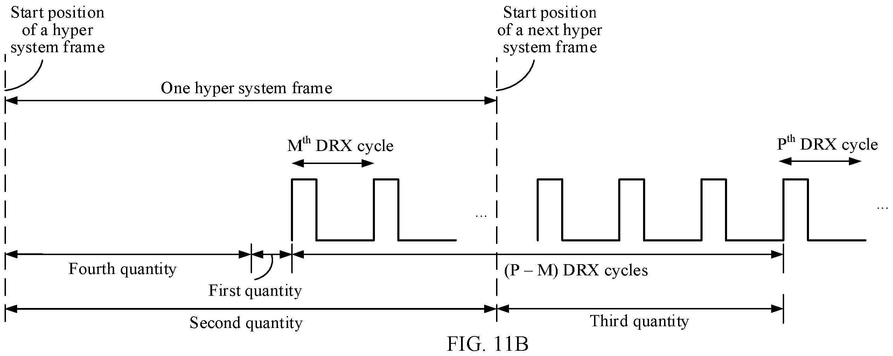

In a possible implementation, as shown in FIG. 11A or FIG. 11B, the terminal device determines the start time of the $P^{th}$ first timer based on the following condition:

a remainder obtained by dividing a sum of the accumulative sum of the (P - M) DRX cycles, a fourth quantity, and a first quantity by a second quantity is equal to a third quantity; or

third quantity = ((Accumulative sum of (P - M) DRX cycles) + fourth quantity + first quantity) mod second quantity.

Optionally, the first quantity is a quantity of time-domain units between a start position of a hyper system frame in which the $M^{th}$ first timer is located and the start time of the $M^{th}$ first timer.

Optionally, the second quantity is a quantity of time-domain units included in one hyper system frame.

Optionally, the third quantity is a quantity of time-domain units between a start position of a hyper system frame in which the $P^{th}$ first timer is located and the start time of the $P^{th}$ first timer.

Optionally, the fourth quantity is a quantity of time-domain units between a start position of a hyper system frame including a frame indicated by the second indication information and the frame indicated by the second indication information; or is a quantity of time-domain units between a frame indicated by the second indication information and an end position of a hyper system frame including the frame indicated by the second indication information.

Optionally, a process in which the terminal device determines the information related to the start time of the $P^{th}$ first timer based on the fourth information, the information about the reference frame, and the accumulative sum of the (P - M) DRX cycles may specifically include: (1) determining the fourth quantity based on the information about the reference frame; (2) determining the first quantity based on the fourth information; (3) determining that the remainder obtained by dividing the sum of the first quantity, the fourth quantity, and the accumulative sum of the (P - M) DRX cycles by the second quantity is the third quantity; and (4) determining, based on the third quantity, the information related to the start time of the first timer in a $P^{th}$ DRX cycle.

It should be understood that when the fourth information indicates time-domain units at different granularities, the terminal device uses different formulas to calculate the start time of the first timer. Details are separately described below.

In a type of implementation 1##, the following implementations are included.

In a possible implementation, when the fourth information includes a frame number $SFN_{start\ time}$ of a frame including the start time-domain unit and a subframe number $Q_{start\ time}$ of the start time-domain unit, that the terminal device determines the information about the start time of the $P^{th}$ first timer based on the fourth information and the information about the reference frame satisfies the following formula 4.1:

$$[(SFN \times 10) + Q] = [(SFN_{reference} \times 10) + (SFN_{start\ time} \times 10 + Q_{start\ time}) + N \times T_{DRX}] \bmod (D \times 10) \qquad \text{(formula 4.1)},$$

where $SFN_{reference}$ is a frame number of a reference frame indicated by the second indication information; SFN is a frame number of the start time of the $P^{th}$ first timer; Q is a subframe number of the start time of the $P^{th}$ first timer; $SFN_{start\ time}$ is a frame number of the start time of the $M^{th}$ first timer; $Q_{start\ time}$ is a subframe number of the start time of the $M^{th}$ first timer; $N \times T_{DRX}$ is the first cycle, where a unit of the first cycle is a subframe; $T_{DRX}$ indicates duration of one DRX cycle, where optionally, the DRX cycle is a long DRX cycle (drx-LongCycle); D is a quantity of frames included in one hyper system frame, where for example, D=1024, indicating that the hyper system frame includes 1024 frames.

In another possible implementation, when the fourth information includes a frame number $SFN_{start\ time}$ of a frame including the start time-domain unit, a subframe number $Q_{start\ time}$ of a subframe including the start time-domain unit, and a slot number $G_{start\ time}$ of the start time-domain unit, that the terminal device determines the information about the start time of the $P^{th}$ first timer based on the fourth information and the information about the reference frame satisfies the following formula 4.2:

$$[((SFN \times 10) + Q) \times N_{slot}^{subframe,\mu} + G] = [((SFN_{reference} \times 10) + (SFN_{start\ time} \times 10 + Q_{start}$$

$$_{time})) \times N_{slot}^{subframe,\mu} + G_{start\ time} + N \times T_{DRX} \times N_{slot}^{subframe,\mu}] \bmod (D \times 10 \times N_{slot}^{subframe,\mu}) \text{ (formula}$$

$$4.2),$$

where $SFN_{reference}$ is a frame number of a reference frame indicated by the second indication information; SFN is a frame number of the start time of the $P^{th}$ first timer; Q is a subframe number of the start time of the $P^{th}$ first timer; G is an index of a slot corresponding to the start time of the $P^{th}$ first timer in a subframe; $SFN_{start\ time}$ is a frame number of the start time of the $M^{th}$ first timer; $Q_{start\ time}$ is a subframe number of the start time of the $M^{th}$ first timer; $G_{start\ time}$ is an index of a slot corresponding to the start time of the $M^{th}$ first timer in a subframe; $N_{slot}^{subframe,\mu}$ is a quantity of slots included in one subframe; $N \times T_{DRX}$ is the first cycle, where a unit of the first cycle is a subframe; $T_{DRX}$ indicates duration of one DRX cycle, where D is a quantity of frames included in one hyper system frame, where for example, D=1024, indicating that the hyper system frame includes 1024 frames.

In another possible implementation, when the fourth information includes a frame number $SFN_{start\ time}$ of a frame including the start time-domain unit and a slot number $A_{start\ time}$ of the time-domain unit, that the terminal device determines the information about the start time of a $P^{th}$ first timer based on the fourth information and the information about the reference frame satisfies the following formula 4.3:

$$[(SFN \times N_{slot}^{frame,\mu}) + A] = [(SFN_{reference} \times N_{slot}^{frame,\mu}) + (SFN_{start\ time} \times N_{slot}^{frame,\mu} + A_{start\ time})$$

$$+ N \times T_{DRX} \times N_{slot}^{frame,\mu}/10] \bmod (D \times N_{slot}^{frame,\mu}) \text{ (formula 4.3),}$$

where $SFN_{reference}$ is a frame number of a reference frame indicated by the second indication information; SFN is a frame number of the start time of the $P^{th}$ first timer; A is an index of a slot corresponding to the start time of the $P^{th}$ first timer in a system frame; $SFN_{start}$ time is a frame number of the start time of the $M^{th}$ first timer; $A_{start\ time}$ is an index of a slot corresponding to the start time of the $M^{th}$ first timer in a system frame; $N_{slot}^{subframe,\mu}$ is a quantity of slots included in one subframe; $N \times T_{DRX}$ is the first cycle, where a unit of the first cycle is a subframe; $T_{DRX}$ indicates duration of one DRX cycle, where optionally, the DRX cycle is a long DRX cycle (drx-LongCycle); D is a quantity of frames included in one hyper system frame, where for example, D=1024, indicating that the hyper system frame includes 1024 frames.

In another possible implementation, when the fourth information includes a frame number $SFN_{start\ time}$ of a frame including the start time-domain unit, a subframe number $Q_{start\ time}$ of a subframe including the start time-domain unit, a slot number $G_{start\ time}$ of a slot including the time-domain unit, and a symbol number (or a symbol index) $B_{start\ time}$ of the time-domain unit, that the terminal device determines information about the start time of the $P^{th}$ first timer based on the fourth information and the information about the reference frame satisfies the following formula 4.4:

$$[(((SFN \times 10) + Q) \times N_{slot}^{subframe,\mu} + G) \times H + B] = [((SFN_{reference} \times 10 + SFN_{start\ time} \times$$

$$10 + Q_{start\ time}) \times N_{slot}^{subframe,\mu} + G_{start\ time}) \times H + B_{start\ time} + N \times T_{DRX} \times N_{slot}^{subframe,\mu} \times H] \bmod (D \times$$

$$10 \times N_{slot}^{subframe,\mu} \times H) \text{ (formula 4.4),}$$

where $SFN_{reference}$ is a frame number of a reference frame indicated by the second indication information; SFN is a frame number of the start time of the $P^{th}$ first timer; Q is a subframe number of the start time of the $P^{th}$ first timer; G is an index of a slot corresponding to the start time of the $P^{th}$ first timer in a subframe; B is a symbol number of the start time of the $P^{th}$ first timer; $SFN_{start\ time}$ is a frame number of the start time of the $M^{th}$ first timer; $Q_{start\ time}$ is a subframe number of the start time of the $M^{th}$ first timer; $G_{start\ time}$ is an index of a slot corresponding to the start time of the $M^{th}$ first timer in a subframe; $B_{start\ time}$ is a symbol number of the start time of the $M^{th}$ first timer; $N_{slot}^{subframe,\mu}$ is a quantity of slots included in one subframe; N × $T_{DRX}$ is the first cycle, where a unit of the first cycle is a subframe; $T_{DRX}$ indicates duration of one DRX cycle, where optionally, the DRX cycle is a long DRX cycle (drx-LongCycle); and D is a quantity of frames included in one hyper system frame, where for example, D=1024, indicating that the hyper system frame includes 1024 frames; and H is a quantity of symbols included in one slot, where for example, H=14, indicating that one slot includes 14 symbols, or for example, H=12, indicating that one slot includes 12 symbols.

In another possible implementation, when the fourth information includes a frame number $SFN_{start\ time}$ of a frame including the start time-domain unit, a slot number $A_{start\ time}$ of a slot including the time-domain unit, and a symbol number (or a symbol index) $B_{start\ time}$ of the time-domain unit, that the terminal device determines the information about the start time of the $P^{th}$ first timer based on the fourth information and the information about the reference frame satisfies the following formula 4.5:

$$[((SFN \times N_{slot}^{frame,\mu}) + A) \times H + B] = [(((SFN_{reference} \times N_{slot}^{frame,\mu}) + SFN_{start\ time} \times N_{slot}^{frame,\mu}$$

$$+ A_{start\ time}) \times H + B_{start\ time}) + N \times T_{DRX} \times N_{slot}^{frame,\mu} \times H/10] \mod (D \times N_{slot}^{frame,\mu} \times H) \ (formula\ 4.5),$$

where $SFN_{reference}$ is a frame number of a reference frame indicated by the second indication information; SFN is a frame number of the start time of the $P^{th}$ first timer; Q is a subframe number of the start time of the $P^{th}$ first timer; A is an index of a slot corresponding to the start time of the $P^{th}$ first timer in a system frame; B is a symbol number of the start time of the $P^{th}$ first timer; $SFN_{start}$ time is a frame number of the start time of the $M^{th}$ first timer; $Q_{start\ time}$ is a subframe number of the start time of the $M^{th}$ first timer; $A_{start\ time}$ is an index of a slot corresponding to the start time of the $M^{th}$ first timer in a system frame; $B_{start\ time}$ is a symbol number of the start time of the $M^{th}$ first timer; $N_{slot}^{frame,\mu}$ is a quantity of slots included in one frame; N × $T_{DRX}$ is the first cycle, where a unit of the first cycle is a subframe; $T_{DRX}$ indicates duration of one DRX cycle, where optionally, the DRX cycle is a long DRX cycle (drx-LongCycle); D is a quantity of frames included in one hyper system frame, where for example, D=1024, indicating that the hyper system frame includes 1024 frames; and H is a quantity of symbols included in one slot, where for example, H=14, indicating that one slot includes 14 symbols, or for example, H=12, indicating that one slot includes 12 symbols.

Optionally, when a value of the DRX cycle is an integer, the terminal device may determine, based on the fourth information and the information about the reference frame and by using any one of the foregoing formula 4.1, formula 4.2, formula 4.3, formula 4.4, and formula 4.5, the information about the start time of the $P^{th}$ first timer.

In addition, when the value of the DRX cycle is a non-integer, the terminal device may determine, based on the received fourth information and the information about the reference frame and by using any one of the following formula 4.6, formula 4.7, formula 4.8, formula 4.9, formula 4.10, formula 4.11, formula 4.12, formula 4.13, formula 4.14, and formula 4.15, the information about the start time of the $P^{th}$ first timer.

In another type of implementation 2##, the following implementations are included.

In a possible implementation, when the fourth information includes $SFN_{start}$ time and $Q_{start\ time}$, the terminal device uses the following formula 4.6:

$$[(SFN \times 10) + Q] = F\{[(SFN_{reference} \times 10) + (SFN_{start\ time} \times 10 + Q_{start\ time}) + N \times T_{DRX}] \mod (1024 \times 10)\} \quad (formula\ 4.6).$$

In another possible implementation, when the fourth information includes $SFN_{start\ time}$, $Q_{start\ time}$, and $G_{start\ time}$, the terminal device uses the following formula 4.7:

$$[((SFN \times 10) + Q) \times N_{slot}^{subframe,\mu} + G] = F\{[((SFN_{reference} \times 10) + (SFN_{start\ time} \times 10 +$$

$$Q_{start\ time})) \times N_{slot}^{subframe,\mu} + G_{start\ time} + N \times T_{DRX} \times N_{slot}^{subframe,\mu}] \mod (1024 \times 10 \times N_{slot}^{subframe,\mu})\}$$

$$(formula\ 4.7).$$

In another possible implementation, when the fourth information includes $SFN_{start}$ time and $A_{start\ time}$, the terminal device uses the following formula 4.8:

$$[(\text{SFN} \times N_{slot}^{frame,\mu}) + A] = F\{[(\text{SFN}_{\text{reference}} \times N_{slot}^{frame,\mu}) + (\text{SFN}_{\text{start time}} \times N_{slot}^{frame,\mu} + A_{\text{start time}})$$

$$+ N \times T_{\text{DRX}} \times N_{slot}^{frame,\mu}/10] \mod (1024 \times N_{slot}^{frame,\mu})\} \text{ (formula 4.8)}.$$

In another possible implementation, when the fourth information includes SFN$_{\text{start time}}$, Q$_{\text{start time}}$, G$_{\text{start time}}$, and B$_{\text{start time}}$, the terminal device uses the following formula 4.9:

$$[(((\text{SFN} \times 10) + Q) \times N_{slot}^{subframe,\mu} + G) \times H + B] = F\{[((\text{SFN}_{\text{reference}} \times 10 + \text{SFN}_{\text{start time}}$$

$$\times 10 + Q_{\text{start time}}) \times N_{slot}^{subframe,\mu} + G_{\text{start time}}) \times H + B_{\text{start time}} + N \times T_{\text{DRX}} \times N_{slot}^{subframe,\mu} \times H] \mod$$

$$(1024 \times 10 \times N_{slot}^{subframe,\mu} \times H)\} \text{ (formula 4.9)}.$$

In another possible implementation, when the fourth information includes SFN$_{\text{start time}}$, A$_{\text{start time}}$, and B$_{\text{start time}}$, the terminal device uses the following formula 4.10:

$$[((\text{SFN} \times N_{slot}^{frame,\mu}) + A) \times H + B] = F\{[((\text{SFN}_{\text{reference}} \times N_{slot}^{frame,\mu} + \text{SFN}_{\text{start time}} \times N_{slot}^{frame,\mu}$$

$$+ A_{\text{start time}}) \times H + B_{\text{start time}}) + N \times T_{\text{DRX}} \times N_{slot}^{frame,\mu} \times H/10] \mod (1024 \times N_{slot}^{frame,\mu} \times H)\} \text{ (formula}$$

$$4.10).$$

In another type of implementation 3##, the following implementations are included.

In a possible implementation, when the fourth information includes SFN$_{\text{start time}}$ and Q$_{\text{start time}}$, the terminal device uses the following formula 4.11:

$$[(\text{SFN} \times 10) + Q] = F\{[(\text{SFN}_{\text{reference}} \times 10) + (\text{SFN}_{\text{start time}} \times 10 + Q_{\text{start time}}) + N \times T_{\text{DRX}}]\} \mod$$
$$(1024 \times 10) \qquad \text{(formula 4.11)}.$$

In another possible implementation, when the fourth information includes SFN$_{\text{start time}}$, Q$_{\text{start time}}$, and G$_{\text{start time}}$, the terminal device uses the following formula 4.12:

$$[((\text{SFN} \times 10) + Q) \times N_{slot}^{subframe,\mu} + G] = F\{[((\text{SFN}_{\text{reference}} \times 10) + (\text{SFN}_{\text{start time}} \times 10 +$$

$$Q_{\text{start time}})) \times N_{slot}^{subframe,\mu} + G_{\text{start time}} + N \times T_{\text{DRX}} \times N_{slot}^{subframe,\mu}]\} \mod (1024 \times 10 \times N_{slot}^{subframe,\mu})$$

$$\text{(formula 4.12)}.$$

In another possible implementation, when the fourth information includes SFN$_{\text{start time}}$ and A$_{\text{start time}}$, the terminal device uses the following formula 4.13:

$$[(\text{SFN} \times N_{slot}^{frame,\mu}) + A] = F\{[(\text{SFN}_{\text{reference}} \times N_{slot}^{frame,\mu}) + (\text{SFN}_{\text{start time}} \times N_{slot}^{frame,\mu} + A_{\text{start}}$$

$$\text{time}) + N \times T_{\text{DRX}} \times N_{slot}^{frame,\mu}/10]\} \mod (1024 \times N_{slot}^{frame,\mu}) \text{ (formula 4.13)}.$$

In another possible implementation, when the fourth information includes SFN$_{\text{start time}}$, Q$_{\text{start time}}$, G$_{\text{start time}}$, and B$_{\text{start time}}$, the terminal device uses the following formula 4.14:

$$[(((SFN \times 10) + Q) \times N_{slot}^{subframe,\mu} + G) \times H + B] = F\{[((SFN_{reference} \times 10 + SFN_{start\ time}$$

$$\times 10 + Q_{start\ time}) \times N_{slot}^{subframe,\mu} + G_{start\ time}) \times H + B_{start\ time} + N \times T_{DRX} \times N_{slot}^{subframe,\mu} \times H]\}\ mod$$

$$(1024 \times 10 \times N_{slot}^{subframe,\mu} \times H)\ (\text{formula } 4.14).$$

In another possible implementation, when the fourth information includes $SFN_{start\ time}$, $A_{start\ time}$, and $B_{start\ time}$, the terminal device uses the following formula 4.15:

$$[((SFN \times N_{slot}^{frame,\mu}) + A) \times H + B] = F\{[((SFN_{reference} \times N_{slot}^{frame,\mu} + SFN_{start\ time} \times N_{slot}^{frame,\mu}$$

$$+ A_{start\ time}) \times H + B_{start\ time}) + N \times T_{DRX} \times N_{slot}^{frame,\mu} \times H/10]\}\ mod\ (1024 \times N_{slot}^{frame,\mu} \times H)\ (\text{formula}$$

$$4.15).$$

In the formula 4.6 to the formula 4.15, F{ } may represent a rounding operation. For example, F{ } may be a rounding down operation, for example, a floor() function; may be a rounding up operation, for example, a ceil() function; or may be a rounding off operation, for example, a round() function. For meanings of other parameters, refer to the related descriptions corresponding to the formula 4.1 to the formula 4.5. Details are not described herein again.

For example, in the formula 4.6, values on two sides of the equals sign indicate a quantity of subframes. A value of $[(SFN \times 10) + Q]$ indicates the quantity of subframes between the start position of the hyper system frame in which the $P^{th}$ first timer is located and the start time of the $P^{th}$ first timer; a value of $(SFN_{start\ time} \times 10 + Q_{start\ time})$ indicates the quantity of subframes between the start position of the hyper system frame in which the $M^{th}$ first timer is located and the start time of the $M^{th}$ first timer; and $N \times T_{DRX}$ indicates a quantity of subframes included in the N DRX cycles between the start time of the $M^{th}$ first timer and the start time of the $P^{th}$ first timer. A unit of $T_{DRX}$ is millisecond (ms). Because duration of one subframe is 1 ms, $T_{DRX}$ may also be understood as a quantity of subframes included in one DRX cycle. For example, the DRX cycle is 25/3 ms: $T_{DRX}$ = 25/3 ms, indicating that one DRX cycle includes 25/3 subframes, and indicating that duration of the DRX cycle is equal to a sum of duration corresponding to eight subframes and 1/3 of duration of one subframe, namely, 8.3333 ms. For example, if $SFN_{start\ time}$ = 0, $Q_{start\ time}$ = 1, N = 1, $T_{DRX}$ = 25/3 ms, and $SFN_{reference}$ = 512, $[(SFN_{reference} \times 10) + (SFN_{start\ time} \times 10 + Q_{start\ time}) + N \times T_{DRX}]\ mod\ (1024 \times 10) = [512 \times 10 + 1 + 1 \times (25/3)]\ mod\ (1024 \times 10) = [5120 + (28/3)]$ subframes. If F is a floor() function, $F\{[(SFN_{start\ time} \times 10 + Q_{start\ time}) + N \times T_{DRX}]\ mod\ (1024 \times 10)\}$ = floor$\{[1 + 1 \times (25/3)]\ mod\ (1024 \times 10)\}$ = floor$[5120 + (28/3)]$ = 5129 subframes. This may be substituted into the formula 4.6 to obtain: $[(SFN \times 10) + Q]$ = 5129 subframes. Then, SFN = 512 and Q = 9 may be obtained. If F is a ceil() function, $F\{[(SFN_{start\ time} \times 10 + Q_{start\ time}) + N \times T_{DRX}]\ mod\ (1024 \times 10)\}$ = ceil$\{[1 + 1 \times (25/3)]\ mod\ (1024 \times 10)\}$ = ceil$[5120 + (28/3)]$ = 5130 subframes. This may be substituted into the formula 4.6 to obtain: $[(SFN \times 10) + Q]$ = 5130 subframes. Then, SFN = 513 and Q = 0 may be obtained.

In addition, for specific examples, refer to the foregoing examples related to the formula 3.6 to the formula 3.15. Details are not described herein again.

It should be understood that when the value of the DRX cycle is an integer, the terminal device may also determine the information about the start time of the $P^{th}$ first timer by using the formula 4.6 to the formula 4.15.

In addition, when the value of the DRX cycle is a non-integer, the terminal device may also determine, based on the received fourth information and the information about the reference frame and by using any one of the following formula 4.16, formula 4.17, formula 4.18, formula 4.19, and formula 4.20, the information about the start time of the $P^{th}$ first timer.

In another type of implementation 4##, the following implementations are included.

In a possible implementation, when the fourth information includes $SFN_{start\ time}$, $Q_{start\ time}$, and $R_{start\ time}$, the terminal device uses the following formula 4.16:

$$[(SFN \times 10) + Q + R] = [(SFN_{reference} \times 10) + (SFN_{start\ time} \times 10 + Q_{start\ time}) + R_{start\ time} + N \times T_{DRX}]\ mod\ (1024 \times 10) \qquad \text{(formula 4.16),}$$

where R is the start time of the $P^{th}$ first timer duration and less than duration corresponding to one subframe, and $R_{start\ time}$ is the start time of the $M^{th}$ first timer duration and less than the duration corresponding to the subframe.

In another possible implementation, when the fourth information includes $SFN_{start\ time}$, $Q_{start\ time}$, $G_{start\ time}$, and $R_{start\ time}$, the terminal device uses the following formula 4.17:

$$[((SFN \times 10) + Q) \times N_{slot}^{subframe,\mu} + G + R] = [((SFN_{reference} \times 10) + (SFN_{start\ time} \times 10 +$$

$$Q_{start\ time})) \times N_{slot}^{subframe,\mu} + G_{start\ time} + R_{start\ time} + N \times T_{DRX} \times N_{slot}^{subframe,\mu}]\ mod\ (1024 \times 10 \times$$

$$N_{slot}^{subframe,\mu})\ (formula\ 4.17),$$

where R is the start time of the $P^{th}$ first timer duration and less than duration corresponding to one slot, and $R_{start\ time}$ is the start time of the $M^{th}$ first timer duration and less than the duration corresponding to the slot.

In another possible implementation, when the fourth information includes $SFN_{start\ time}$, $A_{start\ time}$, and $R_{start\ time}$, the terminal device uses the following formula 4.18:

$$[(SFN \times N_{slot}^{frame,\mu}) + A + R] = [(SFN_{reference} \times N_{slot}^{frame,\mu}) + (SFN_{start\ time} \times N_{slot}^{frame,\mu} + A_{start}$$

$$_{time}) + R_{start\ time} + N \times T_{DRX} \times N_{slot}^{frame,\mu}/10]\ mod\ (1024 \times N_{slot}^{frame,\mu})\ (formula\ 4.18),$$

where R is the start time of the $P^{th}$ first timer duration and less than duration corresponding to one slot, and $R_{start\ time}$ is the start time of the $M^{th}$ first timer duration and less than the duration corresponding to the slot.

In another possible implementation, when the fourth information includes $SFN_{start\ time}$, $Q_{start\ time}$, $G_{start\ time}$, $B_{start\ time}$, and $R_{start\ time}$, the terminal device uses the following formula 4.19:

$$[(((SFN \times 10) + Q) \times N_{slot}^{subframe,\mu} + G) \times H + B + R] = [((SFN_{reference} \times 10 + SFN_{start}$$

$$_{time} \times 10 + Q_{start\ time}) \times N_{slot}^{subframe,\mu} + G_{start\ time}) \times H + B_{start\ time} + R_{start\ time} + N \times T_{DRX} \times N_{slot}^{subframe,\mu}$$

$$\times H]\ mod\ (1024 \times 10 \times N_{slot}^{subframe,\mu} \times H)\ (formula\ 4.19),$$

where R is the start time of the $P^{th}$ first timer duration and less than duration corresponding to one symbol, and $R_{start\ time}$ is the start time of the $M^{th}$ first timer duration and less than the duration corresponding to the symbol.

In another possible implementation, when the fourth information includes $SFN_{start\ time}$, $A_{start\ time}$, $B_{start\ time}$, and $R_{start\ time}$, the terminal device uses the following formula 4.20:

$$[((SFN \times N_{slot}^{frame,\mu}) + A) \times H + B + R] = [((SFN_{reference} \times N_{slot}^{frame,\mu} + SFN_{start\ time} \times$$

$$N_{slot}^{frame,\mu} + A_{start\ time}) \times H + B_{start\ time}) + R_{start\ time} + N \times T_{DRX} \times N_{slot}^{frame,\mu} \times H/10]\ mod\ (1024 \times N_{slot}^{frame,\mu}$$

$$\times H)\ (formula\ 4.20),$$

where R is the start time of the $P^{th}$ first timer duration and less than duration corresponding to one symbol, and $R_{start\ time}$ is the start time of the $M^{th}$ first timer duration and less than the duration corresponding to the symbol.

In the formula 4.16 to the formula 4.20, a value of R is greater than or equal to 0 and less than 1, and a value of $R_{start\ time}$ is greater than or equal to 0 and less than 1. For meanings of other parameters, refer to the related descriptions corresponding to the formula 3.1 to the formula 3.5. Details are not described herein again.

For example, in the formula 4.16, values on two sides of the equals sign indicate a quantity of subframes. A value of [(SFN × 10) + Q + R] indicates a quantity of subframes between the start position of the hyper system frame in which the $P^{th}$ first timer is located and the start time of the $P^{th}$ first timer, where ((SFN × 10) + Q) indicates an integral part of the quantity of subframes, and R indicates a fractional part of the quantity of subframes or is understood as duration less than one subframe. A value of (SFN$_{start\ time}$ × 10 + Q$_{start\ time}$ + R$_{start\ time}$) indicates a quantity of subframes between the start position of the hyper system frame in which the $M^{th}$ first timer is located and the start time of the $M^{th}$ first timer, where ((SFN$_{start\ time}$ × 10) + Q$_{start\ time}$) indicates an integral part of the quantity of subframes, and R$_{start\ time}$ indicates a fractional part of the quantity of subframes or is understood as duration less than one subframe. N × T$_{DRX}$ indicates a quantity of subframes included in the N DRX cycles between the start time of the $M^{th}$ first timer and the start time of the $P^{th}$ first timer. A unit of $T_{DRX}$ is millisecond (ms). Because duration of one subframe is 1 m, $T_{DRX}$ may also be understood as a quantity of subframes included in one DRX cycle. For example, the DRX cycle is 25/3 ms: $T_{DRX}$ = 25/3 ms, indicating that one DRX cycle includes 25/3 subframes, and indicating that duration of the DRX cycle is equal to a sum of duration corresponding to eight subframes and 1/3 of duration of one subframe, namely, 8.3333 ms. For example, if $SFN_{start\ time}$ = 0, $Q_{start\ time}$ = 1, $R_{start\ time}$ = 0, N = 1, $T_{DRX}$ = 25/3 ms, and $SFN_{reference}$ = 512, [$(SFN_{start\ time} \times 10 + Q_{start\ time} + R_{start\ time}) + N \times T_{DRX}$] mod $(1024 \times 10)$ = [1 + 1 × (25/3)] mod (1024 × 10) = [5120 + (28/3)] subframes. This is substituted into the formula 4.16 to obtain: [(SFN × 10) + Q + R]= [5120 + (28/3)] subframes. Then, SFN = 512, Q = 9, and R = (1/3) may be obtained. Optionally, the rounding operation may be performed on R. For example, if the rounding down operation is used: floor(R) = floor(1/3) = 0, the information about the start time of the P$^{th}$ first timer is SFN=512 and Q=9. For another example, if the rounding up operation is used: ceil(R) = ceil(1/3) = 1, the information about the start time of the P$^{th}$ first timer is SFN=513 and Q=0.

In another implementation 5##, the fourth information received by the terminal device may alternatively not include $R_{start\ time}$. Specifically, the following implementations are included.

In a possible implementation, when the fourth information includes $SFN_{start}$ time and $Q_{start\ time}$, the terminal device uses the following formula 4.21:

$$[(SFN \times 10) + Q + R] = [(SFN_{reference} \times 10) + (SFN_{start\ time} \times 10 + Q_{start\ time}) + N \times T_{DRX}] \bmod (1024 \times 10) \quad \text{(formula 4.21)},$$

where R is the start time of the P$^{th}$ first timer and less than duration corresponding to one subframe.

In another possible implementation, when the fourth information includes $SFN_{start\ time}$, $Q_{start\ time}$, and $G_{start\ time}$, the terminal device uses the following formula 4.22:

$$[((SFN \times 10) + Q) \times N_{slot}^{subframe,\mu} + G + R] = [((SFN_{reference} \times 10) + (SFN_{start\ time} \times 10 + Q_{start\ time})) \times N_{slot}^{subframe,\mu} + G_{start\ time} + N \times T_{DRX} \times N_{slot}^{subframe,\mu}] \bmod (1024 \times 10 \times N_{slot}^{subframe,\mu})$$

$$\text{(formula 4.22)},$$

where R is the start time of the P$^{th}$ first timer and less than duration corresponding to one slot.

In another possible implementation, when the fourth information includes $SFN_{start\ time}$ and $A_{start\ time}$, the terminal device uses the following formula 4.23:

$$[(SFN \times N_{slot}^{frame,\mu}) + A + R] = [(SFN_{reference} \times N_{slot}^{frame,\mu}) + (SFN_{start\ time} \times N_{slot}^{frame,\mu} + A_{start\ time}) + N \times T_{DRX} \times N_{slot}^{frame,\mu}/10] \bmod (1024 \times N_{slot}^{frame,\mu}) \quad \text{(formula 4.23)},$$

where R is the start time of the P$^{th}$ first timer and less than duration corresponding to one slot.

In another possible implementation, when the fourth information includes $SFN_{start\ time}$, $Q_{start\ time}$, $G_{start\ time}$, and $B_{start\ time}$, the terminal device uses the following formula 4.24:

$$[(((SFN \times 10) + Q) \times N_{slot}^{subframe,\mu} + G) \times H + B + R] = [((SFN_{reference} \times 10 + SFN_{start\ time} \times 10 + Q_{start\ time}) \times N_{slot}^{subframe,\mu} + G_{start\ time}) \times H + B_{start\ time} + N \times T_{DRX} \times N_{slot}^{subframe,\mu} \times H] \bmod (1024 \times 10 \times N_{slot}^{subframe,\mu} \times H) \quad \text{(formula 4.24)},$$

where R is the start time of the P$^{th}$ first timer and less than duration corresponding to one symbol.

In another possible implementation, when the fourth information includes $SFN_{start\ time}$, $A_{start\ time}$, and $B_{start\ time}$, the terminal device uses the following formula 4.25:

$$[((SFN \times N_{slot}^{frame,\mu}) + A) \times H + B + R] = [((SFN_{reference} \times N_{slot}^{frame,\mu} + SFN_{start\ time} \times$$

$$N_{slot}^{frame,\mu} + A_{start\ time}) \times H + B_{start\ time}) + N \times T_{DRX} \times N_{slot}^{frame,\mu} \times H/10] \bmod (1024 \times N_{slot}^{frame,\mu} \times H)$$

(formula 4.25),

where R is the start time of the $P^{th}$ first timer and less than duration corresponding to one symbol.

It should be noted that, in the formula 4.1 to the formula 4.25, an expression indicating the quantity of time-domain units between the start position of the hyper system frame in which the $M^{th}$ first timer is located and the start time of the $M^{th}$ first timer may be represented by using one parameter.

For example, $W_{start\ time}$ may indicate the quantity of subframes between the start position of the hyper system frame in which the $M^{th}$ first timer is located and the start time of the $M^{th}$ first timer.

For example, $(SFN_{start\ time} \times 10 + Q_{start\ time})$ in the formula 4.1, formula 4.6, formula 4.11, and formula 4.21 may be replaced with $W_{start\ time}$. Optionally, a value of $W_{start\ time}$ is an integer. For example, $[(SFN \times 10) + Q] = [(SFN_{reference} \times 10) + W_{start\ time} + N \times T_{DRX}] \bmod (1024 \times 10)$ (formula 4.1.1). For example, $[(SFN \times 10) + Q] = F\{[(SFN_{reference} \times 10) + W_{start\ time} + N \times T_{DRX}] \bmod (1024 \times 10)\}$ (formula 4.6.1). For example, $[(SFN \times 10) + Q] = F\{[(SFN_{reference} \times 10) + W_{start\ time} + N \times T_{DRX}]\} \bmod (1024 \times 10)$ (formula 4.11.1). For example, $[(SFN \times 10) + Q + R] = [(SFN_{reference} \times 10) + W_{start\ time} + N \times T_{DRX}] \bmod (1024 \times 10)$ (formula 4.21.1). For example, when indicating the start time of the $M^{th}$ first timer for the terminal device through configuration, the network device configures only one parameter $W_{start\ time}$, instead of configuring two parameters $SFN_{start\ time}$ and $Q_{start\ time}$.

For another example, $(SFN_{start\ time} \times 10 + Q_{start\ time} + R_{start\ time})$ in the formula 4.16 may be replaced with $W_{start\ time}$. Optionally, a value of $W_{start\ time}$ is a non-integer or an integer. For example, $[(SFN \times 10) + Q + R] = [(SFN_{reference} \times 10) + W_{start\ time} + N \times T_{DRX}] \bmod (1024 \times 10)$ (formula 4.16.1). For example, when indicating the start time of the $M^{th}$ first timer for the terminal device through configuration, the network device configures only one parameter $W_{start\ time}$, instead of configuring three parameters $SFN_{start\ time}$, $Q_{start\ time}$, and $R_{start\ time}$.

For example, $U_{start\ time}$ may indicate the quantity of slots between the start position of the hyper system frame in which the $M^{th}$ first timer is located and the start time of the $M^{th}$ first timer.

For example, $((SFN_{start\ time} \times 10 + Q_{start\ time}) \times N_{slot}^{subframe,\mu} + G_{start\ time})$ in the formula 4.2, formula 4.7, formula 4.12, and formula 4.22 may be replaced with $U_{start\ time}$. Optionally, a value of $U_{start\ time}$ is an integer. For example,

$$[((SFN \times 10) + Q) \times N_{slot}^{subframe,\mu} + G] = [((SFN_{reference} \times 10)$$

$$\times N_{slot}^{subframe,\mu}) + U_{start\ time} + N \times T_{DRX} \times N_{slot}^{subframe,\mu}] \bmod (1024 \times 10 \times N_{slot}^{subframe,\mu})$$

(formula 4.2.1).

For example, $[((SFN \times 10) + Q) \times N_{slot}^{subframe,\mu} + G] = F\{[((SFN_{reference} \times 10) \times N_{slot}^{subframe,\mu}) + U_{start\ time} + N \times T_{DRX} \times N_{slot}^{subframe,\mu}] \bmod (1024 \times 10 \times N_{slot}^{subframe,\mu})\}$ (formula 4.7.1). For example,

$$[((SFN \times 10) + Q) \times N_{slot}^{subframe,\mu} + G] = F\{[((SFN_{reference} \times 10) \times N_{slot}^{subframe,\mu}) + U_{start\ time} + N \times$$

$$T_{DRX} \times N_{slot}^{subframe,\mu}]\} \bmod (1024 \times 10 \times N_{slot}^{subframe,\mu})$$

(formula 4.12.1). For example, $[((SFN \times 10) +$

$$Q) \times N_{slot}^{subframe,\mu} + G + R] = [((SFN_{reference} \times 10) \times N_{slot}^{subframe,\mu}) + U_{start\ time} + N \times T_{DRX} \times$$

$$N_{slot}^{subframe,\mu}] \bmod (1024 \times 10 \times N_{slot}^{subframe,\mu})$$

(formula 4.22.1). For example, when indicating the start time of the $M^{th}$ first timer for the terminal device through configuration, the network device configures only one parameter $U_{start\ time}$, instead of configuring three parameters $SFN_{start\ time}$, $Q_{start\ time}$, and $G_{start\ time}$.

For another example, $[((SFN_{\text{start time}} \times 10 + Q_{\text{start time}}) \times N_{slot}^{subframe,\mu} + G_{\text{start time}}) + R_{\text{start time}}]$ in the formula 4.17 may be replaced with $U_{\text{start time}}$. Optionally, a value of $U_{\text{start time}}$ is a non-integer or an integer. For example,

$$[((SFN \times 10) + Q) \times N_{slot}^{subframe,\mu} + G + R] = [((SFN_{\text{reference}} \times 10) \times N_{slot}^{subframe,\mu}) + U_{\text{start time}} + N \times T_{DRX} \times N_{slot}^{subframe,\mu}] \bmod (1024 \times 10 \times N_{slot}^{subframe,\mu})$$ (formula 4.17.1). Optionally, a value of $U_{\text{start time}}$ is a non-integer or an integer. For example, when indicating the start time of the $M^{th}$ first timer for the terminal device through configuration, the network device configures only one parameter $U_{\text{start time}}$, instead of configuring four parameters $SFN_{\text{start time}}$, $Q_{\text{start time}}$, $G_{\text{start time}}$, and $R_{\text{start time}}$.

For another example, $(SFN_{\text{start time}} \times N_{slot}^{frame,\mu} + A_{\text{start time}})$ in the formula 4.3, formula 4.8, formula 4.13, and formula 4.23 may be replaced with $U_{\text{start time}}$. Optionally, a value of $U_{\text{start time}}$ is an integer. For example,

$$[(SFN \times N_{slot}^{frame,\mu}) + A] = [(SFN_{\text{reference}} \times N_{slot}^{frame,\mu}) + U_{\text{start time}} + N \times T_{DRX} \times N_{slot}^{frame,\mu}/10] \bmod (D \times N_{slot}^{frame,\mu})$$ (formula 4.3.1). For example,

$$[(SFN \times N_{slot}^{frame,\mu}) + A] = F\{[(SFN_{\text{reference}} \times N_{slot}^{frame,\mu}) + U_{\text{start time}} + N \times T_{DRX} \times N_{slot}^{frame,\mu}/10] \bmod (1024 \times N_{slot}^{frame,\mu})\}$$ (formula 4.8.1). For example,

$$[(SFN \times N_{slot}^{frame,\mu}) + A] = F\{[(SFN_{\text{reference}} \times N_{slot}^{frame,\mu}) + U_{\text{start time}} + N \times T_{DRX} \times N_{slot}^{frame,\mu}/10]\} \bmod (1024 \times N_{slot}^{frame,\mu})$$ (formula 4.13.1). For example,

$$[(SFN \times N_{slot}^{frame,\mu}) + A + R] = [(SFN_{\text{reference}} \times N_{slot}^{frame,\mu}) + U_{\text{start time}} + N \times T_{DRX} \times N_{slot}^{frame,\mu}/10] \bmod (1024 \times N_{slot}^{frame,\mu})$$ (formula 4.23.1). For example, when indicating the start time of the $M^{th}$ first timer for the terminal device through configuration, the network device configures only one parameter $U_{\text{start time}}$, instead of configuring two parameters $SFN_{\text{start time}}$ and $A_{\text{start time}}$.

For another example, $(SFN_{\text{start time}} \times N_{slot}^{frame,\mu} + A_{\text{start time}}) + R_{\text{start time}}$ in the formula 4.18 may be replaced with $U_{\text{start time}}$. Optionally, a value of $U_{\text{start time}}$ is a non-integer or an integer. For example,

$$[(SFN \times N_{slot}^{frame,\mu}) + A + R] = [(SFN_{\text{reference}} \times N_{slot}^{frame,\mu}) + U_{\text{start time}} + N \times T_{DRX} \times N_{slot}^{frame,\mu}/10] \bmod (1024 \times N_{slot}^{frame,\mu})$$ (formula 4.18.1). For example, when indicating the start time of the $M^{th}$ first timer for the terminal device through configuration, the network device configures only one parameter $U_{\text{start time}}$, instead of configuring three parameters $SFN_{\text{start time}}$, $A_{\text{start time}}$, and $R_{\text{start time}}$.

For example, $V_{\text{start time}}$ may indicate the quantity of symbols between the start position of the hyper system frame in which the $M^{th}$ first timer is located and the start time of the $M^{th}$ first timer.

For example, $((SFN_{\text{start time}} \times 10 + Q_{\text{start time}}) \times N_{slot}^{subframe,\mu} + G_{\text{start time}}) \times H + B_{\text{start time}}$ in the formula 4.4, formula 4.9, formula 4.14, and formula 4.24 may be replaced with $V_{\text{start time}}$. Optionally, a value of $V_{\text{start time}}$ is an integer. For example,

$$[(((SFN \times 10) + Q) \times N_{slot}^{subframe,\mu} + G) \times H + B] = [(SFN_{\text{reference}} \times 10 \times N_{slot}^{subframe,\mu} \times H) + V_{\text{start time}} + N \times T_{DRX} \times N_{slot}^{subframe,\mu}] \bmod (1024$$

$$\times\ 10\ \times\ N_{slot}^{subframe,\mu}\ \times H)$$

(formula 4.4.1). For example,

$$[(((SFN \times 10) + Q) \times\ N_{slot}^{subframe,\mu}\ + G) \times$$

$$H + B] = F\{(((SFN_{reference} \times 10 \times\ N_{slot}^{subframe,\mu}\ \times H) + V_{start\ time} + N \times T_{DRX} \times\ N_{slot}^{subframe,\mu}\ \times H)\ mod$$

$$(1024 \times 10 \times\ N_{slot}^{subframe,\mu}\ \times H)\}$$

(formula 4.7.1). For example,

$$[(((SFN \times 10) + Q) \times\ N_{slot}^{subframe,\mu}$$

$$+ G) \times H + B] = F((SFN_{reference} \times 10 \times\ N_{slot}^{subframe,\mu}\ \times H) + V_{start\ time} + N \times T_{DRX} \times\ N_{slot}^{subframe,\mu}\ \times H)$$

$$mod\ (1024\ \times\ 10\ \times\ N_{slot}^{subframe,\mu}\ \times\ H)$$

(formula 4.14.1). For example, $[((SFN \times 10) + Q) \times$

$$N_{slot}^{subframe,\mu}\ + G) \times H + B + R] = [V_{start\ time} + N \times T_{DRX} \times\ N_{slot}^{subframe,\mu}\ \times H]\ mod\ (1024 \times 10 \times$$

$$N_{slot}^{subframe,\mu}\ \times H)$$
(formula 4.24.1). For example, when indicating the start time of the $M^{th}$ first timer for the terminal device through configuration, the network device configures only one parameter $V_{start\ time}$, instead of configuring four parameters SFNstarttime, $Q_{start\ time}$, $G_{start\ time}$, and $B_{start}$ time.

For another example, $((SFN_{start\ time} \times 10 + Q_{start\ time}) \times\ N_{slot}^{subframe,\mu}\ + G_{start\ time}) \times H +$
$B_{start\ time} + R_{start\ time}$ in the formula 4.19 may be replaced with $V_{start\ time}$. Optionally, a value of $V_{start\ time}$ is a non-integer or an integer. For example,

$$[(((SFN \times 10) + Q) \times\ N_{slot}^{subframe,\mu}\ + G) \times H + B +$$

$$R] = [(SFN_{reference} \times 10 \times\ N_{slot}^{subframe,\mu}\ \times H) + V_{start\ time} + N \times T_{DRX} \times\ N_{slot}^{subframe,\mu}\ \times H]\ mod\ (1024$$

$$\times\ 10\ \times\ N_{slot}^{subframe,\mu}\ \times H)$$
(formula 4.19.1). For example, when indicating the start time of the $M^{th}$ first timer for the terminal device through configuration, the network device configures only one parameter $V_{start\ time}$, instead of configuring five parameters $SFN_{start\ time}$, $Q_{start\ time}$, $G_{start\ time}$, $B_{start\ time}$, and $R_{start\ time}$.

For another example, $((SFN_{start\ time} \times\ N_{slot}^{frame,\mu}\ + A_{start\ time}) \times H + B_{start\ time})$ in the formula 4.5, formula 4.10, formula 4.15, and formula 4.25 may be replaced with $V_{start\ time}$. Optionally, a value of Vstarttime is an integer. For example,

$$[((SFN \times\ N_{slot}^{frame,\mu}) + A) \times H + B] = [(SFN_{reference} \times 10$$

$$\times\ N_{slot}^{subframe,\mu}\ \times H) + V_{start\ time} + N \times T_{DRX} \times\ N_{slot}^{frame,\mu}\ \times H/10]\ mod\ (D \times\ N_{slot}^{frame,\mu}\ \times H)$$
(formula 4.5.1). For example,

$$[((SFN \times\ N_{slot}^{frame,\mu}) + A) \times H + B] = F\{[(SFN_{reference} \times 10 \times\ N_{slot}^{subframe,\mu}\ \times H)$$

$$+ V_{start\ time} + N \times T_{DRX} \times\ N_{slot}^{frame,\mu}\ \times H/10]\ mod\ (1024 \times\ N_{slot}^{frame,\mu}\ \times H)\}$$
(formula 4.10.1). For example,

$$[((\text{SFN} \times N_{slot}^{frame,\mu}) + A) \times H + B] = F\{[(\text{SFN}_{\text{reference}} \times 10 \times N_{slot}^{subframe,\mu} \times H) + V_{\text{start time}}$$

$$+ N \times T_{\text{DRX}} \times N_{slot}^{frame,\mu} \times H/10]\} \bmod (1024 \times N_{slot}^{frame,\mu} \times H)$$

(formula 4.15.1). For example,

$$[((\text{SFN} \times N_{slot}^{frame,\mu}) + A) \times H + B + R] = [(\text{SFN}_{\text{reference}} \times 10 \times N_{slot}^{subframe,\mu} \times H) + V_{\text{start time}} + N \times$$

$$T_{\text{DRX}} \times N_{slot}^{frame,\mu} \times H/10] \bmod (1024 \times N_{slot}^{frame,\mu} \times H)$$

(formula 4.25.1). For example, when indicating the start time of the $M^{th}$ first timer for the terminal device through configuration, the network device configures only one parameter $V_{\text{start time}}$, instead of configuring three parameters $\text{SFN}_{\text{start time}}$, $A_{\text{start time}}$, and $B_{\text{start time}}$.

For another example, $((\text{SFN}_{\text{start time}} \times N_{slot}^{frame,\mu} + A_{\text{start time}}) \times H + B_{\text{start time}}) + R_{\text{start time}}$ in the formula 4.20 may be replaced with $V_{\text{start time}}$. Optionally, a value of $V_{\text{start time}}$ is a non-integer or an integer. For example,

$$[((\text{SFN} \times N_{slot}^{frame,\mu}) + A) \times H + B + R] = [(\text{SFN}_{\text{reference}} \times 10 \times N_{slot}^{subframe,\mu}$$

$$\times H) + V_{\text{start time}} + N \times T_{\text{DRX}} \times N_{slot}^{frame,\mu} \times H/10] \bmod (1024 \times N_{slot}^{frame,\mu} \times H)$$

(formula 4.20.1). For example, when indicating the start time of the $M^{th}$ first timer for the terminal device through configuration, the network device configures only one parameter $V_{\text{start time}}$, instead of configuring four parameters $\text{SFN}_{\text{start time}}$, $A_{\text{start time}}$, $B_{\text{start time}}$, and $R_{\text{start time}}$.

It should be noted that a quantity of slots included in one frame is not necessarily limited to 10, or may be another value, provided that 10 is replaced with K.

It should be noted that P - M may also be replaced with P. For example, regardless of a value of M, N is equal to P.

It should be noted that the information about the reference frame in step 1004 may replace information about the quantity of frames, and $\text{SFN}_{\text{reference}}$ may replace $\text{SFN}_{\text{quantity}}$. $\text{SFN}_{\text{quantity}}$ is the quantity of frames that is indicated by the second indication information.

Step 1005: The terminal device starts the first timer based on the information about the start time of the $P^{th}$ first timer.

Step 1005 is an optional step. For content related to step 1005, refer to the descriptions in step 603. Details are not described herein again.

Optionally, this application may further include: The terminal device determines information about a start time of a $(P + 1)^{th}$ first timer based on the information about the start time of the $P^{th}$ first timer.

In this embodiment, on the basis of the reference frame indicated by the information about the reference frame, the terminal device can determine, based on the fourth information and at least one DRX cycle, a start time of the first timer that is at least one DRX cycle later than the start time-domain unit. In the manner in which the terminal device calculates the start time of the first timer, recalculation does not need to be performed across hyper system frames. This not only helps align a hyper system frame including the moment at which the network device sends the DRX configuration with a hyper system frame including the moment at which the terminal device obtains the DRX configuration, but also helps align DRX of the network device with that of the terminal device. Alternatively, this helps the DRX cycle match the service cycle or helps the DRX match the service, to reduce power consumption of the terminal device, and/or reduce a delay in receiving data by the terminal device.

It should be noted that, in the embodiments/embodiment corresponding to FIG. 6 and/or FIG. 10, that the unit of the first cycle is a subframe may also be understood as one or more of the following: The unit of the first cycle is millisecond, the unit of $T_{\text{DRX}}$ is a subframe, or the unit of $T_{\text{DRX}}$ is millisecond.

It should be noted that in the embodiments/embodiment corresponding to FIG. 6 and/or FIG. 10, an example in which the unit of the first cycle is a subframe is used for description. Alternatively, the unit of the first cycle may be another granularity (for example, a slot, a symbol, a frame, or a millisecond). This is not limited in this application. Considering that the unit of the first cycle affects a formula (for example, the formula 3.1, the formula 3.2, the formula 3.3, the formula 3.4, the formula 3.5, the formula 4.1, the formula 4.2, the formula 4.3, the formula 4.4, or the formula 4.5) for determining the information about the start time of the $P^{th}$ first timer, if the unit of the first cycle and/or $T_{\text{DRX}}$ is another granularity other than the subframe, unit conversion needs to be performed. For example, the unit conversion is performed, so that a unit of the accumulative sum of (P - M) DRX cycles is the same as a granularity of a time-domain unit corresponding to the start time of the $P^{th}$ first timer or a granularity of a time-domain unit corresponding to the start time of the $M^{th}$ first timer.

For example, if the unit of the first cycle and/or $T_{\text{DRX}}$ is a frame, one or more of the following conversions may be

performed:

$N \times T_{DRX}$ in the formula 3.1 and/or the formula 4.1 may be converted into $N \times T_{DRX} \times 10$;

$$N \times T_{DRX} \times N_{slot}^{subframe,\mu}$$ in the formula 3.2 and/or the formula 4.2 may be converted into $$N \times T_{DRX} \times N_{slot}^{frame,\mu};$$

$$N \times T_{DRX} \times N_{slot}^{frame,\mu}/10$$ in the formula 3.3 and/or the formula 4.3 may be converted into $$N \times T_{DRX} \times N_{slot}^{frame,\mu};$$

$$N \times T_{DRX} \times N_{slot}^{subframe,\mu} \times H$$ in the formula 3.4 and/or the formula 4.4 may be converted into $$N \times T_{DRX} \times N_{slot}^{frame,\mu} \times H; \text{ or}$$

$$N \times T_{DRX} \times N_{slot}^{frame,\mu} \times H/10$$ in the formula 3.5 and/or the formula 4.5 may be converted into $$N \times T_{DRX} \times N_{slot}^{frame,\mu} \times H.$$

It should be noted that a case in which the unit of the first cycle and/or $T_{DRX}$ is another granularity is similar to the foregoing descriptions. Details are not described again.

It should be understood that, for related descriptions of the foregoing different communication methods, different steps or different positions in a same communication method, or same information or corresponding information in different embodiments, reference may be made to each other.

It should be noted that the modulo operation in this application has a plurality of variations. For example, a = b mod c may be transformed into b = $\theta \times$ c + a, where $\theta$ is an integer greater than or equal to 0. For example, the formula 3.1 may be transformed into [(SFN$_{\text{start time}} \times$ 10 + Q$_{\text{start time}}$) + N $\times$ T$_{\text{DRX}}$] = $\theta \times$ (D $\times$ 10) + [(SFN $\times$ 10) + Q]. For another example, the formula 3.16 may be transformed into [(SFN$_{\text{start time}} \times$ 10 + Q$_{\text{start time}}$ + R$_{\text{start time}}$) + N $\times$ T$_{\text{DRX}}$] = $\theta \times$ (1024 $\times$ 10) + [(SFN $\times$ 10) + Q + R]. The rest can be deduced by analogy, and details are not listed one by one herein.

It should be understood that the conventional technology may change with evolution of technical solutions, and the technical solutions provided in this application are not limited to the provided conventional technology.

It should be noted that different embodiments in this application or some steps (for example, any one or more steps) in the different embodiments may be combined with each other to form a new embodiment. It should be noted that some steps (for example, any one or more steps) in different embodiments may include an optional step in an embodiment, may include a mandatory step in an embodiment, or may include an optional step and a mandatory step in an embodiment. This is not limited in this application.

It should be noted that, unless otherwise specified or a logical conflict occurs, terms and/or descriptions in different embodiments are consistent and may be mutually referenced.

It should be noted that a sequence of the steps in embodiments of this application is not limited in this application.

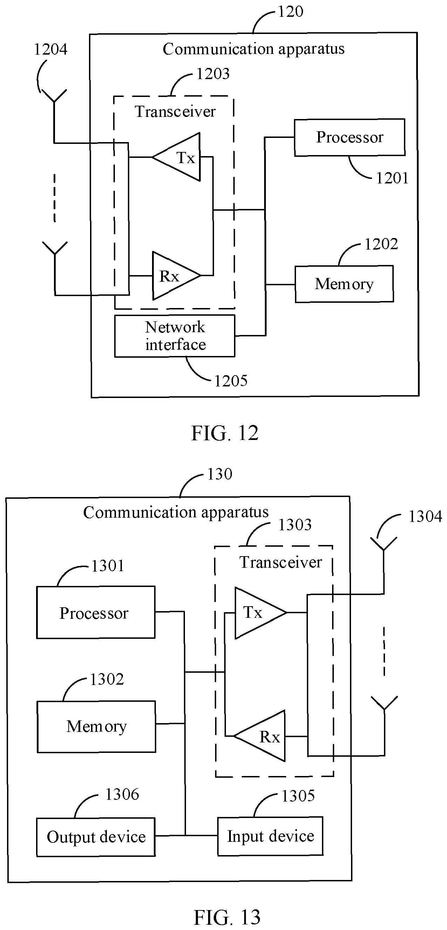

FIG. 12 is a diagram of a structure of a communication apparatus 120 according to an embodiment. It should be understood that the network device in the method embodiment corresponding to FIG. 2, FIG. 3, FIG. 5, FIG. 6, FIG. 9, or FIG. 10 may be based on the structure of the communication apparatus 120 shown in FIG. 12 in this embodiment. Optionally, the network device may be an access network device.

The communication apparatus 120 includes at least one processor 1201, at least one memory 1202, at least one transceiver 1203, at least one network interface 1205, and one or more antennas 1204. The processor 1201, the memory 1202, the transceiver 1203, and the network interface 1205 are connected by using a connection apparatus, and the antenna 1204 is connected to the transceiver 1203. The connection apparatus may include various types of interfaces, transmission cables, buses, or the like. This is not limited in this embodiment.

The memory 1202 is mainly configured to store a software program and data. The memory 1202 may exist independently, and is connected to the processor 1201. Optionally, the memory 1202 may be integrated with the processor 1201, for example, integrated into one or more chips. The memory 1202 can store program code for executing the technical solutions in embodiments of this application, and the processor 1201 controls the execution. Various types of executed computer program code may also be considered as drivers of the processor 1201. It should be understood that FIG. 12 in this embodiment shows only one memory and one processor. However, during actual application, the communication apparatus 120 may include a plurality of processors or a plurality of memories. This is not specifically limited herein. In addition, the memory 1202 may also be referred to as a storage medium, a storage device, or the like. The memory 1202 may be a storage element (namely, an on-chip storage element) located in a same chip as the processor, or may be an independent storage element. This is not limited in this embodiment of this application.

In this embodiment, the transceiver 1203 may be configured to support receiving or sending of a radio frequency signal between the communication apparatus 120 and a terminal device, and the transceiver 1203 may be connected to the antenna 1204. The transceiver 1203 includes a transmitter Tx and a receiver Rx. Specifically, the one or more antennas 1204 may receive a radio frequency signal. The receiver Rx in the transceiver 1203 is configured to: receive the radio frequency signal from the antenna 1204, convert the radio frequency signal into a digital baseband signal or a digital intermediate frequency signal, and provide the digital baseband signal or the digital intermediate frequency signal for the processor 1201, so that the processor 1201 further processes the digital baseband signal or the digital intermediate frequency signal, for example, performs demodulation processing and decoding processing. In addition, the transmitter Tx in the transceiver 1203 is further configured to: receive a modulated digital baseband signal or digital intermediate frequency signal from the processor 1201, convert the modulated digital baseband signal or digital intermediate frequency signal into a radio frequency signal, and send the radio frequency signal through the one or more antennas 1204. Specifically, the receiver Rx may selectively perform one-level or multi-level down mixing processing and analog-to-digital conversion processing on the radio frequency signal to obtain a digital baseband signal or a digital intermediate frequency signal, and a sequence of the down mixing processing and the analog-to-digital conversion processing is adjustable. The transmitter Tx may selectively perform one-level or multi-level up mixing processing and digital-to-analog conversion processing on the modulated digital baseband signal or digital intermediate frequency signal to obtain a radio frequency signal, and a sequence of the up mixing processing and the digital-to-analog conversion processing is adjustable. The digital baseband signal and the digital intermediate frequency signal may be collectively referred to as digital signals.

It should be understood that the transceiver 1203 may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. To be specific, the transceiver unit includes the receiving unit and the sending unit. The receiving unit may also be referred to as a receiver machine, an input port, a receiver circuit, or the like, and the sending unit may also be referred to as a transmitter machine, a transmitter, a transmitter circuit, or the like.

In addition, the processor 1201 is mainly configured to: process a communication protocol and communication data; control the entire network device; execute a software program; and process data of the software program. For example, the processor 1201 is configured to support the communication apparatus 120 in performing the actions described in the foregoing embodiments. The communication apparatus 120 may include a baseband processor and a central processing unit. The baseband processor is mainly configured to process the communication protocol and the communication data. The central processing unit is mainly configured to: control the entire communication apparatus 120, execute the software program, and process the data of the software program. The processor 1201 in FIG. 12 may integrate functions of the baseband processor and the central processing unit. A person skilled in the art may understand that the baseband processor and the central processing unit may alternatively be processors independent of each other, and are interconnected by using a technology such as a bus. A person skilled in the art may understand that the communication apparatus 120 may include a plurality of baseband processors to adapt to different network standards, the communication apparatus 120 may include a plurality of central processing units to enhance a processing capability of the communication apparatus 120, and various components of the communication apparatus 120 may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor; or may be stored in the memory in a form of a software program, and the processor executes the software program to implement a baseband processing function.

In addition, the network interface 1205 is configured to enable the communication apparatus 120 to connect to another communication apparatus through a communication link. Specifically, the network interface 1205 may include a network interface such as an S1 interface between the communication apparatus 120 and a core network element. The network interface 1205 may alternatively include a network interface such as an X2 or Xn interface between the communication apparatus 120 and another network device (for example, another access network device or another core network element).

In a possible implementation, the communication apparatus 120 is configured to perform the method in the embodiment corresponding to FIG. 3, FIG. 5, or FIG. 9. Specifically, in the communication apparatus 120, the processor 1201 is configured to determine first information. The first information is different from second information. The first information is used to determine a start time of a first timer in a first hyper system frame. The second information is used to determine a start time of a first timer in a second hyper system frame. The transceiver 1203 is configured to send the first information to a terminal device. Optionally, the first timer is a discontinuous reception on-duration timer (drx-onDurationTimer).

Optionally, the first information and the second information are different values of a same parameter.

In a possible implementation, the transceiver 1203 is further configured to send third information to the terminal device. The third information is used by the terminal device to determine the first information. Optionally, the third information is carried in DCI, a MAC CE, or RRC signaling.

Optionally, the first information is a first offset, and duration indicated by the first offset is less than a DRX cycle.

In a possible implementation, the first information is a first parameter, and the first parameter is drx-StartOffset.

In a possible implementation, the transceiver 1203 is further configured to send first indication information to the terminal device. The first indication information is used to determine an index of the first hyper system frame.

In a possible implementation, the first indication information indicates that the network device sends a DRX configuration in a second half of a hyper system frame, or the first indication information indicates that the network device sends the DRX configuration in a first half of a hyper system frame.

Optionally, the first indication information is information about a reference frame.

Optionally, a value of the first indication information is 512 or 0.

Optionally, the first hyper system frame is a hyper system frame including a moment at which the terminal device obtains the DRX configuration.

Specifically, the communication apparatus 120 is configured to perform the method of the network device in the embodiment corresponding to FIG. 6 or FIG. 10. The processor 1201 in the communication apparatus 120 is configured to obtain fourth information. The fourth information includes information about a start time of an $M^{th}$ first timer, and M is an integer greater than or equal to 0. The transceiver 1203 is configured to send fourth information to the terminal device. The fourth information is used by the terminal device to determine information about a start time of a $P^{th}$ first timer based on the fourth information, P is an integer greater than 0, and P is greater than M.

Optionally, the first timer is a discontinuous reception on-duration timer (drx-onDurationTimer).

In a possible implementation, the information about the start time of the $M^{th}$ first timer includes information about the following time-domain units: a frame and a subframe; a frame, a subframe, and a slot; or a frame, a subframe, a slot, and a symbol.

In a possible implementation, the information about the start time of the $P^{th}$ first timer includes information about the following time-domain units: a frame and a subframe; a frame, a subframe, and a slot; or a frame, a subframe, a slot, and a symbol.

In a possible implementation, the transceiver 1203 is further configured to send second indication information to the terminal device. The second indication information indicates the information about the reference frame, and the information about the reference frame is used to determine information about a start time of a first timer.

Optionally, a frame number of the reference frame is 512 or 0.

It should be noted that for specific implementations and beneficial effects of this embodiment, refer to the method of the network device in the foregoing embodiments. Details are not described herein again.

FIG. 13 is a diagram of a structure of another communication apparatus 130 according to an embodiment. It should be understood that the terminal device in the method embodiment corresponding to FIG. 2, FIG. 3, FIG. 5, FIG. 6, FIG. 9, or FIG. 10 may be based on the structure of the communication apparatus 130 shown in FIG. 13 in this embodiment.

The communication apparatus 130 includes at least one processor 1301, at least one memory 1302, and at least one transceiver 1303. The processor 1301, the memory 1302, and the transceiver 1303 are connected. Optionally, the communication apparatus 130 may further include an input device 1305, an output device 1306, and one or more antennas 1304. The antenna 1304 is connected to the transceiver 1303, and the input device 1305 and the output device 1306 are connected to the processor 1301.

**In** this embodiment, the memory 1302 is mainly configured to store a software program and data. The memory 1302 may exist independently, and is connected to the processor 1301. Optionally, the memory 1302 may be integrated with the processor 1301, for example, integrated into one or more chips. The memory 1302 can store program code for executing the technical solutions in embodiments of this application, and the processor 1301 controls the execution. Various types of executed computer program code may also be considered as drivers of the processor 1301. It should be understood that FIG. 13 in this embodiment shows only one memory and one processor. However, during actual application, the communication apparatus 130 may include a plurality of processors or a plurality of memories. This is not specifically limited herein. **In** addition, the memory 1302 may also be referred to as a storage medium, a storage device, or the like. The memory 1302 may be a storage element (namely, an on-chip storage element) located in a same chip as the processor, or may be an independent storage element. This is not limited in this embodiment of this application.

**In** this embodiment, the transceiver 1303 may be configured to support receiving or sending of a radio frequency signal between the communication apparatus 130 and an access network device, and the transceiver 1303 may be connected to the antenna 1304. The transceiver 1303 includes a transmitter Tx and a receiver Rx. Specifically, the one or more antennas 1304 may receive a radio frequency signal. The receiver Rx in the transceiver 1303 is configured to: receive the radio frequency signal from the antenna 1304, convert the radio frequency signal into a digital baseband signal or a digital intermediate frequency signal, and provide the digital baseband signal or the digital intermediate frequency signal for the processor 1301, so that the processor 1301 further processes the digital baseband signal or the digital intermediate frequency signal, for example, performs demodulation processing and decoding processing. **In** addition, the transmitter Tx in the transceiver 1303 is further configured to: receive a modulated digital baseband signal or digital intermediate frequency signal from the processor 1301, convert the modulated digital baseband signal or digital intermediate frequency signal into a radio frequency signal, and send the radio frequency signal through the one or more antennas 1304. Specifically, the receiver Rx may selectively perform one-level or multi-level down mixing processing and analog-to-digital conversion processing on the radio frequency signal to obtain a digital baseband signal or a digital intermediate frequency signal, and a sequence of the down mixing processing and the analog-to-digital conversion processing is adjustable. The transmitter Tx may selectively perform one-level or multi-level up mixing processing and digital-to-analog conversion processing on the modulated digital baseband signal or digital intermediate frequency signal to obtain a radio frequency signal, and a sequence of the up mixing processing and the digital-to-analog conversion processing is adjustable. The digital baseband signal and the digital intermediate frequency signal may be collectively referred to as digital signals.

It should be understood that the transceiver 1303 may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. To be specific, the transceiver unit includes the receiving unit and the sending unit. The receiving unit may also be referred to as a receiver machine, an input port, a receiver circuit, or the like, and the sending unit may also be referred to as a transmitter machine, a transmitter, a transmitter circuit, or the like.

The processor 1301 may be a baseband processor, or may be a central processing unit (central processing unit, CPU). The baseband processor and the CPU may be integrated together or separated from each other. The processor 1301 may be configured to implement various functions for the terminal device, for example, configured to process a communication protocol and communication data; configured to: control the entire terminal device, execute a software program, and process data of the software program; or configured to assist in completing a computing processing task, for example, graphics and image processing or audio processing. Alternatively, the processor 1301 is configured to implement one or more of the foregoing functions.

In addition, the output device 1306 communicates with the processor 1301, and may display information in a plurality of manners. This is not specifically limited herein.

Specifically, the communication apparatus 130 is configured to perform the method of the terminal device in the embodiment corresponding to FIG. 2, FIG. 3, FIG. 5, or FIG. 9. The processor 1301 in the communication apparatus 130 is configured to determine, based on first information, a start time of a first timer in a first hyper system frame. The first information is different from second information. The first information is used to determine the start time of the first timer in the first hyper system frame. The second information is used to determine a start time of a first timer in a second hyper system frame. Optionally, the first timer is a discontinuous reception on-duration timer.

In a possible implementation, the processor 1301 in the communication apparatus 130 obtains the first information based on a rule predefined in a protocol.

In a possible implementation, the communication apparatus 130 further includes a transceiver 1303, and the transceiver 1303 is configured to obtain the first information. For example, the communication apparatus 130 receives the first information from another communication apparatus (for example, a network device) via the transceiver 1303.

Optionally, the first information and the second information are different values of a same parameter.

Optionally, in one hyper system frame cycle, the first hyper system frame and the second hyper system frame satisfy the following condition: The first hyper system frame is adjacent to the second hyper system frame; or the first hyper system frame and the second hyper system frame are spaced by at least one hyper system frame, where the hyper system frame cycle includes at least two hyper system frames.

In a possible implementation, the processor 1301 is specifically configured to determine the first information based on third information. The third information is determined by the terminal device based on an index of the first hyper system frame, or the third information is from the network device.

Optionally, the third information is determined by the terminal device based on the index of the first hyper system frame and N, N is a quantity of hyper system frames included in a hyper system frame cycle, and N is an integer greater than 1.

Optionally, the third information $C_1$, the index $S_1$ of the first hyper system frame, and N satisfy the following condition: $C_1 = S_1 \bmod N$.

Optionally, N satisfies the following condition: The hyper system frame cycle is equal to an integer multiple of a discontinuous reception DRX cycle corresponding to the first timer.

In a possible implementation, the first information is a first offset, and duration indicated by the first offset is less than the DRX cycle.

In a possible implementation, the processor 1301 is specifically configured to determine, based on the first information and a first parameter, the start time of the first timer in the first hyper system frame. The first parameter is drx-StartOffset.

In a possible implementation, the processor 1301 is specifically configured to: determine, based on a second parameter and the first information, the start time of the first timer in the first hyper system frame; or determine a first reference value based on the first parameter and a second parameter, and determine, based on the first reference value and the first information, the start time of the first timer in the first hyper system frame. The first parameter is drx-StartOffset, and the second parameter is drx-SlotOffset.

In a possible implementation, the first information is a first parameter. For example, the first parameter is drx-StartOffset.

In a possible implementation, the processor 1301 is specifically configured to: determine an index of the first hyper system frame based on first indication information; or determine an index of the first hyper system frame based on first indication information and first time information.

The first indication information is from the network device, and the first time information includes information about time in which the terminal device obtains a DRX configuration.

In a possible implementation, the transceiver 1303 is further configured to receive first indication information from the network device. The first indication information is used to determine an index of the first hyper system frame.

Optionally, the first indication information indicates that the network device sends a DRX configuration in a second half of a hyper system frame, or the first indication information indicates that the network device sends the DRX configuration in a first half of a hyper system frame.

Optionally, the first hyper system frame is a hyper system frame including a moment at which the terminal device obtains the DRX configuration.

In a possible implementation, when the first indication information indicates that the network device sends the DRX configuration in a second half of a hyper system frame, and the moment at which the communication apparatus 130 obtains the DRX configuration is in a first half of the first hyper system frame, the processor 1301 determines that the index of the first hyper system frame is L + 1. L is greater than or equal to 0.

In a possible implementation, when the moment at which the communication apparatus 130 obtains the DRX configuration is in a second half hyper system frame of the first hyper system frame, the processor 1301 determines that the index of the first hyper system frame is L. L is greater than or equal to 0.

In a possible implementation, when the first indication information indicates that the network device sends the DRX configuration in a first half of a hyper system frame, the processor 1301 determines that the index of the first hyper system frame is L. L is greater than or equal to 0.

Specifically, the communication apparatus 130 is configured to perform the method of the terminal device in the embodiment corresponding to FIG. 6 or FIG. 10. The processor 1301 in the communication apparatus 130 is configured to: obtain fourth information, and determine information about a start time of a $P^{th}$ first timer based on the fourth information. The fourth information includes information about a start time of an $M^{th}$ first timer, M is an integer greater than or equal to 0, P is an integer greater than 0, and P is greater than M.

In a possible implementation, the information about the start time of the $M^{th}$ first timer includes information about the following time-domain units: a frame and a subframe; a frame, a subframe, and a slot; or a frame, a subframe, a slot, and a symbol.

In a possible implementation, the information about the start time of the $P^{th}$ first timer includes information about the following time-domain units: a frame and a subframe; a frame, a subframe, and a slot; or a frame, a subframe, a slot, and a symbol.

In a possible implementation, the processor 1301 is specifically configured to determine the information about the start time of the $P^{th}$ first timer based on the fourth information and a first cycle. The first cycle is equal to an accumulative sum of (P - M) DRX cycles.

In a possible implementation, the processor 1301 determines the start time of the $P^{th}$ first timer based on the following condition: A remainder obtained by dividing a sum of a first quantity and the accumulative sum of the (P - M) DRX cycles by a second quantity is equal to a third quantity.

The first quantity is a quantity of time-domain units between a start position of a hyper system frame in which the $M^{th}$ first timer is located and the start time of the $M^{th}$ first timer. The second quantity is a quantity of time-domain units included in one hyper system frame. The third quantity is a quantity of time-domain units between a start position of a hyper system frame in which the $P^{th}$ first timer is located and the start time of the $P^{th}$ first timer.

In a possible implementation, the processor 1301 is specifically configured to: determine a first quantity and a second quantity based on fourth information; determine a remainder by dividing a sum of the first quantity and the accumulative sum of the (P - M) DRX cycles by the second quantity, to obtain a third quantity; and determine, based on the third quantity, information related to the start time of the first timer in the $P^{th}$ DRX cycle.

In a possible implementation, when the fourth information includes a frame number $SFN_{start\ time}$ of a frame including a start time-domain unit and a subframe number $Q_{start\ time}$ of the start time-domain unit, that the processor 1301 determines information about a start time of a $P^{th}$ first timer based on the fourth information satisfies the following formula

3.1:

$$[(SFN \times 10) + Q] = [(SFN_{\text{start time}} \times 10 + Q_{\text{start time}}) + N \times T_{\text{DRX}}] \mod (D \times 10) \text{ (formula 3.1)},$$

where SFN is a frame number of the start time of the $P^{th}$ first timer; Q is a subframe number of the start time of the $P^{th}$ first timer; $SFN_{\text{start time}}$ is a frame number of the start time of the $M^{th}$ first timer; $Q_{\text{start time}}$ is a subframe number of the start time of the $M^{th}$ first timer; $N \times T_{\text{DRX}}$ is the first cycle, where a unit of the first cycle is a subframe; $T_{\text{DRX}}$ indicates duration of one DRX cycle, where optionally, the DRX cycle is a long DRX cycle (drx-LongCycle); and D is a quantity of frames included in one hyper system frame, where for example, D=1024, indicating that the hyper system frame includes 1024 frames.

In another possible implementation, when the fourth information includes a frame number $SFN_{\text{start time}}$ of a frame including a start time-domain unit, a subframe number $Q_{\text{start time}}$ of a subframe including the start time-domain unit, and a slot number $G_{\text{start time}}$ of the time-domain unit, that the processor 1301 determines information about a start time of a $P^{th}$ first timer based on the fourth information satisfies the following formula 3.2:

$$[((SFN \times 10) + Q) \times N_{slot}^{subframe,\mu} + G] = [((SFN_{\text{start time}} \times 10 + Q_{\text{start time}}) \times N_{slot}^{subframe,\mu} + G_{\text{start time}}) + N \times T_{\text{DRX}} \times N_{slot}^{subframe,\mu}] \mod (D \times 10 \times N_{slot}^{subframe,\mu}) \text{ (formula 3.2)},$$

where SFN is a frame number of the start time of the $P^{th}$ first timer; Q is a subframe number of the start time of the $P^{th}$ first timer; G is an index of a slot corresponding to the start time of the $P^{th}$ first timer in a subframe; $SFN_{\text{start time}}$ is a frame number of the start time of the $M^{th}$ first timer; $Q_{\text{start time}}$ is a subframe number of the start time of the $M^{th}$ first timer; $G_{\text{start time}}$ is an index of a slot corresponding to the start time of the $M^{th}$ first timer in a subframe; $N_{slot}^{subframe,\mu}$ is a quantity of slots included in one subframe; $N \times T_{\text{DRX}}$ is the first cycle, where a unit of the first cycle is a subframe; $T_{\text{DRX}}$ indicates duration of one DRX cycle, where optionally, the DRX cycle is a long DRX cycle (drx-LongCycle); and D is a quantity of frames included in one hyper system frame, where for example, D=1024, indicating that the hyper system frame includes 1024 frames.

In a possible implementation, when the fourth information includes a frame number $SFN_{\text{start time}}$ of a frame including a start time-domain unit and a slot number $A_{\text{start time}}$ of the time-domain unit, that the processor 1301 determines information about a start time of a $P^{th}$ first timer based on the fourth information satisfies the following formula 3.3:

$$[(SFN \times N_{slot}^{frame,\mu}) + A] = [(SFN_{\text{start time}} \times N_{slot}^{frame,\mu} + A_{\text{start time}}) + N \times T_{\text{DRX}} \times N_{slot}^{frame,\mu} /10] \mod (D \times N_{slot}^{frame,\mu}) \text{ (formula 3.3)},$$

where SFN is a frame number of the start time of the $P^{th}$ first timer; Q is a subframe number of the start time of the $P^{th}$ first timer; A is an index of a slot corresponding to the start time of the $P^{th}$ first timer in a system frame; $SFN_{\text{start time}}$ is a frame number of the start time of the $M^{th}$ first timer; $Q_{\text{start time}}$ is a subframe number of the start time of the $M^{th}$ first timer; $A_{\text{start time}}$ is an index of a slot corresponding to the start time of the $M^{th}$ first timer in a system frame; $N_{slot}^{subframe,\mu}$ is a quantity of slots included in one subframe; $N \times T_{\text{DRX}}$ is the first cycle, where a unit of the first cycle is a subframe; $T_{\text{DRX}}$ indicates duration of one DRX cycle, where optionally, the DRX cycle is a long DRX cycle (drx-LongCycle); and D is a quantity of frames included in one hyper system frame, where for example, D=1024, indicating that the hyper system frame includes 1024 frames.

In another possible implementation, when the fourth information includes a frame number $SFN_{\text{start time}}$ of a frame including a start time-domain unit, a subframe number $Q_{\text{start time}}$ of a subframe including the start time-domain unit, a slot number $G_{\text{start time}}$ of a slot including the time-domain unit, and a symbol number (or a symbol index) $B_{\text{start time}}$ of the time-domain unit, that the processor 1301 determines information about a start time of a $P^{th}$ first timer based on the fourth information satisfies the following formula 3.4:

$$[(((\text{SFN} \times 10) + Q) \times N_{slot}^{subframe,\mu} + G) \times H + B] = [((\text{SFN}_{\text{start time}} \times 10 + Q_{\text{start time}}) \times$$

$$N_{slot}^{subframe,\mu} + G_{\text{start time}}) \times H + B_{\text{start time}} + N \times T_{\text{DRX}} \times N_{slot}^{subframe,\mu} \times H] \bmod (D \times 10 \times N_{slot}^{subframe,\mu}$$

$$\times H) \text{ (formula 3.4)},$$

where SFN is a frame number of the start time of the $P^{th}$ first timer; Q is a subframe number of the start time of the $P^{th}$ first timer; G is an index of a slot corresponding to the start time of the $P^{th}$ first timer in a subframe; B is a symbol number of the start time of the $P^{th}$ first timer; $\text{SFN}_{\text{start time}}$ is a frame number of the start time of the $M^{th}$ first timer; $Q_{\text{start time}}$ is a subframe number of the start time of the $M^{th}$ first timer; $G_{\text{start time}}$ is an index of a slot corresponding to the start time of the $M^{th}$ first timer in a subframe; $B_{\text{start time}}$ is a symbol number of the start time of the $M^{th}$ first timer; $N_{slot}^{subframe,\mu}$ is a quantity of slots included in one subframe; $N_{slot}^{frame,\mu}$ is a quantity of slots included in one frame; $N \times T_{\text{DRX}}$ is the first cycle, where a unit of the first cycle is a subframe; $T_{\text{DRX}}$ indicates duration of one DRX cycle, where optionally, the DRX cycle is a long DRX cycle (drx-LongCycle); D is a quantity of frames included in one hyper system frame, where for example, D=1024, indicating that the hyper system frame includes 1024 frames; and H is a quantity of symbols included in one slot, where for example, H=14, indicating that one slot includes 14 symbols, or for example, H=12, indicating that one slot includes 12 symbols.

In another possible implementation, when the fourth information includes a frame number $\text{SFN}_{\text{start time}}$ of a frame including a start time-domain unit, a slot number $A_{\text{start time}}$ of the time-domain unit, and a symbol number (or a symbol index) $B_{\text{start time}}$ of the time-domain unit, that the processor 1301 determines information about a start time of a $P^{th}$ first timer based on the fourth information satisfies the following formula 3.5:

$$[((\text{SFN} \times N_{slot}^{frame,\mu}) + A) \times H + B] = [((\text{SFN}_{\text{start time}} \times N_{slot}^{frame,\mu} + A_{\text{start time}}) \times H + B_{\text{start}}$$

$$_{\text{time}}) + N \times T_{\text{DRX}} \times N_{slot}^{frame,\mu} \times H/10] \bmod (D \times N_{slot}^{frame,\mu} \times H) \text{ (formula 3.5)}$$

where SFN is a frame number of the start time of the $P^{th}$ first timer; Q is a subframe number of the start time of the $P^{th}$ first timer; A is an index of a slot corresponding to the start time of the $P^{th}$ first timer in a system frame; B is a symbol number of the start time of the $P^{th}$ first timer; $\text{SFN}_{\text{start time}}$ is a frame number of the start time of the $M^{th}$ first timer; $Q_{\text{start time}}$ is a subframe number of the start time of the $M^{th}$ first timer; $A_{\text{start time}}$ is an index of a slot corresponding to the start time of the $M^{th}$ first timer in a system frame; $B_{\text{start time}}$ is a symbol number of the start time of the $M^{th}$ first timer; $N_{slot}^{subframe,\mu}$ is a quantity of slots included in one subframe; $N_{slot}^{frame,\mu}$ is a quantity of slots included in one frame; $N \times T_{\text{DRX}}$ is the first cycle, where a unit of the first cycle is a subframe; $T_{\text{DRX}}$ indicates duration of one DRX cycle, where optionally, the DRX cycle is a long DRX cycle (drx-LongCycle); D is a quantity of frames included in one hyper system frame, where for example, D=1024, indicating that the hyper system frame includes 1024 frames; and H is a quantity of symbols included in one slot, where for example, H=14, indicating that one slot includes 14 symbols, or for example, H=12, indicating that one slot includes 12 symbols.

In a possible implementation, when the fourth information includes $\text{SFN}_{\text{start time}}$ and $Q_{\text{start time}}$, the processor 1301 determines the information about the start time of the $P^{th}$ first timer by using the following formula 3.6:

$$[(\text{SFN} \times 10) + Q] = F\{[(\text{SFN}_{\text{start time}} \times 10 + Q_{\text{start time}}) + N \times T_{\text{DRX}}] \bmod (1024 \times 10)\}$$

$$\text{(formula 3.6)}.$$

In another possible implementation, when the fourth information includes $\text{SFN}_{\text{start time}}$, $Q_{\text{start time}}$, and $G_{\text{start time}}$, the processor 1301 determines the information about the start time of the $P^{th}$ first timer by using the following formula 3.7:

$$[((SFN \times 10) + Q) \times N_{slot}^{subframe,\mu} + G] = F\{[((SFN_{start\ time} \times 10 + Q_{start\ time}) \times N_{slot}^{subframe,\mu}$$

$$+ G_{start\ time}) + N \times T_{DRX} \times N_{slot}^{subframe,\mu}] \bmod (1024 \times 10 \times N_{slot}^{subframe,\mu})\} \text{ (formula 3.7)}.$$

In another possible implementation, when the fourth information includes SFN$_{start\ time}$ and A$_{start\ time}$, the processor 1301 determines the information about the start time of the P$^{th}$ first timer by using the following formula 3.8:

$$[(SFN \times N_{slot}^{frame,\mu}) + A] = F\{[(SFN_{start\ time} \times N_{slot}^{frame,\mu} + A_{start\ time}) + N \times T_{DRX} \times N_{slot}^{frame,\mu}$$

$$/10] \bmod (1024 \times N_{slot}^{frame,\mu})\} \text{ (formula 3.8)}.$$

In another possible implementation, when the fourth information includes SFN$_{start\ time}$, Q$_{start\ time}$, G$_{start\ time}$, and B$_{start\ time}$, the processor 1301 determines the information about the start time of the P$^{th}$ first timer by using the following formula 3.9:

$$[(((SFN \times 10) + Q) \times N_{slot}^{subframe,\mu} + G) \times H + B] = F\{[((SFN_{start\ time} \times 10 + Q_{start\ time}) \times$$

$$N_{slot}^{subframe,\mu} + G_{start\ time}) \times H + B_{start\ time} + N \times T_{DRX} \times N_{slot}^{subframe,\mu} \times H] \bmod (1024 \times 10 \times$$

$$N_{slot}^{subframe,\mu} \times H)\} \text{ (formula 3.9)}.$$

In another possible implementation, when the fourth information includes SFN$_{start\ time}$, A$_{start\ time}$, and B$_{start\ time}$, the processor 1301 determines the information about the start time of the P$^{th}$ first timer by using the following formula 3.10:

$$[((SFN \times N_{slot}^{frame,\mu}) + A) \times H + B] = F\{[((SFN_{start\ time} \times N_{slot}^{frame,\mu} + A_{start\ time}) \times H + B_{start}$$

$$_{time}) + N \times T_{DRX} \times N_{slot}^{frame,\mu} \times H/10] \bmod (1024 \times N_{slot}^{frame,\mu} \times H)\} \text{ (formula 3.10)}.$$

In another possible implementation, when the fourth information includes SFN$_{start\ time}$ and Q$_{start\ time}$, the processor 1301 determines the information about the start time of the P$^{th}$ first timer by using the following formula 3.11:

$$[(SFN \times 10) + Q] = F\{[(SFN_{start\ time} \times 10 + Q_{start\ time}) + N \times T_{DRX}]\} \bmod (1024 \times 10)$$

$$\text{(formula 3.11)}.$$

In another possible implementation, when the fourth information includes SFN$_{start\ time}$, Q$_{start\ time}$, and G$_{start\ time}$, the processor 1301 determines the information about the start time of the P$^{th}$ first timer by using the following formula 3.12:

$$[((SFN \times 10) + Q) \times N_{slot}^{subframe,\mu} + G] = F\{[((SFN_{start\ time} \times 10 + Q_{start\ time}) \times N_{slot}^{subframe,\mu}$$

$$+ G_{start\ time}) + N \times T_{DRX} \times N_{slot}^{subframe,\mu}]\} \bmod (1024 \times 10 \times N_{slot}^{subframe,\mu}) \text{ (formula 3.12)}.$$

In another possible implementation, when the fourth information includes SFN$_{start\ time}$ and A$_{start\ time}$, the processor 1301 determines the information about the start time of the P$^{th}$ first timer by using the following formula 3.13:

$$[(\text{SFN} \times N_{slot}^{frame,\mu}) + A] = F\{[(\text{SFN}_{\text{start time}} \times N_{slot}^{frame,\mu} + A_{\text{start time}}) + N \times T_{\text{DRX}} \times N_{slot}^{frame,\mu}$$

$$/10]\} \bmod (1024 \times N_{slot}^{frame,\mu}) \text{ (formula 3.13)}.$$

In another possible implementation, when the fourth information includes $\text{SFN}_{\text{start time}}$, $Q_{\text{start time}}$, $G_{\text{start time}}$, and $B_{\text{start time}}$, the processor 1301 determines the information about the start time of the $P^{th}$ first timer by using the following formula 3.14:

$$[(((\text{SFN} \times 10) + Q) \times N_{slot}^{subframe,\mu} + G) \times H + B] = F\{[(((\text{SFN}_{\text{start time}} \times 10 + Q_{\text{start time}}) \times$$

$$N_{slot}^{subframe,\mu} + G_{\text{start time}}) \times H + B_{\text{start time}} + N \times T_{\text{DRX}} \times N_{slot}^{subframe,\mu} \times H]\} \bmod (1024 \times 10 \times$$

$$N_{slot}^{subframe,\mu} \times H) \text{ (formula 3.14)}.$$

In another possible implementation, when the fourth information includes $\text{SFN}_{\text{start time}}$, $A_{\text{start time}}$, and $B_{\text{start time}}$, the processor 1301 determines the information about the start time of the $P^{th}$ first timer by using the following formula 3.15:

$$[((\text{SFN} \times N_{slot}^{frame,\mu}) + A) \times H + B] = F\{[(((\text{SFN}_{\text{start time}} \times N_{slot}^{frame,\mu} + A_{\text{start time}}) \times H + B_{\text{start}}$$

$$\text{time}) + N \times T_{\text{DRX}} \times N_{slot}^{frame,\mu} \times H/10]\} \bmod (1024 \times N_{slot}^{frame,\mu} \times H) \text{ (formula 3.15)}.$$

In the formula 3.6, formula 3.7, formula 3.8, formula 3.9, formula 3.10, formula 3.11, formula 3.12, formula 3.13, formula 3.14, and formula 3.15, F{} may represent a rounding operation. For example, F{} may be a rounding down operation, for example, a floor() function; may be a rounding up operation, for example, a ceil() function; or may be a rounding off operation, for example, a round() function. For meanings of other parameters, refer to the related descriptions corresponding to the formula 3.1, formula 3.2, formula 3.3, formula 3.4, and formula 3.5. Details are not described herein again.

In a possible implementation, when the fourth information includes $\text{SFN}_{\text{start time}}$, $Q_{\text{start time}}$, and $R_{\text{start time}}$, the processor 1301 determines the information about the start time of the $P^{th}$ first timer by using the following formula 3.16:

$$[(\text{SFN} \times 10) + Q + R] = [(\text{SFN}_{\text{start time}} \times 10 + Q_{\text{start time}} + R_{\text{start time}}) + N \times \text{TDRX}] \bmod (1024 \times 10) \quad \text{(formula 3.16)},$$

where R is the start time of the $P^{th}$ first timer duration and less than duration corresponding to one subframe, and $R_{\text{start time}}$ is the start time of the $M^{th}$ first timer duration and less than the duration corresponding to the subframe.

In another possible implementation, when the fourth information includes $\text{SFN}_{\text{start time}}$, $Q_{\text{start time}}$, $G_{\text{start time}}$, and $R_{\text{start time}}$, the processor 1301 determines the information about the start time of the $P^{th}$ first timer by using the following formula 3.17:

$$[((\text{SFN} \times 10) + Q) \times N_{slot}^{subframe,\mu} + G + R] = [(((\text{SFN}_{\text{start time}} \times 10 + Q_{\text{start time}}) \times$$

$$N_{slot}^{subframe,\mu} + G_{\text{start time}}) + R_{\text{start time}} + N \times T_{\text{DRX}} \times N_{slot}^{subframe,\mu}] \bmod (1024 \times 10 \times N_{slot}^{subframe,\mu})$$

$$\text{(formula 3.17)},$$

where R is the start time of the $P^{th}$ first timer duration and less than duration corresponding to one slot, and $R_{\text{start time}}$ is the start time of the $M^{th}$ first timer duration and less than the duration corresponding to the slot.

In another possible implementation, when the fourth information includes $\text{SFN}_{\text{start time}}$, $A_{\text{start time}}$, and $R_{\text{start time}}$, the processor 1301 determines the information about the start time of the $P^{th}$ first timer by using the following formula 3.18:

$$[(\text{SFN} \times N_{slot}^{frame,\mu}) + A + R] = [(\text{SFN}_{\text{start time}} \times N_{slot}^{frame,\mu} + A_{\text{start time}}) + R_{\text{start time}} + N \times T_{\text{DRX}}$$

$$\times N_{slot}^{frame,\mu}/10] \bmod (1024 \times N_{slot}^{frame,\mu}) \text{ (formula 3.18)},$$

where R is the start time of the P$^{\text{th}}$ first timer duration and less than duration corresponding to one slot, and R$_{\text{start time}}$ is the start time of the M$^{\text{th}}$ first timer duration and less than the duration corresponding to the slot.

In another possible implementation, when the fourth information includes SFN$_{\text{start time}}$, Q$_{\text{start time}}$, G$_{\text{start time}}$, B$_{\text{start time}}$, and R$_{\text{start time}}$, the processor 1301 determines the information about the start time of the P$^{\text{th}}$ first timer by using the following formula 3.19:

$$[(((\text{SFN} \times 10) + Q) \times N_{slot}^{subframe,\mu} + G) \times H + B + R] = [((\text{SFN}_{\text{start time}} \times 10 + Q_{\text{start time}})$$

$$\times N_{slot}^{subframe,\mu} + G_{\text{start time}}) \times H + B_{\text{start time}} + R_{\text{start time}} + N \times T_{\text{DRX}} \times N_{slot}^{subframe,\mu} \times H] \bmod (1024 \times$$

$$10 \times N_{slot}^{subframe,\mu} \times H) \text{ (formula 3.19)},$$

where R is the start time of the P$^{\text{th}}$ first timer duration and less than duration corresponding to one symbol, and R$_{\text{start time}}$ is the start time of the M$^{\text{th}}$ first timer duration and less than the duration corresponding to the symbol.

In another possible implementation, when the fourth information includes SFN$_{\text{start time}}$, A$_{\text{start time}}$, B$_{\text{start time}}$, and R$_{\text{start time}}$, the processor 1301 determines the information about the start time of the P$^{\text{th}}$ first timer by using the following formula 3.20:

$$[((\text{SFN} \times N_{slot}^{frame,\mu}) + A) \times H + B + R] = [((\text{SFN}_{\text{start time}} \times N_{slot}^{frame,\mu} + A_{\text{start time}}) \times H +$$

$$B_{\text{start time}}) + R_{\text{start time}} + N \times T_{\text{DRX}} \times N_{slot}^{frame,\mu} \times H/10] \bmod (1024 \times N_{slot}^{frame,\mu} \times H) \text{ (formula 3.20)},$$

where R is the start time of the P$^{\text{th}}$ first timer duration and less than duration corresponding to one symbol, and R$_{\text{start time}}$ is the start time of the M$^{\text{th}}$ first timer duration and less than the duration corresponding to the symbol.

For meanings of parameters in the formula 3.16, formula 3.17, formula 3.18, formula 3.19, and formula 3.20, refer to the related descriptions corresponding to the formula 3.1, formula 3.2, formula 3.3, formula 3.4, and formula 3.5. Details are not described herein again.

In a possible implementation, the communication apparatus further includes a transceiver 1303. The transceiver 1303 is configured to receive second indication information from the network device. The second indication information indicates information about a reference frame, and the information about the reference frame is used to determine information about a start time of a first timer.

Optionally, a frame number of the reference frame is 512 or 0.

In a possible implementation, the processor 1301 is specifically configured to determine the information about the start time of the P$^{\text{th}}$ first timer based on the fourth information, the information about the reference frame, and the first cycle. The first cycle is equal to the accumulative sum of the (P - M) DRX cycles.

In a possible implementation, the processor 1301 determines the start time of the P$^{\text{th}}$ first timer based on the following condition: A remainder obtained by dividing a sum of the accumulative sum of the (P - M) DRX cycles, a fourth quantity, and a first quantity by a second quantity is equal to a third quantity.

The first quantity is a quantity of time-domain units between a start position of a hyper system frame in which the M$^{\text{th}}$ first timer is located and the start time of the M$^{\text{th}}$ first timer. The second quantity is a quantity of time-domain units included in one hyper system frame. The third quantity is a quantity of time-domain units between a start position of a hyper system frame in which the P$^{\text{th}}$ first timer is located and the start time of the P$^{\text{th}}$ first timer. The fourth quantity is a quantity of time-domain units between a start position of a hyper system frame including a frame indicated by third indication information and the frame indicated by the third indication information.

In a possible implementation, the processor 1301 is specifically configured to: determine a fourth quantity based on the information about the reference frame; determine a first quantity and a second quantity based on the fourth information; determine a remainder by dividing a sum of the first quantity, the fourth quantity, and the accumulative sum of the (P - M) DRX cycles by the second quantity, to obtain a third quantity; and determine, based on the third quantity, the information related to the start time of the first timer in the $P^{th}$ DRX cycle.

In a possible implementation, when the fourth information includes a frame number $SFN_{start\ time}$ of a frame including a start time-domain unit and a subframe number $Q_{start\ time}$ of the start time-domain unit, that the processor 1301 determines the information about the start time of the $P^{th}$ first timer based on the fourth information and the information about the reference frame satisfies the following formula 4.1:

$$[(SFN \times 10) + Q] = [(SFN_{reference} \times 10) + (SFN_{start\ time} \times 10 + Q_{start\ time}) + N \times T_{DRX}] \bmod (D \times 10) \quad \text{(formula 4.1)},$$

where $SFN_{reference}$ is a frame number of a reference frame indicated by the second indication information; SFN is a frame number of the start time of the $P^{th}$ first timer; Q is a subframe number of the start time of the $P^{th}$ first timer; $SFN_{start\ time}$ is a frame number of the start time of the $M^{th}$ first timer; $Q_{start\ time}$ is a subframe number of the start time of the $M^{th}$ first timer; $N \times T_{DRX}$ is the first cycle, where a unit of the first cycle is a subframe; $T_{DRX}$ indicates duration of one DRX cycle, where optionally, the DRX cycle is a long DRX cycle (drx-LongCycle); and D is a quantity of frames included in one hyper system frame, where for example, D=1024, indicating that the hyper system frame includes 1024 frames.

In another possible implementation, when the fourth information includes a frame number $SFN_{start\ time}$ of a frame including the start time-domain unit, a subframe number $Q_{start\ time}$ of a subframe including the start time-domain unit, and a slot number $G_{start\ time}$ of the time-domain unit, that the processor 1301 determines the information about the start time of the $P^{th}$ first timer based on the fourth information and the information about the reference frame satisfies the following formula 4.2:

$$[((SFN \times 10) + Q) \times N_{slot}^{subframe,\mu} + G] = [((SFN_{reference} \times 10) + (SFN_{start\ time} \times 10 + Q_{start}$$

$$_{time})) \times N_{slot}^{subframe,\mu} + G_{start\ time} + N \times T_{DRX} \times N_{slot}^{subframe,\mu}] \bmod (D \times 10 \times N_{slot}^{subframe,\mu}) \text{ (formula 4.2)},$$

where $SFN_{reference}$ is a frame number of the reference frame indicated by the second indication information; SFN is a frame number of the start time of the $P^{th}$ first timer; Q is a subframe number of the start time of the $P^{th}$ first timer; G is an index of a slot corresponding to the start time of the $P^{th}$ first timer in a subframe; $SFN_{start\ time}$ is a frame number of the start time of the $M^{th}$ first timer; $Q_{start\ time}$ is a subframe number of the start time of the $M^{th}$ first timer; $G_{start\ time}$ is an index of a slot corresponding to the start time of the $M^{th}$ first timer in a subframe; $N_{slot}^{subframe,\mu}$ is a quantity of slots included in one subframe; $N \times T_{DRX}$ is the first cycle, where a unit of the first cycle is a subframe; $T_{DRX}$ indicates duration of one DRX cycle, where optionally, the DRX cycle is a long DRX cycle (drx-LongCycle); and D is a quantity of frames included in one hyper system frame, where for example, D=1024, indicating that the hyper system frame includes 1024 frames.

In another possible implementation, when the fourth information includes a frame number $SFN_{start\ time}$ of a frame including the start time-domain unit and a slot number $A_{start\ time}$ of the time-domain unit, that the processor 1301 determines the information about the start time of the $P^{th}$ first timer based on the fourth information and the information about the reference frame satisfies the following formula 4.3:

$$[(SFN \times N_{slot}^{frame,\mu}) + A] = [(SFN_{reference} \times N_{slot}^{frame,\mu}) + (SFN_{start\ time} \times N_{slot}^{frame,\mu} + A_{start\ time})$$

$$+ N \times T_{DRX} \times N_{slot}^{frame,\mu}/10] \bmod (D \times N_{slot}^{frame,\mu}) \text{ (formula 4.3)},$$

where $SFN_{reference}$ is a frame number of a reference frame indicated by the second indication information; SFN is a frame number of the start time of the $P^{th}$ first timer; Q is a subframe number of the start time of the $P^{th}$ first timer; A is an index of a slot corresponding to the start time of the $P^{th}$ first timer in a system frame; $SFN_{start\ time}$ is a frame number of the start time of the $M^{th}$ first timer; $Q_{start\ time}$ is a subframe number of the start time of the $M^{th}$ first timer; $A_{start\ time}$ is an index of a slot corresponding to the start time of the $M^{th}$ first timer in a system frame; $N_{slot}^{subframe,\mu}$ is a quantity of slots included in one subframe; $N \times T_{DRX}$ is the first cycle, where a unit of the first cycle is a subframe; $T_{DRX}$ indicates duration of one DRX cycle, where optionally, the DRX cycle is a long DRX cycle (drx-LongCycle); and D is a quantity of frames included in one hyper system frame, where for example, D=1024, indicating that the hyper system frame includes 1024 frames.

In another possible implementation, when the fourth information includes a frame number $SFN_{start\ time}$ of a frame including the start time-domain unit, a subframe number $Q_{start\ time}$ of a subframe including the start time-domain unit, a slot

number $G_{\text{start time}}$ of a slot including the time-domain unit, and a symbol number (or a symbol index) $B_{\text{start time}}$ of the time-domain unit, that the processor 1301 determines the information about the start time of the $P^{\text{th}}$ first timer based on the fourth information and the information about the reference frame satisfies the following formula 4.4:

$$[(((SFN \times 10) + Q) \times N_{slot}^{subframe,\mu} + G) \times H + B] = [(((SFN_{\text{reference}} \times 10 + SFN_{\text{start time}} \times 10 + Q_{\text{start time}}) \times N_{slot}^{subframe,\mu} + G_{\text{start time}}) \times H + B_{\text{start time}} + N \times T_{\text{DRX}} \times N_{slot}^{subframe,\mu} \times H] \bmod (D \times 10 \times N_{slot}^{subframe,\mu} \times H) \text{ (formula 4.4)},$$

where $SFN_{\text{reference}}$ is a frame number of the reference frame indicated by the second indication information; SFN is a frame number of the start time of the $P^{\text{th}}$ first timer; Q is a subframe number of the start time of the $P^{\text{th}}$ first timer; G is an index of a slot corresponding to the start time of the $P^{\text{th}}$ first timer in a subframe; B is a symbol number of the start time of the $P^{\text{th}}$ first timer; $SFN_{\text{start time}}$ is a frame number of the start time of the $M^{\text{th}}$ first timer; $Q_{\text{start time}}$ is a subframe number of the start time of the $M^{\text{th}}$ first timer; $G_{\text{start time}}$ is an index of a slot corresponding to the start time of the $M^{\text{th}}$ first timer in a subframe; $B_{\text{start time}}$ is a symbol number of the start time of the $M^{\text{th}}$ first timer; $N_{slot}^{subframe,\mu}$ is a quantity of slots included in one subframe; $N_{slot}^{frame,\mu}$ is a quantity of slots included in one frame; $N \times T_{\text{DRX}}$ is the first cycle, where a unit of the first cycle is a subframe; $T_{\text{DRX}}$ indicates duration of one DRX cycle, where optionally, the DRX cycle is a long DRX cycle (drx-LongCycle); D is a quantity of frames included in one hyper system frame, where for example, D=1024, indicating that the hyper system frame includes 1024 frames; and H is a quantity of symbols included in one slot, where for example, H=14, indicating that one slot includes 14 symbols, or for example, H=12, indicating that one slot includes 12 symbols.

In another possible implementation, when the fourth information includes a frame number $SFN_{\text{start time}}$ of a frame including the start time-domain unit, a slot number $A_{\text{start time}}$ of a slot including the time-domain unit, and a symbol number (or a symbol index) $B_{\text{start time}}$ of the time-domain unit, that the processor 1301 determines the information about the start time of the $P^{\text{th}}$ first timer based on the fourth information and the information about the reference frame satisfies the following formula 4.5:

$$[((SFN \times N_{slot}^{frame,\mu}) + A) \times H + B] = [(((SFN_{\text{reference}} \times N_{slot}^{frame,\mu}) + SFN_{\text{start time}} \times N_{slot}^{frame,\mu} + A_{\text{start time}}) \times H + B_{\text{start time}}) + N \times T_{\text{DRX}} \times N_{slot}^{frame,\mu} \times H/10] \bmod (D \times N_{slot}^{frame,\mu} \times H) \text{ (formula 4.5)},$$

where $SFN_{\text{reference}}$ is a frame number of a reference frame indicated by the second indication information; SFN is a frame number of the start time of the $P^{\text{th}}$ first timer; Q is a subframe number of the start time of the $P^{\text{th}}$ first timer; A is an index of a slot corresponding to the start time of the $P^{\text{th}}$ first timer in a system frame; B is a symbol number of the start time of the $P^{\text{th}}$ first timer; $SFN_{\text{start time}}$ is a frame number of the start time of the $M^{\text{th}}$ first timer; $Q_{\text{start time}}$ is a subframe number of the start time of the $M^{\text{th}}$ first timer; $A_{\text{start time}}$ is an index of a slot corresponding to the start time of the $M^{\text{th}}$ first timer in a system frame; $B_{\text{start time}}$ is a symbol number of the start time of the $M^{\text{th}}$ first timer; $N_{slot}^{subframe,\mu}$ is a quantity of slots included in one subframe; $N_{slot}^{frame,\mu}$ is a quantity of slots included in one frame; $N \times T_{\text{DRX}}$ is the first cycle, where a unit of the first cycle is a subframe; $T_{\text{DRX}}$ indicates duration of one DRX cycle, where optionally, the DRX cycle is a long DRX cycle (drx-LongCycle); D is a quantity of frames included in one hyper system frame, where for example, D=1024, indicating that the hyper system frame includes 1024 frames; and H is a quantity of symbols included in one slot, where for example, H=14, indicating that one slot includes 14 symbols, or for example, H=12, indicating that one slot includes 12 symbols.

In a possible implementation, when the fourth information includes $SFN_{\text{start time}}$ and $Q_{\text{start time}}$, the processor 1301 determines the information about the start time of the $P^{\text{th}}$ first timer by using the following formula 4.6:

$$[(SFN \times 10) + Q] = F\{[(SFN_{\text{reference}} \times 10) + (SFN_{\text{start time}} \times 10 + Q_{\text{start time}}) + N \times T_{\text{DRX}}] \bmod (1024 \times 10)\} \quad \text{(formula 4.6)}.$$

In another possible implementation, when the fourth information includes $SFN_{\text{start time}}$, $Q_{\text{start time}}$, and $G_{\text{start time}}$,

the processor 1301 determines the information about the start time of the $P^{th}$ first timer by using the following formula 4.7:

$$[((SFN \times 10) + Q) \times N_{slot}^{subframe,\mu} + G] = F\{[((SFN_{reference} \times 10) + (SFN_{start\ time} \times 10 +$$

$$Q_{start\ time})) \times N_{slot}^{subframe,\mu} + G_{start\ time} + N \times T_{DRX} \times N_{slot}^{subframe,\mu}] \bmod (1024 \times 10 \times N_{slot}^{subframe,\mu})\}$$

(formula 4.7).

In another possible implementation, when the fourth information includes $SFN_{start\ time}$ and $A_{start\ time}$, the processor 1301 determines the information about the start time of the $P^{th}$ first timer by using the following formula 4.8:

$$[(SFN \times N_{slot}^{frame,\mu}) + A] = F\{[(SFN_{reference} \times N_{slot}^{frame,\mu}) + (SFN_{start\ time} \times N_{slot}^{frame,\mu} + A_{start}$$

$$_{time}) + N \times T_{DRX} \times N_{slot}^{frame,\mu}/10] \bmod (1024 \times N_{slot}^{frame,\mu})\} \text{ (formula 4.8).}$$

In another possible implementation, when the fourth information includes $SFN_{start\ time}$, $Q_{start\ time}$, $G_{start\ time}$, and $B_{start\ time}$, the processor 1301 determines the information about the start time of the $P^{th}$ first timer by using the following formula 4.9:

$$[(((SFN \times 10) + Q) \times N_{slot}^{subframe,\mu} + G) \times H + B] = F\{[((SFN_{reference} \times 10 + SFN_{start\ time}$$

$$\times 10 + Q_{start\ time}) \times N_{slot}^{subframe,\mu} + G_{start\ time}) \times H + B_{start\ time} + N \times T_{DRX} \times N_{slot}^{subframe,\mu} \times H] \bmod$$

$$(1024 \times 10 \times N_{slot}^{subframe,\mu} \times H)\} \text{ (formula 4.9).}$$

In another possible implementation, when the fourth information includes $SFN_{start\ time}$, $A_{start\ time}$, and $B_{start\ time}$, the processor 1301 determines the information about the start time of the $P^{th}$ first timer by using the following formula 4.10:

$$[((SFN \times N_{slot}^{frame,\mu}) + A) \times H + B] = F\{[((SFN_{reference} \times N_{slot}^{frame,\mu} + SFN_{start\ time} \times N_{slot}^{frame,\mu}$$

$$+ A_{start\ time}) \times H + B_{start\ time}) + N \times T_{DRX} \times N_{slot}^{frame,\mu} \times H/10] \bmod (1024 \times N_{slot}^{frame,\mu} \times H)\} \text{ (formula}$$

4.10).

In another possible implementation, when the fourth information includes $SFN_{start\ time}$ and $Q_{start\ time}$, the processor 1301 determines the information about the start time of the $P^{th}$ first timer by using the following formula 4.11:

$[(SFN \times 10) + Q] = F\{[(SFN_{reference} \times 10) + (SFN_{start\ time} \times 10 + Q_{start\ time}) + N \times T_{DRX}]\} \bmod$ $(1024 \times 10)$   (formula 4.11).

In another possible implementation, when the fourth information includes $SFN_{start\ time}$, $Q_{start\ time}$, and $G_{start\ time}$, the processor 1301 determines the information about the start time of the $P^{th}$ first timer by using the following formula 4.12:

$$[((SFN \times 10) + Q) \times N_{slot}^{subframe,\mu} + G] = F\{[((SFN_{reference} \times 10) + (SFN_{start\ time} \times 10 +$$

$$Q_{start\ time})) \times N_{slot}^{subframe,\mu} + G_{start\ time} + N \times T_{DRX} \times N_{slot}^{subframe,\mu}]\} \bmod (1024 \times 10 \times N_{slot}^{subframe,\mu})$$

(formula 4.12).

In another possible implementation, when the fourth information includes $SFN_{start\ time}$ and $A_{start\ time}$, the processor 1301 determines the information about the start time of the $P^{th}$ first timer by using the following formula 4.13:

$$[(SFN \times N_{slot}^{frame,\mu}) + A] = F\{[(SFN_{reference} \times N_{slot}^{frame,\mu}) + (SFN_{start\ time} \times N_{slot}^{frame,\mu} + A_{start}$$

$$_{time}) + N \times T_{DRX} \times N_{slot}^{frame,\mu}/10]\} \mod (1024 \times N_{slot}^{frame,\mu})\ (formula\ 4.13).$$

In another possible implementation, when the fourth information includes $SFN_{start\ time}$, $Q_{start\ time}$, $G_{start\ time}$, and $B_{start\ time}$, the processor 1301 determines the information about the start time of the $P^{th}$ first timer by using the following formula 4.14:

$$[(((SFN \times 10) + Q) \times N_{slot}^{subframe,\mu} + G) \times H + B] = F\{[((SFN_{reference} \times 10 + SFN_{start\ time}$$

$$\times 10 + Q_{start\ time}) \times N_{slot}^{subframe,\mu} + G_{start\ time}) \times H + B_{start\ time} + N \times T_{DRX} \times N_{slot}^{subframe,\mu} \times H]\} \mod$$

$$(1024 \times 10 \times N_{slot}^{subframe,\mu} \times H)\ (formula\ 4.14).$$

In another possible implementation, when the fourth information includes $SFN_{start\ time}$, $A_{start\ time}$, and $B_{start\ time}$, the processor 1301 determines the information about the start time of the $P^{th}$ first timer by using the following formula 4.15:

$$[((SFN \times N_{slot}^{frame,\mu}) + A) \times H + B] = F\{[((SFN_{reference} \times N_{slot}^{frame,\mu} + SFN_{start\ time} \times N_{slot}^{frame,\mu}$$

$$+ A_{start\ time}) \times H + B_{start\ time}) + N \times T_{DRX} \times N_{slot}^{frame,\mu} \times H/10]\} \mod (1024 \times N_{slot}^{frame,\mu} \times H)\ (formula$$

$$4.15).$$

In the formula 4.6, formula 4.7, formula 4.8, formula 4.9, formula 4.10, formula 4.11, formula 4.12, formula 4.14, formula 4.14, and formula 4.15, F{ } may represent a rounding operation. For example, F{} may be a rounding down operation, for example, a floor() function; may be a rounding up operation, for example, a ceil() function; or may be a rounding off operation, for example, a round() function. For meanings of other parameters, refer to the related descriptions corresponding to the formula 4.1, formula 4.2, formula 4.4, formula 4.4, and formula 4.5. Details are not described herein again.

In a possible implementation, when the fourth information includes $SFN_{start\ time}$, $Q_{start\ time}$, and $R_{start\ time}$, the processor 1301 determines the information about the start time of the $P^{th}$ first timer by using the following formula 4.16:

$$[(SFN \times 10) + Q + R] = [(SFN_{reference} \times 10) + (SFN_{start\ time} \times 10 + Q_{start\ time}) + R_{start\ time} + N \times T_{DRX}] \mod (1024 \times 10)\ \text{(formula 4.16)},$$

where R is the start time of the $P^{th}$ first timer duration and less than duration corresponding to one subframe, and $R_{start\ time}$ is the start time of the $M^{th}$ first timer duration and less than the duration corresponding to the subframe.

In another possible implementation, when the fourth information includes $SFN_{start\ time}$, $Q_{start\ time}$, $G_{start\ time}$, and $R_{start\ time}$, the processor 1301 determines the information about the start time of the $P^{th}$ first timer by using the following formula 4.17:

$$[((SFN \times 10) + Q) \times N_{slot}^{subframe,\mu} + G + R] = [((SFN_{reference} \times 10) + (SFN_{start\ time} \times 10 +$$

$$Q_{start\ time})) \times N_{slot}^{subframe,\mu} + G_{start\ time} + R_{start\ time} + N \times T_{DRX} \times N_{slot}^{subframe,\mu}] \mod (1024 \times 10 \times$$

$$N_{slot}^{subframe,\mu})\ (formula\ 4.17),$$

where R is the start time of the $P^{th}$ first timer duration and less than duration corresponding to one slot, and $R_{start\ time}$ is the start time of the $M^{th}$ first timer duration and less than the duration corresponding to the slot.

In another possible implementation, when the fourth information includes $SFN_{\text{start time}}$, $A_{\text{start time}}$, and $R_{\text{start time}}$, the processor 1301 determines the information about the start time of the $P^{th}$ first timer by using the following formula 4.18:

$$[(SFN \times N_{slot}^{frame,\mu}) + A + R] = [(SFN_{\text{reference}} \times N_{slot}^{frame,\mu}) + (SFN_{\text{start time}} \times N_{slot}^{frame,\mu} + A_{\text{start}}$$

$$_{\text{time}}) + R_{\text{start time}} + N \times T_{DRX} \times N_{slot}^{frame,\mu}/10] \bmod (1024 \times N_{slot}^{frame,\mu}) \text{ (formula 4.18)},$$

where R is the start time of the $P^{th}$ first timer duration and less than duration corresponding to one slot, and $R_{\text{start time}}$ is the start time of the $M^{th}$ first timer duration and less than the duration corresponding to the slot.

In another possible implementation, when the fourth information includes $SFN_{\text{start time}}$, $Q_{\text{start time}}$, $G_{\text{start time}}$, $B_{\text{start time}}$, and $R_{\text{start time}}$, the processor 1301 determines the information about the start time of the $P^{th}$ first timer by using the following formula 4.19:

$$[(((SFN \times 10) + Q) \times N_{slot}^{subframe,\mu} + G) \times H + B + R] = [((SFN_{\text{reference}} \times 10 + SFN_{\text{start}}$$

$$_{\text{time}} \times 10 + Q_{\text{start time}}) \times N_{slot}^{subframe,\mu} + G_{\text{start time}}) \times H + B_{\text{start time}} + R_{\text{start time}} + N \times T_{DRX} \times N_{slot}^{subframe,\mu}$$

$$\times H] \bmod (1024 \times 10 \times N_{slot}^{subframe,\mu} \times H) \text{ (formula 4.19)},$$

where R is the start time of the $P^{th}$ first timer duration and less than duration corresponding to one symbol, and $R_{\text{start time}}$ is the start time of the $M^{th}$ first timer duration and less than the duration corresponding to the symbol.

In another possible implementation, when the fourth information includes $SFN_{\text{start time}}$, $A_{\text{start time}}$, $B_{\text{start time}}$, and $R_{\text{start time}}$, the processor 1301 determines the information about the start time of the $P^{th}$ first timer by using the following formula 4.20:

$$[((SFN \times N_{slot}^{frame,\mu}) + A) \times H + B + R] = [((SFN_{\text{reference}} \times N_{slot}^{frame,\mu} + SFN_{\text{start time}} \times$$

$$N_{slot}^{frame,\mu} + A_{\text{start time}}) \times H + B_{\text{start time}}) + R_{\text{start time}} + N \times T_{DRX} \times N_{slot}^{frame,\mu} \times H/10] \bmod (1024 \times N_{slot}^{frame,\mu}$$

$$\times H) \text{ (formula 4.20)},$$

where R is the start time of the $P^{th}$ first timer duration and less than duration corresponding to one symbol, and $R_{\text{start time}}$ is the start time of the $M^{th}$ first timer duration and less than the duration corresponding to the symbol.

For meanings of parameters in the formula 4.16, formula 4.17, formula 4.18, formula 4.19, and formula 4.20, refer to the related descriptions corresponding to the formula 4.1, formula 4.2, formula 4.4, formula 4.4, and formula 4.5. Details are not described herein again.

It should be noted that for specific implementations and beneficial effects of this embodiment, refer to the method of the terminal device in the foregoing embodiments. Details are not described herein again.

In an implementation process, the steps in the foregoing method can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor. To avoid repetition, details are not described herein again.

In addition, this application provides a computer program product. The computer program product includes one or more computer instructions. When the computer program instructions are loaded and executed on a computer, all or a part of the procedures or functions according to embodiments of this application are generated. For example, the method related to the network device in FIG. 2, FIG. 3, FIG. 5, FIG. 6, FIG. 9, or FIG. 10 is implemented. For another example, the method related to the terminal device in FIG. 2, FIG. 3, FIG. 5, FIG. 6, FIG. 9, or FIG. 10 is implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to the computer, or a data storage device, such as a server or a data center, integrating one or more usable media. The usable medium may be a magnetic medium (for example, a floppy disk, a hard disk drive, or a magnetic tape), an optical medium (for example, a digital versatile disc (digital versatile disc, DVD)), a semiconductor medium (for example, a solid-state drive (solid state disk, SSD)), or the like.

In addition, this application further provides a computer-readable storage medium. The storage medium stores a computer program. The computer program is executed by a processor to implement the method related to the network device in FIG. 2, FIG. 3, FIG. 5, FIG. 6, FIG. 9, or FIG. 10.

In addition, this application further provides a computer-readable storage medium. The storage medium stores a computer program. The computer program is executed by a processor to implement the method related to the terminal device in FIG. 2, FIG. 3, FIG. 5, FIG. 6, FIG. 9, or FIG. 10.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application. In addition, the foregoing method embodiments may be implemented separately, or may be implemented in combination. Mutual reference may be made to terms and related technologies involved in the embodiments. In other words, the technical solutions that do not conflict with each other or logically do not conflict with each other in different embodiments may be combined with each other. This is not specifically limited in this application.

It may be clearly understood by a person skilled in the art that, for the purpose of convenient and brief description, for detailed working processes of the foregoing system, apparatus, and unit, refer to corresponding processes in the foregoing method embodiments. Details are not described herein again.

**Claims**

1. A communication method, comprising:

   obtaining, by a terminal device, first information, wherein the first information is different from second information, the first information is used to determine a start time of a first timer in a first hyper system frame, and the second information is used to determine a start time of a first timer in a second hyper system frame; and
   determining, by the terminal device based on the first information, the start time of the first timer in the first hyper system frame.

2. The method according to claim 1, wherein the first information and the second information are different values of a same parameter.

3. The method according to claim 1 or 2, wherein in a hyper system frame cycle, the first hyper system frame and the second hyper system frame satisfy the following condition:
   the first hyper system frame is adjacent to the second hyper system frame, or the first hyper system frame and the second hyper system frame are spaced by at least one hyper system frame, wherein the hyper system frame cycle comprises at least two hyper system frames.

4. The method according to any one of claims 1 to 3, wherein the obtaining, by a terminal device, first information comprises:

   determining, by the terminal device, the first information based on third information, wherein
   the third information is determined by the terminal device based on an index of the first hyper system frame, or the third information is from a network device.

5. The method according to claim 4, wherein the third information is determined by the terminal device based on N and the index of the first hyper system frame, N is a quantity of hyper system frames comprised in the hyper system frame cycle, and N is an integer greater than 1.

6. The method according to claim 5, wherein the third information $C_1$, the index $S_1$ of the first hyper system frame, and N satisfy the following condition: $C_1 = S_1 \bmod N$.

7. The method according to any one of claims 3 to 6, wherein the hyper system frame cycle satisfies the following condition: the hyper system frame cycle is equal to an integer multiple of a discontinuous reception DRX cycle corresponding to the first timer.

8. The method according to any one of claims 1 to 7, wherein the determining, by the terminal device based on the first information, the start time of the first timer in the first hyper system frame comprises:
determining, by the terminal device based on the first information and a first parameter, the start time of the first timer in the first hyper system frame, wherein the first parameter is drx-StartOffset.

9. The method according to any one of claims 1 to 7, wherein
the determining, by the terminal device based on the first information, the start time of the first timer in the first hyper system frame comprises:

   determining, by the terminal device based on a second parameter and the first information, the start time of the first timer in the first hyper system frame; or
   determining, by the terminal device, a first reference value based on a second parameter, and determining, by the terminal device based on the first reference value and the first information, the start time of the first timer in the first hyper system frame, wherein
   the second parameter is drx-SlotOffset.

10. The method according to any one of claims 1 to 7, wherein the first information is drx-StartOffset or drx-SlotOffset.

11. The method according to any one of claims 1 to 10, wherein the method further comprises:
determining, by the terminal device, the index of the first hyper system frame based on one of the following:

   determining, by the terminal device, the index of the first hyper system frame based on first indication information; or
   determining, by the terminal device, the index of the first hyper system frame based on first indication information and first time information, wherein
   the first indication information is from the network device, and the first time information comprises information about time in which the terminal device obtains a DRX configuration.

12. The method according to claim 11, wherein the first indication information indicates that the network device sends the DRX configuration in a second half of a hyper system frame, or the first indication information indicates that the network device sends the DRX configuration in a first half of a hyper system frame.

13. The method according to any one of claims 1 to 12, wherein the first hyper system frame is a hyper system frame comprising a moment at which the terminal device obtains the DRX configuration.

14. The method according to claim 13, wherein the determining, by the terminal device, the index of the first hyper system frame comprises:

   if the first indication information indicates that the network device sends the DRX configuration in a second half of a hyper system frame, and the moment at which the terminal device obtains the DRX configuration is in a first half of the first hyper system frame, determining, by the terminal device, that the index of the first hyper system frame is L + 1; or
   the moment at which the terminal device obtains the DRX configuration is in a second half of the first hyper system frame, determining, by the terminal device, that the index of the first hyper system frame is L; or
   if the first indication information indicates that the network device sends the DRX configuration in a first half of a hyper system frame, determining, by the terminal device, that the index of the first hyper system frame is L, wherein
   L is greater than or equal to 0.

15. The method according to any one of claims 1 to 14, wherein the first timer is a discontinuous reception on-duration timer.

16. A communication method, comprising:

determining, by a network device, first information, wherein the first information is different from second information, the first information is used to determine a start time of a first timer in a first hyper system frame, and the second information is used to determine a start time of a first timer in a second hyper system frame; and sending, by the network device, the first information to a terminal device.

17. A communication method, comprising:

obtaining, by a terminal device, fourth information, wherein the fourth information comprises information about a start time of an M$^{th}$ first timer, and M is an integer greater than or equal to 0; and determining, by the terminal device, information about a start time of a P$^{th}$ first timer based on the fourth information, wherein P is an integer greater than 0.

18. The method according to claim 17, wherein the information about the start time of the M$^{th}$ first timer comprises information about the following time-domain units:
a frame and a subframe; a frame, a subframe, and a slot; a frame and a slot; a frame, a subframe, a slot, and a symbol; or a frame, a slot, and a symbol.

19. The method according to claim 17 or 18, wherein the determining, by the terminal device, information about a start time of a P$^{th}$ first timer based on the fourth information comprises:
determining, by the terminal device, the information about the start time of the P$^{th}$ first timer based on the fourth information and a first cycle, wherein the first cycle is equal to an accumulative sum of N DRX cycles, and N is equal to P - M.

20. The method according to any one of claims 17 to 19, wherein a value of the DRX cycle is an integer; and

if the information about the start time of the M$^{th}$ first timer comprises a frame and a subframe, the determining, by the terminal device, the information about the start time of the P$^{th}$ first timer based on the fourth information satisfies the following formula:

$$[(\text{SFN} \times 10) + Q] = [(\text{SFN}_{\text{start time}} \times 10 + Q_{\text{start time}}) + N \times T_{\text{DRX}}] \bmod (1024 \times 10);$$

if the information about the start time of the M$^{th}$ first timer comprises a frame, a subframe, and a slot, the determining, by the terminal device, the information about the start time of the P$^{th}$ first timer based on the fourth information satisfies the following formula:

$$[((\text{SFN} \times 10) + Q) \times N_{slot}^{subframe,\mu} + G] = [((\text{SFN}_{\text{start time}} \times 10 + Q_{\text{start time}}) \times N_{slot}^{subframe,\mu} + G_{\text{start time}}) + N \times T_{\text{DRX}} \times N_{slot}^{subframe,\mu}] \bmod (1024 \times 10 \times N_{slot}^{subframe,\mu});$$

if the information about the start time of the M$^{th}$ first timer comprises a frame and a slot, the determining, by the terminal device, the information about the start time of the P$^{th}$ first timer based on the fourth information satisfies the following formula:

$$[(\text{SFN} \times N_{slot}^{frame,\mu}) + A] = [(\text{SFN}_{\text{start time}} \times N_{slot}^{frame,\mu} + A_{\text{start time}}) + N \times T_{\text{DRX}} \times N_{slot}^{frame,\mu}/10] \bmod (1024 \times N_{slot}^{frame,\mu});$$

if the information about the start time of the M$^{th}$ first timer comprises a frame, a subframe, a slot, and a symbol, the determining, by the terminal device, the information about the start time of the P$^{th}$ first timer based on the fourth information satisfies the following formula:

$$[(((SFN \times 10) + Q) \times N_{slot}^{subframe,\mu} + G) \times H + B] = [((SFN_{start\ time} \times 10 + Q_{start\ time}) \times N_{slot}^{subframe,\mu} + G_{start\ time}) \times H + B_{start\ time} + N \times T_{DRX} \times N_{slot}^{subframe,\mu} \times H]\ mod\ (1024 \times 10 \times N_{slot}^{subframe,\mu} \times H);$$

or
if the information about the start time of the $M^{th}$ first timer comprises a frame, a slot, and a symbol, the determining, by the terminal device, the information about the start time of the $P^{th}$ first timer based on the fourth information satisfies the following formula:

$$[((SFN \times N_{slot}^{frame,\mu}) + A) \times H + B] = [((SFN_{start\ time} \times N_{slot}^{frame,\mu} + A_{start\ time}) \times H + B_{start\ time}) + N \times T_{DRX} \times N_{slot}^{frame,\mu} \times H/10]\ mod\ (1024 \times N_{slot}^{frame,\mu} \times H),$$

wherein
SFN is a frame number of the start time of the $P^{th}$ first timer, Q is a subframe number of the start time of the $P^{th}$ first timer, A is an index of a slot corresponding to the start time of the $P^{th}$ first timer in a system frame, B is a symbol number of the start time of the $P^{th}$ first timer, G is an index of the slot corresponding to the start time of the $P^{th}$ first timer in a subframe, $SFN_{start\ time}$ is a frame number of the start time of the $M^{th}$ first timer, $Q_{start\ time}$ is a subframe number of the start time of the $M^{th}$ first timer, $A_{start\ time}$ is an index of a slot corresponding to the start time of the $M^{th}$ first timer in a system frame, $B_{start\ time}$ is a symbol number of the start time of the $M^{th}$ first timer, $G_{start\ time}$ is an index of the slot corresponding to the start time of the $M^{th}$ first timer in a subframe, $N_{slot}^{subframe,\mu}$ is a quantity of slots comprised in one subframe, $N_{slot}^{frame,\mu}$ is a quantity of slots comprised in one frame, $N \times T_{DRX}$ is the first cycle, a unit of the first cycle is a subframe, $T_{DRX}$ is the DRX cycle, and H is a quantity of symbols comprised in one slot.

21. The method according to any one of claims 17 to 19, wherein a value of the DRX cycle is a non-integer; and

if the information about the start time of the $M^{th}$ first timer comprises a frame and a subframe, the determining, by the terminal device, the information about the start time of the $P^{th}$ first timer based on the fourth information satisfies the following formula:

$$[(SFN \times 10) + Q] = F\{[(SFN_{start\ time} \times 10 + Q_{start\ time}) + N \times T_{DRX}]\ mod\ (1024 \times 10)\};$$

if the information about the start time of the $M^{th}$ first timer comprises a frame, a subframe, and a slot, the determining, by the terminal device, the information about the start time of the $P^{th}$ first timer based on the fourth information satisfies the following formula:

$$[((SFN \times 10) + Q) \times N_{slot}^{subframe,\mu} + G] = F\{[((SFN_{start\ time} \times 10 + Q_{start\ time}) \times N_{slot}^{subframe,\mu} + G_{start\ time}) + N \times T_{DRX} \times N_{slot}^{subframe,\mu}]\ mod\ (1024 \times 10 \times N_{slot}^{subframe,\mu})\};$$

if the information about the start time of the $M^{th}$ first timer comprises a frame and a slot, the determining, by the terminal device, the information about the start time of the $P^{th}$ first timer based on the fourth information satisfies the following formula:

$$[(SFN \times N_{slot}^{frame,\mu}) + A] = F\{[(SFN_{start\ time} \times N_{slot}^{frame,\mu} + A_{start\ time}) + N \times T_{DRX} \times N_{slot}^{frame,\mu}/10]\ mod\ (1024 \times N_{slot}^{frame,\mu})\};$$

if the information about the start time of the M$^{th}$ first timer comprises a frame, a subframe, a slot, and a symbol, the determining, by the terminal device, the information about the start time of the P$^{th}$ first timer based on the fourth information satisfies the following formula:

$$[(((SFN \times 10) + Q) \times N_{slot}^{subframe,\mu} + G) \times H + B] = F\{[((SFN_{start\ time} \times 10 + Q_{start\ time}) \times$$

$$N_{slot}^{subframe,\mu} + G_{start\ time}) \times H + B_{start\ time} + N \times T_{DRX} \times N_{slot}^{subframe,\mu} \times H] \bmod (1024 \times 10 \times N_{slot}^{subframe,\mu}$$

$$\times H)\};$$

or

if the information about the start time of the M$^{th}$ first timer comprises a frame, a slot, and a symbol, the determining, by the terminal device, the information about the start time of the P$^{th}$ first timer based on the fourth information satisfies the following formula:

$$[((SFN \times N_{slot}^{frame,\mu}) + A) \times H + B] = F\{[((SFN_{start\ time} \times N_{slot}^{frame,\mu} + A_{start\ time}) \times H + B_{start\ time}) +$$

$$N \times T_{DRX} \times N_{slot}^{frame,\mu} \times H/10] \bmod (1024 \times N_{slot}^{frame,\mu} \times H)\},$$

wherein

SFN is a frame number of the start time of the P$^{th}$ first timer, Q is a subframe number of the start time of the P$^{th}$ first timer, A is an index of a slot corresponding to the start time of the P$^{th}$ first timer in a system frame, B is a symbol number of the start time of the P$^{th}$ first timer, G is an index of the slot corresponding to the start time of the P$^{th}$ first timer in a subframe, SFN$_{start\ time}$ is a frame number of the start time of the M$^{th}$ first timer, Q$_{start\ time}$ is a subframe number of the start time of the M$^{th}$ first timer, A$_{start\ time}$ is an index of a slot corresponding to the start time of the M$^{th}$ first timer in a system frame, B$_{start\ time}$ is a symbol number of the start time of the M$^{th}$ first timer, G$_{start\ time}$ is an index of the slot corresponding to the start time of the M$^{th}$ first timer in a subframe, $N_{slot}^{subframe,\mu}$ is a quantity of slots comprised in one subframe, $N_{slot}^{frame,\mu}$ is a quantity of slots comprised in one frame, N $\times$ T$_{DRX}$ is the first cycle, a unit of the first cycle is a subframe, T$_{DRX}$ is the DRX cycle, H is a quantity of symbols comprised in one slot, and F{} represents any one of a rounding up operation, a rounding down operation, or a rounding off operation.

22. The method according to any one of claims 17 to 19, wherein a value of the DRX cycle is a non-integer; and

if the information about the start time of the M$^{th}$ first timer comprises a frame and a subframe, the determining, by the terminal device, the information about the start time of the P$^{th}$ first timer based on the fourth information satisfies the following formula:

$$[(SFN \times 10) + Q] = F\{[(SFN_{start\ time} \times 10 + Q_{start\ time}) + N \times T_{DRX}]\} \bmod (1024 \times 10);$$

if the information about the start time of the M$^{th}$ first timer comprises a frame, a subframe, and a slot, the determining, by the terminal device, the information about the start time of the P$^{th}$ first timer based on the fourth information satisfies the following formula:

$$[((SFN \times 10) + Q) \times N_{slot}^{subframe,\mu} + G] = F\{[((SFN_{start\ time} \times 10 + Q_{start\ time}) \times N_{slot}^{subframe,\mu} +$$

$$G_{start\ time}) + N \times T_{DRX} \times N_{slot}^{subframe,\mu}]\} \bmod (1024 \times 10 \times N_{slot}^{subframe,\mu});$$

if the information about the start time of the M$^{th}$ first timer comprises a frame and a slot, the determining, by the terminal device, the information about the start time of the P$^{th}$ first timer based on the fourth information satisfies the following formula:

$$[(SFN \times N_{slot}^{frame,\mu}) + A] = F\{[(SFN_{\text{start time}} \times N_{slot}^{frame,\mu} + A_{\text{start time}}) + N \times T_{DRX} \times N_{slot}^{frame,\mu}/10]\}$$

$$\mod (1024 \times N_{slot}^{frame,\mu});$$

if the information about the start time of the $M^{th}$ first timer comprises a frame, a subframe, a slot, and a symbol, the determining, by the terminal device, the information about the start time of the $P^{th}$ first timer based on the fourth information satisfies the following formula:

$$[(((SFN \times 10) + Q) \times N_{slot}^{subframe,\mu} + G) \times H + B] = F\{[((SFN_{\text{start time}} \times 10 + Q_{\text{start time}}) \times$$

$$N_{slot}^{subframe,\mu} + G_{\text{start time}}) \times H + B_{\text{start time}} + N \times T_{DRX} \times N_{slot}^{subframe,\mu} \times H]\} \mod (1024 \times 10 \times$$

$$N_{slot}^{subframe,\mu} \times H);$$

or
if the information about the start time of the $M^{th}$ first timer comprises a frame, a slot, and a symbol, the determining, by the terminal device, the information about the start time of the $P^{th}$ first timer based on the fourth information satisfies the following formula:

$$[((SFN \times N_{slot}^{frame,\mu}) + A) \times H + B] = F\{[((SFN_{\text{start time}} \times N_{slot}^{frame,\mu} + A_{\text{start time}}) \times H + B_{\text{start time}}) +$$

$$N \times T_{DRX} \times N_{slot}^{frame,\mu} \times H/10]\} \mod (1024 \times N_{slot}^{frame,\mu} \times H),$$

wherein
SFN is a frame number of the start time of the $P^{th}$ first timer, Q is a subframe number of the start time of the $P^{th}$ first timer, A is an index of a slot corresponding to the start time of the $P^{th}$ first timer in a system frame, B is a symbol number of the start time of the $P^{th}$ first timer, G is an index of the slot corresponding to the start time of the $P^{th}$ first timer in a subframe, $SFN_{\text{start time}}$ is a frame number of the start time of the $M^{th}$ first timer, $Q_{\text{start time}}$ is a subframe number of the start time of the $M^{th}$ first timer, $A_{\text{start time}}$ is an index of a slot corresponding to the start time of the $M^{th}$ first timer in a system frame, $B_{\text{start time}}$ is a symbol number of the start time of the $M^{th}$ first timer, $G_{\text{start time}}$ is an index of the slot corresponding to the start time of the $M^{th}$ first timer in a subframe, $N_{slot}^{subframe,\mu}$ is a quantity of slots comprised in one subframe, $N_{slot}^{frame,\mu}$ is a quantity of slots comprised in one frame, $N \times T_{DRX}$ is the first cycle, a unit of the first cycle is a subframe, $T_{DRX}$ is the DRX cycle, H is a quantity of symbols comprised in one slot, and F{} represents any one of a rounding up operation, a rounding down operation, or a rounding off operation.

23. The method according to any one of claims 17 to 19, wherein a value of the DRX cycle is a non-integer; and

if the information about the start time of the $M^{th}$ first timer comprises a frame and a subframe, the determining, by the terminal device, the information about the start time of the $P^{th}$ first timer based on the fourth information satisfies the following formula:

$$[(SFN \times 10) + Q + R] = [(SFN_{\text{start time}} \times 10 + Q_{\text{start time}} + R_{\text{start time}}) + N \times T_{DRX]} \mod (1024 \times 10);$$

if the information about the start time of the $M^{th}$ first timer comprises a frame, a subframe, and a slot, the determining, by the terminal device, the information about the start time of the $P^{th}$ first timer based on the fourth information satisfies the following formula:

$$[((SFN \times 10) + Q) \times N_{slot}^{subframe,\mu} + G + R] = [((SFN_{\text{start time}} \times 10 + Q_{\text{start time}}) \times N_{slot}^{subframe,\mu} +$$

$$G_{\text{start time}}) + R_{\text{start time}} + N \times T_{DRX} \times N_{slot}^{subframe,\mu}] \mod (1024 \times 10 \times N_{slot}^{subframe,\mu});$$

if the information about the start time of the M$^{th}$ first timer comprises a frame and a slot, the determining, by the terminal device, the information about the start time of the P$^{th}$ first timer based on the fourth information satisfies the following formula:

$$[(\text{SFN} \times N_{slot}^{frame,\mu}) + A + R] = [(\text{SFN}_{\text{start time}} \times N_{slot}^{frame,\mu} + A_{\text{start time}}) + R_{\text{start time}} + N \times T_{\text{DRX}} \times$$

$$N_{slot}^{frame,\mu}/10] \bmod (1024 \times N_{slot}^{frame,\mu});$$

if the information about the start time of the M$^{th}$ first timer comprises a frame, a subframe, a slot, and a symbol, the determining, by the terminal device, the information about the start time of the P$^{th}$ first timer based on the fourth information satisfies the following formula:

$$[(((\text{SFN} \times 10) + Q) \times N_{slot}^{subframe,\mu} + G) \times H + B + R] = [(((\text{SFN}_{\text{start time}} \times 10 + Q_{\text{start time}}) \times$$

$$N_{slot}^{subframe,\mu} + G_{\text{start time}}) \times H + B_{\text{start time}} + R_{\text{start time}} + N \times T_{\text{DRX}} \times N_{slot}^{subframe,\mu} \times H] \bmod (1024 \times 10$$

$$\times N_{slot}^{subframe,\mu} \times H);$$

or

if the information about the start time of the M$^{th}$ first timer comprises a frame, a slot, and a symbol, the determining, by the terminal device, the information about the start time of the P$^{th}$ first timer based on the fourth information satisfies the following formula:

$$[((\text{SFN} \times N_{slot}^{frame,\mu}) + A) \times H + B + R] = [(((\text{SFN}_{\text{start time}} \times N_{slot}^{frame,\mu} + A_{\text{start time}}) \times H + B_{\text{start time}})$$

$$+ R_{\text{start time}} + N \times T_{\text{DRX}} \times N_{slot}^{frame,\mu} \times H/10] \bmod (1024 \times N_{slot}^{frame,\mu} \times H),$$

wherein

SFN is a frame number of the start time of the P$^{th}$ first timer, Q is a subframe number of the start time of the P$^{th}$ first timer, A is an index of a slot corresponding to the start time of the P$^{th}$ first timer in a system frame, B is a symbol number of the start time of the P$^{th}$ first timer, G is an index of the slot corresponding to the start time of the P$^{th}$ first timer in a subframe, SFN$_{\text{start time}}$ is a frame number of the start time of the M$^{th}$ first timer, Q$_{\text{start time}}$ is a subframe number of the start time of the M$^{th}$ first timer, A$_{\text{start time}}$ is an index of a slot corresponding to the start time of the M$^{th}$ first timer in a system frame, B$_{\text{start time}}$ is a symbol number of the start time of the M$^{th}$ first timer, G$_{\text{start time}}$ is an index of the slot corresponding to the start time of the M$^{th}$ first timer in a subframe, $N_{slot}^{subframe,\mu}$ is a quantity of slots comprised in one subframe, $N_{slot}^{frame,\mu}$ is a quantity of slots comprised in one frame, $N \times T_{\text{DRX}}$ is the first cycle, a unit of the first cycle is a subframe, $T_{\text{DRX}}$ is the DRX cycle, and H is a quantity of symbols comprised in one slot.

24. The method according to any one of claims 17 to 23, wherein the method further comprises:
receiving, by the terminal device, second indication information from a network device, wherein the second indication information indicates information about a reference frame, and the information about the reference frame is used to determine information about a start time of the first timer.

25. The method according to claim 24, wherein the determining, by the terminal device, information related to a start time of a P$^{th}$ first timer based on the fourth information comprises:
determining, by the terminal device, the information about the start time of the P$^{th}$ first timer based on the fourth information, the information about the reference frame, and the first cycle, wherein the first cycle is equal to the accumulative sum of the N DRX cycles, and N is equal to P - M.

26. The method according to claim 24 or 25, wherein a frame number of the reference frame is 512 or 0.

27. The method according to any one of claims 24 to 26, wherein the value of the DRX cycle is an integer; and

if the information about the start time of the $M^{th}$ first timer comprises a frame and a subframe, the determining, by the terminal device, the information about the start time of the $P^{th}$ first timer based on the fourth information satisfies the following formula:

$$[(\text{SFN} \times 10) + Q] = [(\text{SFN}_{\text{reference}} \times 10) + (\text{SFN}_{\text{start time}} \times 10 + Q_{\text{start time}}) + N \times T_{\text{DRX}}] \bmod (1024 \times 10);$$

if the information about the start time of the $M^{th}$ first timer comprises a frame, a subframe, and a slot, the determining, by the terminal device, the information about the start time of the $P^{th}$ first timer based on the fourth information satisfies the following formula:

$$[((\text{SFN} \times 10) + Q) \times N_{slot}^{subframe,\mu} + G] = [((\text{SFN}_{\text{reference}} \times 10) + (\text{SFN}_{\text{start time}} \times 10 + Q_{\text{start time}}))$$

$$\times N_{slot}^{subframe,\mu} + G_{\text{start time}} + N \times T_{\text{DRX}} \times N_{slot}^{subframe,\mu}] \bmod (1024 \times 10 \times N_{slot}^{subframe,\mu});$$

if the information about the start time of the $M^{th}$ first timer comprises a frame and a slot, the determining, by the terminal device, the information about the start time of the $P^{th}$ first timer based on the fourth information satisfies the following formula:

$$[(\text{SFN} \times N_{slot}^{frame,\mu}) + A] = [(\text{SFN}_{\text{reference}} \times N_{slot}^{frame,\mu}) + (\text{SFN}_{\text{start time}} \times N_{slot}^{frame,\mu} + A_{\text{start time}}) + N \times$$

$$T_{\text{DRX}} \times N_{slot}^{frame,\mu}/10] \bmod (1024 \times N_{slot}^{frame,\mu});$$

if the information about the start time of the $M^{th}$ first timer comprises a frame, a subframe, a slot, and a symbol, the determining, by the terminal device, the information about the start time of the $P^{th}$ first timer based on the fourth information satisfies the following formula:

$$[(((\text{SFN} \times 10) + Q) \times N_{slot}^{subframe,\mu} + G) \times H + B] = [((\text{SFN}_{\text{reference}} \times 10 + \text{SFN}_{\text{start time}} \times 10 +$$

$$Q_{\text{start time}}) \times N_{slot}^{subframe,\mu} + G_{\text{start time}}) \times H + B_{\text{start time}} + N \times T_{\text{DRX}} \times N_{slot}^{subframe,\mu} \times H] \bmod (1024 \times$$

$$10 \times N_{slot}^{subframe,\mu} \times H);$$

or
if the information about the start time of the $M^{th}$ first timer comprises a frame, a slot, and a symbol, the determining, by the terminal device, the information about the start time of the $P^{th}$ first timer based on the fourth information satisfies the following formula:

$$[((\text{SFN} \times N_{slot}^{frame,\mu}) + A) \times H + B] = [((\text{SFN}_{\text{reference}} \times N_{slot}^{frame,\mu} + \text{SFN}_{\text{start time}} \times N_{slot}^{frame,\mu} + A_{\text{start}}$$

$$_{\text{time}}) \times H + B_{\text{start time}}) + N \times T_{\text{DRX}} \times N_{slot}^{frame,\mu} \times H/10] \bmod (1024 \times N_{slot}^{frame,\mu} \times H),$$

wherein
$\text{SFN}_{\text{reference}}$ is a frame number of the reference frame indicated by the second indication information, SFN is a frame number of the start time of the $P^{th}$ first timer, Q is a subframe number of the start time of the $P^{th}$ first timer, A is an index of a slot corresponding to the start time of the $P^{th}$ first timer in a system frame, G is an index of the slot corresponding to the start time of the $P^{th}$ first timer in a subframe, B is a symbol number of the start time of the $P^{th}$ first timer, $\text{SFN}_{\text{start time}}$ is a frame number of the start time of the $M^{th}$ first timer, $Q_{\text{start time}}$ is a subframe number of the start time of the $M^{th}$ first timer, $A_{\text{start time}}$ is an index of a slot corresponding to the start time of the $M^{th}$ first timer in a system frame, $B_{\text{start time}}$ is a symbol number of the start time of the $M^{th}$ first timer, $G_{\text{start time}}$ is an index of the slot corresponding to the start time of the $M^{th}$ first timer in a subframe, $N_{slot}^{subframe,\mu}$ is a quantity of slots comprised in one subframe, $N_{slot}^{frame,\mu}$ is a quantity of slots comprised in one frame, $N \times T_{\text{DRX}}$ is the first cycle, a unit of the first cycle is a subframe, $T_{DRX}$ is the DRX cycle, and H is a quantity of symbols comprised in one slot.

28. The method according to any one of claims 24 to 26, wherein the value of the DRX cycle is a non-integer; and

if the information about the start time of the $M^{th}$ first timer comprises a frame and a subframe, the determining, by the terminal device, the information about the start time of the $P^{th}$ first timer based on the fourth information satisfies the following formula:

$$[(SFN \times 10) + Q] = F\{[(SFN_{reference} \times 10) + (SFN_{start\ time} \times 10 + Q_{start\ time}) + N \times T_{DRX}] \bmod (1024 \times 10)\};$$

if the information about the start time of the $M^{th}$ first timer comprises a frame, a subframe, and a slot, the determining, by the terminal device, the information about the start time of the $P^{th}$ first timer based on the fourth information satisfies the following formula:

$$[((SFN \times 10) + Q) \times N_{slot}^{subframe,\mu} + G] = F\{[((SFN_{reference} \times 10) + (SFN_{start\ time} \times 10 + Q_{start\ time})) \times N_{slot}^{subframe,\mu} + G_{start\ time} + N \times T_{DRX} \times N_{slot}^{subframe,\mu}] \bmod (1024 \times 10 \times N_{slot}^{subframe,\mu})\};$$

if the information about the start time of the $M^{th}$ first timer comprises a frame and a slot, the determining, by the terminal device, the information about the start time of the $P^{th}$ first timer based on the fourth information satisfies the following formula:

$$[(SFN \times N_{slot}^{frame,\mu}) + A] = F\{[(SFN_{reference} \times N_{slot}^{frame,\mu}) + (SFN_{start\ time} \times N_{slot}^{frame,\mu} + A_{start\ time}) + N \times T_{DRX} \times N_{slot}^{frame,\mu}/10] \bmod (1024 \times N_{slot}^{frame,\mu})\};$$

if the information about the start time of the $M^{th}$ first timer comprises a frame, a subframe, a slot, and a symbol, the determining, by the terminal device, the information about the start time of the $P^{th}$ first timer based on the fourth information satisfies the following formula:

$$[(((SFN \times 10) + Q) \times N_{slot}^{subframe,\mu} + G) \times H + B] = F\{[((SFN_{reference} \times 10 + SFN_{start\ time} \times 10 + Q_{start\ time}) \times N_{slot}^{subframe,\mu} + G_{start\ time}) \times H + B_{start\ time} + N \times T_{DRX} \times N_{slot}^{subframe,\mu} \times H] \bmod (1024 \times 10 \times N_{slot}^{subframe,\mu} \times H)\};$$

or
if the information about the start time of the $M^{th}$ first timer comprises a frame, a slot, and a symbol, the determining, by the terminal device, the information about the start time of the $P^{th}$ first timer based on the fourth information satisfies the following formula:

$$[((SFN \times N_{slot}^{frame,\mu}) + A) \times H + B] = F\{[((SFN_{reference} \times N_{slot}^{frame,\mu} + SFN_{start\ time} \times N_{slot}^{frame,\mu} + A_{start\ time}) \times H + B_{start\ time}) + N \times T_{DRX} \times N_{slot}^{frame,\mu} \times H/10] \bmod (1024 \times N_{slot}^{frame,\mu} \times H)\},$$

wherein
$SFN_{reference}$ is a frame number of the reference frame indicated by the second indication information, SFN is a frame number of the start time of the $P^{th}$ first timer, Q is a subframe number of the start time of the $P^{th}$ first timer, A is an index of a slot corresponding to the start time of the $P^{th}$ first timer in a system frame, G is an index of the slot corresponding to the start time of the $P^{th}$ first timer in a subframe, B is a symbol number of the start time of the $P^{th}$ first timer, $SFN_{start\ time}$ is a frame number of the start time of the $M^{th}$ first timer, $Q_{start\ time}$ is a subframe number of the start time of the $M^{th}$ first timer, $A_{start\ time}$ is an index of a slot corresponding to the start time of the $M^{th}$ first timer in a system frame, $B_{start\ time}$ is a symbol number of the start time of the $M^{th}$ first timer, $G_{start\ time}$ is an index of the slot corresponding to the start time of the M$^{th}$ first timer in a subframe, $N_{slot}^{subframe,\mu}$ is a quantity of slots comprised in one subframe, $N_{slot}^{frame,\mu}$ is a quantity of slots comprised in one frame, N × T$_{DRX}$ is the first cycle, a unit of the first cycle is a subframe, T$_{DRX}$ is the DRX cycle, H is a quantity of symbols comprised in one slot, and F{} represents any one of a rounding up operation, a rounding down operation, or a rounding off operation.

29. The method according to any one of claims 24 to 26, wherein the value of the DRX cycle is a non-integer; and

if the information about the start time of the M$^{th}$ first timer comprises a frame and a subframe, the determining, by the terminal device, the information about the start time of the P$^{th}$ first timer based on the fourth information satisfies the following formula:

**[(SFN × 10) + Q]** = F { [(SFN$_{reference}$ × 10) + (SFN$_{start\ time}$ × 10 + Q$_{start\ time}$) + N × T$_{DRX}$]} mod (1024 × 10);

if the information about the start time of the M$^{th}$ first timer comprises a frame, a subframe, and a slot, the determining, by the terminal device, the information about the start time of the P$^{th}$ first timer based on the fourth information satisfies the following formula:

$$[((SFN \times 10) + Q) \times N_{slot}^{subframe,\mu} + G] = F\{[((SFN_{reference} \times 10) + (SFN_{start\ time} \times 10 + Q_{start\ time})) \times N_{slot}^{subframe,\mu} + G_{start\ time} + N \times T_{DRX} \times N_{slot}^{subframe,\mu}]\} \bmod (1024 \times 10 \times N_{slot}^{subframe,\mu});$$

if the information about the start time of the M$^{th}$ first timer comprises a frame and a slot, the determining, by the terminal device, the information about the start time of the P$^{th}$ first timer based on the fourth information satisfies the following formula:

$$[(SFN \times N_{slot}^{frame,\mu}) + A] = F\{[(SFN_{reference} \times N_{slot}^{frame,\mu}) + (SFN_{start\ time} \times N_{slot}^{frame,\mu} + A_{start\ time}) + N \times T_{DRX} \times N_{slot}^{frame,\mu}/10]\} \bmod (1024 \times N_{slot}^{frame,\mu});$$

if the information about the start time of the M$^{th}$ first timer comprises a frame, a subframe, a slot, and a symbol, the determining, by the terminal device, the information about the start time of the P$^{th}$ first timer based on the fourth information satisfies the following formula:

$$[(((SFN \times 10) + Q) \times N_{slot}^{subframe,\mu} + G) \times H + B] = F\{[((SFN_{reference} \times 10 + SFN_{start\ time} \times 10 + Q_{start\ time}) \times N_{slot}^{subframe,\mu} + G_{start\ time}) \times H + B_{start\ time} + N \times T_{DRX} \times N_{slot}^{subframe,\mu} \times H]\} \bmod (1024 \times 10 \times N_{slot}^{subframe,\mu} \times H);$$

or
if the information about the start time of the M$^{th}$ first timer comprises a frame, a slot, and a symbol, the determining, by the terminal device, the information about the start time of the P$^{th}$ first timer based on the fourth information satisfies the following formula:

$$[((SFN \times N_{slot}^{frame,\mu}) + A) \times H + B] = F\{[((SFN_{reference} \times N_{slot}^{frame,\mu} + SFN_{start\ time} \times N_{slot}^{frame,\mu} + A_{start\ time}) \times H + B_{start\ time}) + N \times T_{DRX} \times N_{slot}^{frame,\mu} \times H/10]\} \bmod (1024 \times N_{slot}^{frame,\mu} \times H),$$

wherein
SFN$_{reference}$ is a frame number of the reference frame indicated by the second indication information, SFN is a frame number of the start time of the P$^{th}$ first timer, Q is a subframe number of the start time of the P$^{th}$ first timer, A is an index of a slot corresponding to the start time of the P$^{th}$ first timer in a system frame, G is an index of the slot corresponding to the start time of the P$^{th}$ first timer in a subframe, B is a symbol number of the start time of the P$^{th}$ first timer, SFN$_{start\ time}$ is a frame number of the start time of the M$^{th}$ first timer, Q$_{start\ time}$ is a subframe number of the start time of the M$^{th}$ first timer, A$_{start\ time}$ is an index of a slot corresponding to the start time of the M$^{th}$ first timer in a system frame, B$_{start\ time}$ is a symbol number of the start time of the M$^{th}$ first timer, G$_{start\ time}$ is an index of the slot corresponding to the start time of the M$^{th}$ first timer in a subframe, $N_{slot}^{subframe,\mu}$ is a quantity of slots comprised in one subframe, $N_{slot}^{frame,\mu}$ is a quantity of slots comprised in one frame, N × T$_{DRX}$ is the first cycle, a unit of the first cycle is a subframe, T$_{DRX}$ is the DRX cycle, H is a quantity of symbols comprised in one slot, and F{} represents any one of a rounding up operation, a rounding down operation, or a rounding off operation.

**30.** The method according to any one of claims 24 to 26, wherein the value of the DRX cycle is an integer; and

if the information about the start time of the M$^{th}$ first timer comprises a frame and a subframe, the determining, by the terminal device, the information about the start time of the P$^{th}$ first timer based on the fourth information satisfies the following formula:

[(SFN × 10) + Q + R] = [(SFN$_{reference}$ × 10) + (SFN$_{start\ time}$ × 10 + Q$_{start\ time}$) + R$_{start\ time}$ + N × T$_{DRX]}$ mod (1024 × 10);

if the information about the start time of the M$^{th}$ first timer comprises a frame, a subframe, and a slot, the determining, by the terminal device, the information about the start time of the P$^{th}$ first timer based on the fourth information satisfies the following formula:

$$[((SFN \times 10) + Q) \times N_{slot}^{subframe,\mu} + G + R] = [((SFN_{reference} \times 10) + (SFN_{start\ time} \times 10 + Q_{start\ time})) \times N_{slot}^{subframe,\mu} + G_{start\ time} + R_{start\ time} + N \times T_{DRX} \times N_{slot}^{subframe,\mu}] \bmod (1024 \times 10 \times N_{slot}^{subframe,\mu});$$

if the information about the start time of the M$^{th}$ first timer comprises a frame and a slot, the determining, by the terminal device, the information about the start time of the P$^{th}$ first timer based on the fourth information satisfies the following formula:

$$[(SFN \times N_{slot}^{frame,\mu}) + A + R] = [(SFN_{reference} \times N_{slot}^{frame,\mu}) + (SFN_{start\ time} \times N_{slot}^{frame,\mu} + A_{start\ time}) + R_{start\ time} + N \times T_{DRX} \times N_{slot}^{frame,\mu}/10] \bmod (1024 \times N_{slot}^{frame,\mu});$$

if the information about the start time of the M$^{th}$ first timer comprises a frame, a subframe, a slot, and a symbol, the determining, by the terminal device, the information about the start time of the P$^{th}$ first timer based on the fourth information satisfies the following formula:

$$[(((SFN \times 10) + Q) \times N_{slot}^{subframe,\mu} + G) \times H + B + R] = [((SFN_{reference} \times 10 + SFN_{start\ time} \times 10 + Q_{start\ time}) \times N_{slot}^{subframe,\mu} + G_{start\ time}) \times H + B_{start\ time} + R_{start\ time} + N \times T_{DRX} \times N_{slot}^{subframe,\mu} \times H]$$

$$\bmod (1024 \times 10 \times N_{slot}^{subframe,\mu} \times H);$$

or

if the information about the start time of the M$^{th}$ first timer comprises a frame, a slot, and a symbol, the determining, by the terminal device, the information about the start time of the P$^{th}$ first timer based on the fourth information satisfies the following formula:

$$[((\text{SFN} \times N_{slot}^{frame,\mu}) + A) \times H + B + R] = [((\text{SFN}_{\text{reference}} \times N_{slot}^{frame,\mu} + \text{SFN}_{\text{start time}} \times N_{slot}^{frame,\mu} +$$

$$A_{\text{start time}}) \times H + B_{\text{start time}}) + R_{\text{start time}} + N \times T_{\text{DRX}} \times N_{slot}^{frame,\mu} \times H/10] \bmod (1024 \times N_{slot}^{frame,\mu} \times H),$$

wherein

$\text{SFN}_{\text{reference}}$ is a frame number of the reference frame indicated by the second indication information, SFN is a frame number of the start time of the $P^{th}$ first timer, Q is a subframe number of the start time of the $P^{th}$ first timer, A is an index of a slot corresponding to the start time of the $P^{th}$ first timer in a system frame, G is an index of the slot corresponding to the start time of the $P^{th}$ first timer in a subframe, B is a symbol number of the start time of the $P^{th}$ first timer, $\text{SFN}_{\text{start time}}$ is a frame number of the start time of the $M^{th}$ first timer, $Q_{\text{start time}}$ is a subframe number of the start time of the $M^{th}$ first timer, $A_{\text{start time}}$ is an index of a slot corresponding to the start time of the $M^{th}$ first timer in a system frame, $B_{\text{start time}}$ is a symbol number of the start time of the $M^{th}$ first timer, $G_{\text{start time}}$ is an index of the slot corresponding to the start time of the $M^{th}$ first timer in a subframe, $N_{slot}^{subframe,\mu}$ is a quantity of slots comprised in one subframe, $N_{slot}^{frame,\mu}$ is a quantity of slots comprised in one frame, $N \times T_{\text{DRX}}$ is the first cycle, a unit of the first cycle is a subframe, $T_{\text{DRX}}$ is the DRX cycle, and H is a quantity of symbols comprised in one slot.

31. The method according to any one of claims 17 to 30, wherein the first timer is a discontinuous reception on-duration timer.

32. A communication method, comprising:

obtaining, by a network device, fourth information, wherein the fourth information comprises information about a start time of an $M^{th}$ first timer, and M is an integer greater than or equal to 0; and
sending, by the network device, the fourth information to a terminal device, wherein the fourth information is used by the terminal device to determine information about a start time of a $P^{th}$ first timer based on the fourth information, P is an integer greater than 0, and P is greater than M.

33. A communication apparatus, comprising a processor and a memory, wherein

the memory stores a computer program; and
the processor invokes the computer program, to enable the communication apparatus to perform the method according to any one of claims 1 to 15, or performs the method according to any one of claims 17 to 31.

34. A communication apparatus, comprising a processor and a memory, wherein

the memory stores a computer program; and
the processor invokes the computer program, to enable the communication apparatus to perform the method according to claim 16, or perform the method according to claim 32.

35. A computer-readable storage medium, storing instructions, wherein when the instructions are run on a computer, the computer is enabled to perform the method according to any one of claims 1 to 32.

Monitor a
PDCCH  Wake-up time  Sleep time period
       period (on-   (opportunity for
       duration)         DRX)

...                                                        ...

DRX cycle (DRX cycle)

FIG. 1A

Position indicated by
numbers of a frame and
a subframe for starting
a continuous reception
on-duration timer

Discontinuous reception
on-duration timer
(drx-onDurationTimer)

SFN = 0 and
slot = 0                                                   ...

drx-
StartOffset     DRX cycle (DRX cycle)

drx-SlotOffset

FIG. 1B

FIG. 1C

```
┌──────────────────────────────────────────┐  ╭── 201
│                                            │ ╱
│   A terminal device obtains first information │
│                                            │
└──────────────────────────────────────────┘
                      │
                      ▼
┌──────────────────────────────────────────┐  ╭── 202
│ The terminal device determines, based on the │ ╱
│ first information, a start time of a first timer │
│      in a first hyper system frame          │
└──────────────────────────────────────────┘
```

FIG. 2

```
┌─────────────┐                          ┌─────────────┐
│  Terminal   │                          │  Network    │
│   device    │                          │   device    │
└─────────────┘                          └─────────────┘
       │                              ┌ ── ── ── ── ── ── ── ┐
       │                              │ 301: Determine first offsets │
       │                              │ corresponding to different hyper │
  ┌ ── ── ── ── ── ── ┐               │       system frames          │
  │ 302: Obtain the first offsets │   └ ── ── ── ── ── ── ── ┘
  │ corresponding to the different hyper │
  │      system frames        │
  └ ── ── ── ── ── ── ┘
       │     303: Obtain index indication information
       │◄── ── ── ── ── ── ── ── ── ── ──
  ┌──────────────────────────┐
  │ 304a: Determine, based on indexes │
  │ of the different hyper system frames, │
  │ the first offsets corresponding to the │
  │   different hyper system frames   │
  └──────────────────────────┘
  ┌ ── ── ── ── ── ── ┐
  │ 304b: Determine, based on the index │
  │ indication information, a first offset │
  │   corresponding to a next hyper    │
  │         system frame          │
  └ ── ── ── ── ── ── ┘
  ┌──────────────────────────┐
  │ 305: Determine, based on the first │
  │ offsets corresponding to the different │
  │ hyper system frames, start times of │
  │ first timers in the different hyper │
  │        system frames          │
  └──────────────────────────┘
       │                                        │
```

FIG. 3

FIG. 4

EP 4 507 395 A1

```
┌──────────┐                              ┌──────────┐
│ Terminal │                              │ Network  │
│  device  │                              │  device  │
└────┬─────┘                              └────┬─────┘
     │              ┌ ─ ─ ─ ─ ─ ─ ─ ─ ─ ─ ─ ─ ─ ─ ┐
     │              │ 501: Determine first parameters │
     │                corresponding to different hyper │
     │              │       system frames          │
     │              └ ─ ─ ─ ─ ─ ─ ─ ─ ─ ─ ─ ─ ─ ─ ┘
┌ ─ ─ ─ ─ ─ ─ ─ ─ ─ ─ ─ ─ ─ ─ ─ ┐
│  502: Obtain the first parameters │
  corresponding to the different hyper │
│         system frames          │
└ ─ ─ ─ ─ ─ ─ ─ ─ ─ ─ ─ ─ ─ ─ ─ ┘
     │  503: Obtain index indication information
     │◄─ ─ ─ ─ ─ ─ ─ ─ ─ ─ ─ ─ ─ ─ ─ ─ ─
┌─────────────────────────────────┐
│ 504a: Determine, based on indexes of │
│ the different hyper system frames, the │
│ first parameters corresponding to the │
│   different hyper system frames   │
└─────────────────────────────────┘
┌ ─ ─ ─ ─ ─ ─ ─ ─ ─ ─ ─ ─ ─ ─ ─ ┐
│ 504b: Determine, based on the index │
│     indication information, a first │
│   parameter corresponding to a next │
│         hyper system frame       │
└ ─ ─ ─ ─ ─ ─ ─ ─ ─ ─ ─ ─ ─ ─ ─ ┘
┌─────────────────────────────────┐
│  505: Determine, based on the first │
│  parameters corresponding to the  │
│ different hyper system frames, start │
│ times of first timers in the different │
│       hyper system frames        │
└─────────────────────────────────┘
```

FIG. 5

```
┌──────────┐                              ┌──────────┐
│ Terminal │                              │ Network  │
│  device  │                              │  device  │
└────┬─────┘                              └────┬─────┘
     │        601: Send fourth information        │
     │◄──── (including information about a start ──│
     │         time of an Mᵗʰ first timer)         │
┌─────────────────────────────────┐
│ 602: Determine information about a │
│ start time of a Pᵗʰ first timer based on │
│        the fourth information     │
└─────────────────────────────────┘
┌ ─ ─ ─ ─ ─ ─ ─ ─ ─ ─ ─ ─ ─ ─ ─ ┐
│ 603: Start the first timer based on the │
│   information about the start time of  │
│         the Pᵗʰ first timer        │
└ ─ ─ ─ ─ ─ ─ ─ ─ ─ ─ ─ ─ ─ ─ ─ ┘
```

FIG. 6

FIG. 7

Hyper system frame j
(including 1024 frames)

Hyper system frame j + 1
(including 1024 frames)

Time for sending fifth
information (for example,
a DRX configuration) by
the network device

DRX cycle
on a network
device side

DRX cycle
on a terminal
device side

First half of the
hyper system frame
(including 512
frames)
(namely, SFN 0 to
SFN 511)

First half of the
hyper system frame
(including 512
frames)
(namely, SFN 512
to SFN 1023)

Time for parsing out
the fifth information
(for example, the
DRX configuration)
at an RRC layer of
the terminal device

FIG. 8

```
┌──────────┐                                    ┌──────────┐
│ Terminal │                                    │ Network  │
│  device  │                                    │  device  │
└────┬─────┘                                    └────┬─────┘
     │         901: Send first indication information │
     │◄─────────────────────────────────────────────┤
┌────┴──────────────────────────────────┐           │
│  902: Determine, based on the first    │           │
│  indication information and/or first time │        │
│  information, an index of a hyper system │         │
│  frame including a moment at which the │           │
│  terminal device obtains fifth information │        │
└────┬──────────────────────────────────┘           │
     │                                               │
```

FIG. 9

```
┌──────────┐                                    ┌──────────┐
│ Terminal │                                    │ Network  │
│  device  │                                    │  device  │
└────┬─────┘                                    └────┬─────┘
     │                              ┌ ─ ─ ─ ─ ─ ─ ─ ─│─ ─ ─ ─ ─ ─ ─ ┐
     │                              │ 1001: Obtain fourth information │
     │                              └ ─ ─ ─ ─ ─ ─ ─ ─│─ ─ ─ ─ ─ ─ ─ ┘
     │       1002: Send the fourth information       │
     │◄──────(including information about a start ────┤
     │        time of an Mᵗʰ first timer)            │
     │   1003: Send second indication information    │
     │◄─────────────────────────────────────────────┤
┌ ─ ─┴─ ─ ─ ─ ─ ─ ─ ─ ─ ─ ─ ─ ─ ─ ─ ─ ┐             │
│ 1004: Determine information about a   │            │
│ start time of a Pᵗʰ first timer based on │         │
│ the fourth information and the second │            │
│       indication information          │            │
└ ─ ─ ─ ─ ─ ─ ┬ ─ ─ ─ ─ ─ ─ ─ ─ ─ ─ ─ ┘            │
┌ ─ ─ ─ ─ ─ ─ ┴ ─ ─ ─ ─ ─ ─ ─ ─ ─ ─ ─ ┐            │
│   1005: Start the first timer based on │           │
│  the information about the start time  │           │
│        of the Pᵗʰ first timer          │           │
└ ─ ─ ─ ─ ─ ─ ┬ ─ ─ ─ ─ ─ ─ ─ ─ ─ ─ ─ ┘            │
     │                                               │
```

FIG. 10

FIG. 11A

FIG. 11B

EP 4 507 395 A1

## INTERNATIONAL SEARCH REPORT

| International application No. |
|---|
| **PCT/CN2023/087495** |

### A. CLASSIFICATION OF SUBJECT MATTER

H04W52/02(2009.01)i

According to International Patent Classification (IPC) or to both national classification and IPC

### B. FIELDS SEARCHED

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, ENTXT, CNKI, IEEE: 超帧, 定时计, 定时器, 非连续, 周期, 激活, 睡眠, 偏移, 启动, 开始, 时间点, DRX, SFN, timer, active, sleep, period, discontinue, offset, start, super frame

### C. DOCUMENTS CONSIDERED TO BE RELEVANT

| Category* | Citation of document, with indication, where appropriate, of the relevant passages | Relevant to claim No. |
|---|---|---|
| X | CN 112770375 A (DATANG MOBILE COMMUNICATIONS EQUIPMENT CO., LTD.) 07 May 2021 (2021-05-07) description, paragraphs 0125-0192, and figures 1 and 2 | 1-19, 24-26, 31-35 |
| X | CN 101421997 A (SAMSUNG ELECTRONICS CO., LTD.) 29 April 2009 (2009-04-29) description, page 5, line 27-page 7, line 13, and figures 4 and 5 | 17-19, 24-26, 31-35 |
| A | CN 104812032 A (YULONG COMPUTER TELECOMMUNICATION SCIENTIFIC (SHENZHEN) CO., LTD.) 29 July 2015 (2015-07-29) entire document | 1-35 |
| A | CN 106664736 A (QUALCOMM INC.) 10 May 2017 (2017-05-10) entire document | 1-35 |
| A | EP 1613107 A2 (TELEFONAKTIEBOLAGET L M ERICSSON (PUBL)) 04 January 2006 (2006-01-04) entire document | 1-35 |
| A | US 2018176883 A1 (KYOCERA CORP.) 21 June 2018 (2018-06-21) entire document | 1-35 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 June 2023** | **28 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/087495**

**C.    DOCUMENTS CONSIDERED TO BE RELEVANT**

| Category* | Citation of document, with indication, where appropriate, of the relevant passages | Relevant to claim No. |
|---|---|---|
| A | ERICSSON. "Remaining issues on DRX timers"<br>*3GPP TSG-RAN WG2 #100, Tdoc R2-1713471*, 01 December 2017 (2017-12-01),<br>    entire document | 1-35 |

Form PCT/ISA/210 (second sheet) (July 2022)

**INTERNATIONAL SEARCH REPORT**
Information on patent family members

International application No.

**PCT/CN2023/087495**

| Patent document cited in search report | | | Publication date (day/month/year) | Patent family member(s) | | | Publication date (day/month/year) |
|---|---|---|---|---|---|---|---|
| CN | 112770375 | A | 07 May 2021 | None | | | |
| CN | 101421997 | A | 29 April 2009 | EP | 1845668 | A1 | 17 October 2007 |
| | | | | RU | 2389159 | C1 | 10 May 2010 |
| | | | | US | 2012195240 | A1 | 02 August 2012 |
| | | | | WO | 2007117120 | A1 | 18 October 2007 |
| | | | | KR | 20070101175 | A | 16 October 2007 |
| | | | | JP | 2009533940 | A | 17 September 2009 |
| CN | 104812032 | A | 29 July 2015 | WO | 2016161708 | A1 | 13 October 2016 |
| CN | 106664736 | A | 10 May 2017 | AU | 2015301147 | A1 | 02 February 2017 |
| | | | | WO | 2016022651 | A1 | 11 February 2016 |
| | | | | KR | 20170040235 | A | 12 April 2017 |
| | | | | US | 2016044605 | A1 | 11 February 2016 |
| | | | | JP | 2017523724 | A | 17 August 2017 |
| | | | | BR | 112017002168 | A2 | 21 November 2017 |
| | | | | EP | 3178288 | A1 | 14 June 2017 |
| EP | 1613107 | A2 | 04 January 2006 | None | | | |
| US | 2018176883 | A1 | 21 June 2018 | WO | 2017026188 | A1 | 16 February 2017 |
| | | | | EP | 3322238 | A1 | 16 May 2018 |
| | | | | EP | 3661277 | A1 | 03 June 2020 |
| | | | | US | 2020169983 | A1 | 28 May 2020 |

Form PCT/ISA/210 (patent family annex) (July 2022)

**REFERENCES CITED IN THE DESCRIPTION**

**Patent documents cited in the description**

- CN 202210467612
- CN 202210928227